(19) Europäisches Patentamt
European Patent Office
Office européen des brevets

(11) EP 2 729 549 B1

(12) # EUROPEAN PATENT SPECIFICATION

(45) Date of publication and mention of the grant of the patent:
**07.12.2016 Bulletin 2016/49**

(21) Application number: **12728990.8**

(22) Date of filing: **12.06.2012**

(51) Int Cl.:
***C09K 19/14*** (2006.01) ***C09K 19/20*** (2006.01)
***C09K 19/02*** (2006.01) ***C09K 19/54*** (2006.01)
***C09K 19/04*** (2006.01)

(86) International application number:
**PCT/EP2012/002480**

(87) International publication number:
**WO 2013/004333 (10.01.2013 Gazette 2013/02)**

(54) **BIMESOGENIC COMPOUNDS**

BIMESOGENE VERBINDUNGEN

COMPOSÉS BIMÉSOGÈNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.07.2011 EP 11005489**

(43) Date of publication of application:
**14.05.2014 Bulletin 2014/20**

(73) Proprietor: **Merck Patent GmbH**
**64293 Darmstadt (DE)**

(72) Inventors:
- **ADLEM, Kevin**
  **Bournemouth BH8 9LS (GB)**
- **WILKES, David**
  **64291 Darmstadt (DE)**
- **SAXTON, Patricia, Eileen**
  **Romsey SO51-8PB (GB)**
- **SNOW, Benjamin**
  **Chalfont**
  **St. Giles HP8 4DR (GB)**
- **TUFFIN, Rachel**
  **Chandlers Ford SO53 4SY (GB)**
- **PARRI, Owain, Llyr**
  **Ringwood BH24 3AN (GB)**
- **LUCKHURST, Geoffrey**
  **Romsey SO51 8HL (GB)**

(56) References cited:
**EP-A1- 1 408 098** **EP-A1- 1 477 547**
**DE-T2-602004 001 166** **GB-A- 2 356 629**
**GB-A- 2 387 603** **US-A1- 2005 041 197**
**US-A1- 2009 041 065** **US-A1- 2010 296 038**
**US-B2- 7 544 400** **US-B2- 7 623 214**

- **BLATCH A E ET AL: "SYMMETRIC AND NON-SYMMETRIC LIQUID CRYSTAL DIMERS WITH BRANCHED TERMINAL ALKYL CHAINS: RACEMIC AND CHIRAL", JOURNAL OF MATERIALS CHEMISTRY, THE ROYAL SOCIETY OF CHEMISTRY, CAMBRIDGE, GB, vol. 7, no. 1, 1 January 1997 (1997-01-01) , pages 9-17, XP000692129, ISSN: 0959-9428, DOI: 10.1039/A602980I**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 729 549 B1

## Description

The invention relates to bimesogenic compounds of formula I

$$R^1\text{-}MG^1\text{-}Sp\text{-}MG^2\text{-}R^2 \quad I$$

wherein $R^1$, $R^2$, $MG^1$, $MG^2$ and Sp have the meaning given in claim 1, to the use of bimesogenic compounds of formula I in liquid crystal media and particular to flexoelectric liquid crystal devices comprising a liquid crystal medium according to the present invention.

Furthermore the invention relates to bimesogenic compounds of formula I inducing a second nematic phase in nematic mixtures that do not show this additional phase without compounds of formula I.

Liquid Crystal Displays (LCDs) are widely used to display information. LCDs are used for direct view displays, as well as for projection type displays. The electro-optical mode which is employed for most displays still is the twisted nematic (TN)-mode with its various modifications. Besides this mode, the super twisted nematic (STN)-mode and more recently the optically compensated bend (OCB)-mode and the electrically controlled birefringence (ECB)-mode with their various modifications, as e. g. the vertically aligned nematic (VAN), the patterned ITO vertically aligned nematic (PVA)-, the polymer stabilized vertically aligned nematic (PSVA)-mode and the multi domain vertically aligned nematic (MVA)-mode, as well as others, have been increasingly used. All these modes use an electrical field, which is substantially perpendicular to the substrates, respectively to the liquid crystal layer. Besides these modes there are also electro-optical modes employing an electrical field substantially parallel to the substrates, respectively the liquid crystal layer, like e.g. the In Plane Switching (short IPS) mode (as disclosed e.g. in DE 40 00 451 and EP 0 588 568) and the Fringe Field Switching (FFS) mode. Especially the latter mentioned electro-optical modes, which have good viewing angle properties and improved response times, are increasingly used for LCDs for modern desktop monitors and even for displays for TV and for multimedia applications and thus are competing with the TN-LCDs.

Further to these displays, new display modes using cholesteric liquid crystals having a relatively short cholesteric pitch have been proposed for use in displays exploiting the so called "flexo-electric" effect. The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

Flexoelectric liquid crystal materials are known in prior art. The flexoelectric effect is described inter alia by Chandrasekhar, "Liquid Crystals", 2nd edition, Cambridge University Press (1992) and P.G. de Gennes et al., "The Physics of Liquid Crystals", 2nd edition, Oxford Science Publications (1995).

In these displays the cholesteric liquid crystals are oriented in the "uniformly lying helix" arrangement (ULH), which also give this display mode its name. For this purpose, a chiral substance which is mixed with a nematic material induces a helical twist transforming the material into a chiral nematic material, which is equivalent to a cholesteric material. The term "chiral" in general is used to describe an object that is non-superimposable on its mirror image. "Achiral" (non-chiral) objects are objects that are identical to their mirror image. The terms chiral nematic and cholesteric are used synonymously in this application, unless explicitly stated otherwise. The pitch induced by the chiral substance ($P_0$) is in a first approximation inversely proportional to the concentration (c) of the chiral material used. The constant of proportionality of this relation is called the helical twisting power (HTP) of the chiral substance and defined by equation (1)

$$HTP \equiv 1 / (c \cdot P_0) \qquad (1)$$

wherein

c is concentration of the chiral compound.

The uniform lying helix texture is realized using a chiral nematic liquid crystal with a short pitch, typically in the range from 0.2 μm to 1 μm, preferably of 1.0 μm or less, in particular of 0.5 μm or less, which is unidirectional aligned with its helical axis parallel to the substrates, e. g. glass plates, of a liquid crystal cell. In this configuration the helical axis of the chiral nematic liquid crystal is equivalent to the optical axis of a birefringent plate.

If an electrical field is applied to this configuration normal to the helical axis the optical axis is rotated in the plane of the cell, similar as the director of a ferroelectric liquid crystal rotate as in a surface stabilized ferroelectric liquid crystal display. The flexoelectric effect is characterized by fast response times typically ranging from 6 μs to 100 μs. It further features excellent grey scale capability.

The field induces a splay bend structure in the director which is accommodated by a tilt in the optical axis. The angle of the rotation of the axis is in first approximation directly and linearly proportional to the strength of the electrical

field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the electric field, as thus, by the inversion the electrical field, the optical axis is rotated by 45° and by appropriate selection of the relative orientations of the preferred direction of the axis of the helix, the absorption axis of the polarizer and the direction of the electric field, the optical axis can be switched from parallel to one polarizer to the center angle between both polarizers. The optimum contrast is then achieved when the total angle of the switching of the optical axis is 45°. In that case the arrangement can be used as a switchable quarter wave plate, provided the optical retardation, i. e. the product of the effective birefringence of the liquid crystal and the cell gap, is selected to be the quarter of the wave length. In this context the wavelength referred to is 550 nm, the wavelength for which the sensitivity of the human eye is highest, unless explicitly stated otherwise.

The angle of rotation of the optical axis ($\phi$) is given in good approximation by formula (2)

$$\tan \Phi = \bar{e}\, P_0\, E / (2 \pi K) \qquad (2)$$

wherein

$P_0$ is the undisturbed pitch of the cholesteric liquid crystal,
e is the average [$e = ½ (e_{splay} + e_{bend})$] of the splay flexoelectric coefficient ($e_{splay}$) and the bend flexoelectric coefficient ($e_{bend}$),
E is the electrical field strength and
*K* is the average [$K = ½ (k_{11} + k_{33})$] of the splay elastic constant ($k_{11}$) and the bend elastic constant ($K_{33}$)
and wherein
e / *K* is called the flexo-elastic ratio.

This angle of rotation is half the switching angle in a flexoelectric switching element.

The response time ($\tau$) of this electro-optical effect is given in good approximation by formula (3)

$$\tau = [P_0/(2 \pi)]^2 \cdot \gamma / K \qquad (3)$$

wherein
$\gamma$ is the effective viscosity coefficient associated with the distortion of the helix.

There is a critical field ($E_c$) to unwind the helix, which can be obtained from equation (4)

$$E_c = (\pi^2 / P_0) \cdot [k_{22}/(\varepsilon_0 \cdot \Delta\varepsilon)]^{1/2} \qquad (4)$$

wherein

$k_{22}$ is the twist elastic constant,
$\varepsilon_0$ is the permittivity of vacuum and
$\Delta\varepsilon$ is the dielectric anisotropy of the liquid crystal.

In this mode, however several problems still have to be resolved, which are, amongst others, difficulties in obtaining the required uniform orientation, an unfavorably high voltage required for addressing, which is incompatible with common driving electronics, a not really dark "off state", which deteriorates the contrast, and, last not least, a pronounced hysteresis in the electro-optical characteristics.

A relatively new display mode, the so-called uniformly standing helix (USH) mode, may be considered as an alternative mode to succeed the IPS, as it can show improved black levels, even compared to other display mode providing wide viewing angles (e.g. IPS, VA etc.).

For the USH mode, like for the ULH mode, flexoelectric switching has been proposed, using bimesogenic liquid crystal materials. Bimesogenic compounds are known in general from prior art, such as, for example described in US 2010/296038 A1, EP 1 477 547 A1, EP 1408 098 A1, GB 2 387 603 A, DE 60 2004 001166 T2, US 2005/041197 A1, US 7,623,214 B2, US 2009/041065 A1, Blatch, A.E., Jour. Of Mat. Chem 1997, 7, 1, 9-17, US 7,544,400 B2 and Hori, K., Iimuro, M., Nakao, A., Toriumi, H., J. Mol. Struc. 2004, 699, 23-29. The term "bimesogenic compound" relates to compounds comprising two mesogenic groups in the molecule. Just like normal mesogens they can form many mesophases, depending on their structure. In particular compounds of formula I induce a second nematic phase, when added to a nematic liquid crystal medium.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

However, due to the unfavorably high driving voltage required, to the relatively narrow phase range of the chiral nematic materials and to their irreversible switching properties, materials from prior art are not compatible for the use with current LCD driving schemes.

For displays of the USH and ULH mode, new liquid crystalline media with improved properties are required. Especially the birefringence ($\Delta n$) should be optimized for the optical mode. The birefringence $\Delta n$ herein is defined in equation (5)

$$\Delta n = n_e - n_o \qquad (5)$$

wherein $n_e$ is the extraordinary refractive index and $n_o$ is the ordinary refractive index, and the average refractive index $n_{av.}$ is given by the following equation (6).

$$n_{av.} = [(2\,n_o^2 + n_e^2)/3]^{1/2} \qquad (6)$$

The extraordinary refractive index $n_e$ and the ordinary refractive index $n_o$ can be measured using an Abbe refractometer. $\Delta n$ can then be calculated from equation (5).

Furthermore, for displays utilizing the USH or ULH mode the optical retardation d*$\Delta n$ (effective) of the liquid crystal media should preferably be such that the equation (7)

$$\sin 2(\pi \cdot d \cdot \Delta n/\lambda) = 1 \qquad (7)$$

wherein

d is the cell gap and
$\lambda$ is the wave length of light
is satisfied. The allowance of deviation for the right hand side of equation (7) is +/- 3 %.

The wave length of light generally referred to in this application is 550 nm, unless explicitly specified otherwise.

The cell gap of the cells preferably is in the range from 1 $\mu$m to 20 $\mu$m, in particular within the range from 2.0 $\mu$m to 10 $\mu$m.

For the ULH/USH mode, the dielectric anisotropy ($\Delta\varepsilon$) should be as small as possible, to prevent unwinding of the helix upon application of the addressing voltage. Preferably $\Delta\varepsilon$ should be slightly higher than 0 and very preferably be 0.1 or more, but preferably 10 or less, more preferably 7 or less and most preferably 5 or less. In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably the concentration is kept at least at 5 %, however, in order to keep the significance of the results a high as possible. The capacitance of the test mixtures are determined both in a cell with homeotropic and with homogeneous alignment. The cell gap of both types of cells is approximately 20 $\mu$m. The voltage applied is a rectangular wave with a frequency of 1 kHz and a root mean square value typically of 0.5 V to 1.0 V, however, it is always selected to be below the capacitive threshold of the respective test mixture.

$\Delta\varepsilon$ is defined as ($\varepsilon\| - \varepsilon_\perp$), whereas $\varepsilon_{av.}$ is ($\varepsilon\| + 2\,\varepsilon_\perp$) / 3. The dielectric permittivity of the compounds is determined from the change of the respective values of a host medium upon addition of the compounds of interest. The values are extrapolated to a concentration of the compounds of interest of 100 %. The host mixture is disclosed in H.J. Coles et al., J. Appl. Phys. 2006, 99, 034104 and has the composition given in the table 1.

Table 1: Host mixture composition

| Compound | Concentration |
|---|---|
| F-PGI-ZI-9-ZGP-F | 25 % |
| F-PGI-ZI-11-ZGP-F | 25 % |
| FPGI-O-5-O-PP-N | 9.5 % |
| FPGI-O-7-O-PP-N | 39 % |
| CD-1 | 1.5 % |

Besides the above mentioned parameters, the media have to exhibit a suitably wide range of the nematic phase, a rather small rotational viscosity and an at least moderately high specific resistivity.

Similar liquid crystal compositions with short cholesteric pitch for flexoelectric devices are known from EP 0 971 016, GB 2 356 629 and Coles, H.J., Musgrave, B., Coles, M.J., and Willmott, J., J. Mater. Chem., 11, p. 2709-2716 (2001). EP 0 971 016 reports on mesogenic estradiols, which, as such, have a high flexoelectric coefficient. GB 2 356 629 suggests the use of bimesogenic compounds in flexoelectric devices. The flexoelectric effect herein has been investigated in pure cholesteric liquid crystal compounds and in mixtures of homologous compounds only so far. Most of these compounds were used in binary mixtures consisting of a chiral additive and a nematic liquid crystal material being either a simple, conventional monomesogenic material or a bimesogenic one. These materials do have several drawbacks for practical applications, like insufficiently wide temperature ranges of the chiral nematic - or cholesteric phase, too small flexoelectric ratios, small angles of rotation.

One aim of the invention was to provide improved flexoelectric devices that exhibit high switching angles and fast response times. Another aim was to provide liquid crystal materials with advantageous properties, in particular for use in flexoelectric displays that enable good uniform alignment over the entire area of the display cell without the use of a mechanical shearing process, good contrast, high switching angles and fast response times also at low temperatures. The liquid crystal materials should exhibit low melting points, broad chiral nematic phase ranges, short temperature independent pitch lengths and high flexoelectric coefficients. Other aims of the present invention are immediately evident to the person skilled in the art from the following detailed description.

The inventors have found out that the above aims can be surprisingly achieved by providing bimesogenic compounds according to the present invention. These compounds, when used in chiral nematic liquid crystal mixtures, lead to low melting points, broad chiral nematic phases. In particular, they exhibit relatively high values of the elastic constant $k_{11}$, low values of the bend elastic constant $k_{33}$ and the flexoelectric coefficient.

Thus, the present invention relates to bimesogenic compounds of formula I

$$R^1\text{-}MG^1\text{-}Sp\text{-}MG^2\text{-}R^2 \qquad \text{I}$$

wherein

$R^1$ and $R^2$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C=C- in such a manner that oxygen atoms are not linked directly to one another,

$MG^1$ and $MG^2$ are each independently a mesogenic group,

Sp is -(CH2)o-, and

o is an integer from 5 to 15,

with the proviso if $R^1$ and $R^2$ both are -CN,
$MG^1$ and $MG^2$ are not both

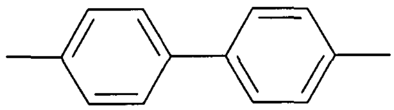

and if $MG^1$ and $MG^2$ both are

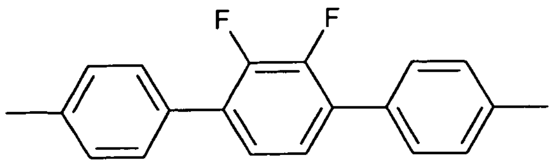

$R^1$ and $R^2$ are not both a straight-chain alkyl group.

Preferred are compounds of formula I, in which
$R^1$ and $R^2$ both are -CN and
$MG^1$ and $MG^2$ both are not

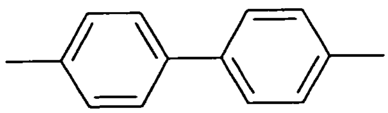

Further preferred are compounds of formula I, in which $MG^1$ and $MG^2$ are both are

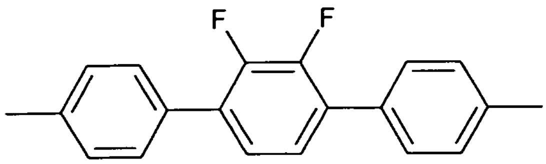

and
$R^1$ and $R^2$ both are different from a straight-chain alkyl group.

The mesogenic groups $MG^1$ and $MG^2$ are preferably independently of each other selected of formula II

$$-A^1-(Z^1-A^2)_m- \qquad II$$

wherein

$Z^1$ is -COO-, -OCO-, -O-CO-O-, $-OCH_2-$, $-CH_2O-$, $-CH_2CH_2-$, $-(CH_2)_4-$, $-CF_2CF_2-$, -CH=CH-,-CF=CF-, -CH=CH-COO-, -OCO-CH=CH-, -C=C- or a single bond,

$A^1$ and $A^2$ are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl,

m is 0, 1, 2 or 3.

Especially preferred are compounds of formula I wherein the mesogenic groups $MG^1$ and $MG^2$ at each occurrence independently from each other comprise one, two or three six-membered rings, preferably two or three six-membered rings.

A smaller group of preferred mesogenic groups of formula II is listed below. For reasons of simplicity, Phe in

these groups is 1,4-phenylene, PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and Cyc is 1,4-cyclohexylene. This list comprises the subformulae shown below as well as their mirror images

-Phe-Z-Phe- II-1

-Phe-Z-Cyc- II-2

-Cyc-Z-Cyc- II-3

-PheL-Z-Phe- II-4

-PheL-Z-Cyc- II-5

-PheL-Z-PheL- II-6

-Phe-Z-Phe-Z-Phe- II-7

-Phe-Z-Phe-Z-Cyc- II-8

-Phe-Z-Cyc-Z-Phe- II-9

-Cyc-Z-Phe-Z-Cyc- II-10

-Phe-Z-Cyc-Z-Cyc- II-11

-Cyc-Z-Cyc-Z-Cyc- II-12

-Phe-Z-Phe-Z-PheL- II-13

-Phe-Z-PheL-Z-Phe- II-14

-PheL-Z-Phe-Z-Phe- II-15

-PheL-Z-Phe-Z-PheL- II-16

-PheL-Z-PheL-Z-Phe- II-17

-PheL-Z-PheL-Z-PheL- II-18

-Phe-Z-PheL-Z-Cyc- II-19

-Phe-Z-Cyc-Z-PheL- II-20

-Cyc-Z-Phe-Z-PheL- II-21

-PheL-Z-Cyc-Z-PheL- II-22

-PheL-Z-PheL-Z-Cyc- II-23

-PheL-Z-Cyc-Z-Cyc- II-24

-Cyc-Z-PheL-Z-Cyc- II-25

Particularly preferred are the subformulae II-1, II-4, II-6, II-7, II-13, II-14, II-15, II-16, II-17 and II-18.

In these preferred groups Z in each case independently has one of the meanings of $Z^1$ as given in formula II.

Preferably Z is -COO-, -OCO-, $-CH_2CH_2-$, -C=C- or a single bond, especially preferred is a single bond.

Very preferably the mesogenic groups $MG^1$ and $MG^2$ are each and independently selected from the following formulae and their mirror images

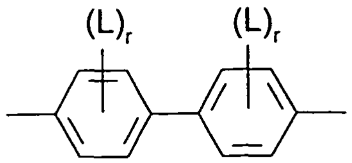

IIa

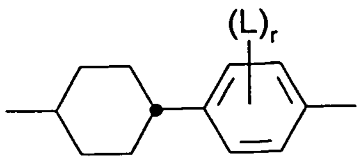

IIb

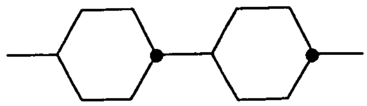

IIc

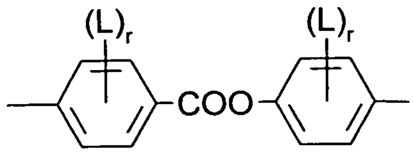

IId

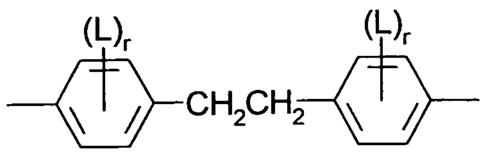

IIe

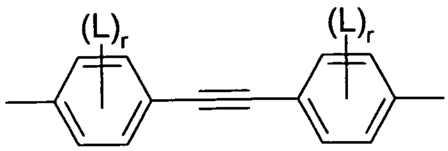

IIf

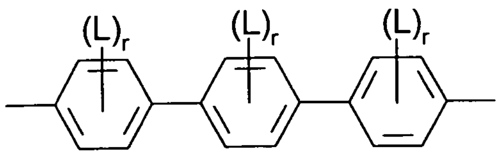

IIg

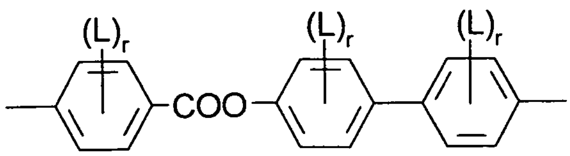

IIh

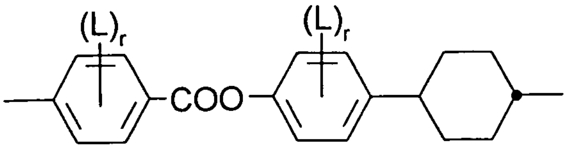

IIi

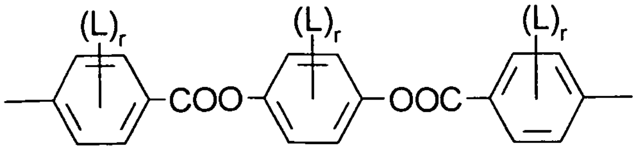

IIk

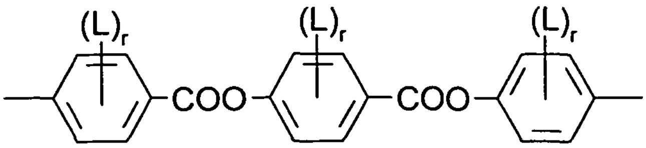

IIm

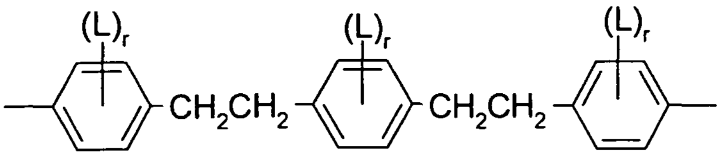

IIn

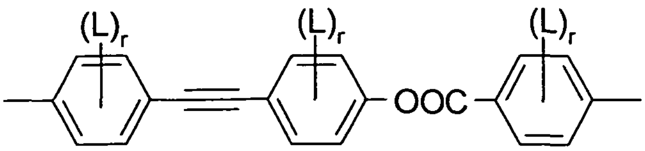

IIo

wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and r is in each occurrence independently of each other 0, 1, 2, 3 or 4, preferably 0,1 or 2.

The group

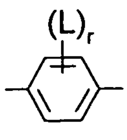

in these preferred formulae is very preferably denoting

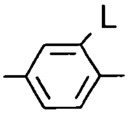, 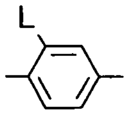 or 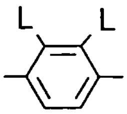,

furthermore

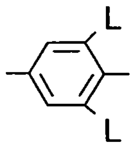 ,

L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$.

Particularly preferred are the subformulae IIa, IId, IIg, IIh, IIi, IIk and IIo, in particular the subformulae IIa and IIg.

In case of compounds with an unpolar polar group, $R^1$ and $R^2$ are preferably alkyl with up to 15 C atoms or alkoxy with 2 to 15 C atoms.

If $R^1$ or $R^2$ is an alkyl or alkoxy radical, i.e. where the terminal $CH_2$ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^1$ and $R^2$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^1$ and $R^2$ in formula I are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

In addition, compounds of formula I containing an achiral branched group $R^1$ and/or $R^2$ may occasionally be of importance, for example, due to a reduction in the tendency towards crystallization. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

Preferred spacer groups are pentylene, hexylene, heptylene, octylene, nonylene, decylene, undecylene, dodecylene, for example.

Preferred are spacer groups with even numbers of a straight-chain alkylene having 6, 8, 10, 12 and 14 C atoms.

In another embodiment of the present invention are the spacer groups preferably with odd numbers of a straight-chain alkylene having 5, 7, 9, 11, 13 and 15 C atoms. Very preferred are straight-chain alkylene spacers having 7, 9, and 11 C atoms.

Especially preferred are inventive compounds of formula I wherein Sp is denoting complete deuterated alkylene with 5 to 15 C atoms. Very preferred are deuterated straight-chain alkylene groups. Most preferred are partially deuterated straight-chain Alkylene groups.

Preferred are compounds of formula I wherein the mesogenic groups $R^1$-$MG^1$- and $R^2$-$MG^2$- are different. Especially preferred are compounds of formula I wherein $R^1$-$MG^1$- and $R^2$-$MG^2$- in formula I are identical.

Particularly preferred are the following compounds selected from formulae Ia and Ib:

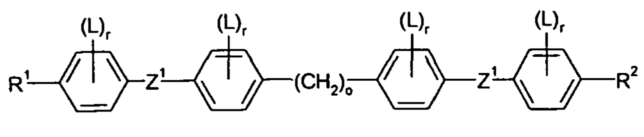

(Ia)

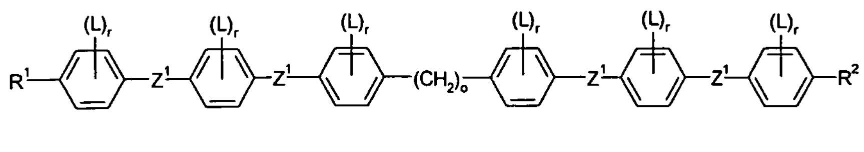

(Ib)

wherein $R^1$ and $R^2$, $Z^1$, o and r are at each occurrence independently from each other as defined above, including the preferred meanings of these groups and wherein L is in each occurrence independently of each other preferably F, Cl,

CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$. Preferred compounds of the formulae Ia and Ib are indicated below:

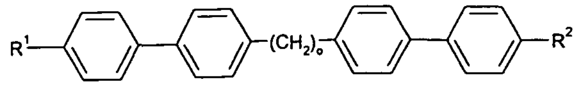
Ia-1

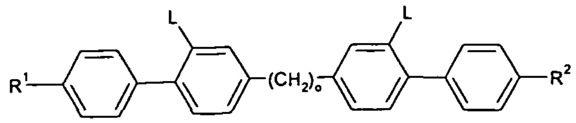
Ia-2

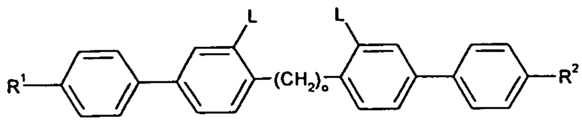
Ia-3

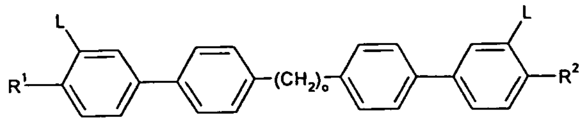
Ia-4

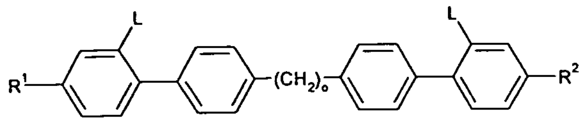
Ia-5

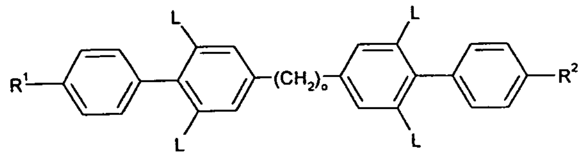
Ia-6

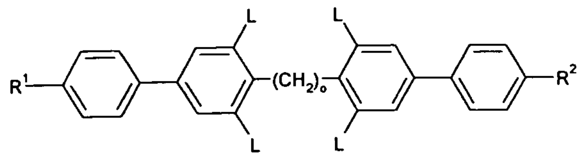
Ia-7

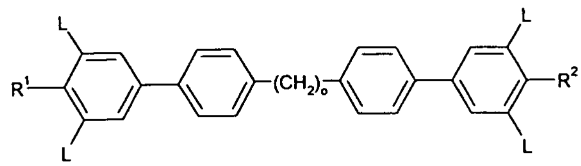
Ia-8

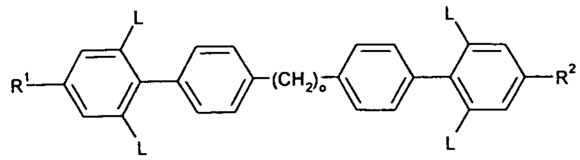
Ia-9

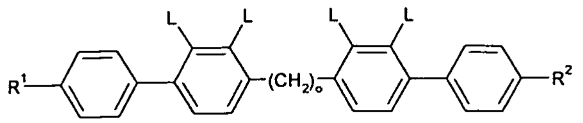

Ia-10

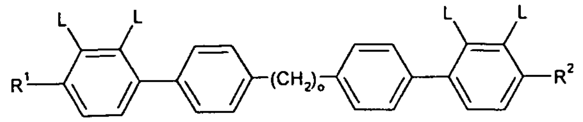

Ia-11

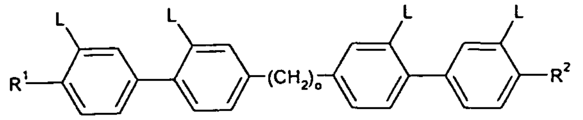

Ia-12

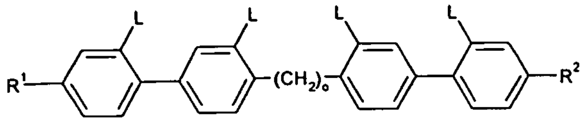

Ia-13

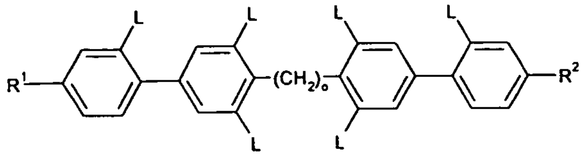

Ia-14

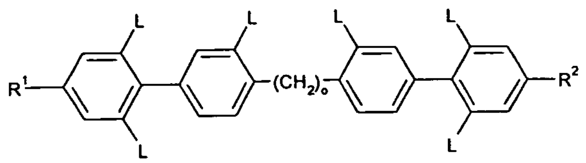

Ia-15

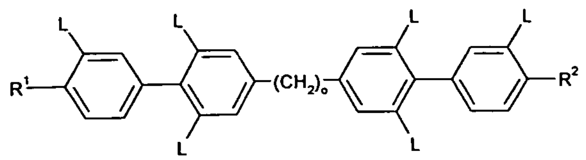

Ia-16

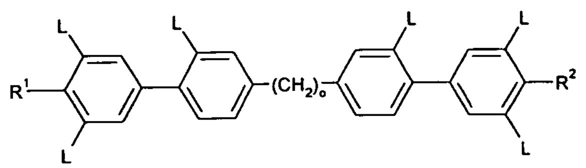

Ia-17

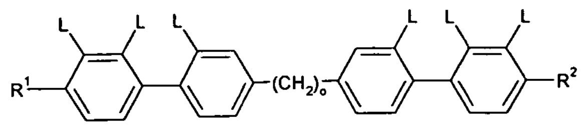

Ia-18

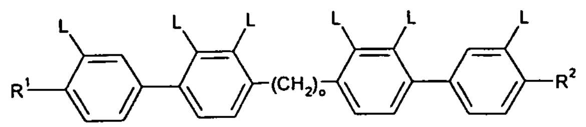

Ia-19

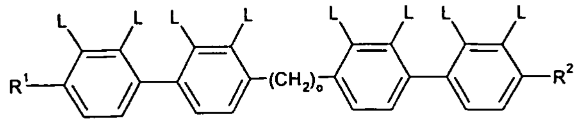

Ia-20

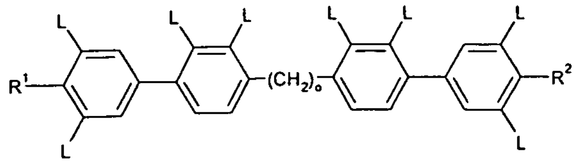

Ia-21

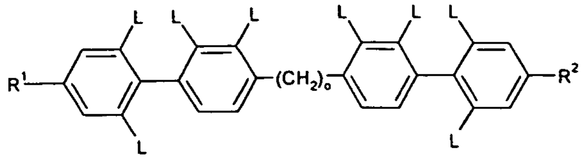

Ia-22

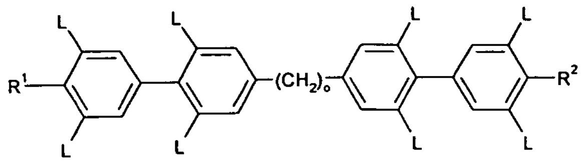

Ia-23

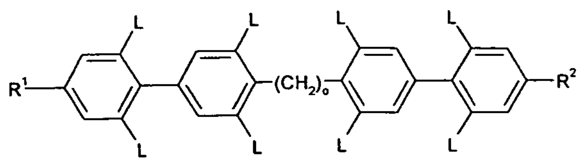

Ia-24

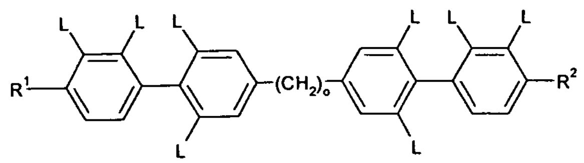

Ia-25

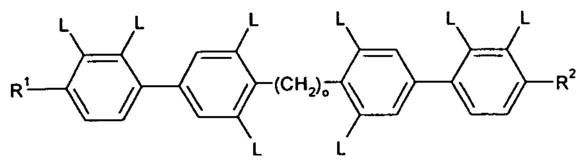

Ia-26

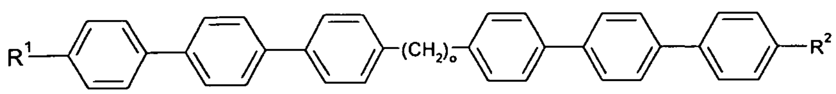

Ib-1

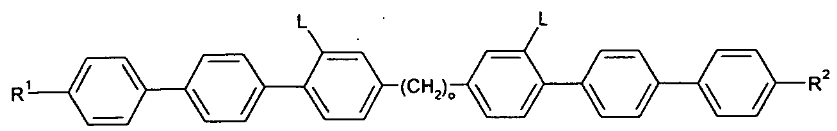

Ib-2

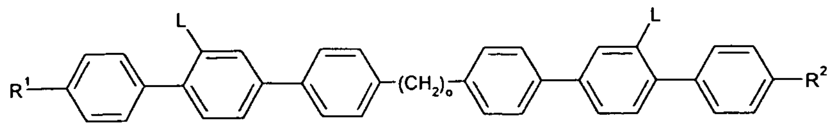

Ib-3

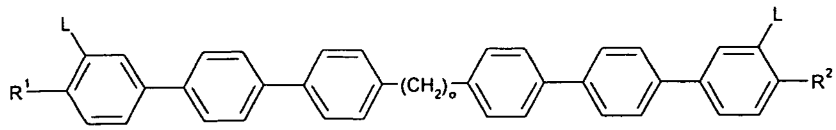

Ib-4

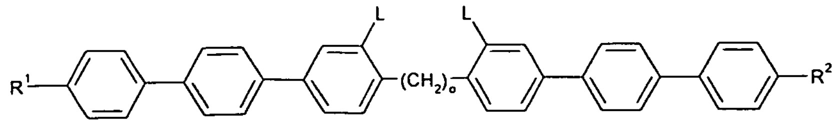

Ib-5

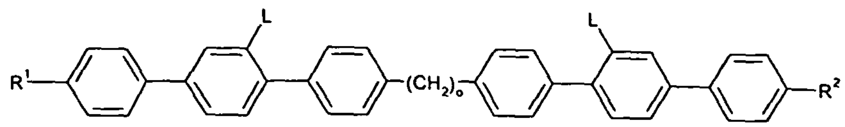

Ib-6

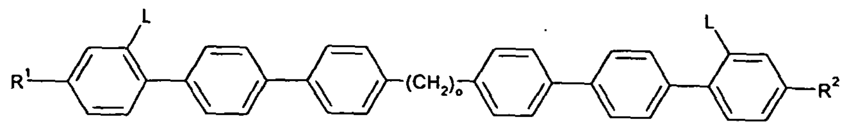

Ib-7

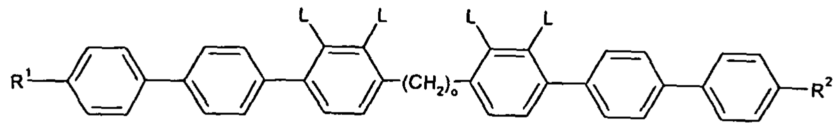

Ib-8

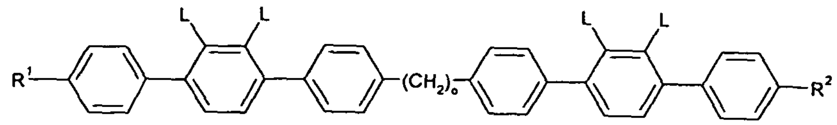

Ib-9

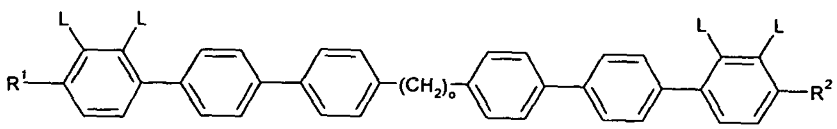

Ib-10

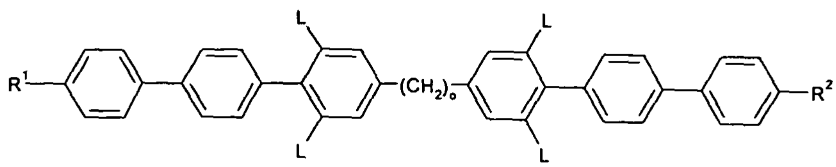

Ib-11

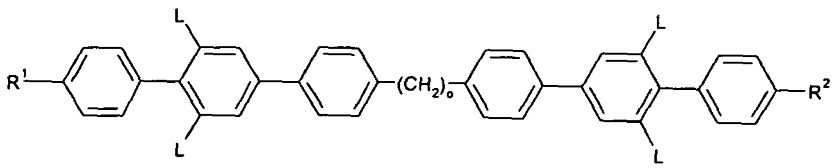

Ib-12

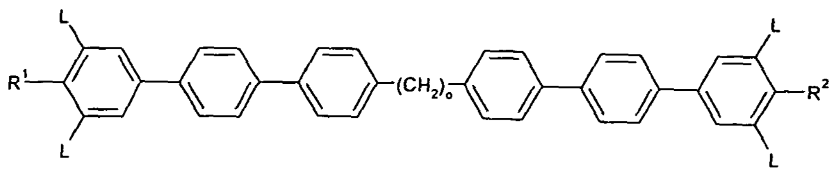

Ib-13

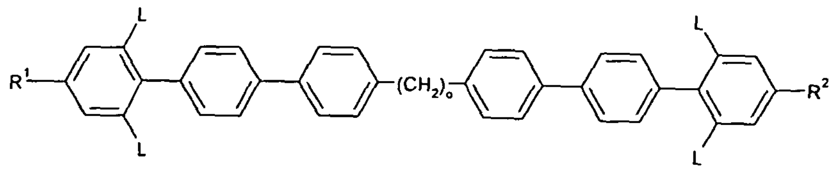

Ib-14

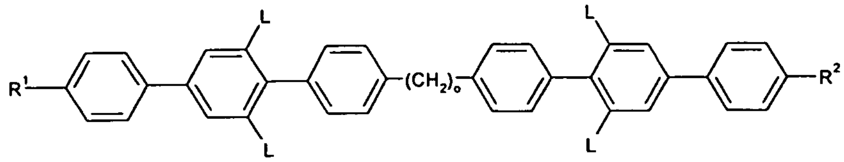

Ib-15

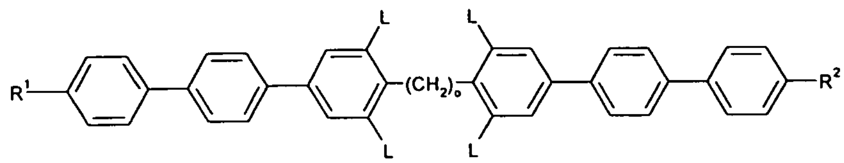

Ib-16

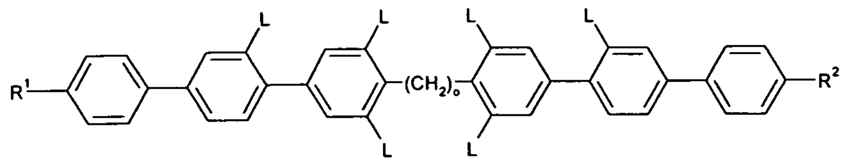

Ib-17

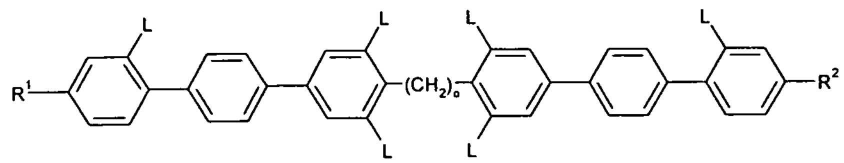

Ib-18

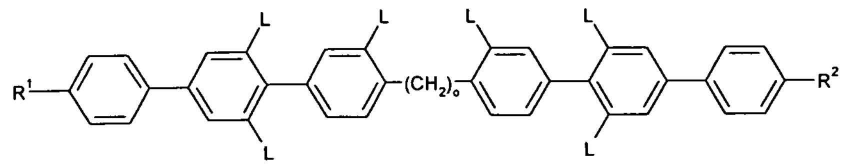

Ib-19

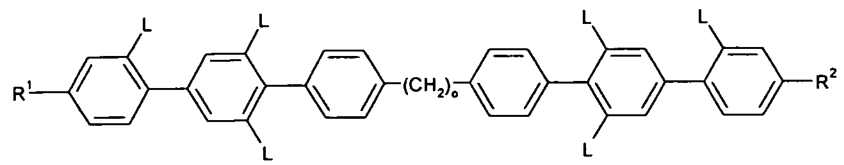

Ib-20

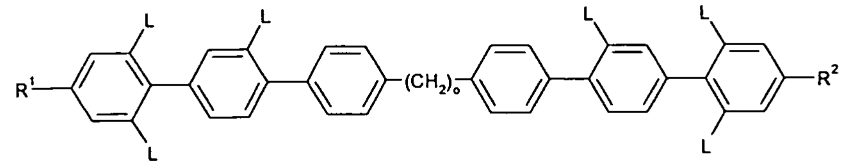
Ib-21

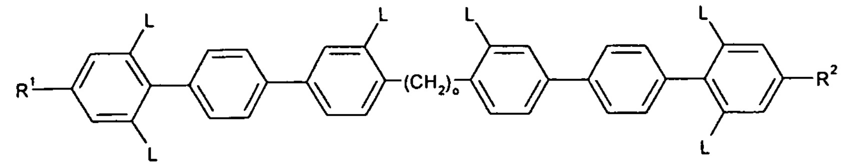
Ib-22

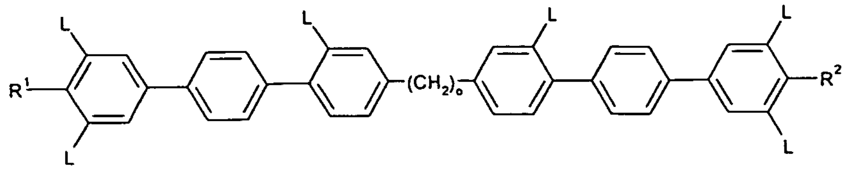
Ib-23

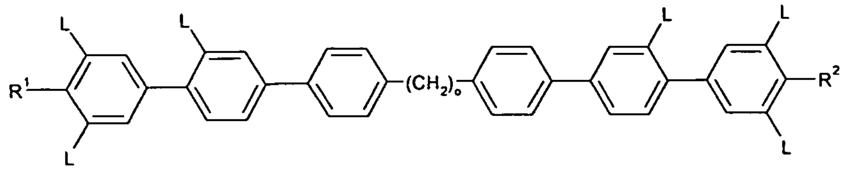
Ib-24

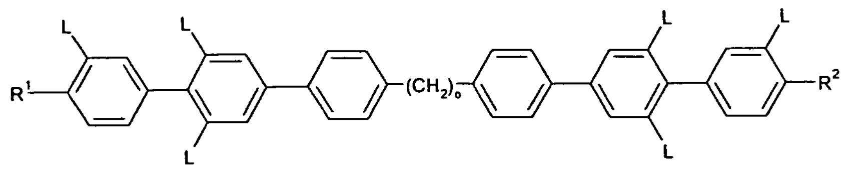
Ib-25

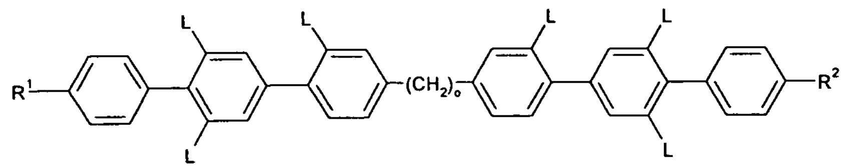
Ib-26

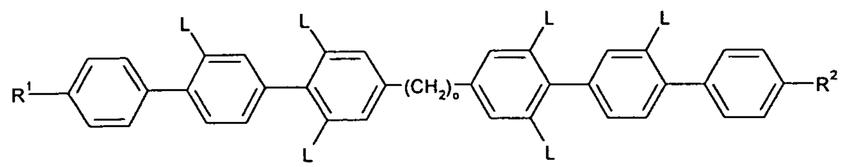
Ib-27

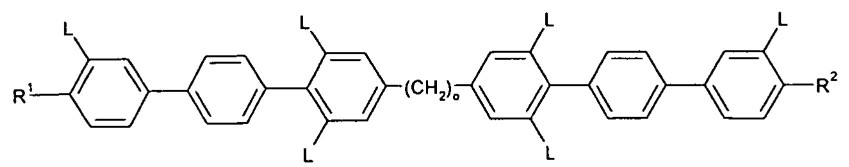
Ib-28

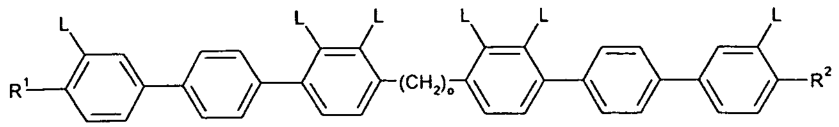

Ib-29

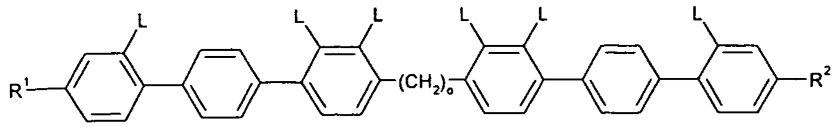

Ib-30

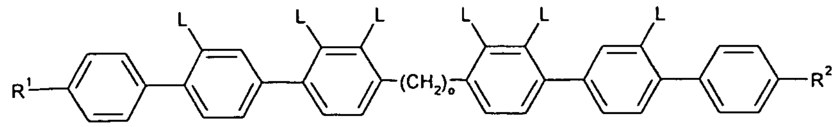

Ib-31

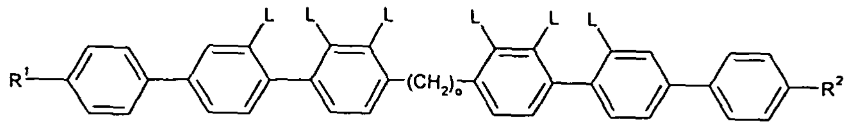

Ib-32

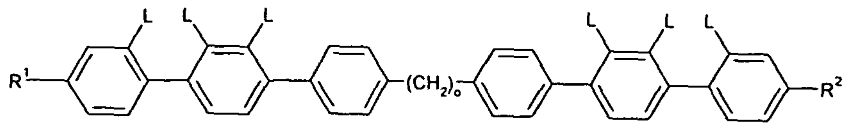

Ib-33

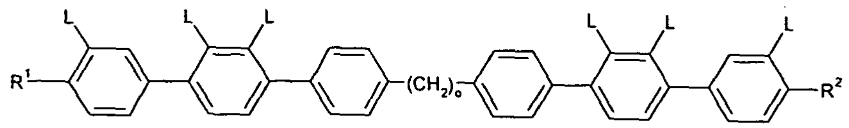

Ib-34

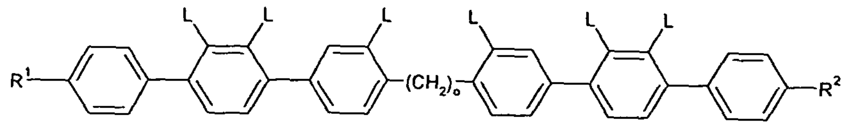

Ib-35

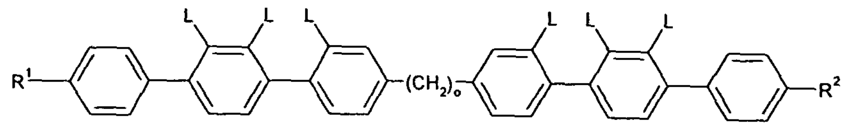

Ib-36

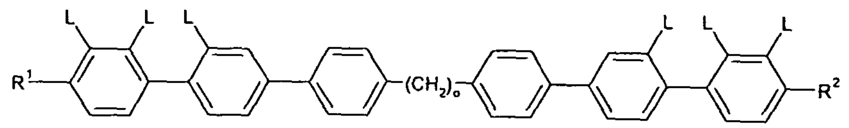

Ib-37

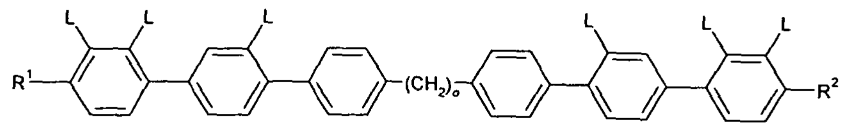

Ib-38

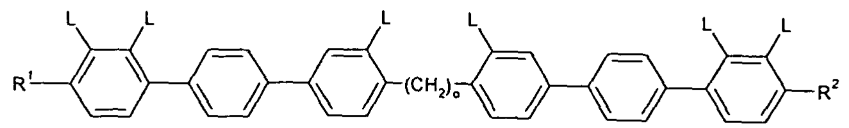

Ib-39

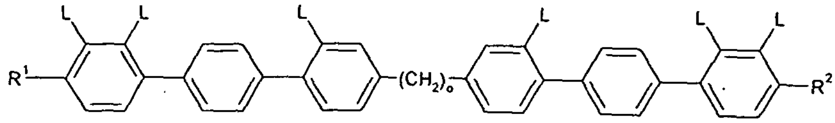

Ib-40

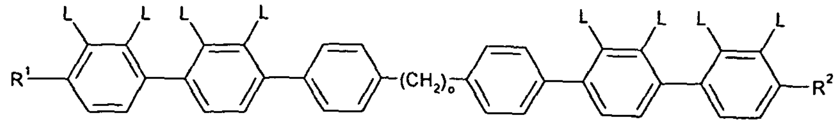

Ib-41

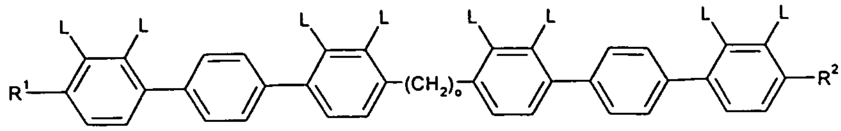

Ib-42

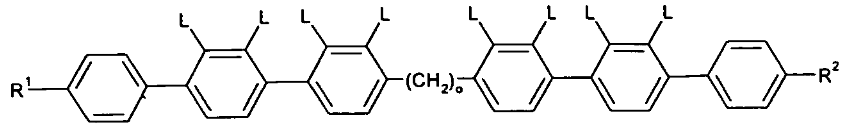

Ib-43

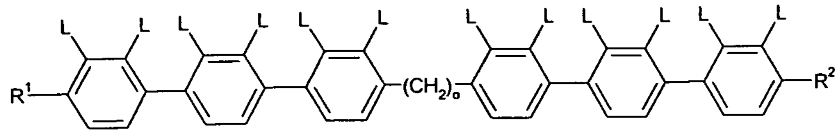

Ib-44

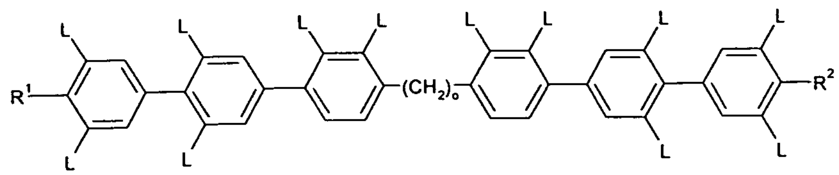

Ib-45

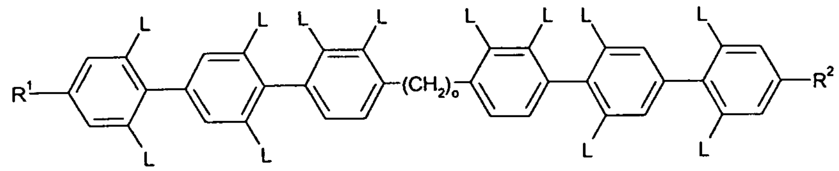

Ib-46

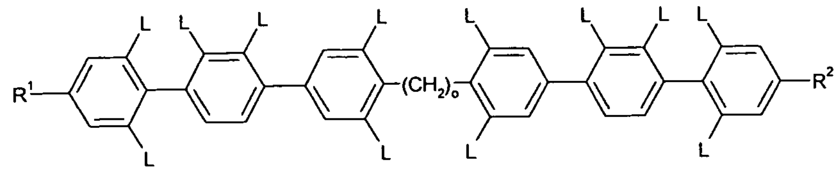

Ib-47

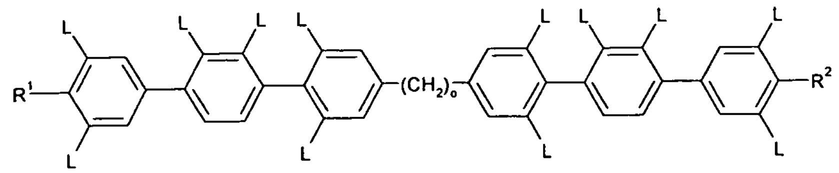

Ib-48

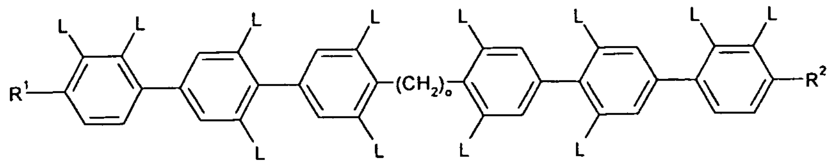

Ib-49

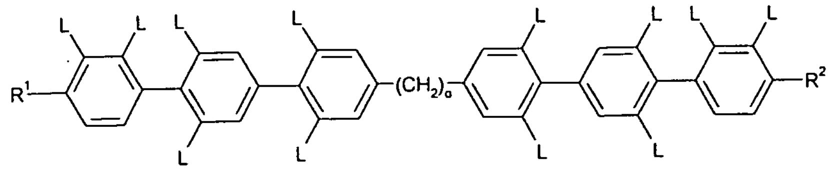

Ib-50

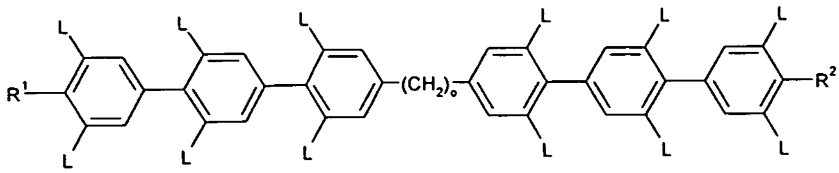

Ib-51

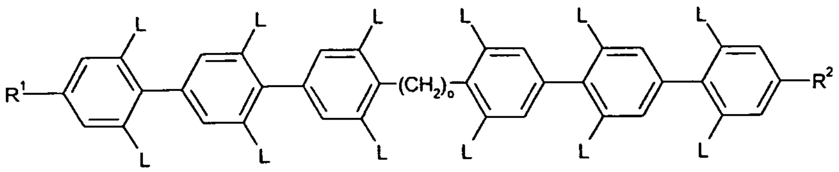

Ib-52

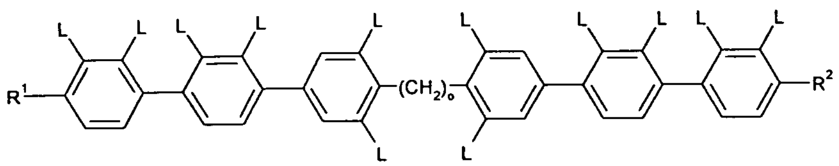

Ib-53

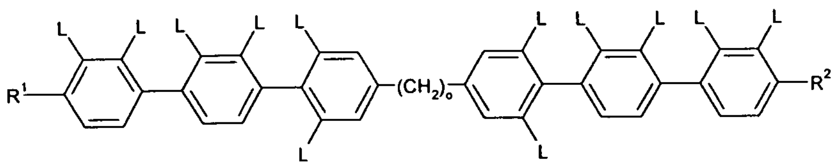

Ib-54

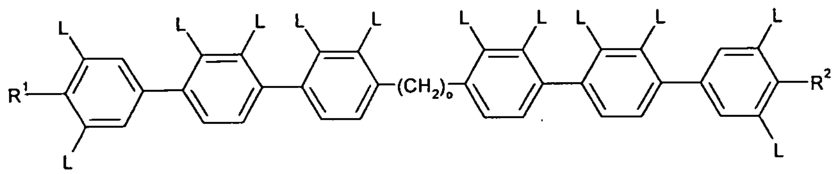

Ib-55

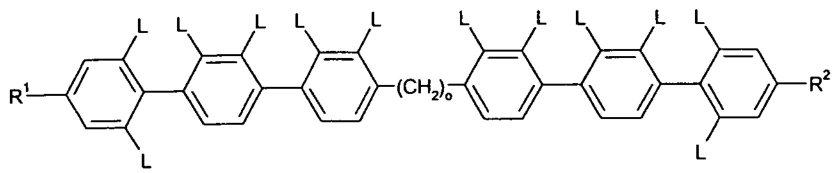

Ib-56

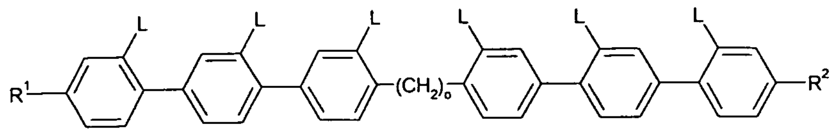

Ib-57

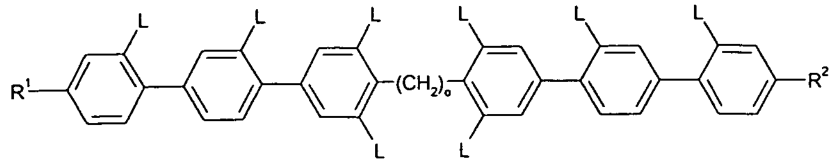

Ib-58

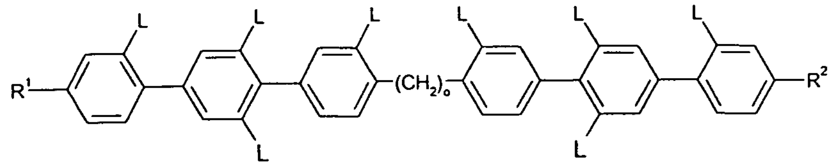

Ib-59

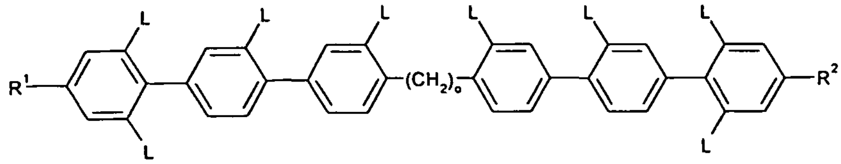

Ib-60

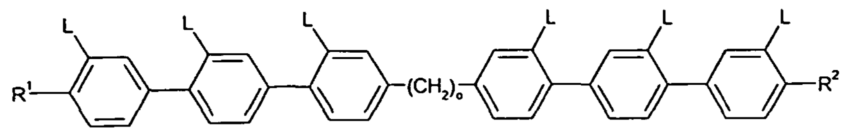

Ib-61

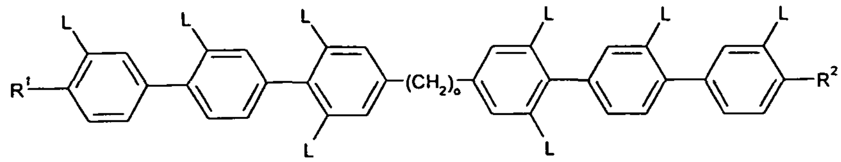

Ib-62

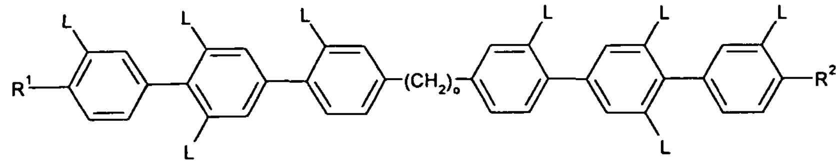

Ib-63

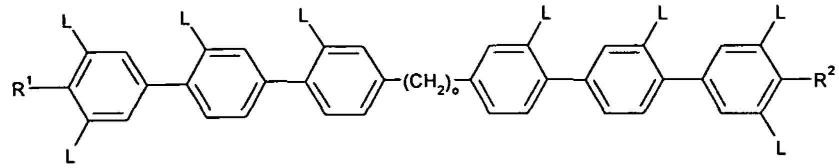

Ib-64

wherein $R^1$ and $R^2$ and o are at each occurrence independently from each other as defined above, including the preferred meanings of these groups and wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN,

$CH_3$, $C_2H_5$, $OCH_3$, $COCH_3$ and $OCF_3$, most preferably F, Cl, $CH_3$, $OCH_3$ and $COCH_3$.

Especially preferred are the compounds of the formulae Ia-1, Ia-2, Ia-3, Ia-6, Ia-8, Ia-12, Ia-17, Ia-23, Ib-61 and Ib-63.

Very preferred compounds of the formulae Ia-1 to Ia-26 and Ib-1 to Ib-56 are indicated below:

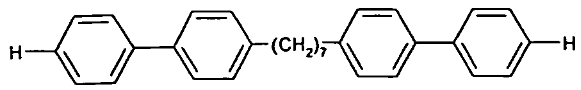

Ia-1a

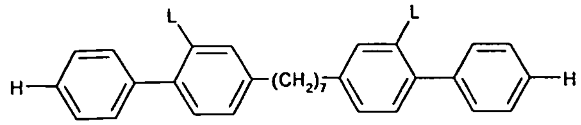

Ia-2a

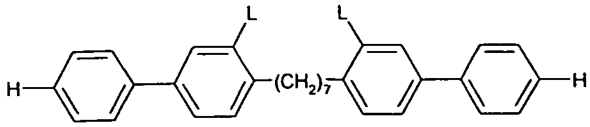

Ia-3a

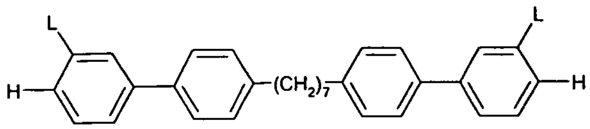

Ia-4a

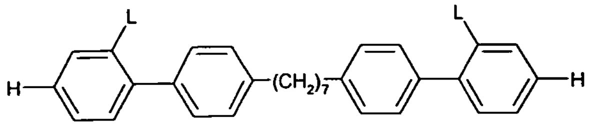

Ia-5a

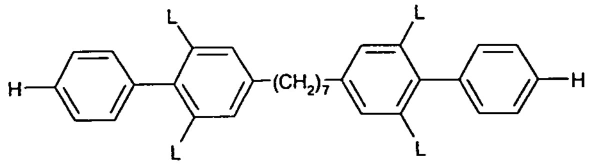

Ia-6a

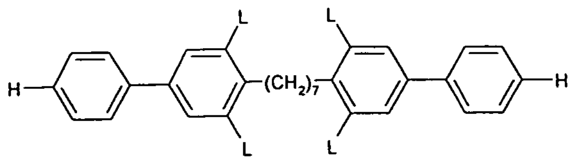

Ia-7a

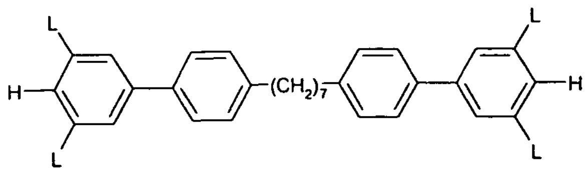

Ia-8a

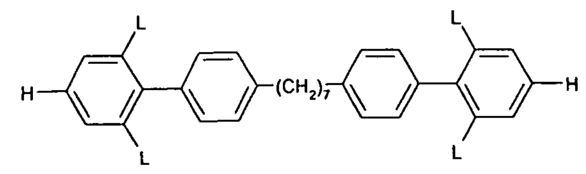

Ia-9a

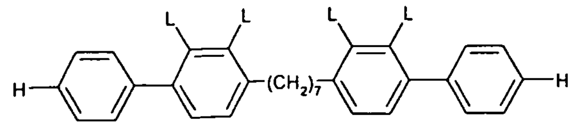

Ia-10a

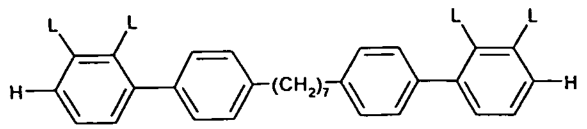

Ia-11a

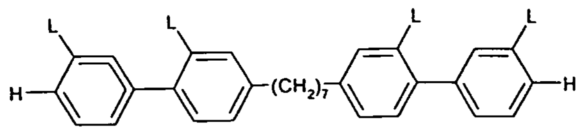

Ia-12a

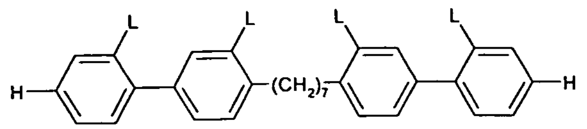

Ia-13a

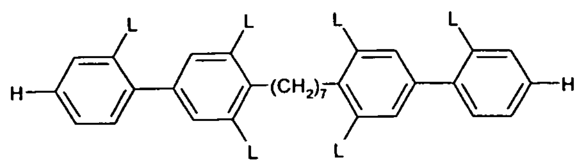

Ia-14a

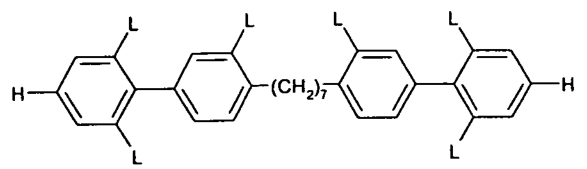

Ia-15a

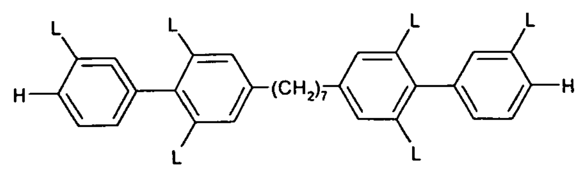

Ia-16a

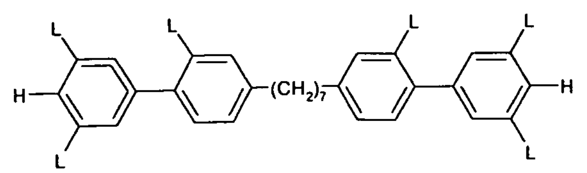

Ia-17a

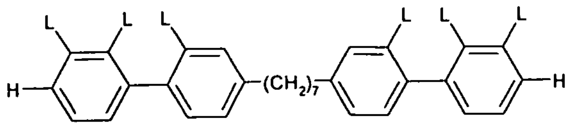

Ia-18a

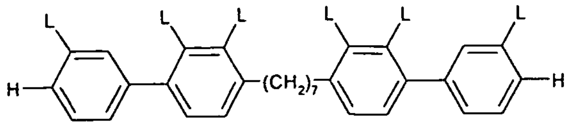

Ia-19a

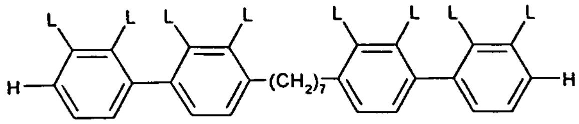

Ia-20a

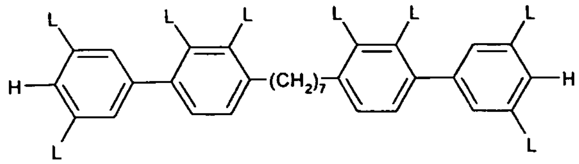

Ia-21a

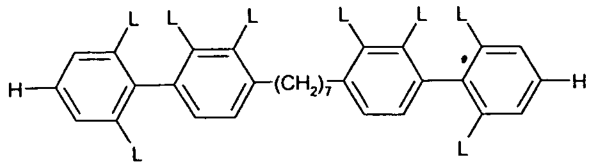

Ia-22a

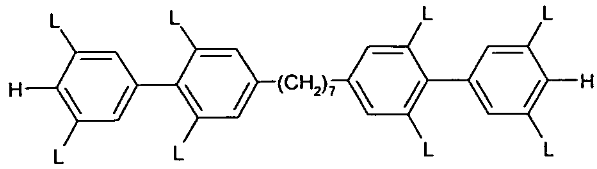

Ia-23a

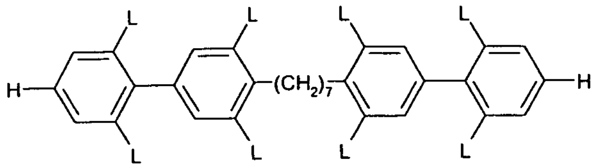

Ia-24a

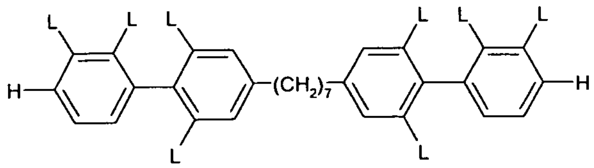

Ia-25a

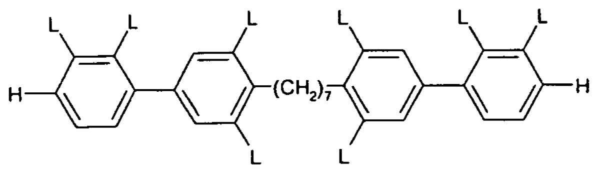

Ia-26a

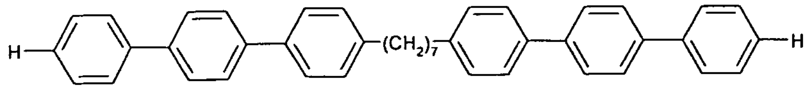

Ib-1a

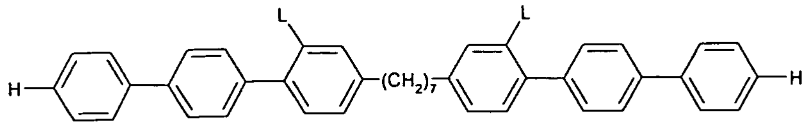

Ib-2a

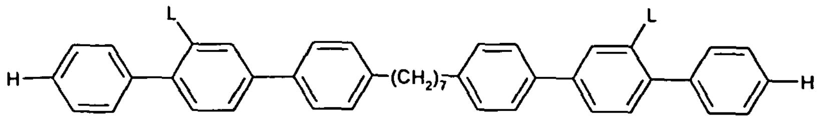

Ib-3a

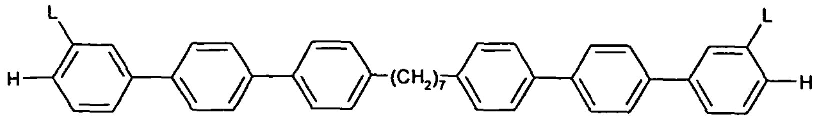

Ib-4a

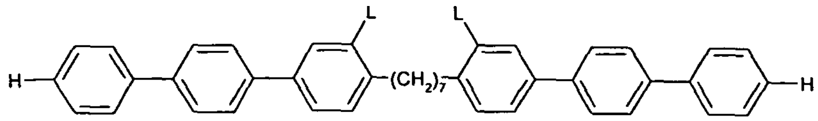

Ib-5a

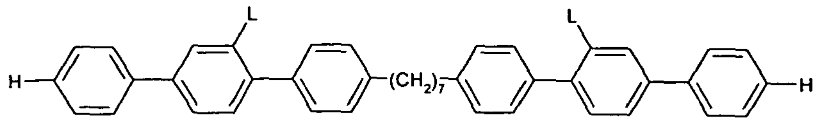

Ib-6a

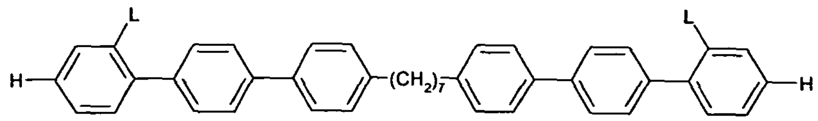

Ib-7a

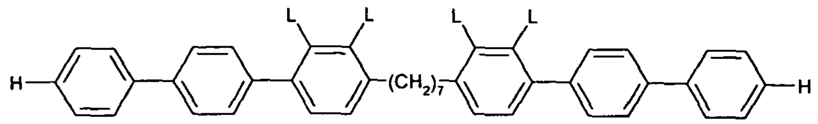

Ib-8a

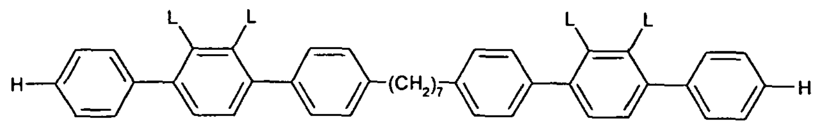

Ib-9a

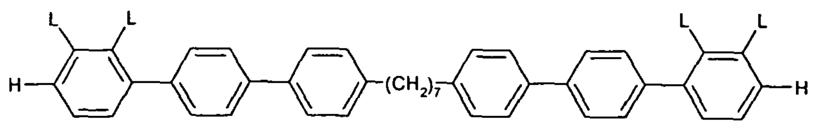

Ib-10a

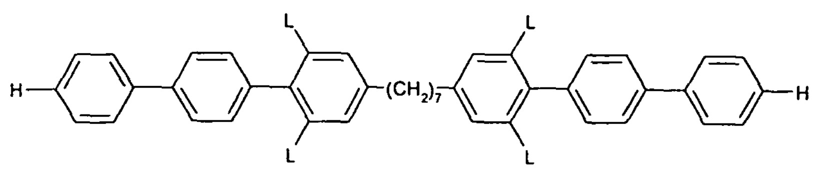

Ib-11a

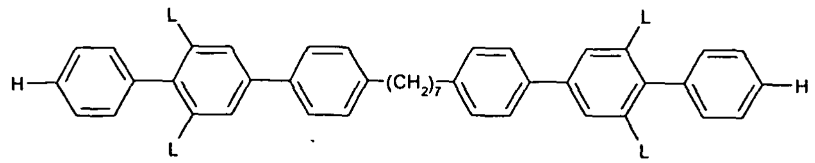

Ib-12a

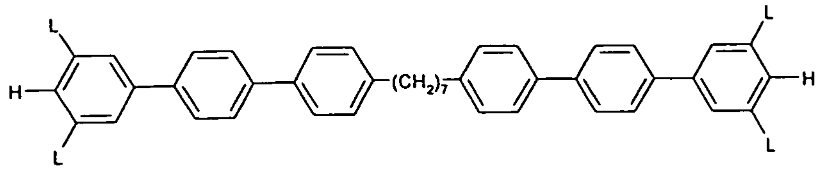

Ib-13a

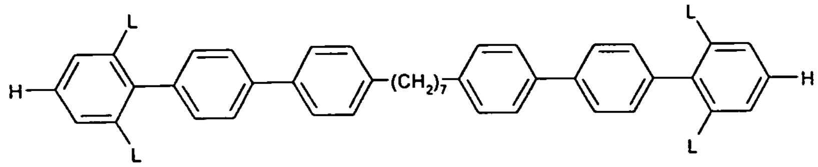

Ib-14a

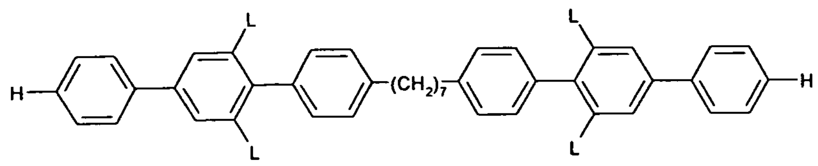

Ib-15a

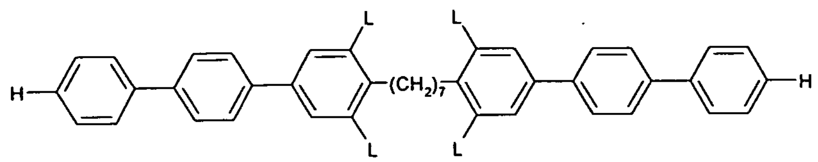

Ib-16a

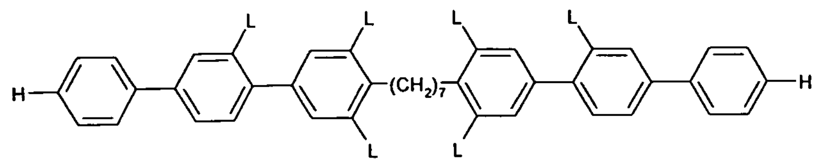

Ib-17a

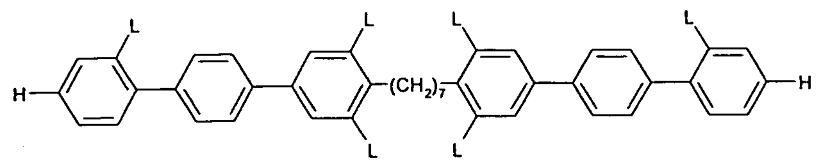

Ib-18a

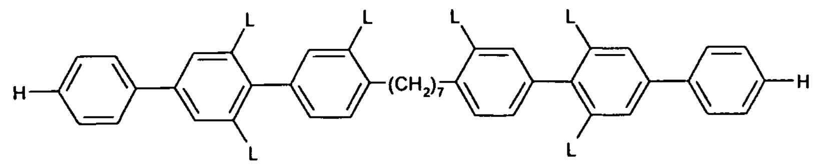

Ib-19a

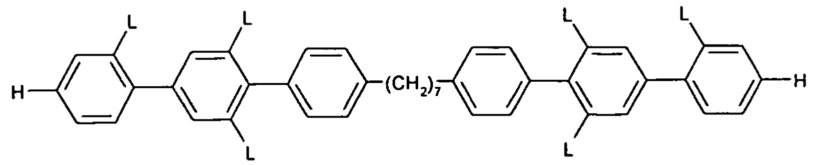

Ib-20a

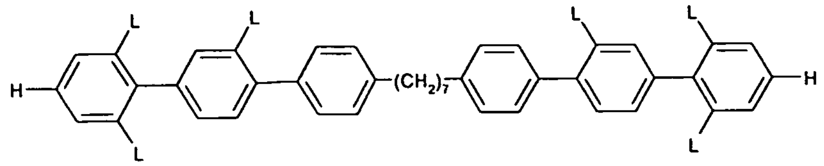

Ib-21a

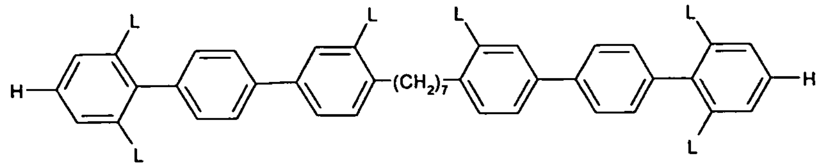

Ib-22a

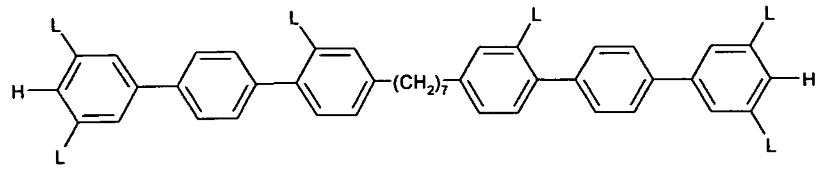

Ib-23a

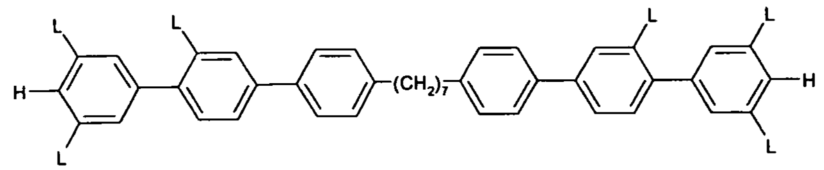

Ib-24a

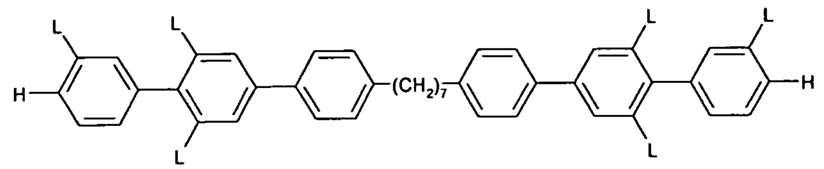

Ib-25a

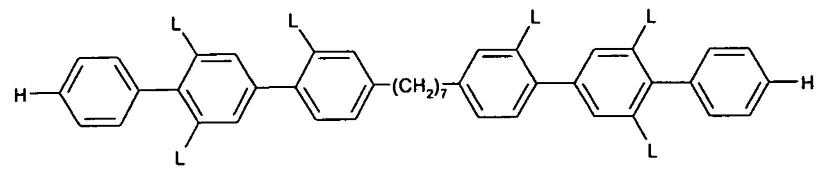

Ib-26a

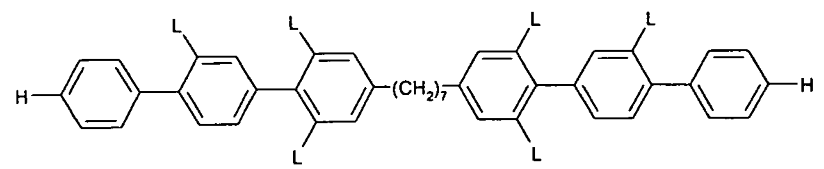

Ib-27a

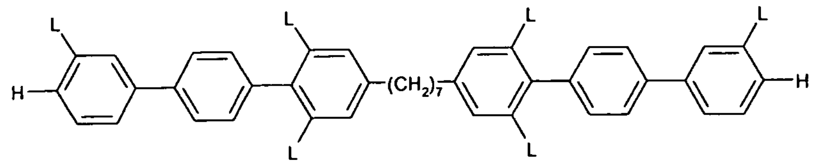

Ib-28a

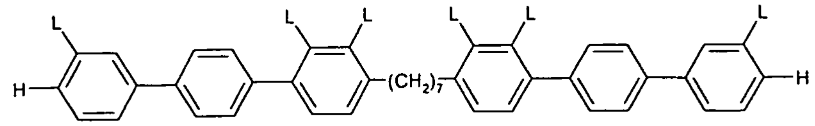

Ib-29a

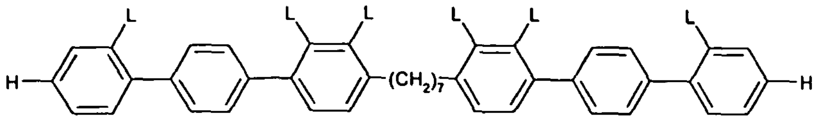

Ib-30a

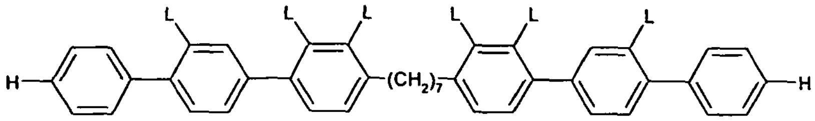

Ib-31a

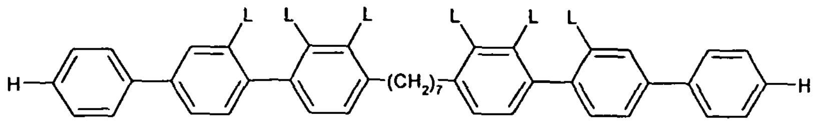

Ib-32a

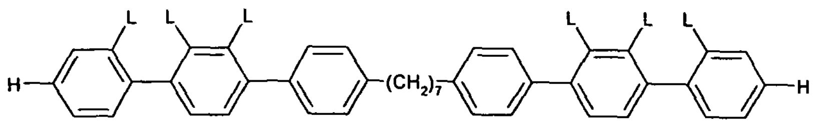

Ib-33a

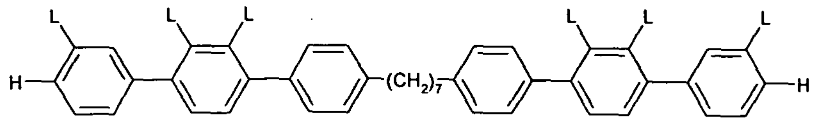

Ib-34a

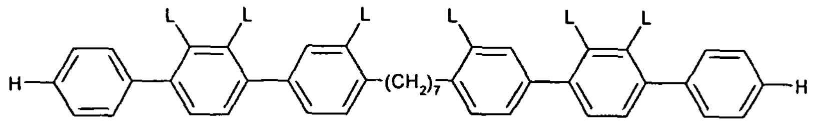

Ib-35a

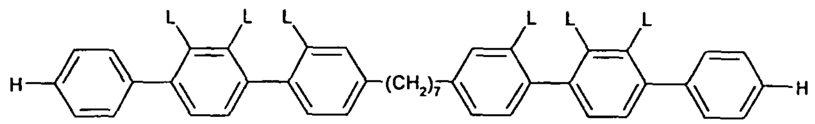

Ib-36a

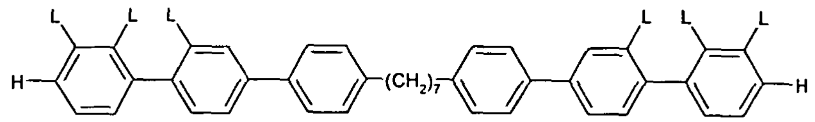

Ib-37a

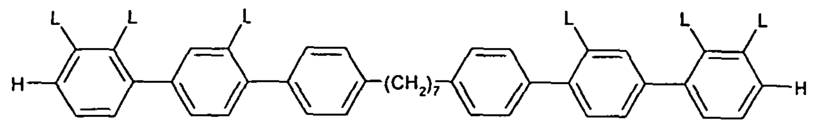

Ib-38a

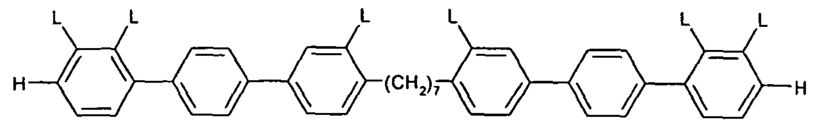

Ib-39a

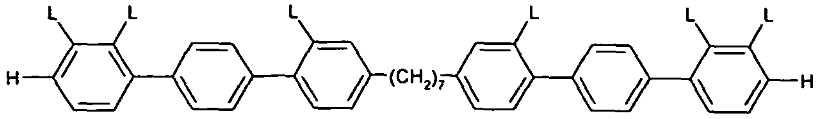

Ib-40a

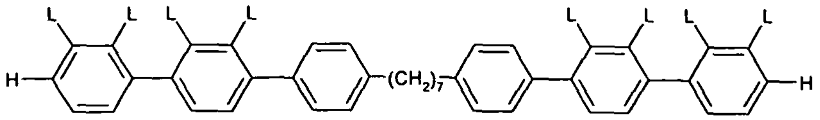

Ib-41a

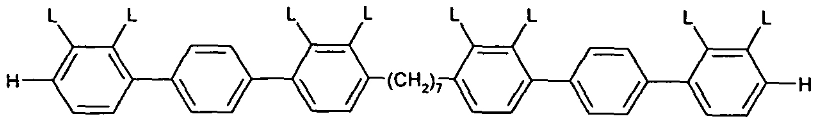

Ib-42a

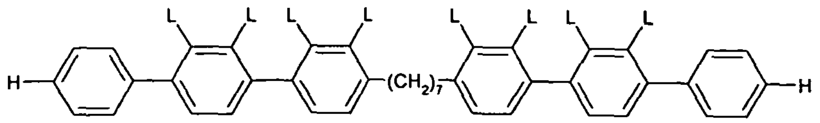

Ib-43a

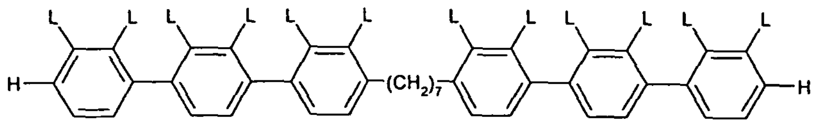

Ib-44a

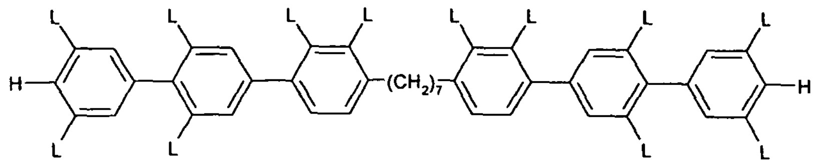

Ib-45a

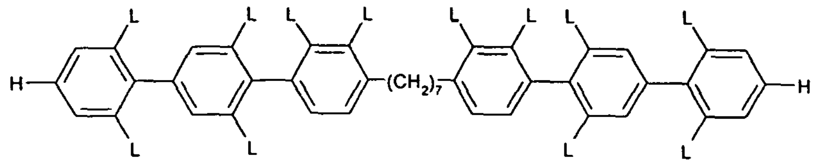

Ib-46a

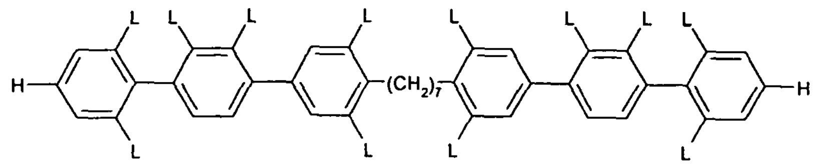

Ib-47a

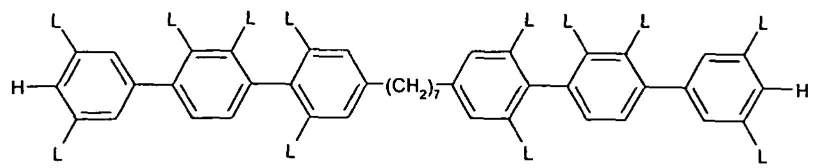

Ib-48a

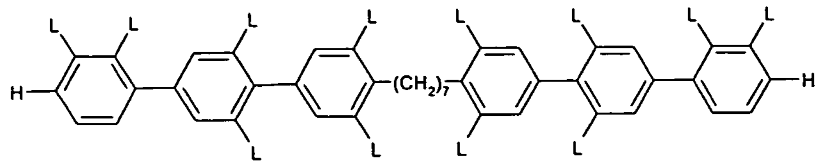

Ib-49a

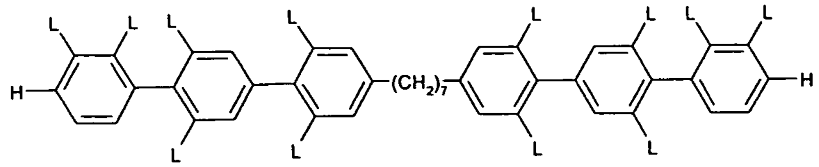

Ib-50a

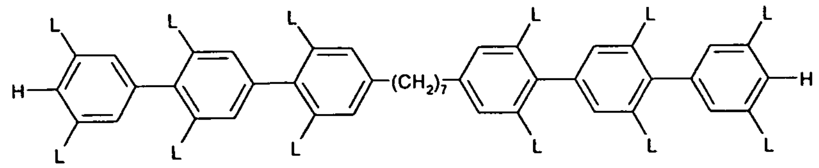

Ib-51a

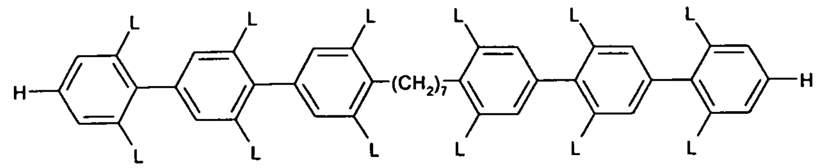

Ib-52a

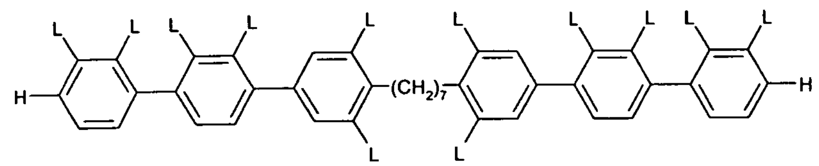

Ib-53a

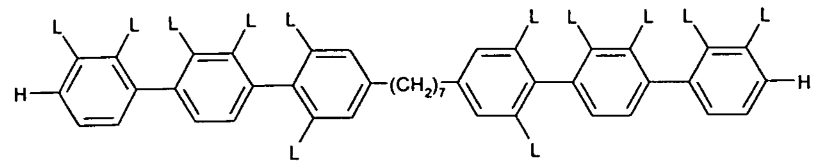

Ib-54a

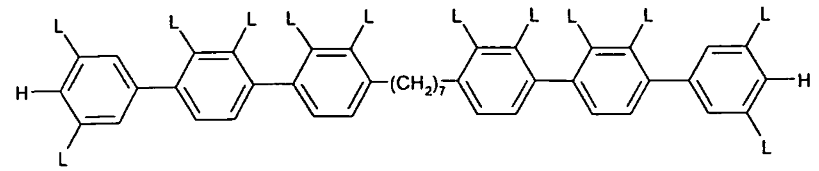

Ib-55a

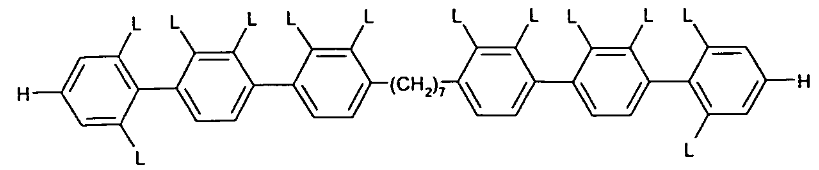

Ib-56a

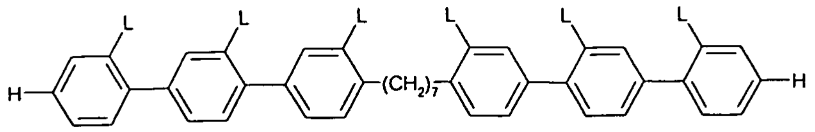

Ib-57a

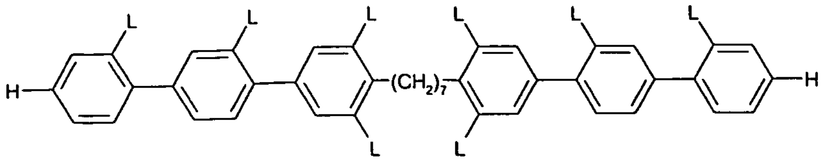

Ib-58a

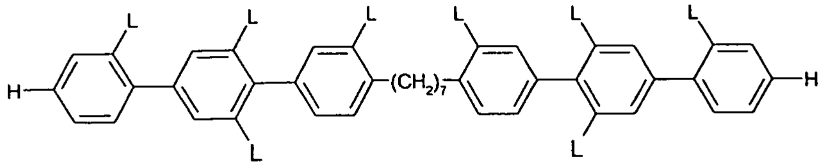

Ib-59a

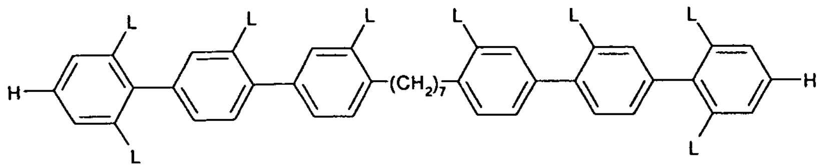

Ib-60a

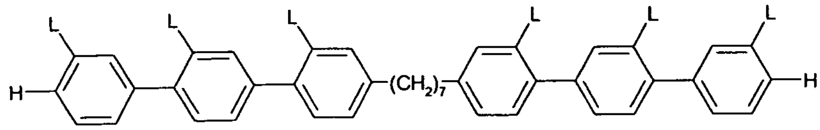

Ib-61a

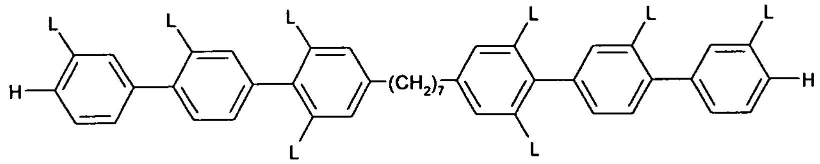

Ib-62a

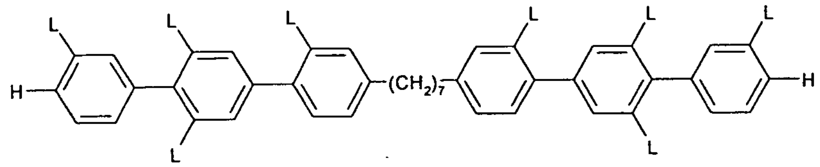

Ib-63a

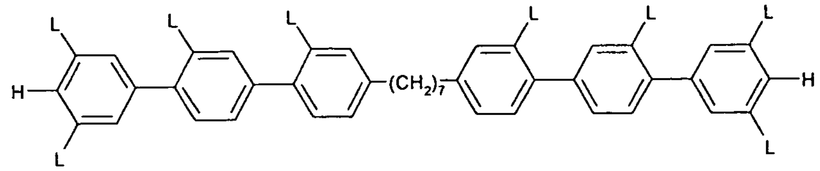

Ib-64a

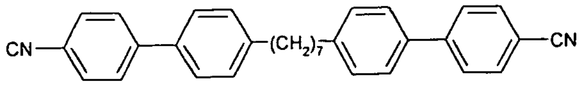

Ia-1b

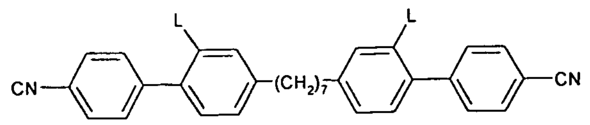

Ia-2b

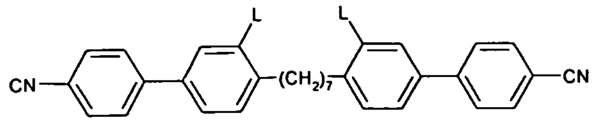

Ia-3b

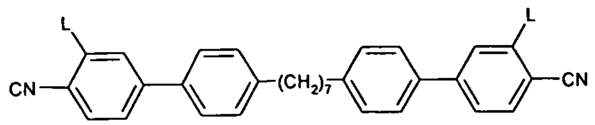

Ia-4b

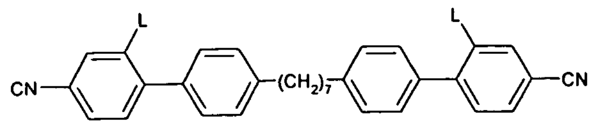

Ia-5b

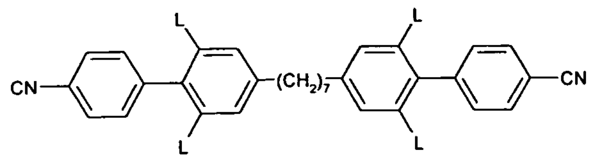

Ia-6b

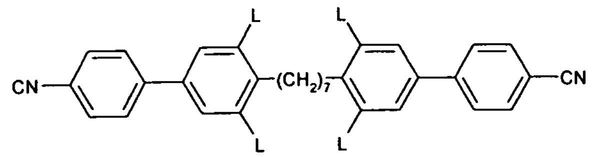

Ia-7b

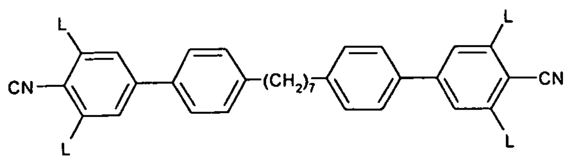

Ia-8b

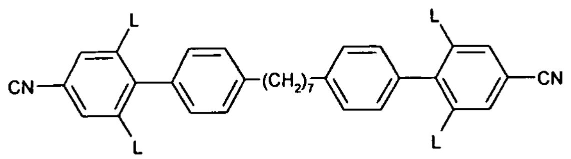

Ia-9b

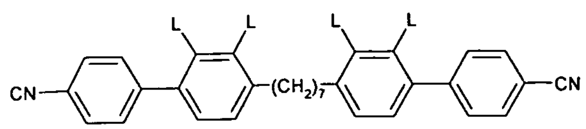

Ia-10b

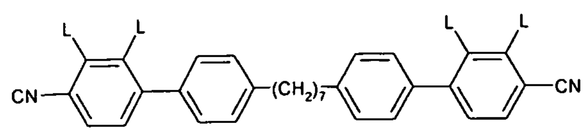

Ia-11b

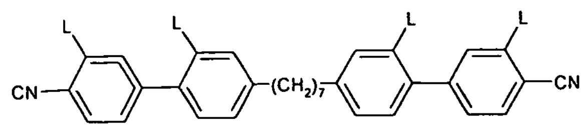

Ia-12b

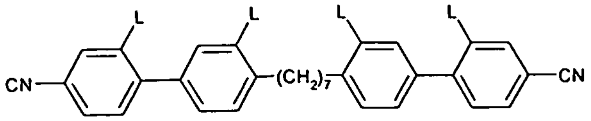
Ia-13b

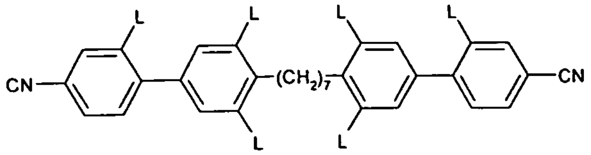
Ia-14b

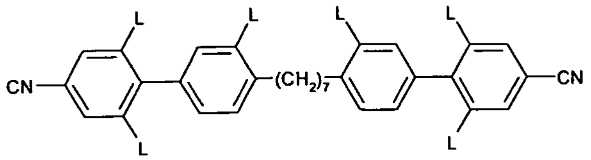
Ia-15b

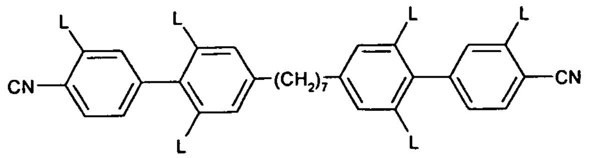
Ia-16b

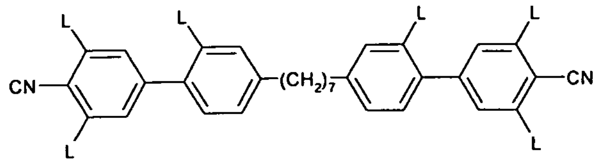
Ia-17b

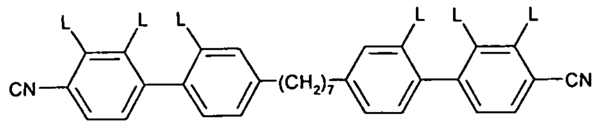
Ia-18b

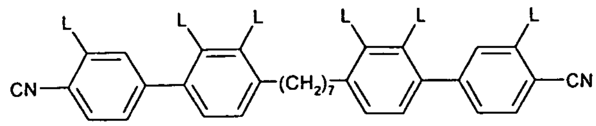
Ia-19b

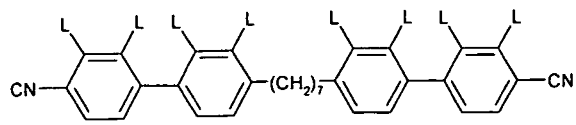
Ia-20b

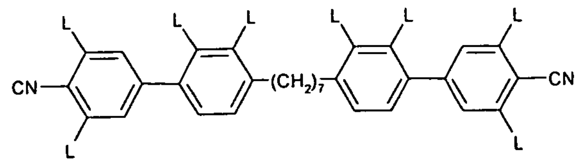
Ia-21b

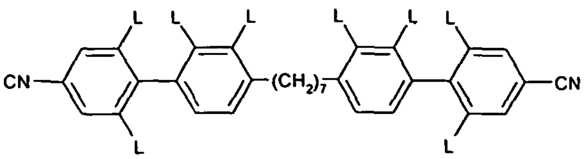
Ia-22b

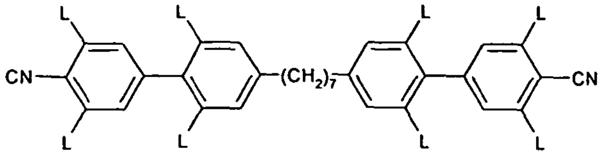

Ia-23b

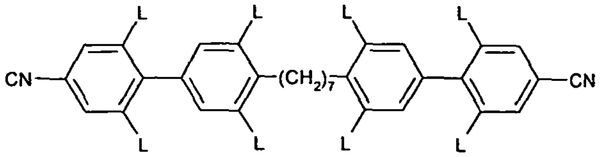

Ia-24b

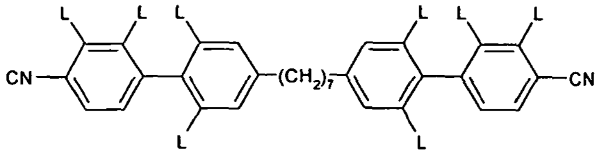

Ia-25b

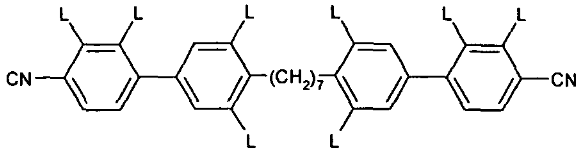

Ia-26b

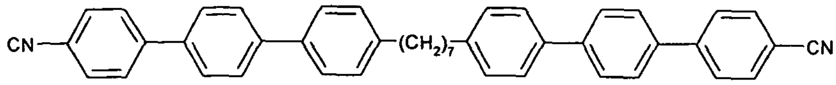

Ib-1b

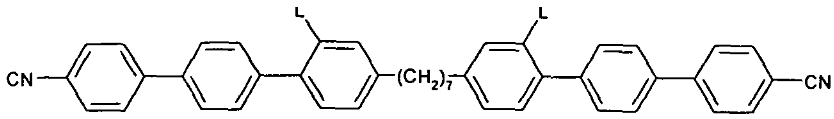

Ib-2b

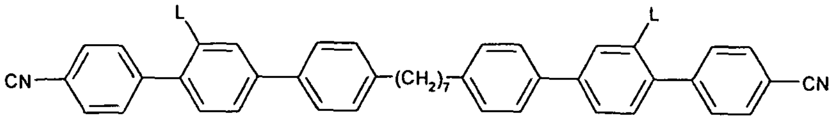

Ib-3b

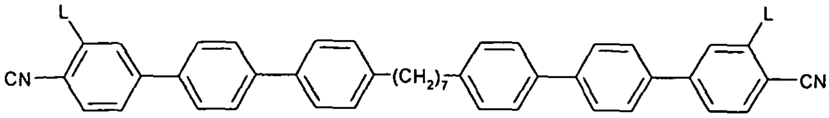

Ib-4b

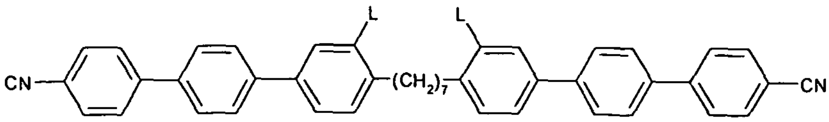

Ib-5b

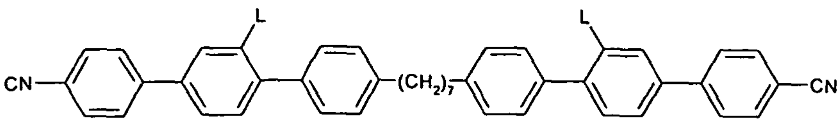

Ib-6b

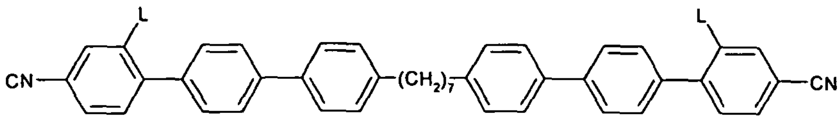

Ib-7b

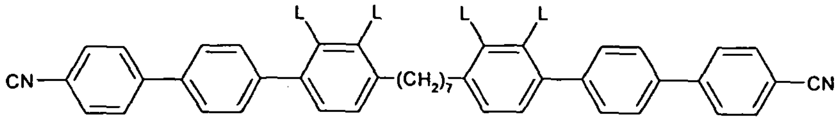

Ib-8b

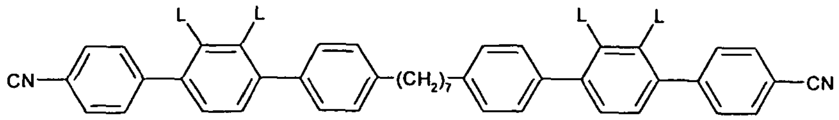

Ib-9b

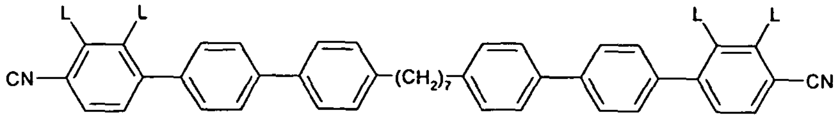

Ib-10b

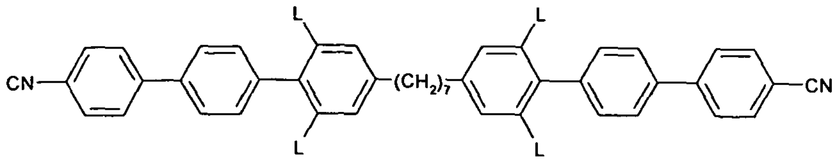

Ib-11b

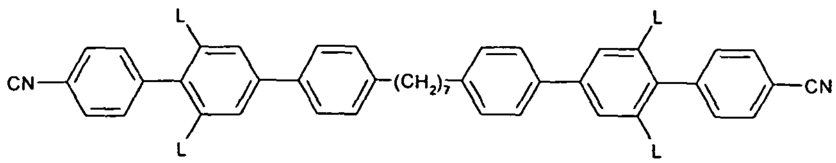

Ib-12b

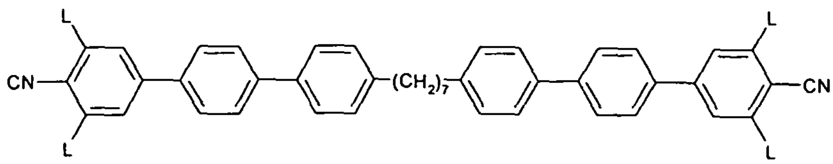

Ib-13b

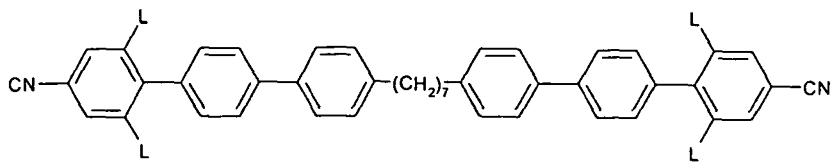

Ib-14b

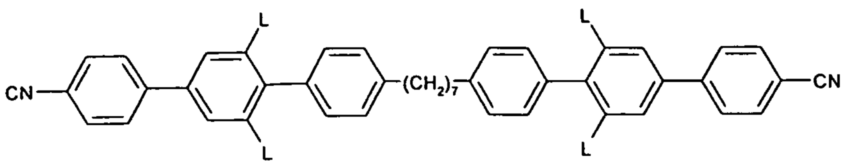

Ib-15b

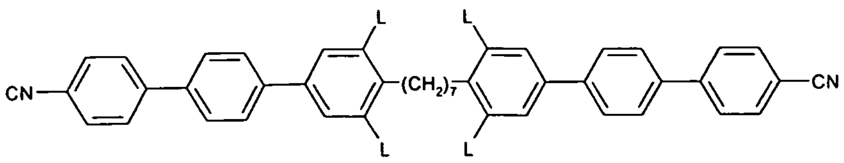

Ib-16b

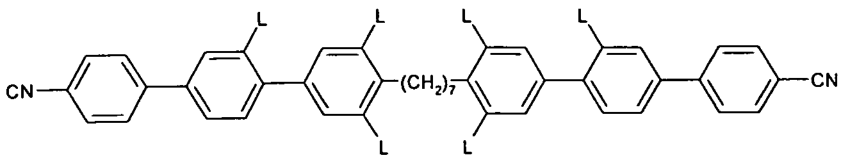

Ib-17b

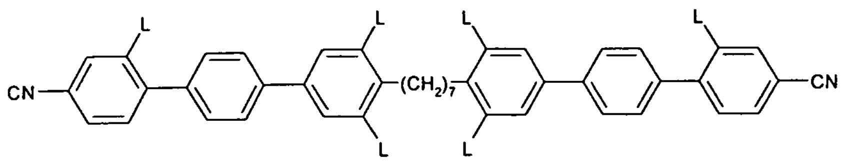

Ib-18b

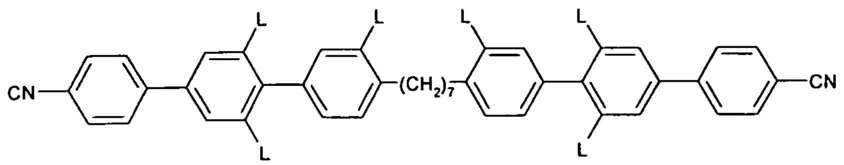

Ib-19b

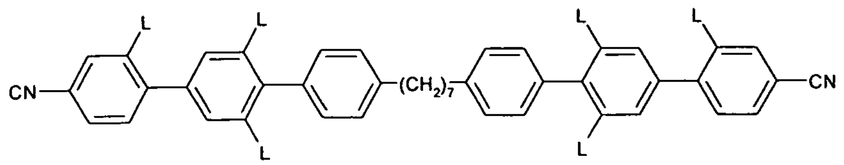

Ib-20b

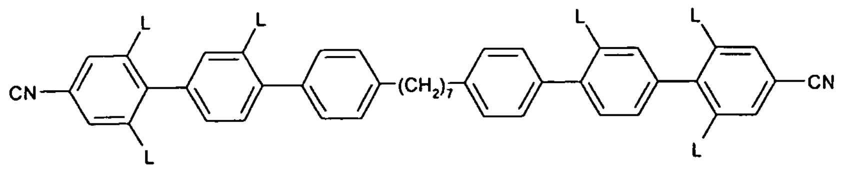

Ib-21b

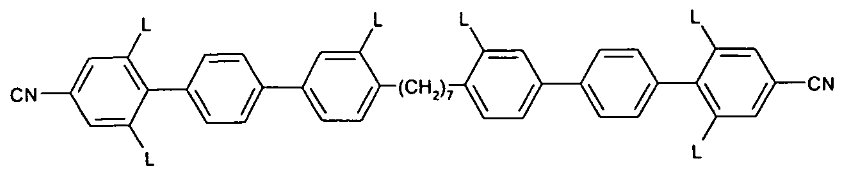

Ib-22b

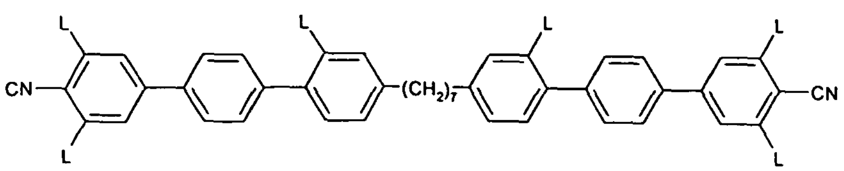

Ib-23b

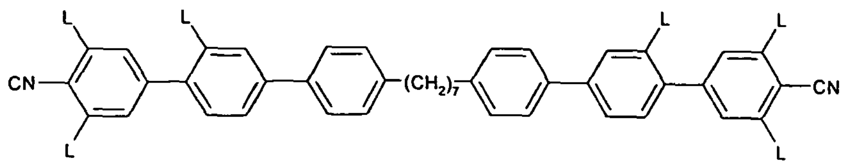
Ib-24b

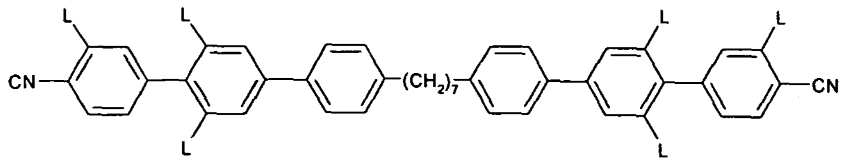
Ib-25b

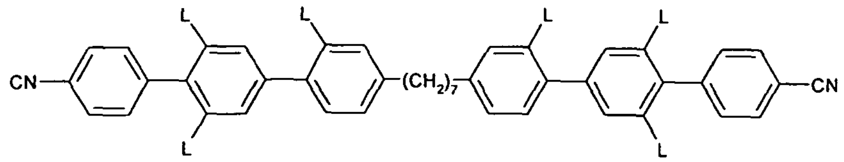
Ib-26b

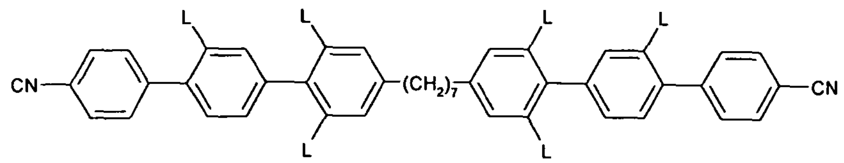
Ib-27b

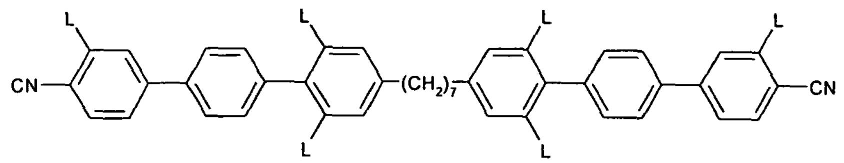
Ib-28b

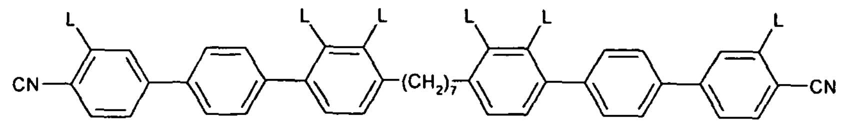
Ib-29b

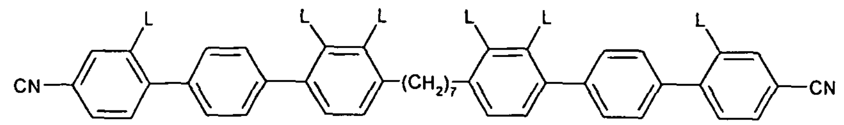
Ib-30b

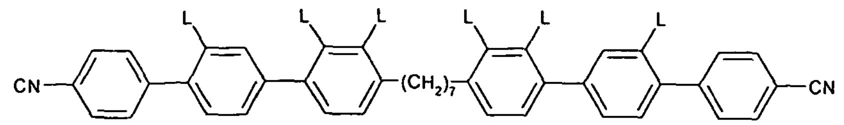
Ib-31b

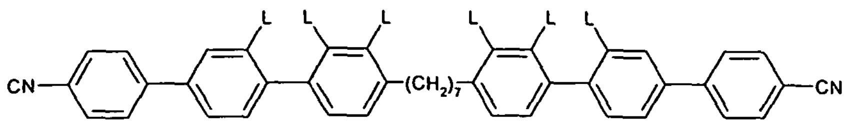
Ib-32b

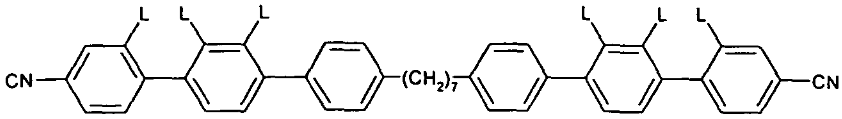

Ib-33b

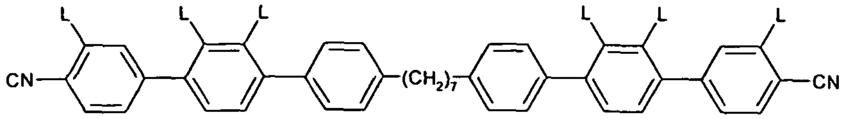

Ib-34b

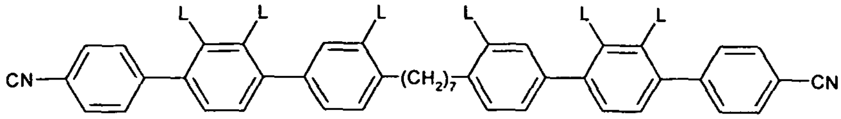

Ib-35b

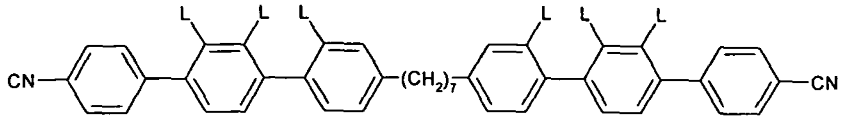

Ib-36b

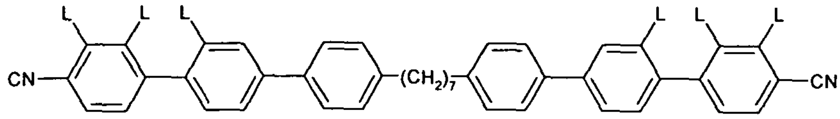

Ib-37b

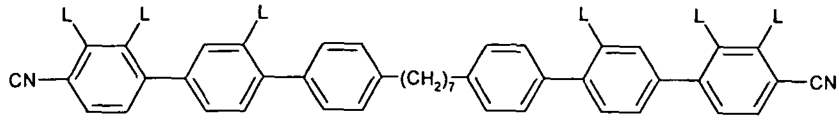

Ib-38b

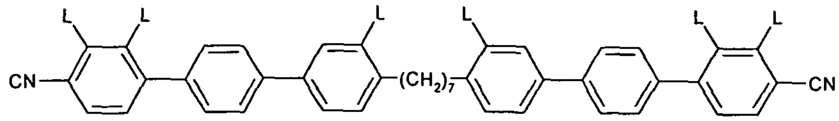

Ib-39b

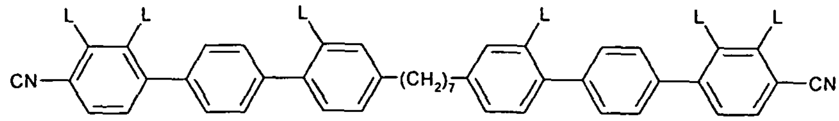

Ib-40b

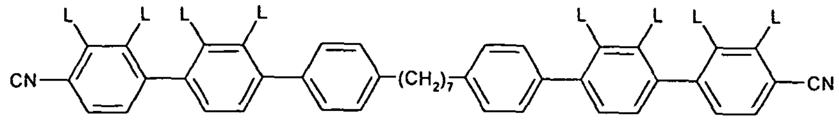

Ib-41b

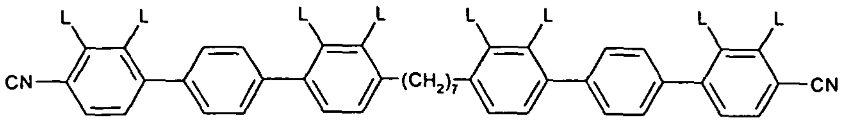

Ib-42b

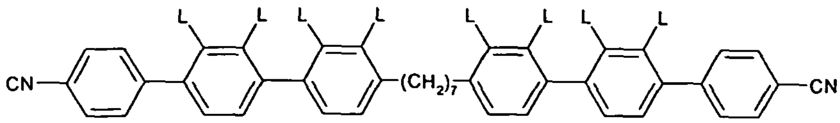

Ib-43b

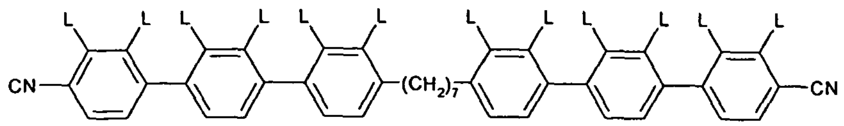

Ib-44b

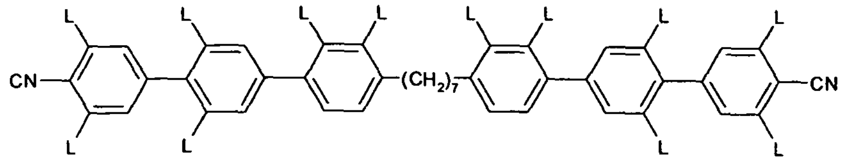

Ib-45b

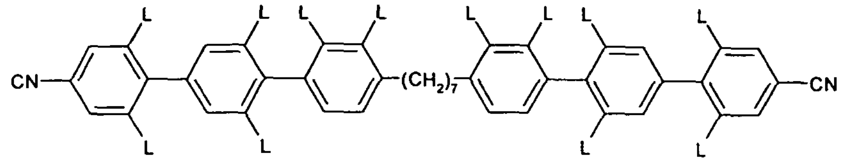

Ib-46b

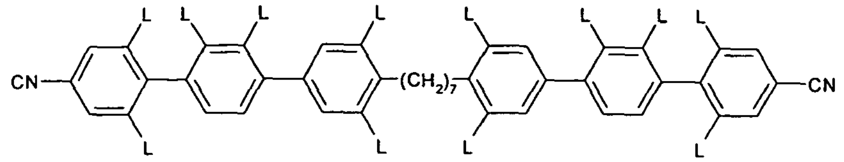

Ib-47b

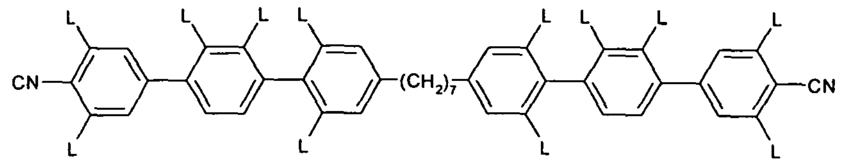

Ib-48b

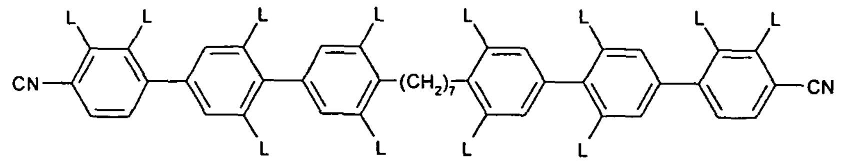

Ib-49b

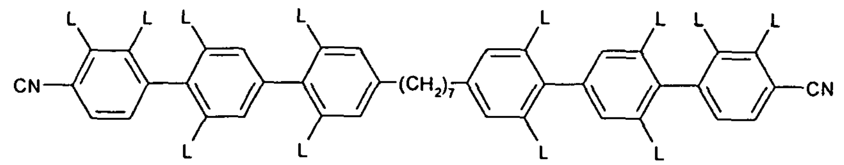

Ib-50b

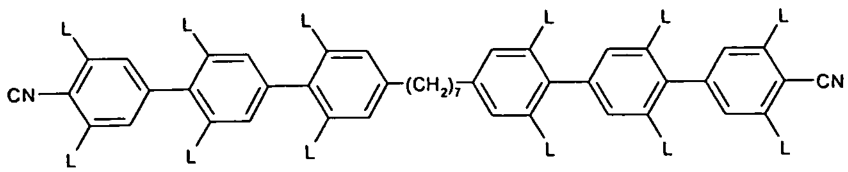

Ib-51b

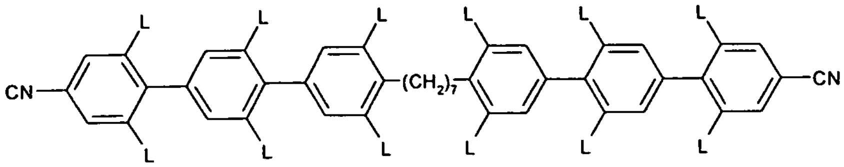

Ib-52b

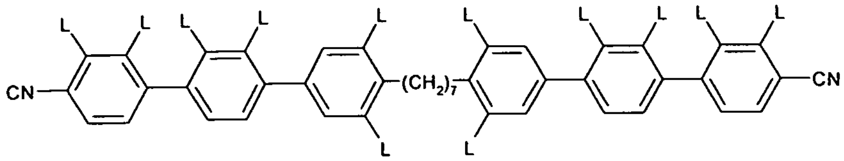

Ib-53b

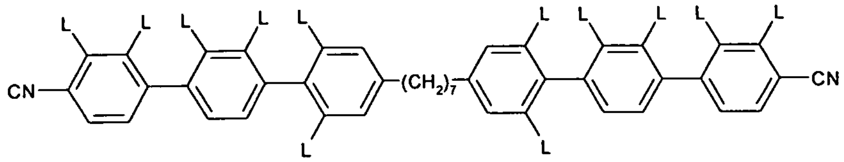

Ib-54b

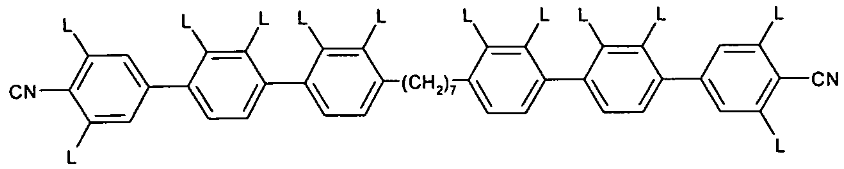

Ib-55b

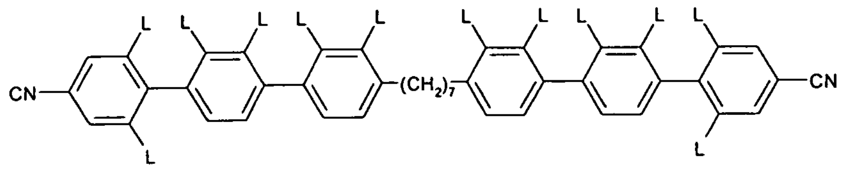

Ib-56b

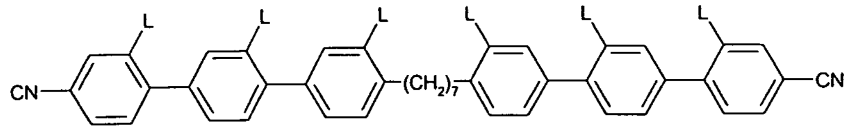

Ib-57b

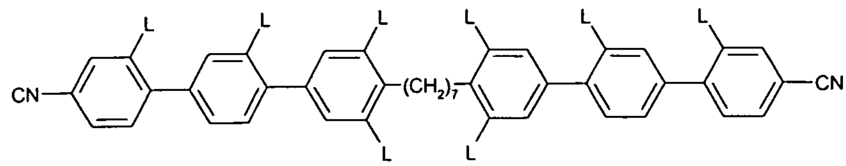

Ib-58b

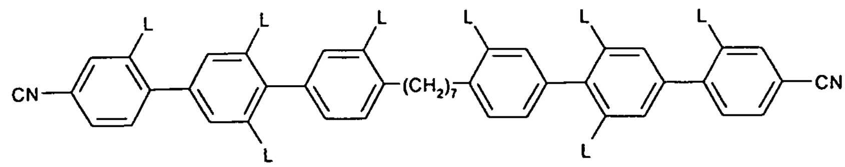

Ib-59b

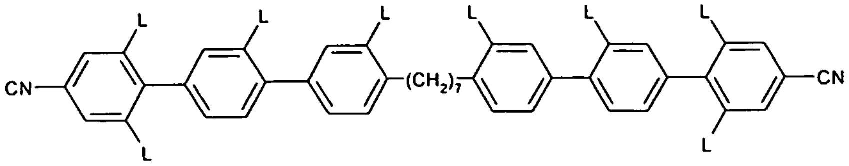

Ib-60b

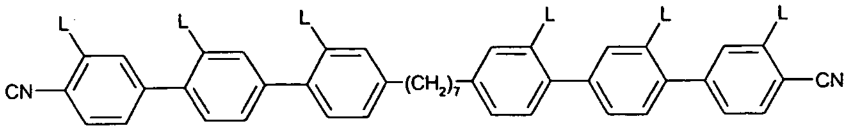

Ib-61b

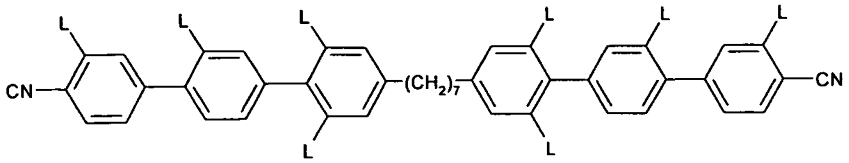

Ib-62b

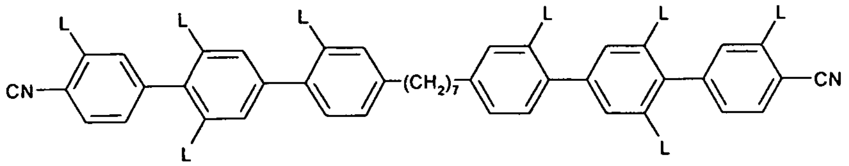

Ib-63b

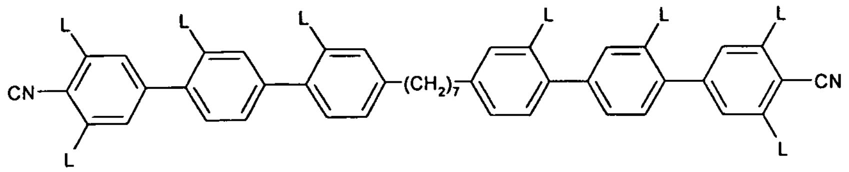

Ib-64b

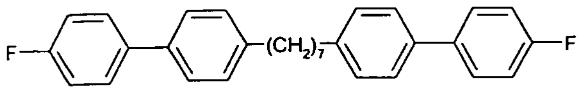

Ia-1c

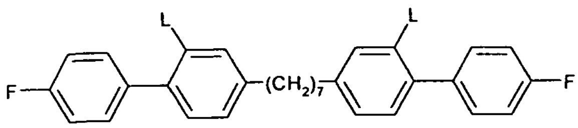

Ia-2c

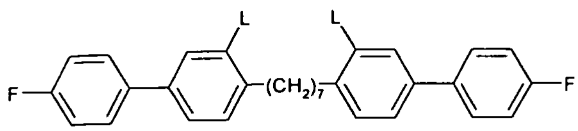

Ia-3c

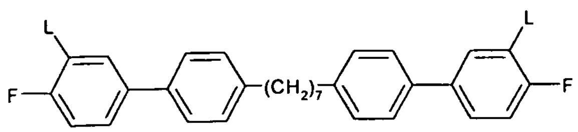

Ia-4c

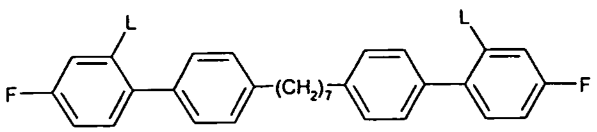

Ia-5c

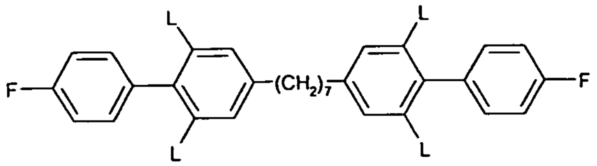

Ia-6c

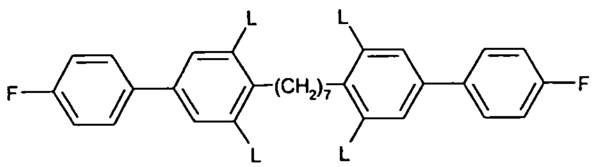

Ia-7c

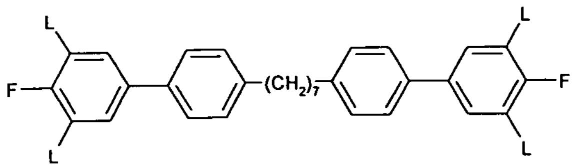

Ia-8c

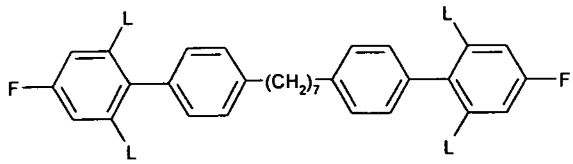

Ia-9c

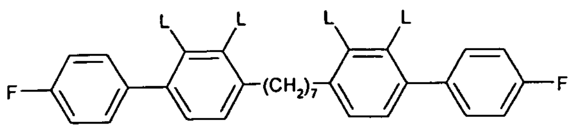

Ia-10c

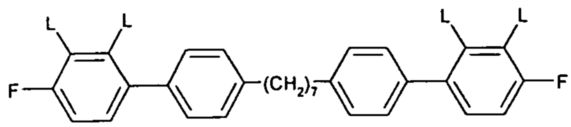

Ia-11c

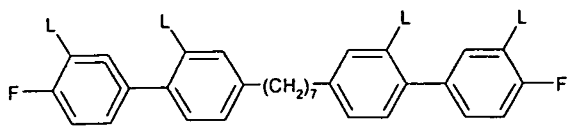

Ia-12c

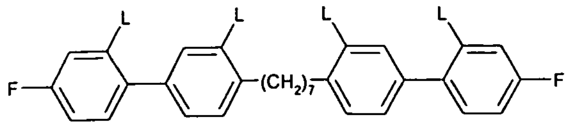

Ia-13c

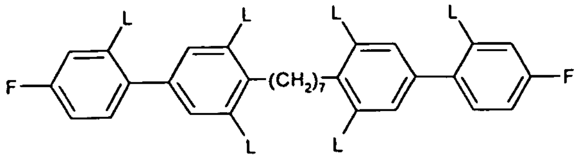

Ia-14c

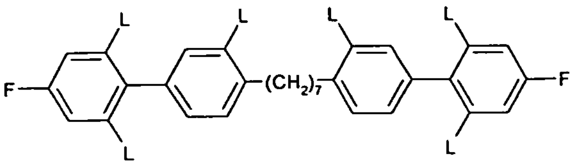

Ia-15c

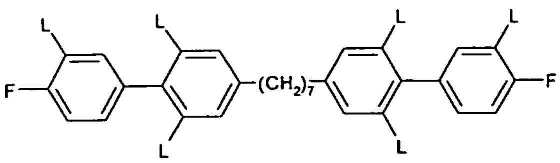

Ia-16c

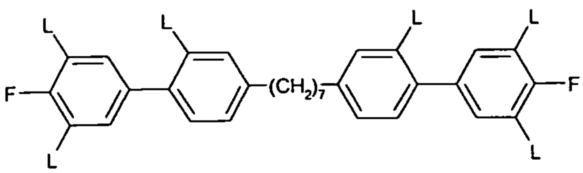

Ia-17c

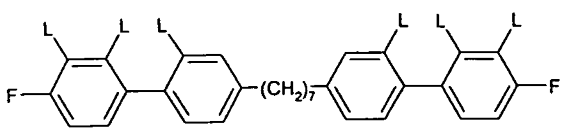

Ia-18c

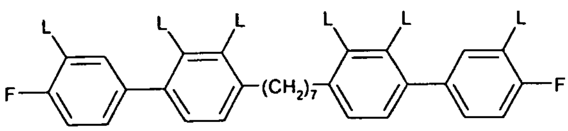

Ia-19c

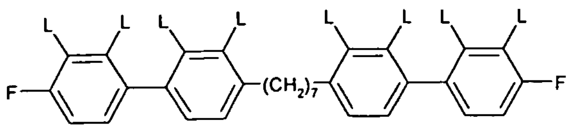

Ia-20c

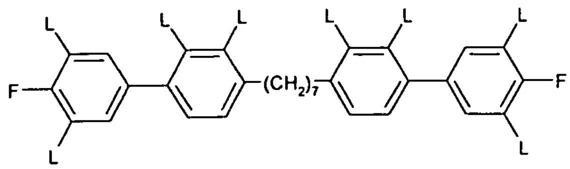
Ia-21c

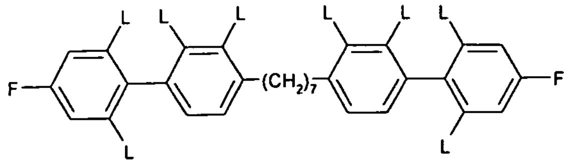
Ia-22c

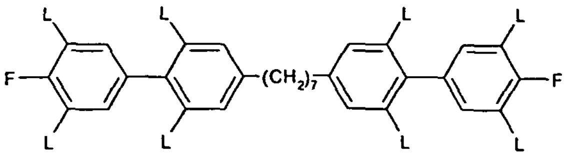
Ia-23c

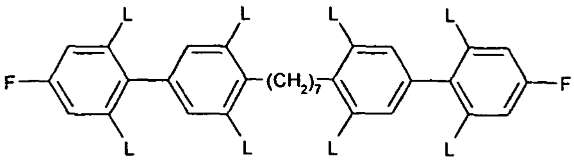
Ia-24c

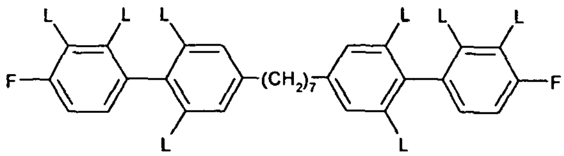
Ia-25c

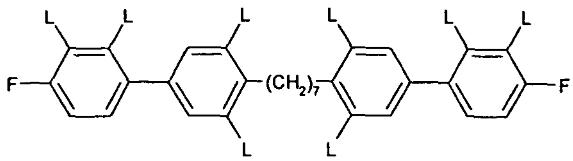
Ia-26c

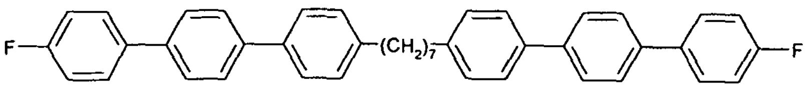
Ib-1c

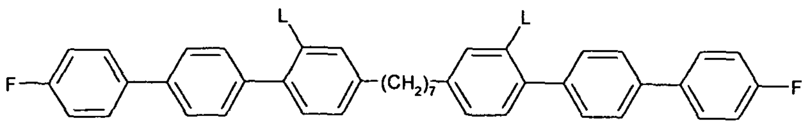
Ib-2c

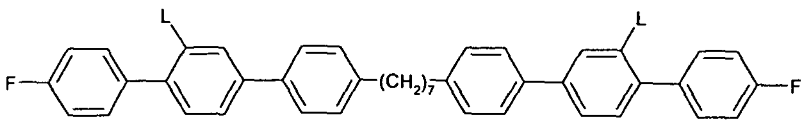
Ib-3c

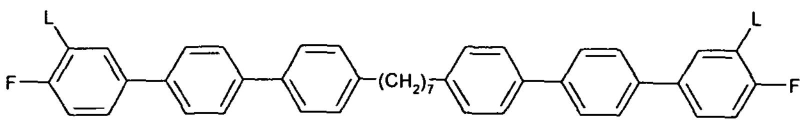
Ib-4c

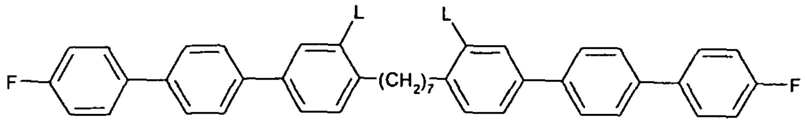
Ib-5c

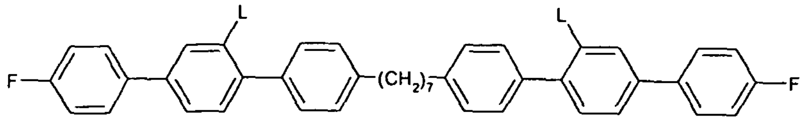
Ib-6c

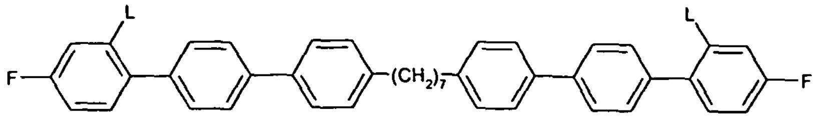
Ib-7c

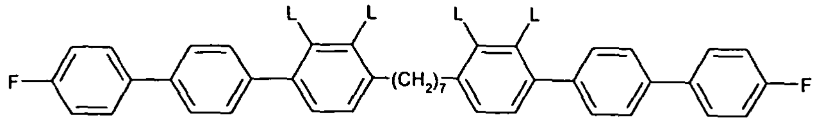
Ib-8c

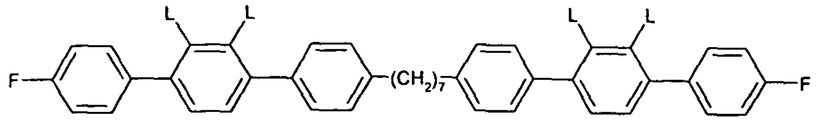
Ib-9c

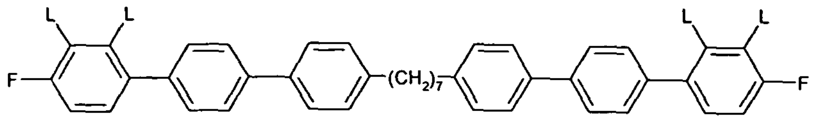
Ib-10c

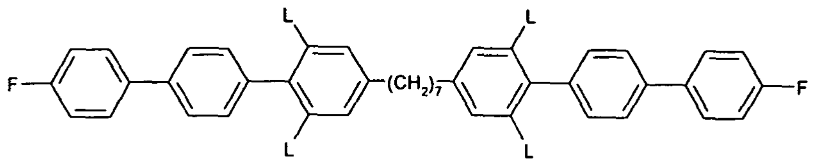
Ib-11c

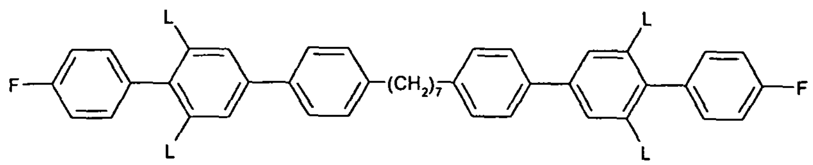
Ib-12c

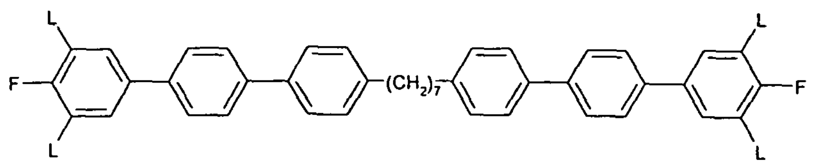
Ib-13c

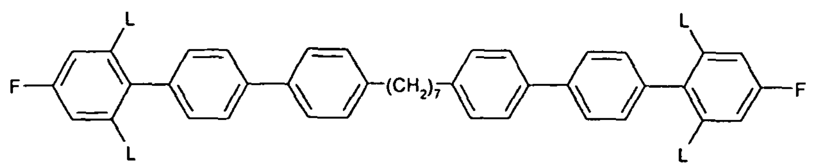
Ib-14c

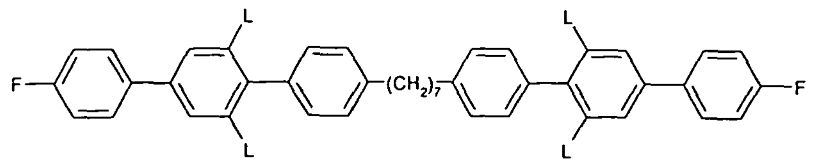

Ib-15c

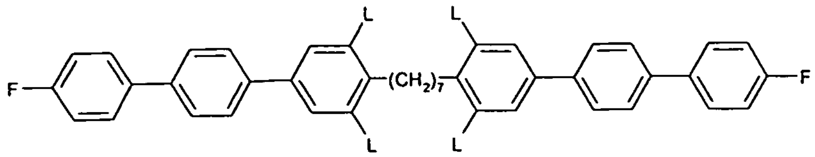

Ib-16c

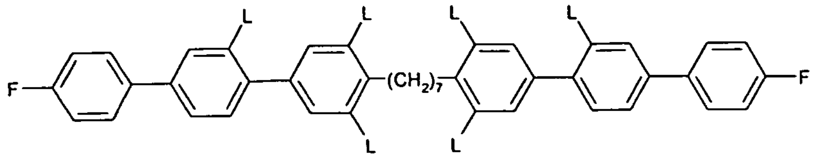

Ib-17c

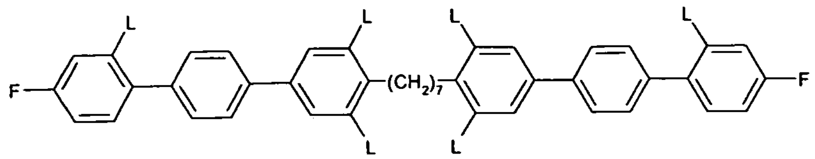

Ib-18c

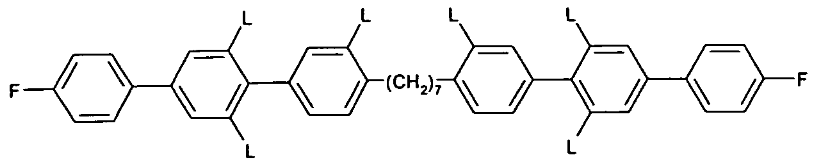

Ib-19c

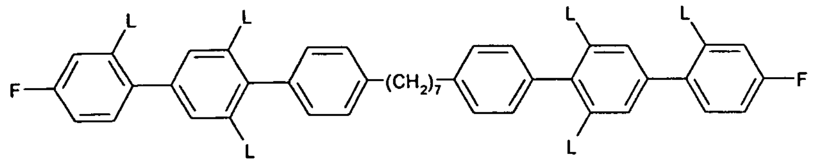

Ib-20c

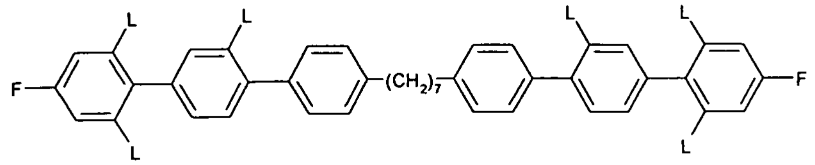

Ib-21c

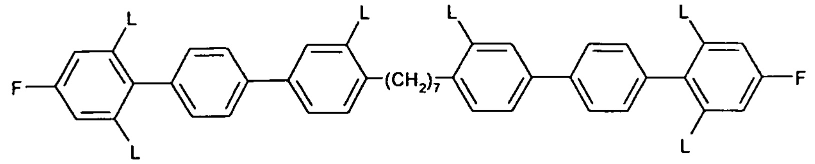

Ib-22c

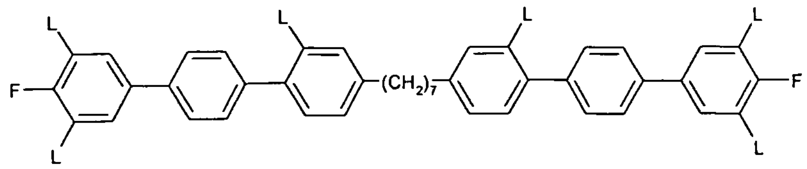

Ib-23c

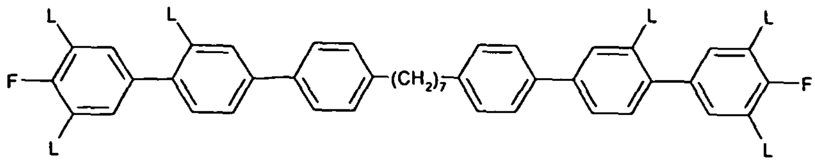

Ib-24c

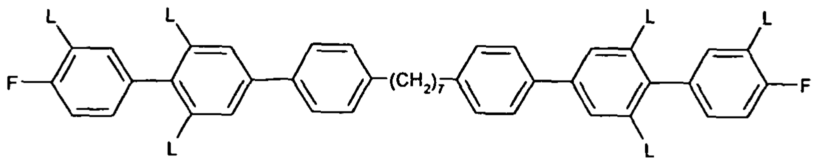

Ib-25c

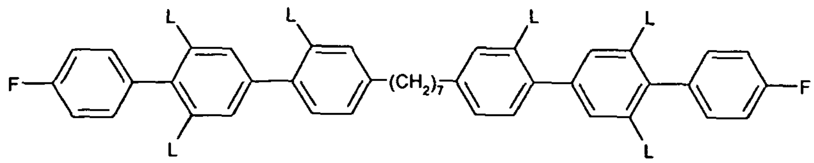

Ib-26c

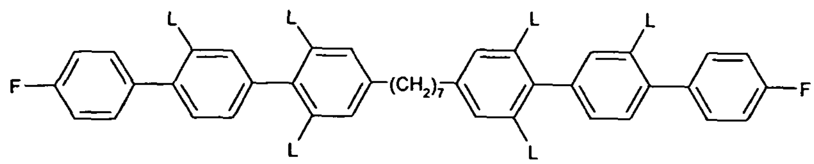

Ib-27c

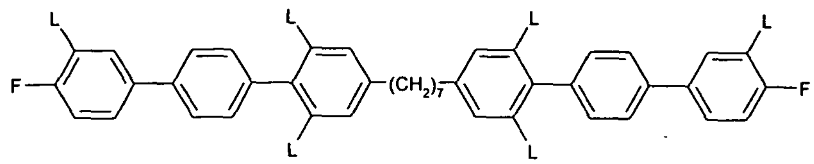

Ib-28c

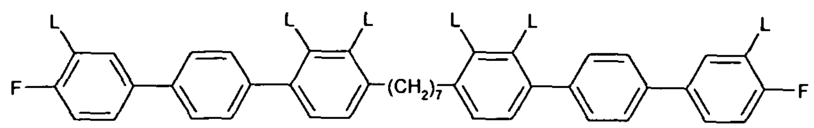

Ib-29c

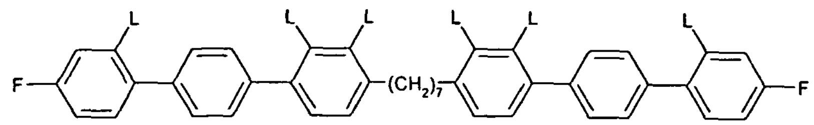

Ib-30c

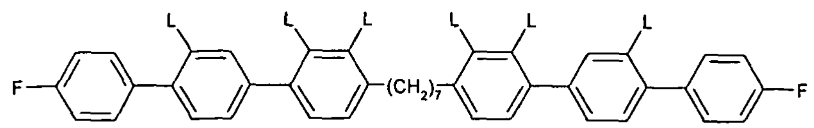

Ib-31c

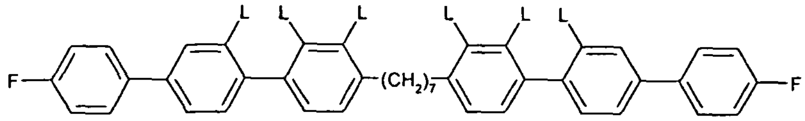
Ib-32c

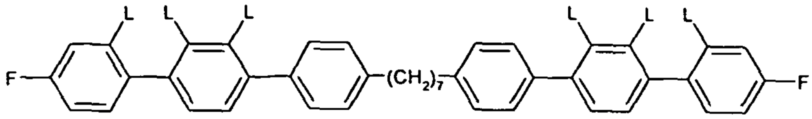
Ib-33c

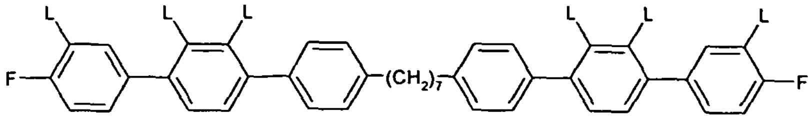
Ib-34c

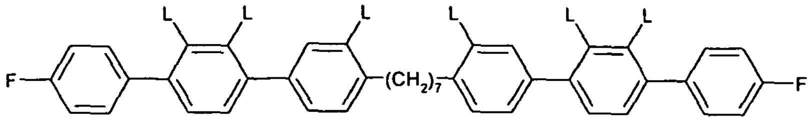
Ib-35c

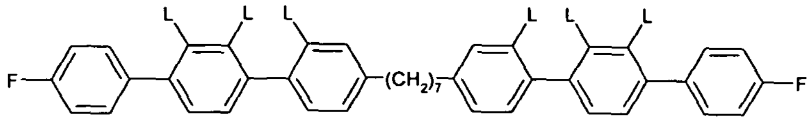
Ib-36c

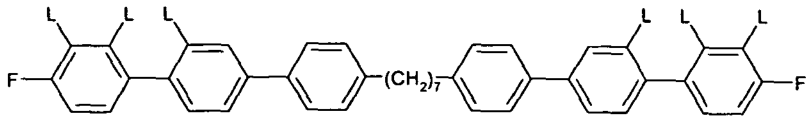
Ib-37c

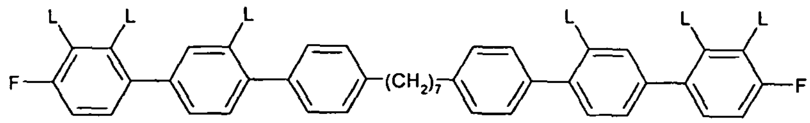
Ib-38c

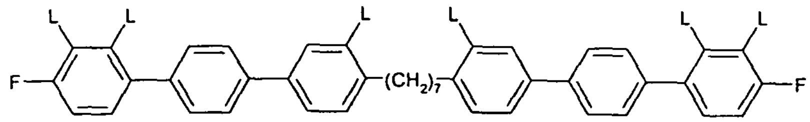
Ib-39c

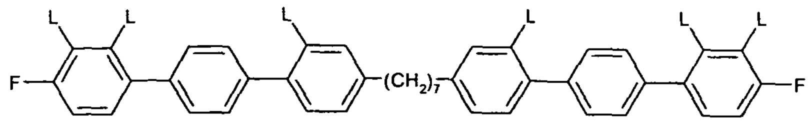
Ib-40c

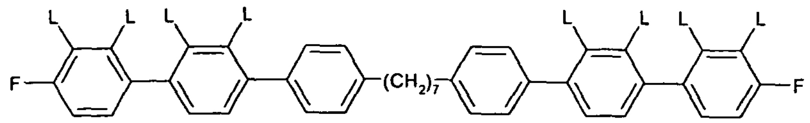
Ib-41c

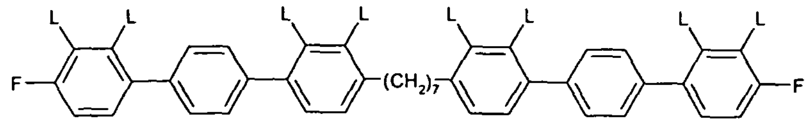
Ib-42c

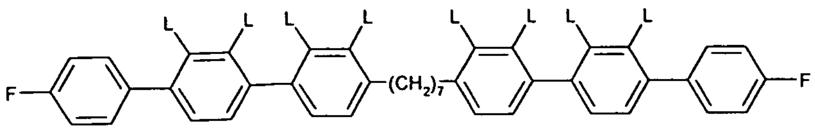

Ib-43c

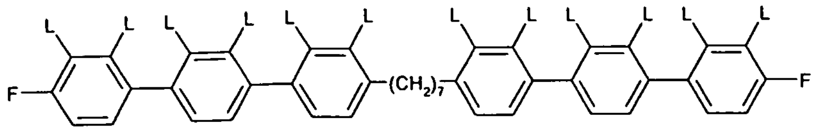

Ib-44c

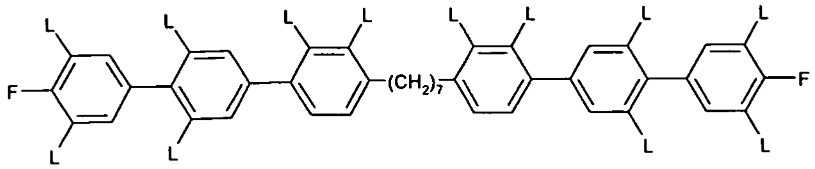

Ib-45c

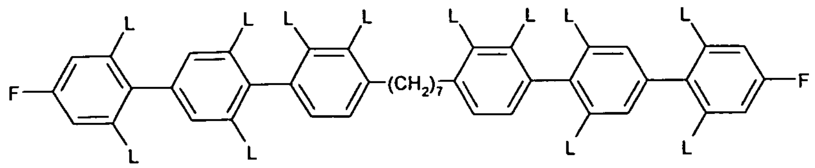

Ib-46c

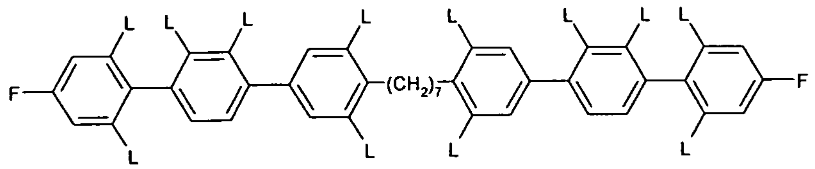

Ib-47c

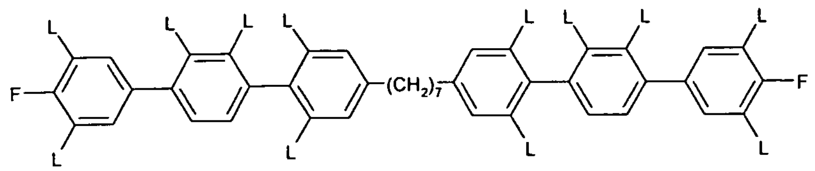

Ib-48c

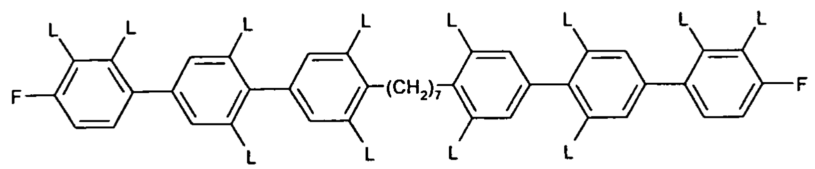

Ib-49c

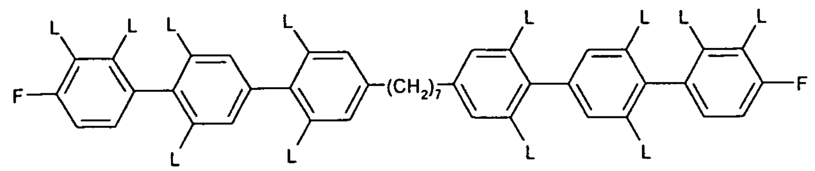

Ib-50c

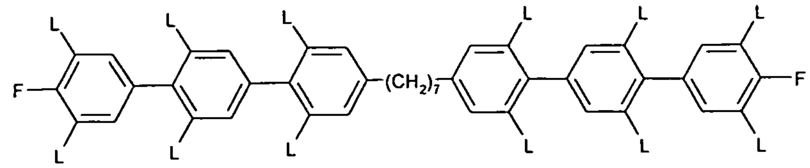
Ib-51c

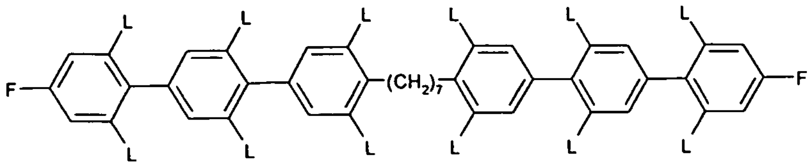
Ib-52c

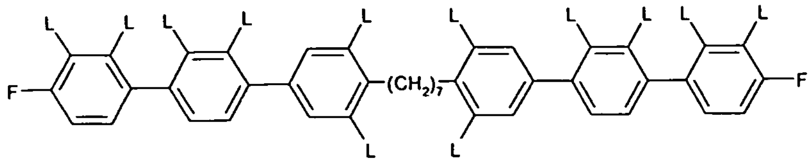
Ib-53c

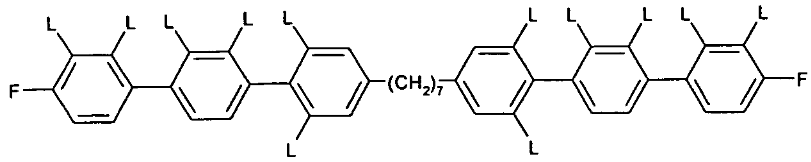
Ib-54c

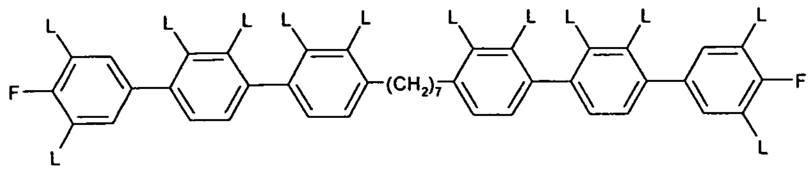
Ib-55c

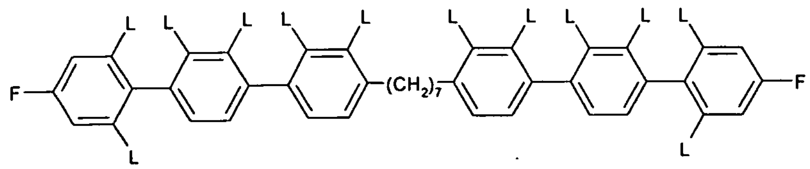
Ib-56c

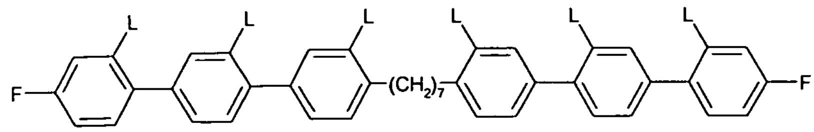
Ib-57c

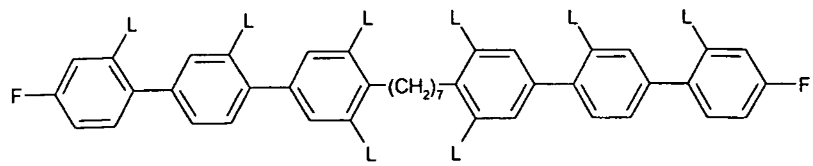
Ib-58c

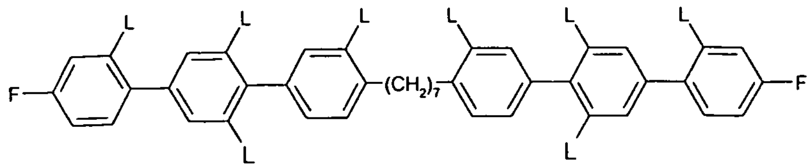

Ib-59c

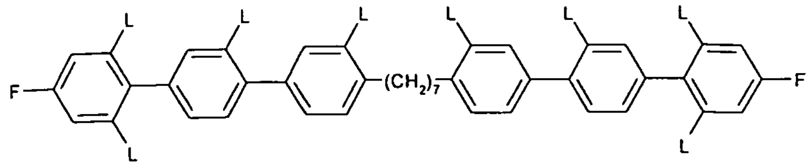

Ib-60c

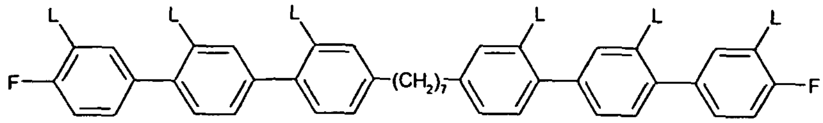

Ib-61c

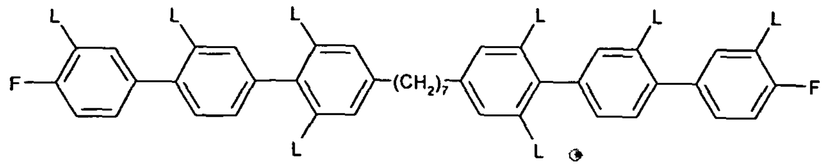

Ib-62c

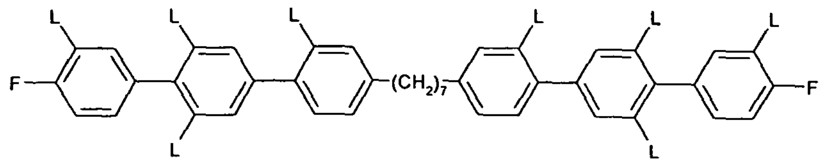

Ib-63c

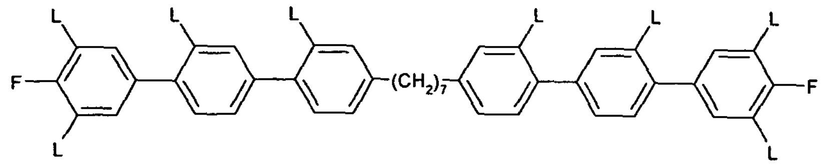

Ib-64c

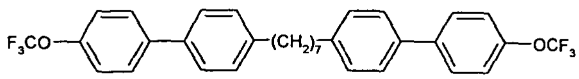

Ia-1d

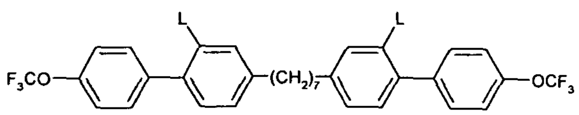

Ia-2d

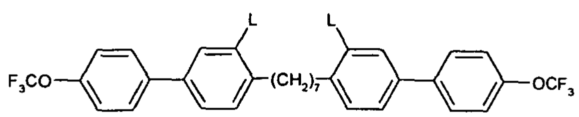

Ia-3d

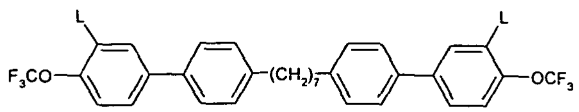

Ia-4d

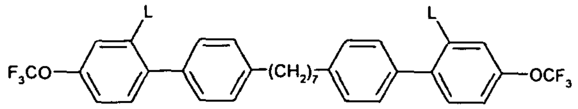

Ia-5d

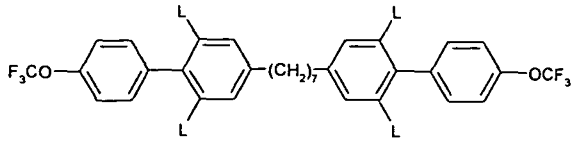

Ia-6d

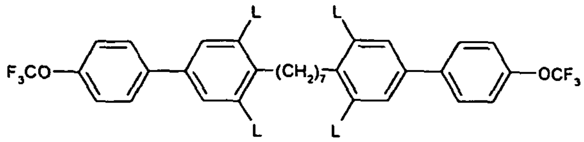

Ia-7d

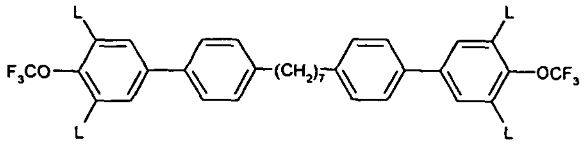

Ia-8d

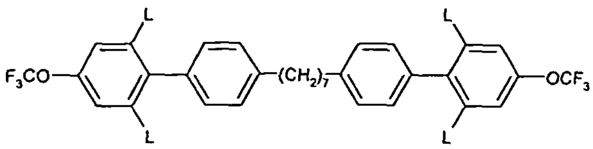

Ia-9d

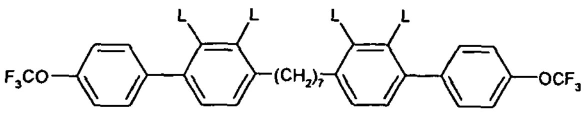

Ia-10d

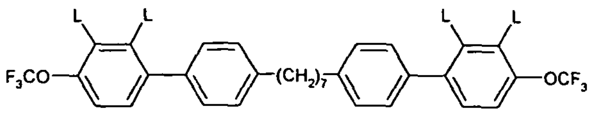

, Ia-11d

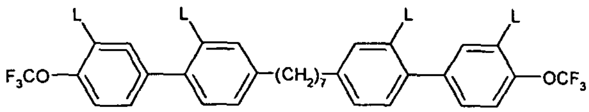

Ia-12d

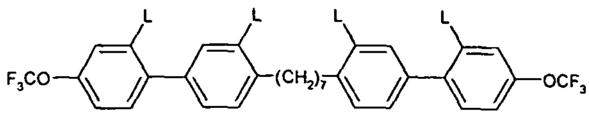

Ia-13d

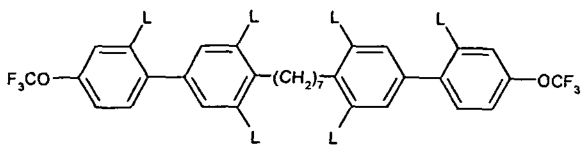

Ia-14d

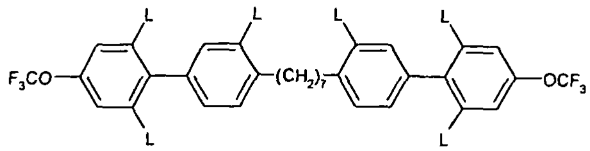

Ia-15d

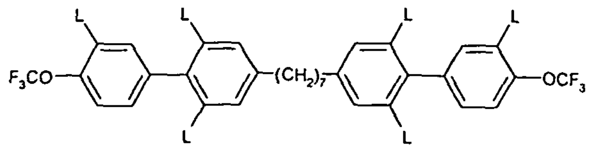

Ia-16d

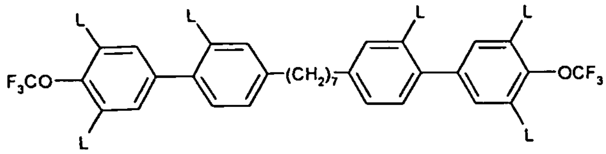

Ia-17d

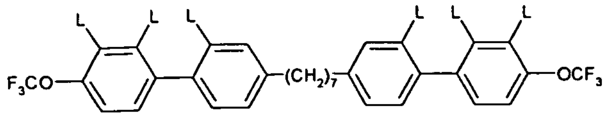

Ia-18d

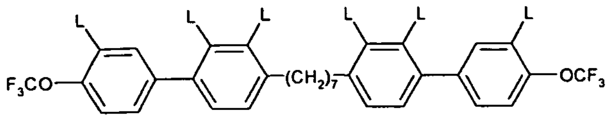

Ia-19d

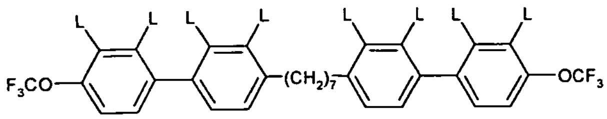

Ia-20d

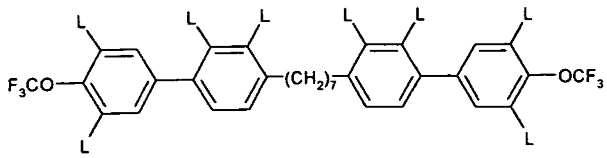

Ia-21d

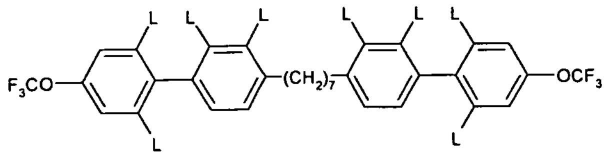

Ia-22d

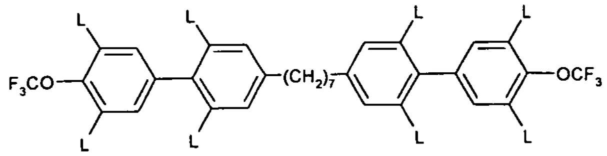

Ia-23d

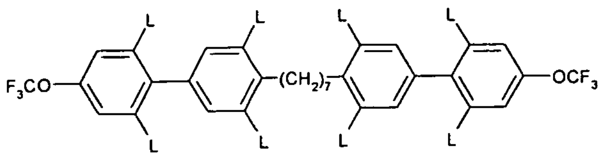

Ia-24d

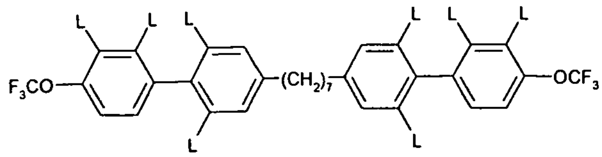

Ia-25d

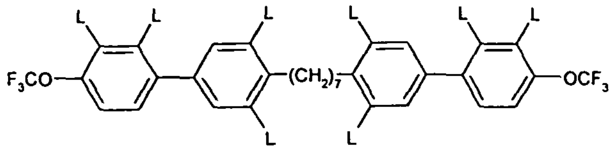

Ia-26d

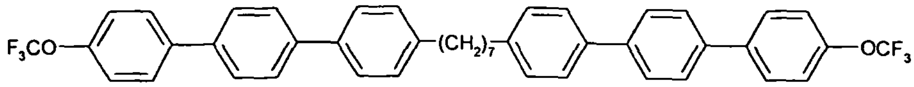

Ib-1d

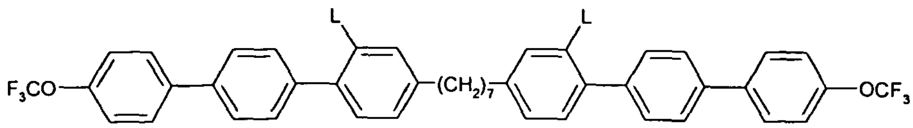

Ib-2d

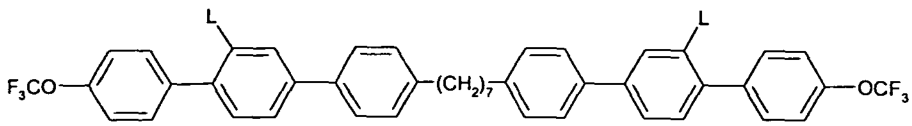

Ib-3d

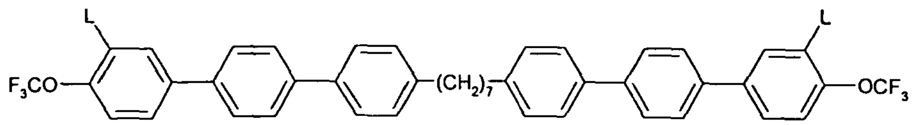

Ib-4d

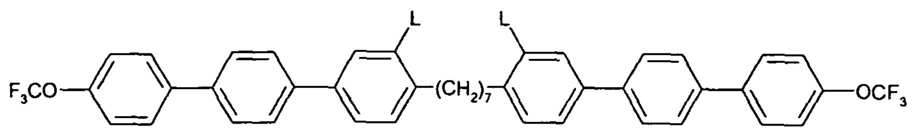

Ib-5d

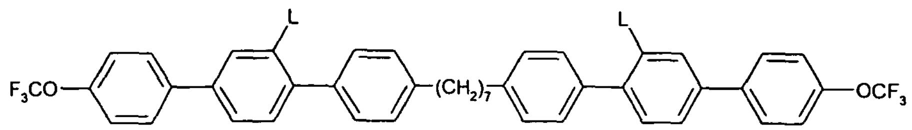

Ib-6d

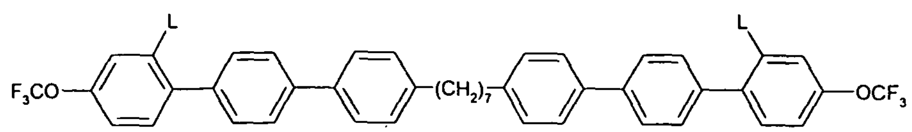

Ib-7d

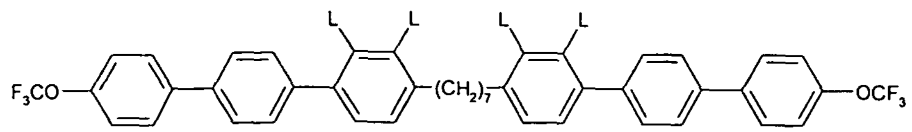

Ib-8d

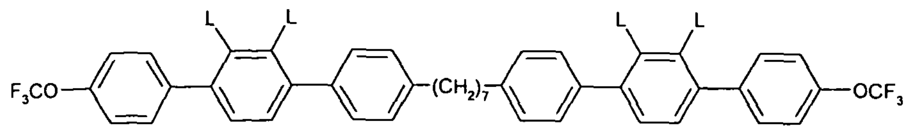

Ib-9d

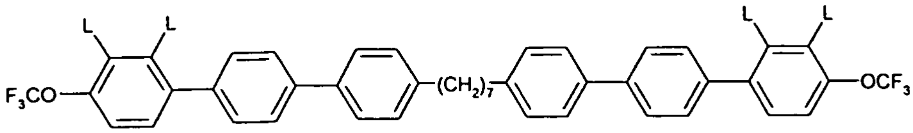

Ib-10d

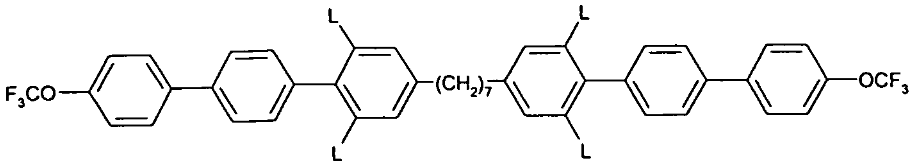

Ib-11d

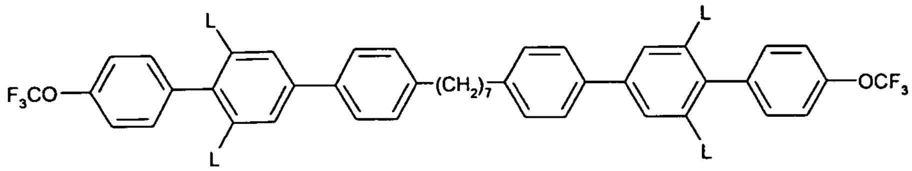

Ib-12d

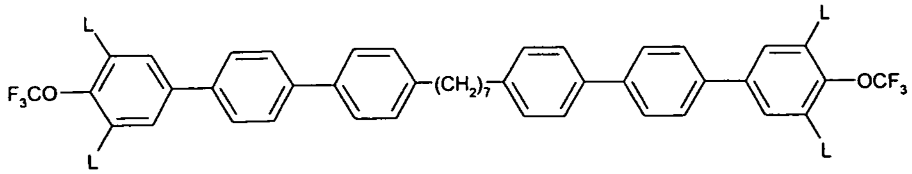

Ib-13d

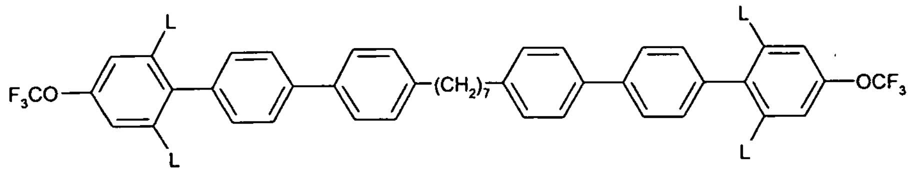

Ib-14d

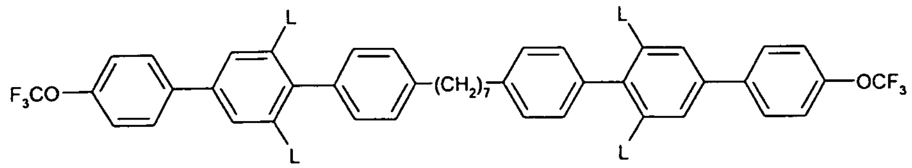

Ib-15d

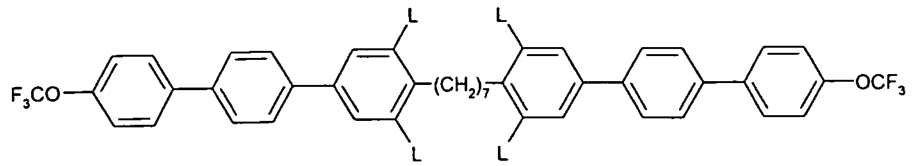

Ib-16d

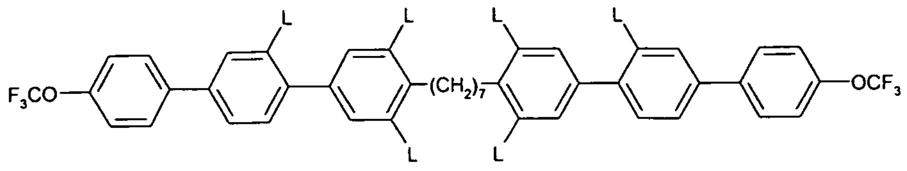

Ib-17d

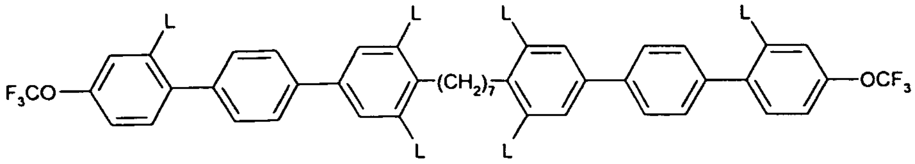

Ib-18d

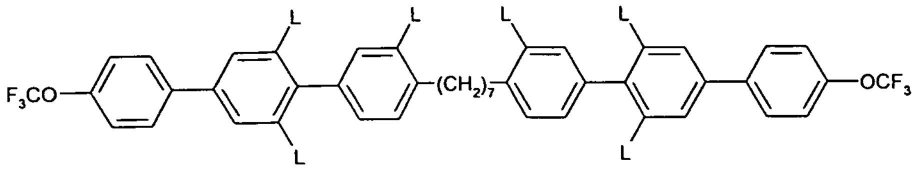

Ib-19d

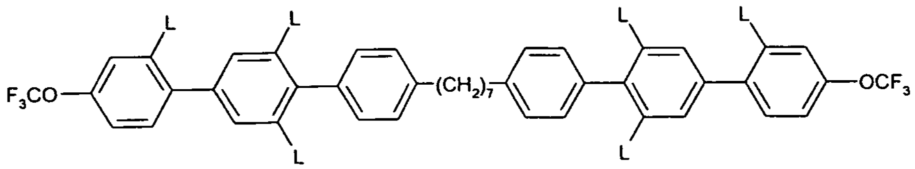

Ib-20d

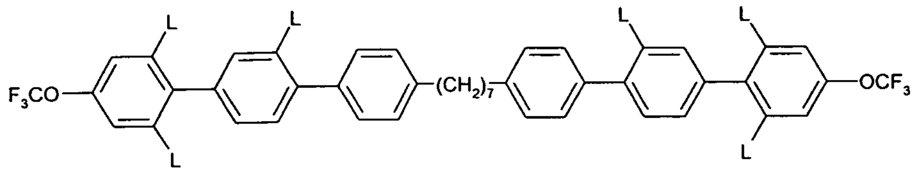

Ib-21d

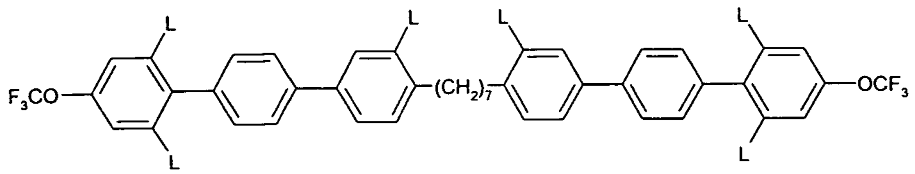

Ib-22d

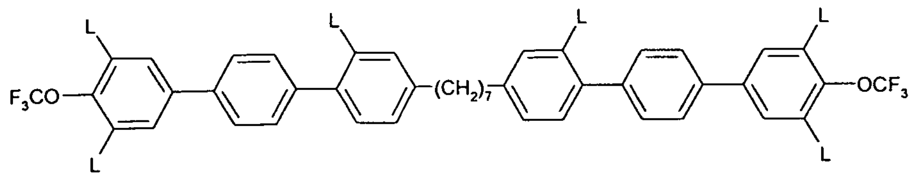

Ib-23d

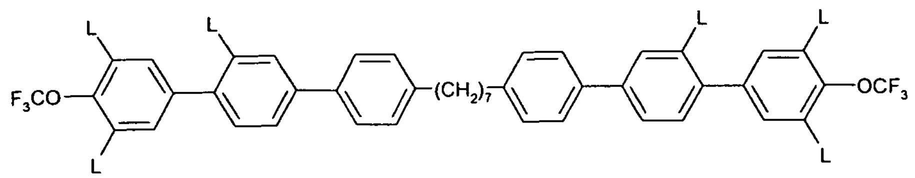

Ib-24d

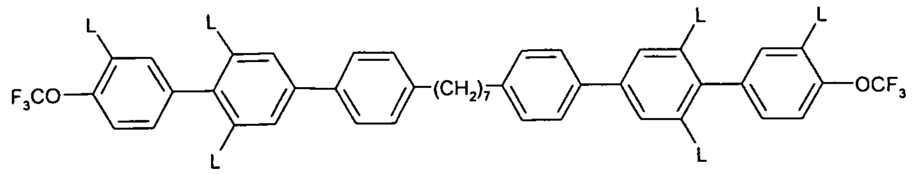

Ib-25d

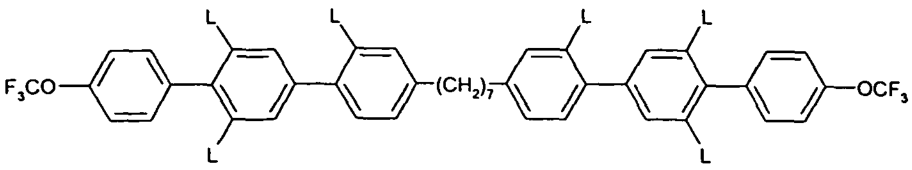

Ib-26d

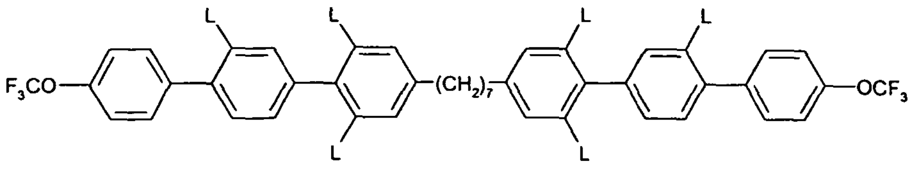

Ib-27d

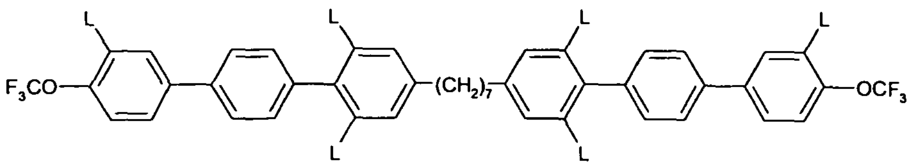

Ib-28d

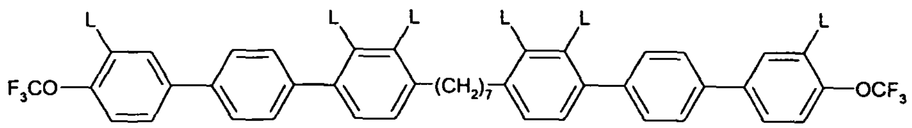

Ib-29d

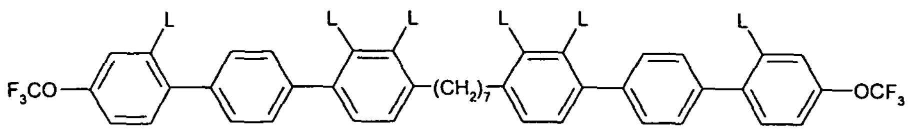

Ib-30d

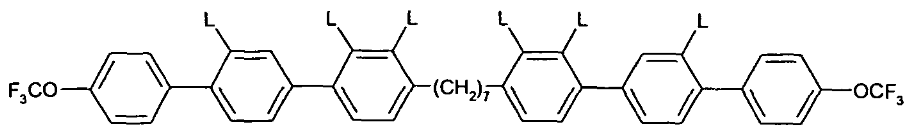

Ib-31d

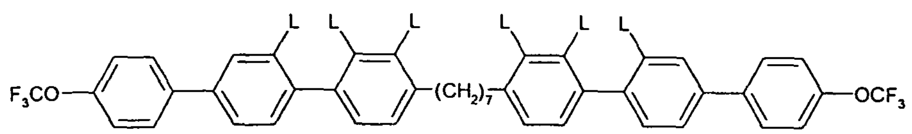

Ib-32d

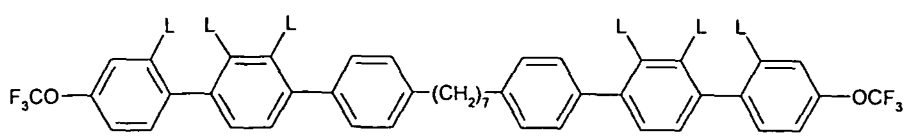

Ib-33d

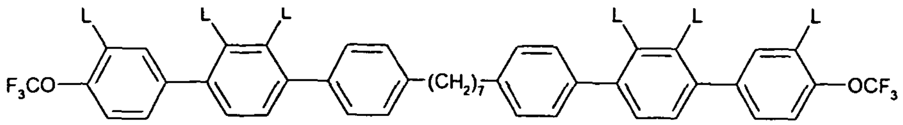
Ib-34d

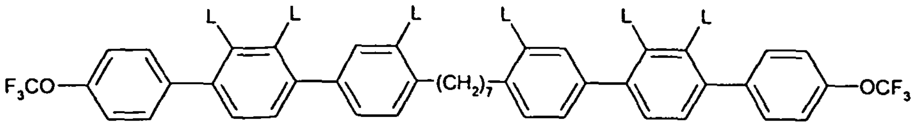
Ib-35d

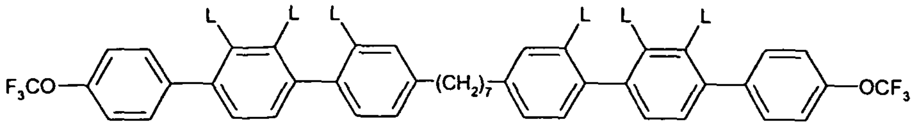
Ib-36d

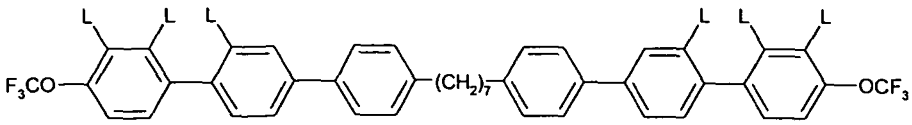
Ib-37d

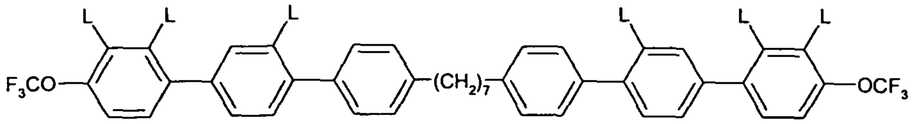
Ib-38d

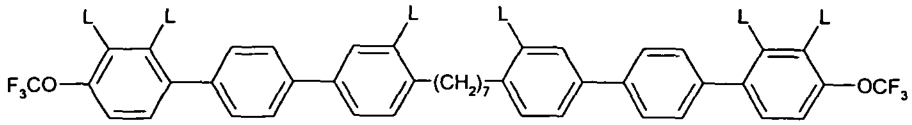
Ib-39d

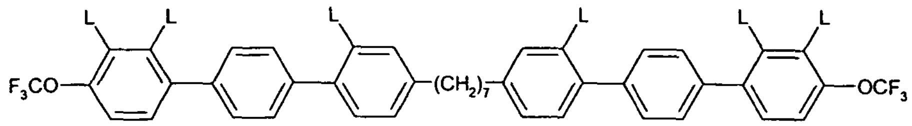
Ib-40d

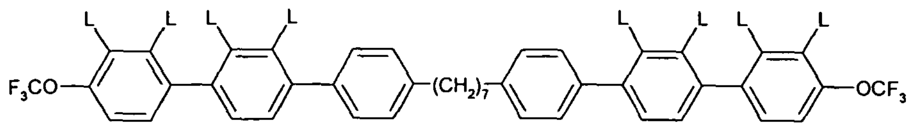
Ib-41d

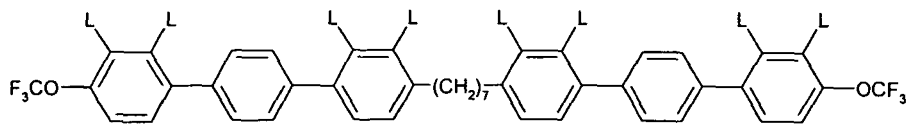
Ib-42d

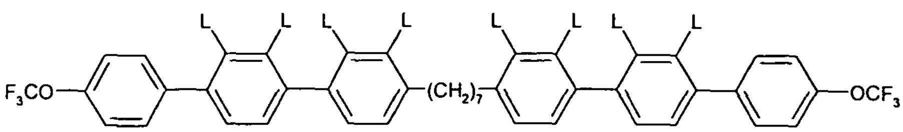
Ib-43d

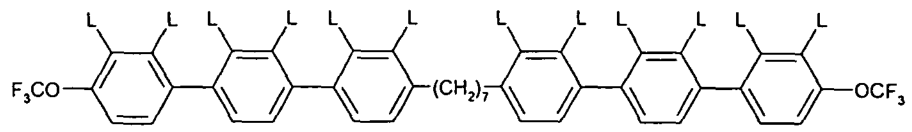

Ib-44d

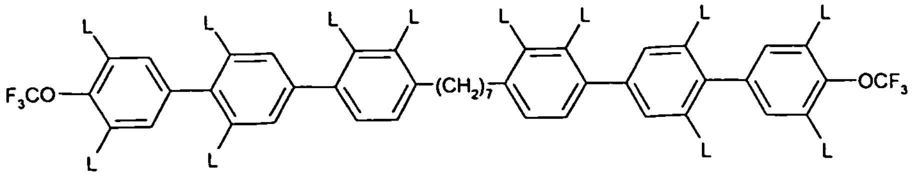

Ib-45d

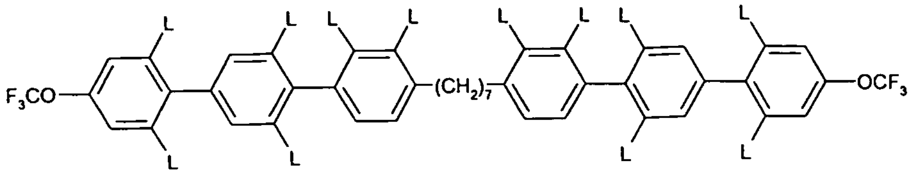

Ib-46d

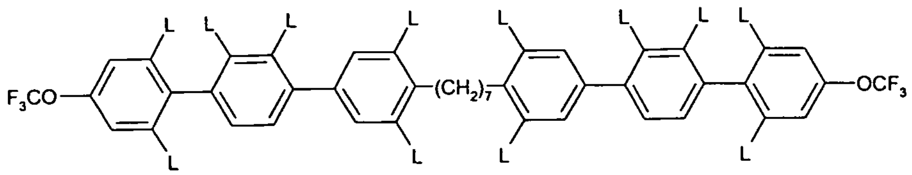

Ib-47d

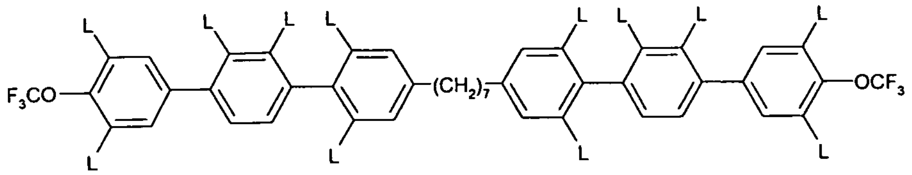

Ib-48d

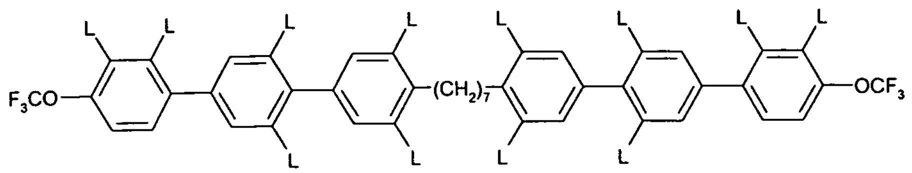

Ib-49d

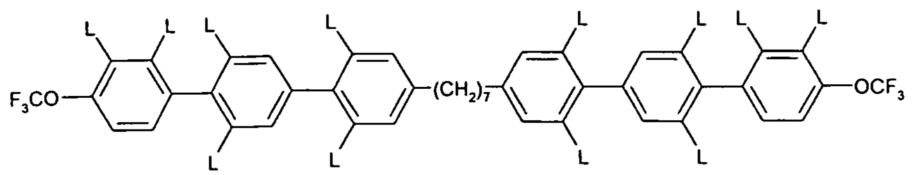

Ib-50d

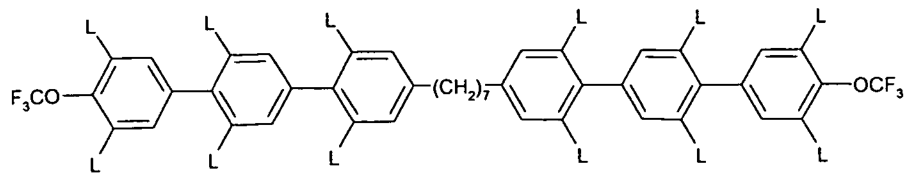

Ib-51d

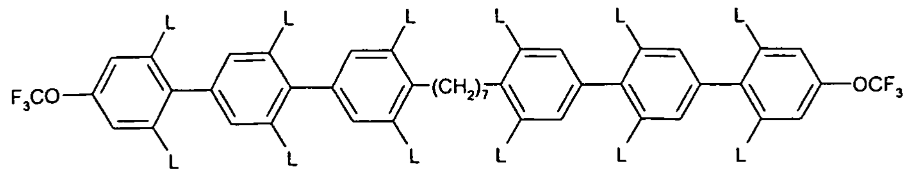

Ib-52d

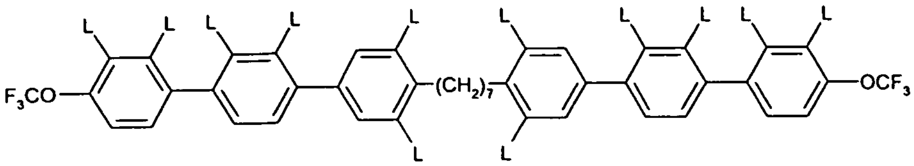

Ib-53d

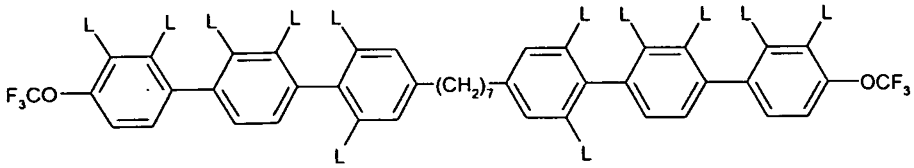

Ib-54d

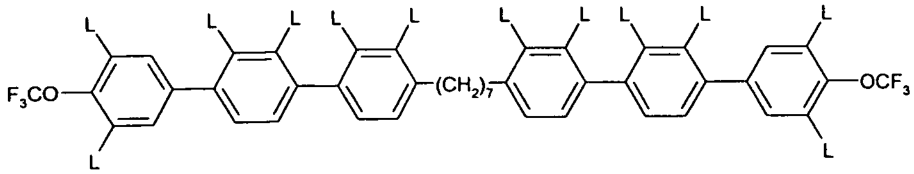

Ib-55d

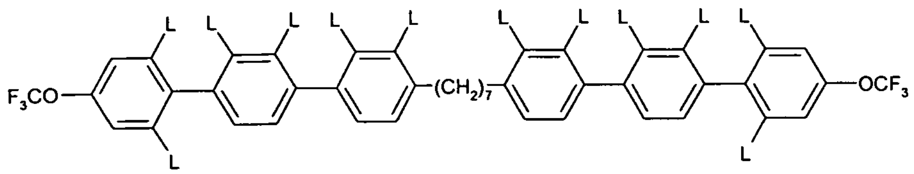

Ib-56d

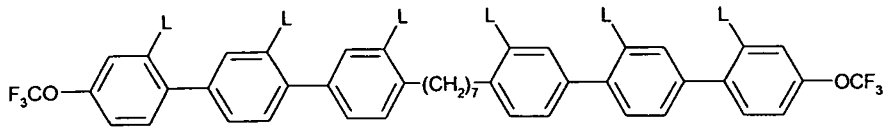

Ib-57d

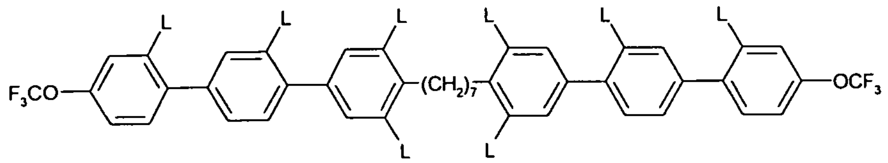

Ib-58d

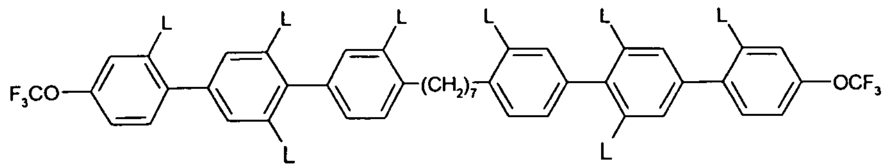

Ib-59d

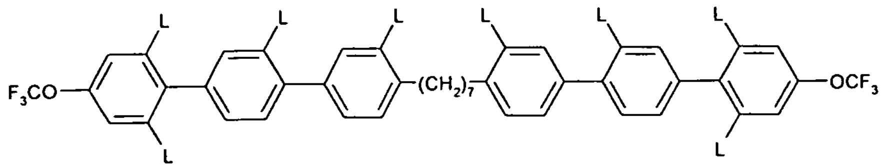

Ib-60d

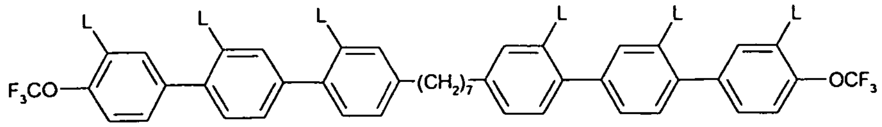

Ib-61d

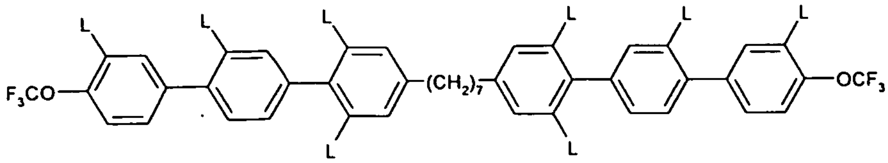

Ib-62d

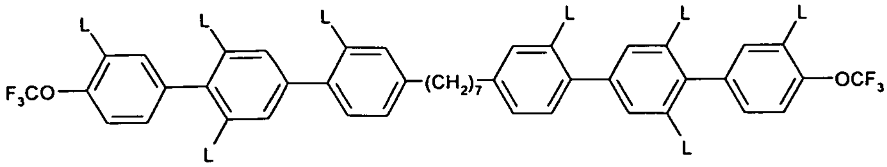

Ib-63d

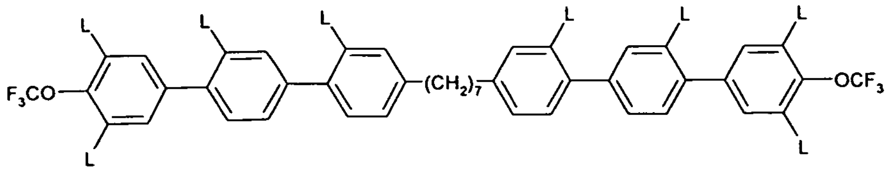

Ib-64d

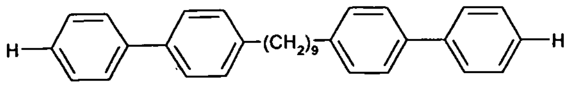

Ia-1e

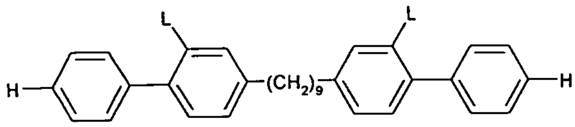

Ia-2e

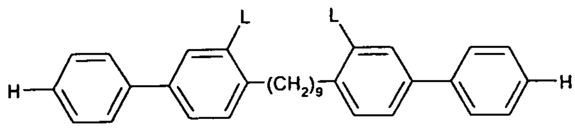

Ia-3e

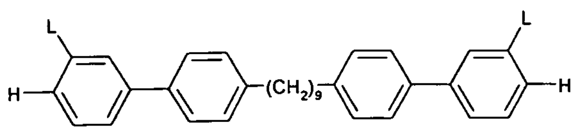

Ia-4e

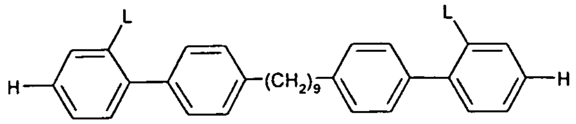

Ia-5e

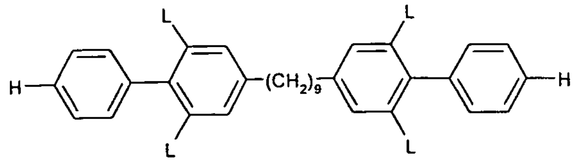

Ia-6e

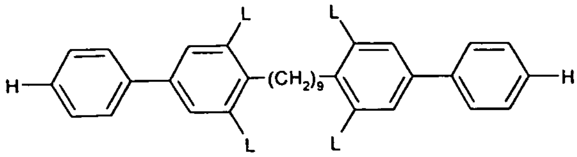

Ia-7e

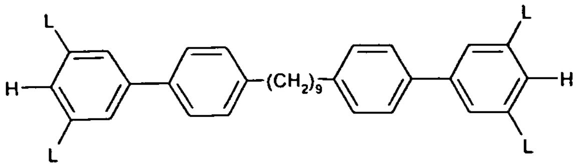

Ia-8e

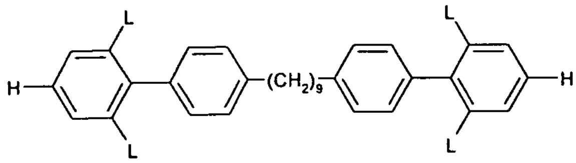

Ia-9e

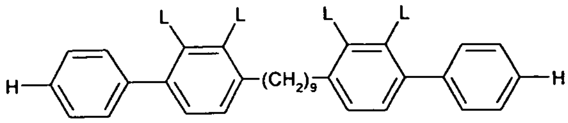

Ia-10e

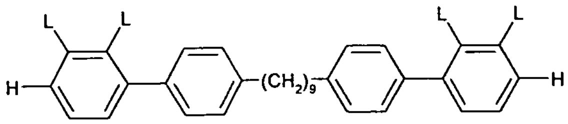

Ia-11e

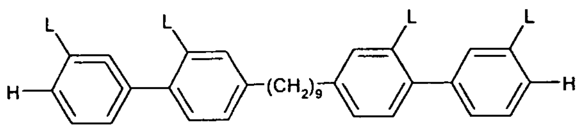

Ia-12e

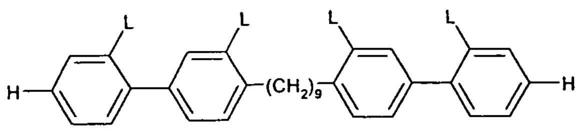

Ia-13e

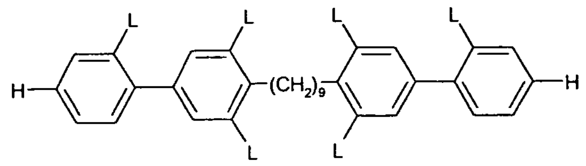

Ia-14e

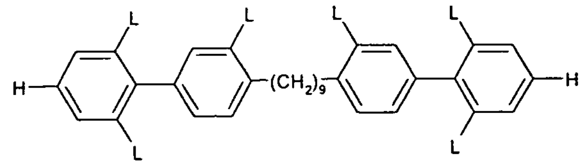

Ia-15e

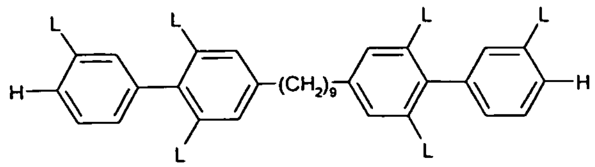

Ia-16e

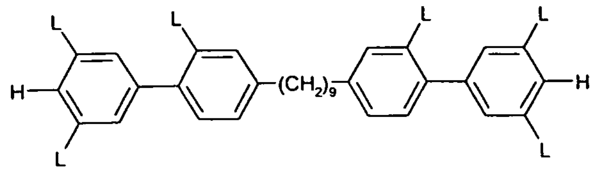

Ia-17e

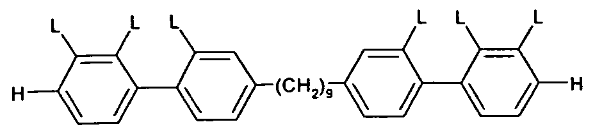

Ia-18e

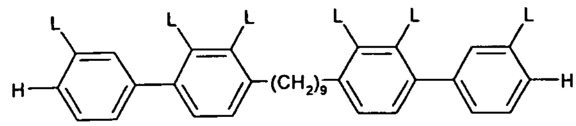

Ia-19e

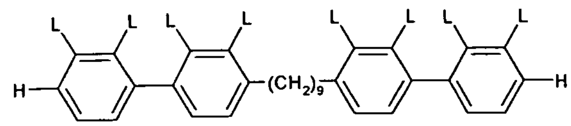

Ia-20e

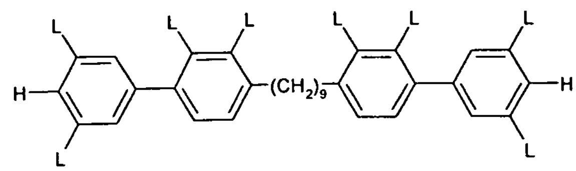

Ia-21e

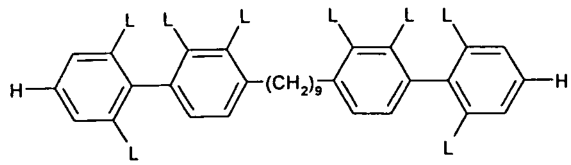

Ia-22e

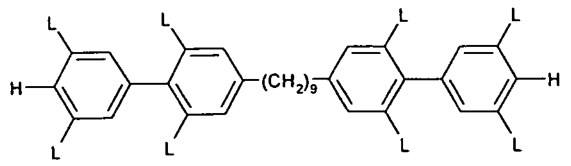

Ia-23e

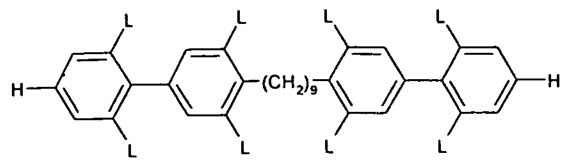

Ia-24e

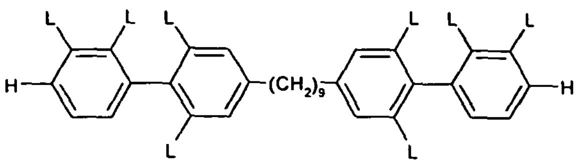

Ia-25e

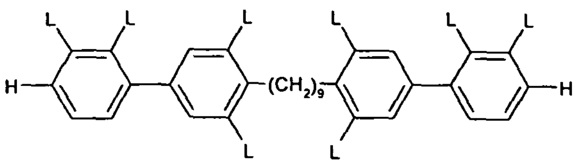

Ia-26e

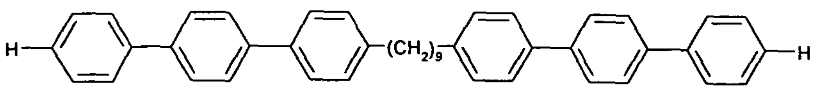

Ib-1e

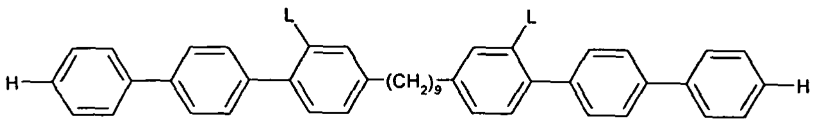

Ib-2e

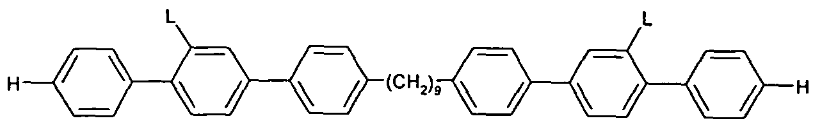

Ib-3e

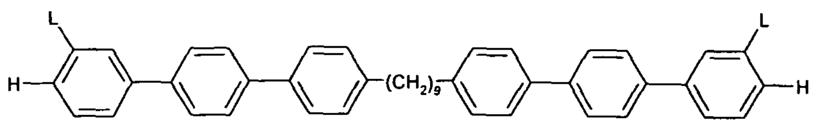

Ib-4e

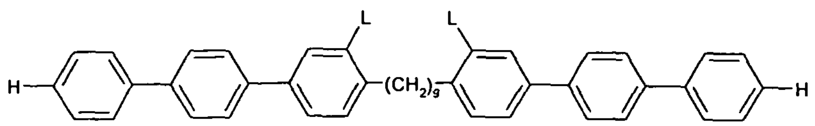

Ib-5e

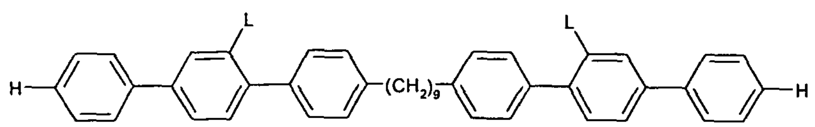

Ib-6e

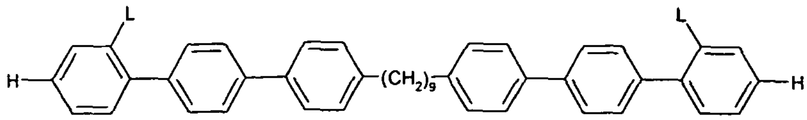

Ib-7e

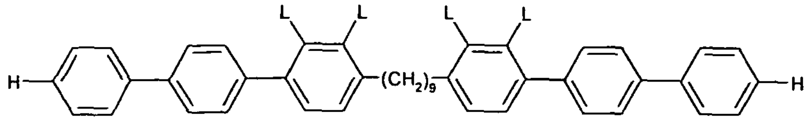

Ib-8e

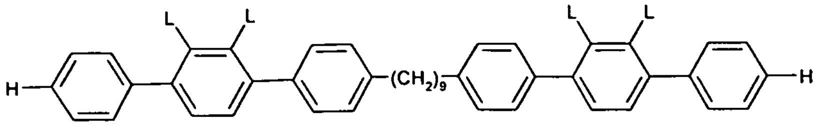

Ib-9e

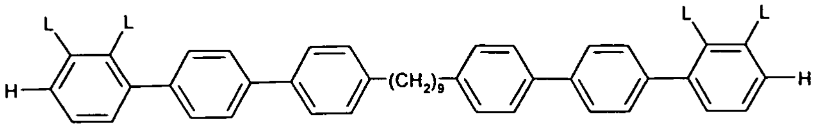

Ib-10e

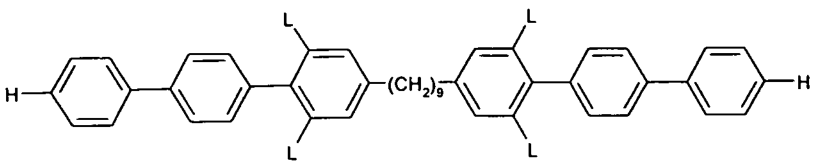

Ib-11e

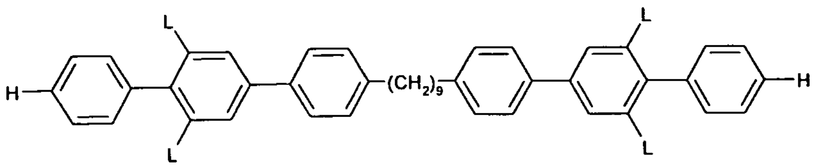

Ib-12e

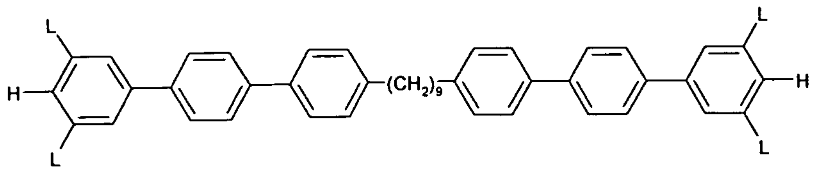

Ib-13e

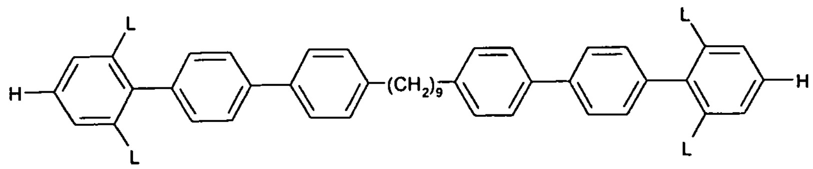

Ib-14e

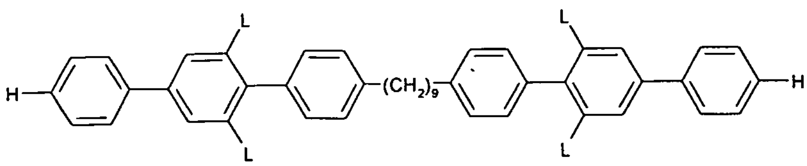

Ib-15e

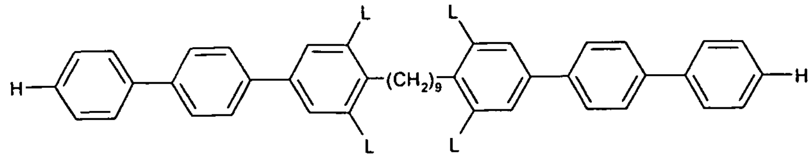

Ib-16e

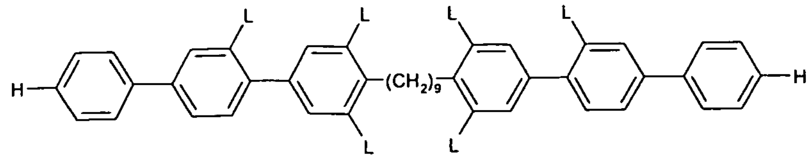

Ib-17e

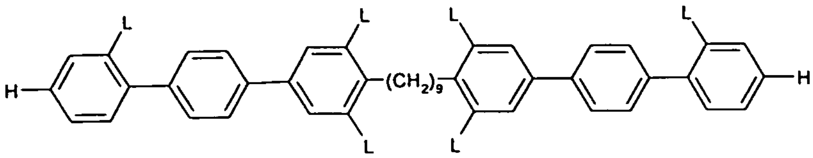

Ib-18e

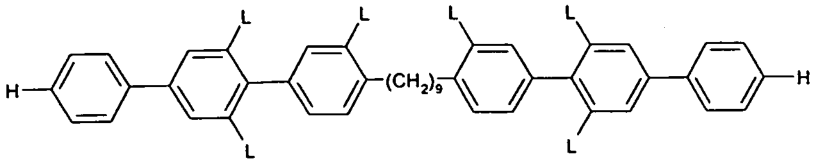

Ib-19e

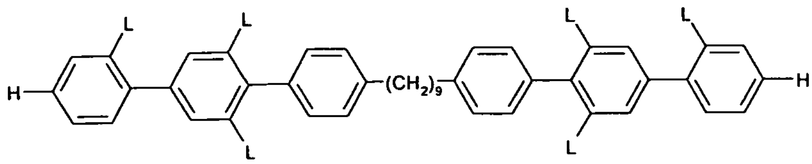

Ib-20e

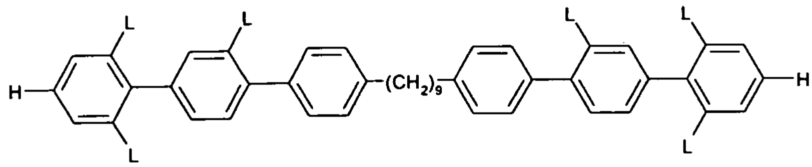

Ib-21e

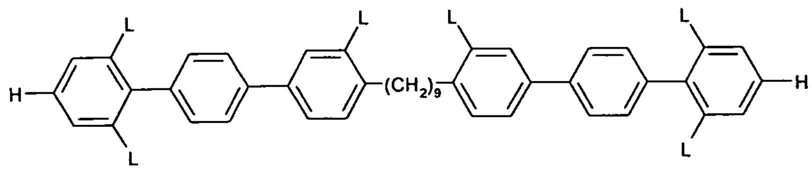

Ib-22e

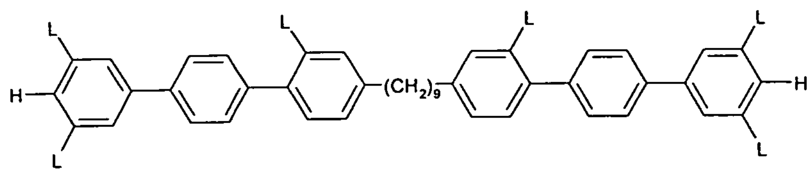

Ib-23e

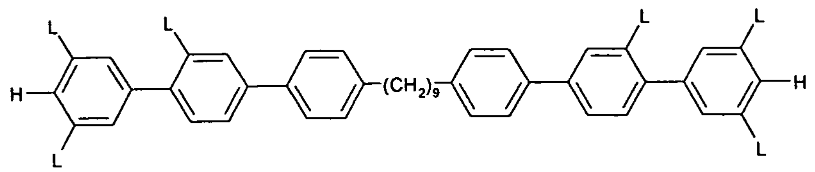

Ib-24e

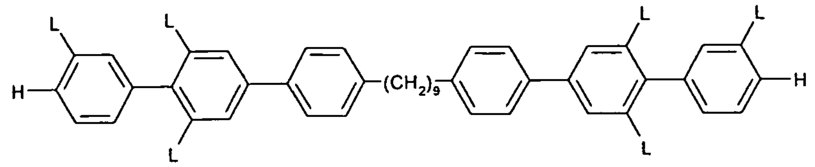

Ib-25e

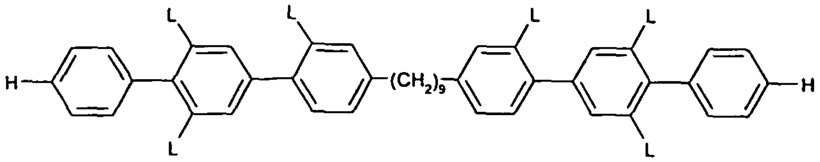

Ib-26e

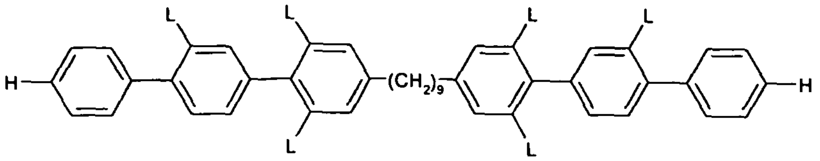

Ib-27e

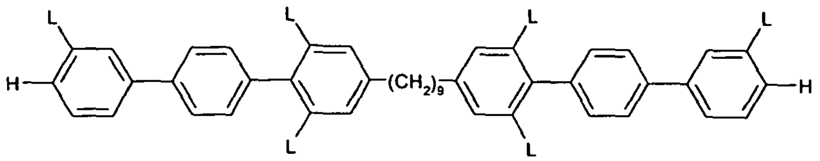

Ib-28e

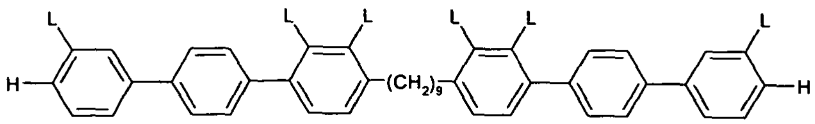

Ib-29e

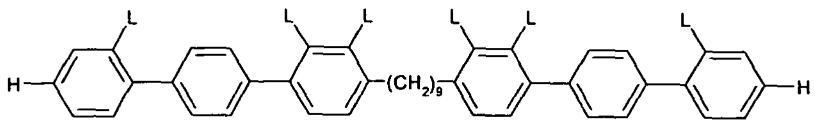

Ib-30e

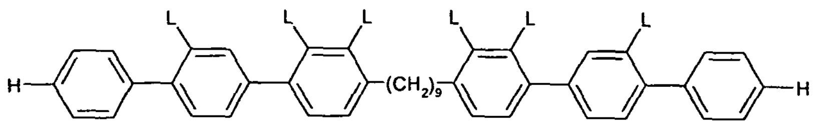

Ib-31e

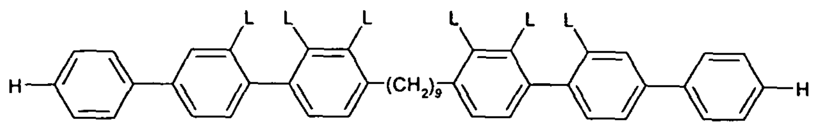

Ib-32e

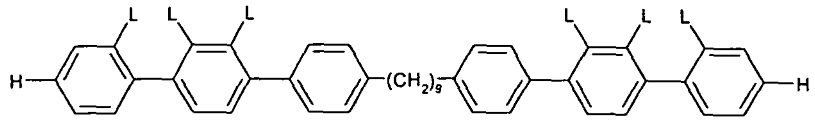

Ib-33e

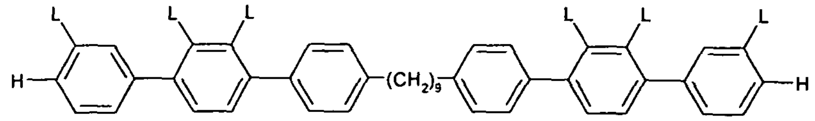

Ib-34e

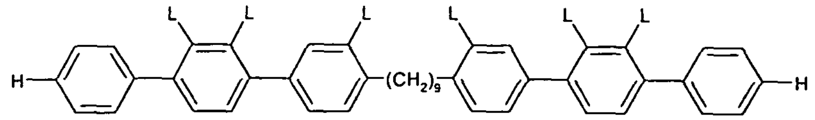

Ib-35e

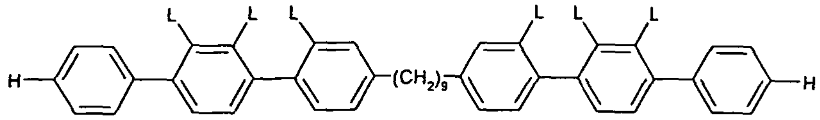

Ib-36e

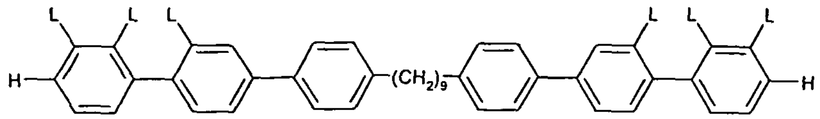

Ib-37e

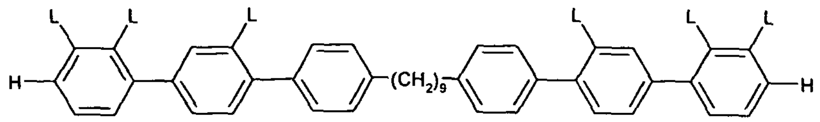

Ib-38e

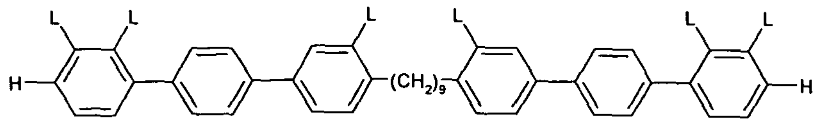

Ib-39e

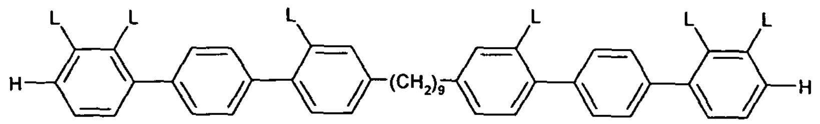

Ib-40e

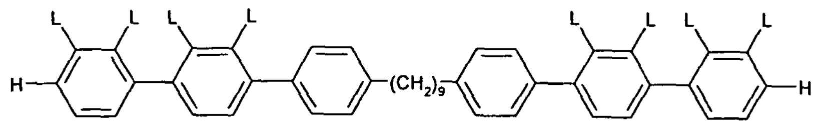

Ib-41e

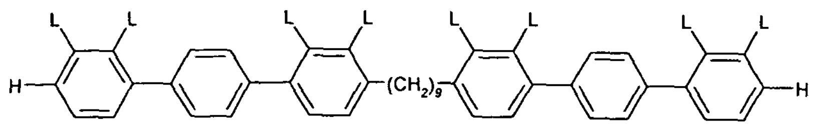

Ib-42e

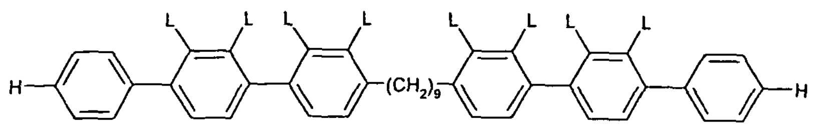

Ib-43e

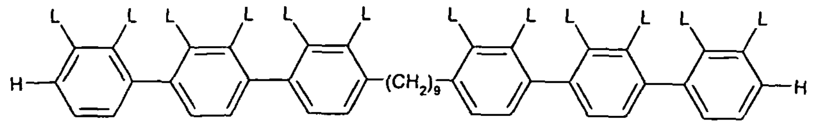

Ib-44e

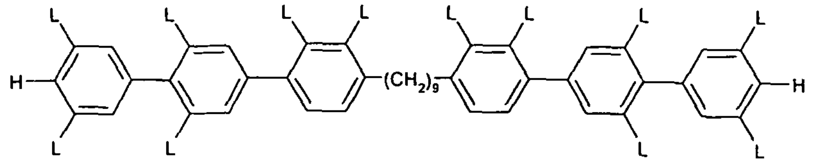

Ib-45e

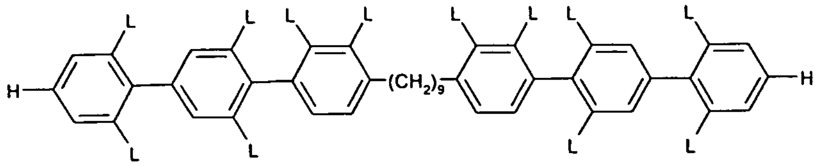

Ib-46e

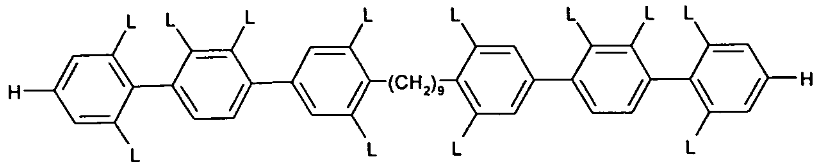

Ib-47e

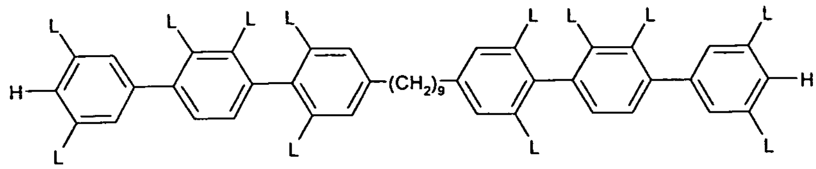

Ib-48e

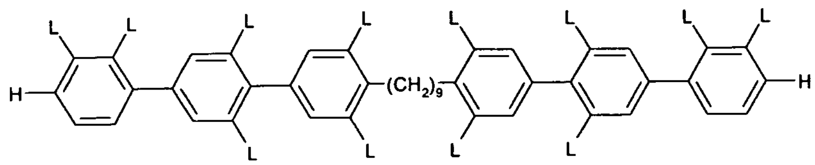

Ib-49e

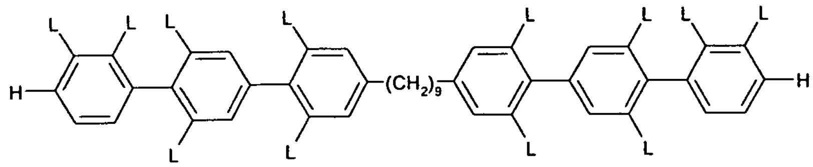

Ib-50e

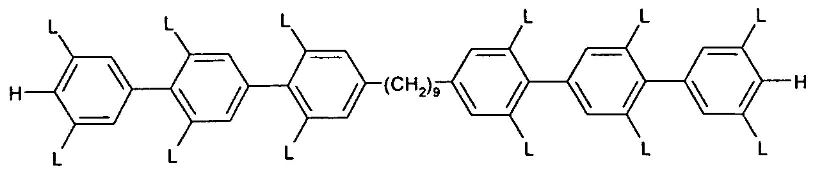

Ib-51e

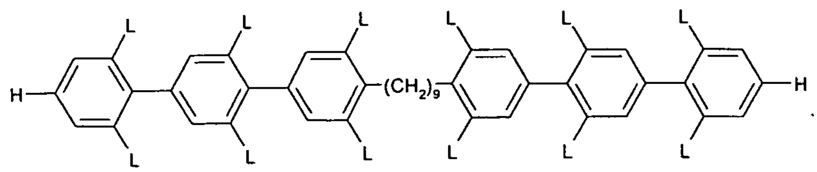

Ib-52e

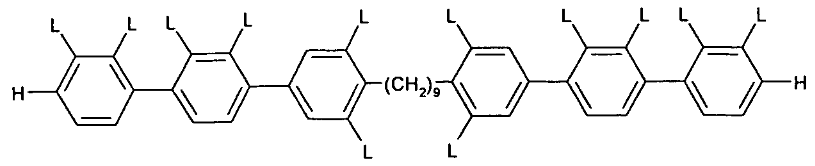

Ib-53e

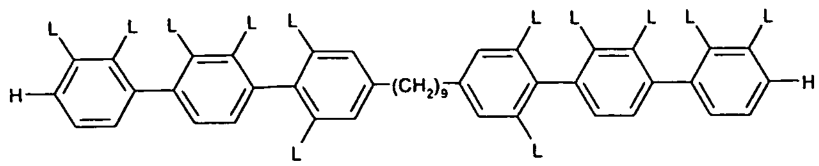

Ib-54e

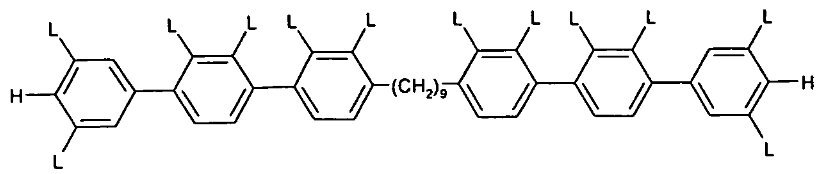

Ib-55e

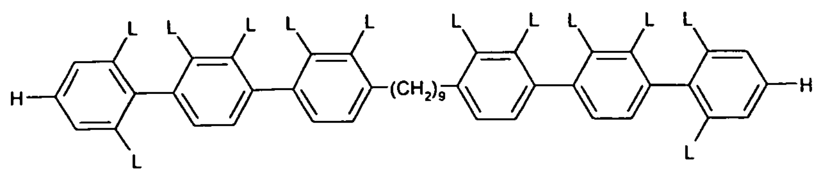

Ib-56e

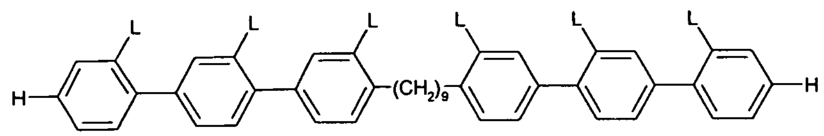

Ib-57e

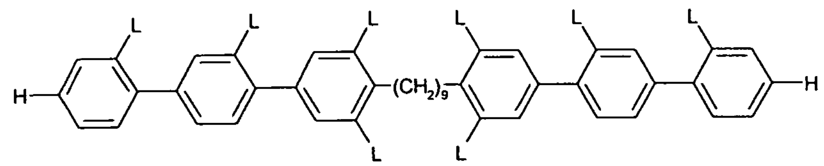

Ib-58e

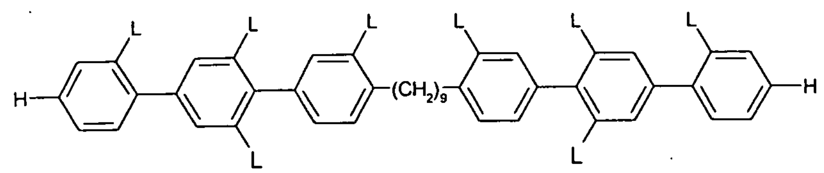

Ib-59e

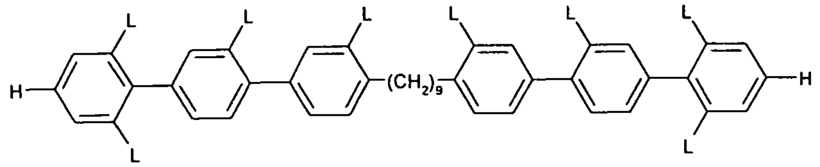

Ib-60e

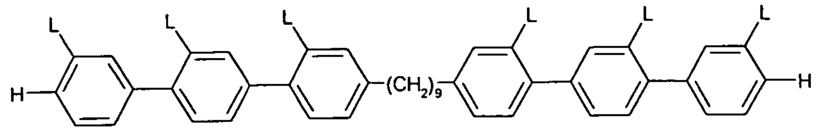

Ib-61e

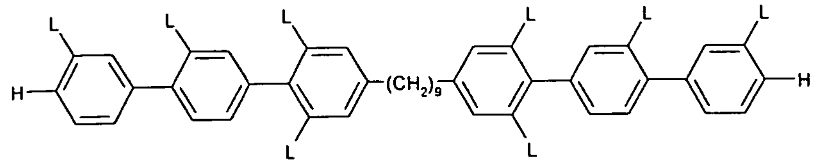

Ib-62e

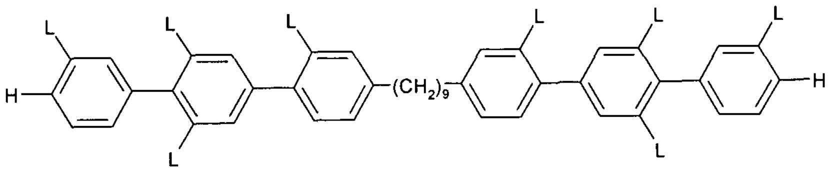

Ib-63e

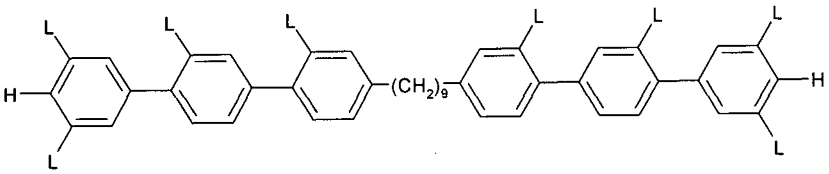

Ib-64e

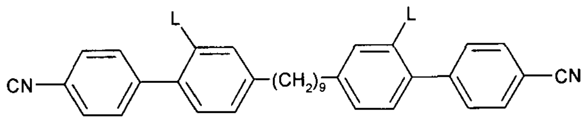

Ia-2f

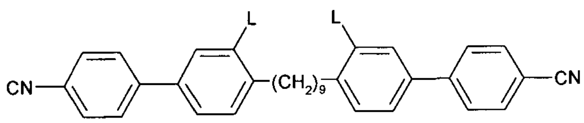

Ia-3f

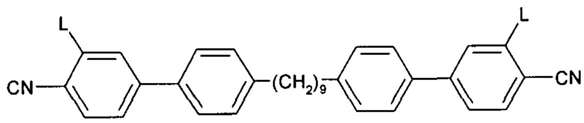

Ia-4f

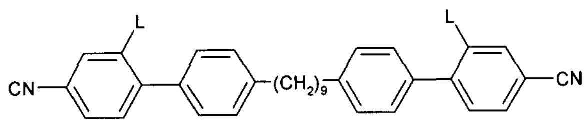

Ia-5f

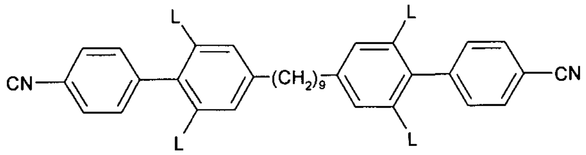

Ia-6f

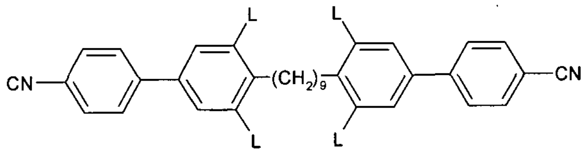

Ia-7f

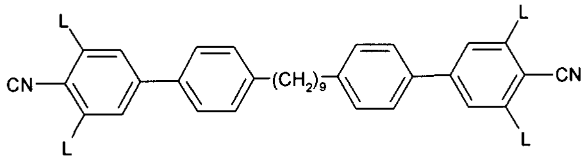

Ia-8f

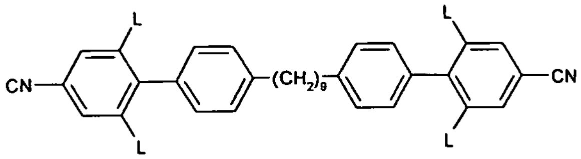

Ia-9f

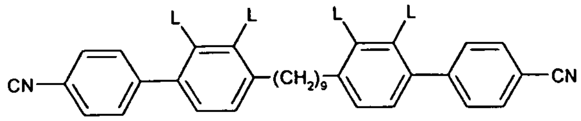

Ia-10f

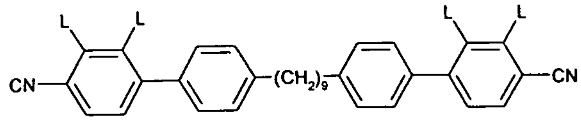

Ia-11f

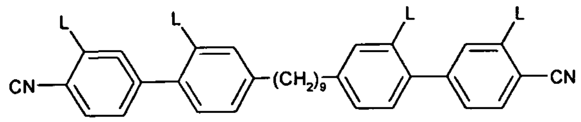

Ia-12f

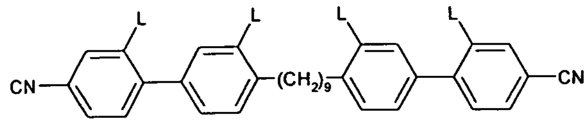

Ia-13f

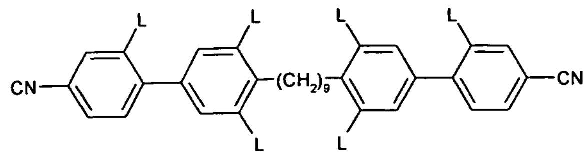

Ia-14f

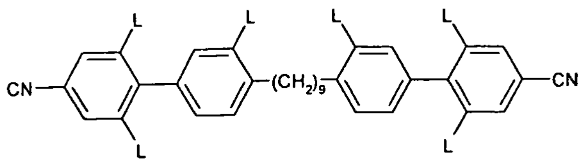

Ia-15f

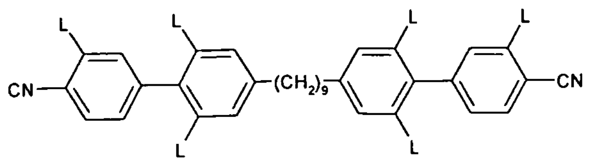

Ia-16f

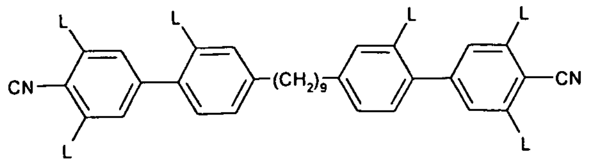

Ia-17f

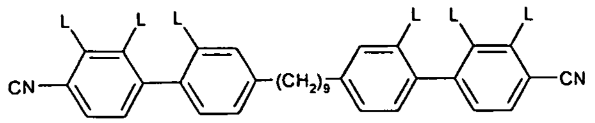

Ia-18f

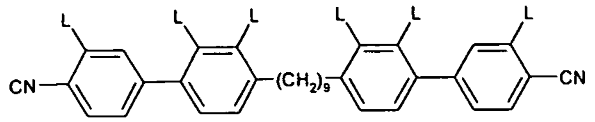

Ia-19f

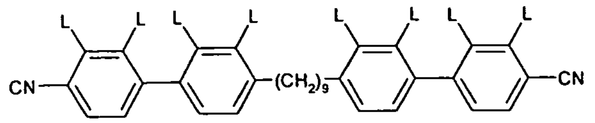

Ia-20f

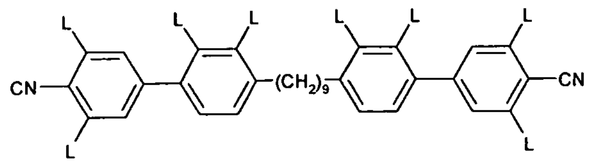

Ia-21f

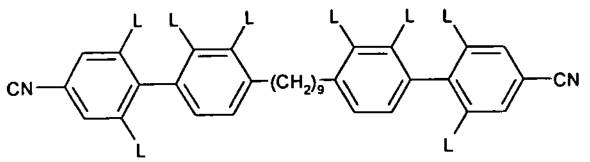

Ia-22f

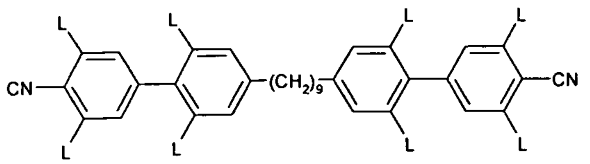

Ia-23f

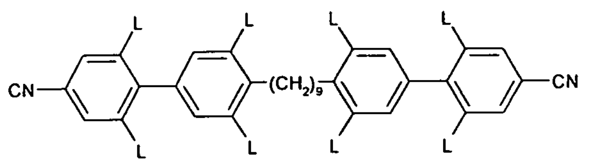

Ia-24f

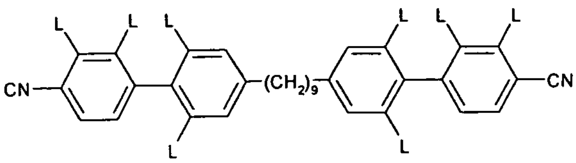

Ia-25f

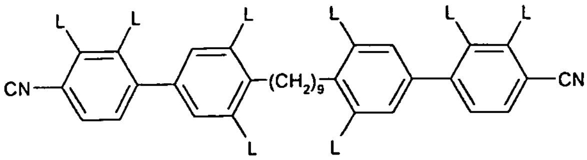

Ia-26f

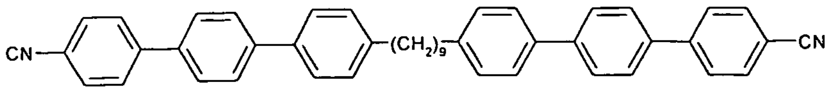

Ib-1f

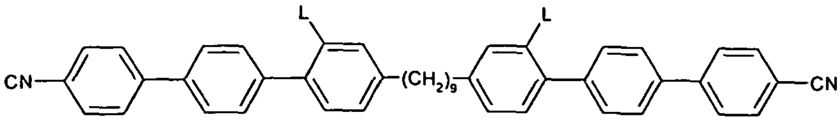

Ib-2f

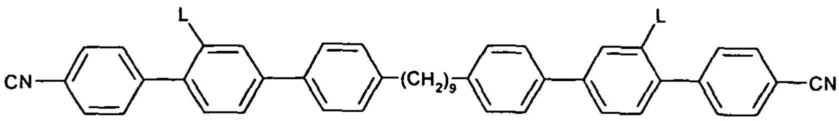

Ib-3f

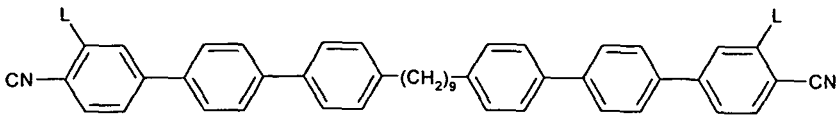

Ib-4f

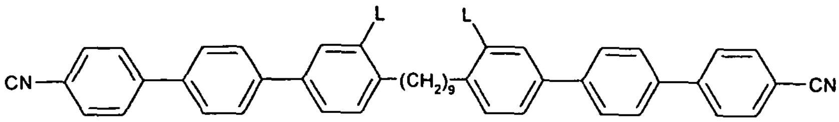

Ib-5f

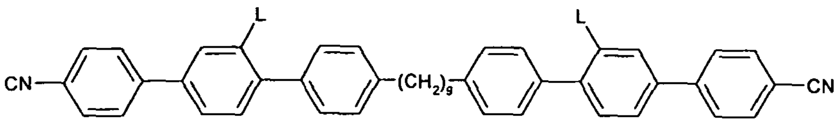

Ib-6f

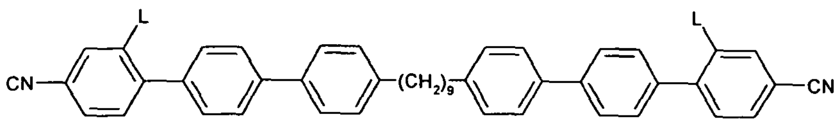

Ib-7f

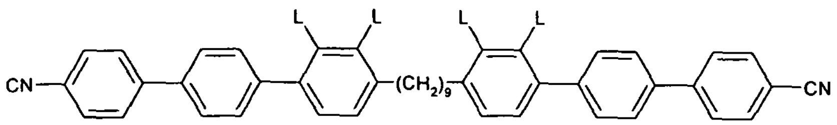

Ib-8f

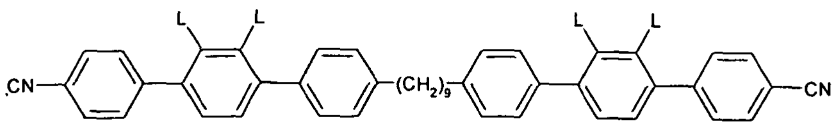

Ib-9f

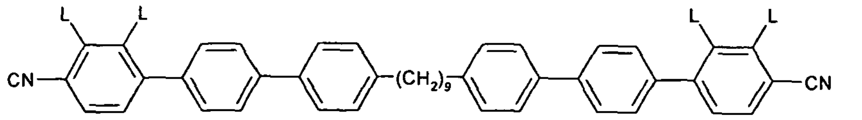

Ib-10f

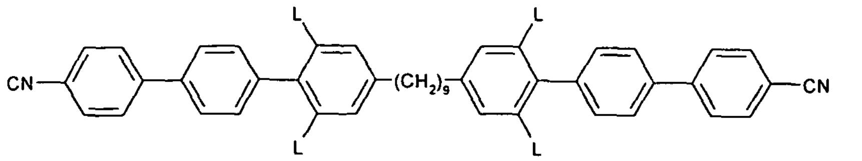

Ib-11f

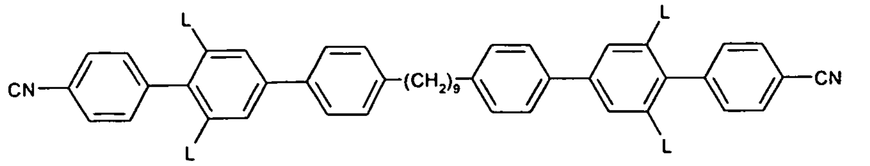

Ib-12f

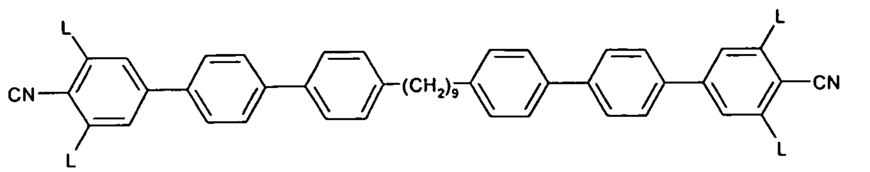

Ib-13f

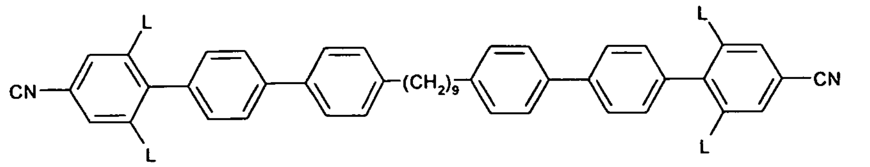

Ib-14f

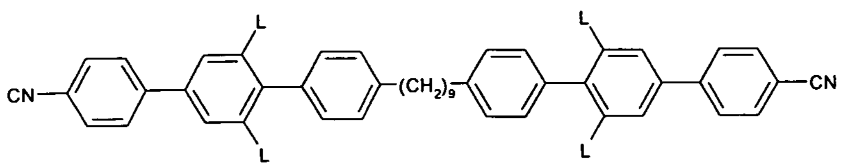

Ib-15f

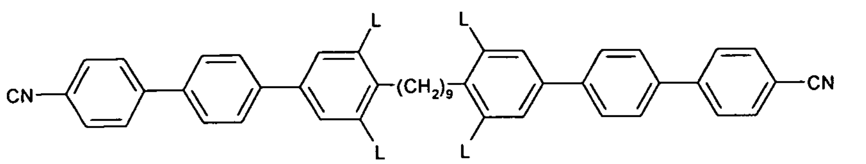

Ib-16f

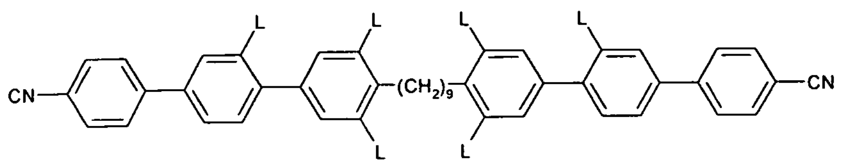

Ib-17f

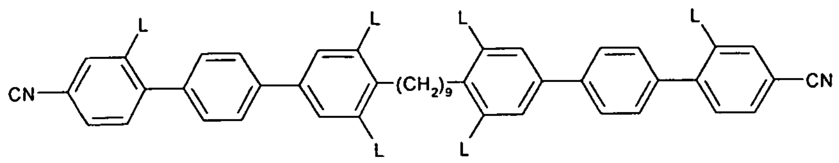

Ib-18f

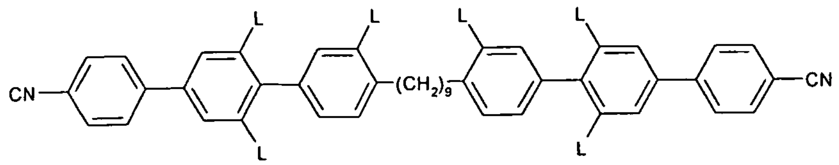

Ib-19f

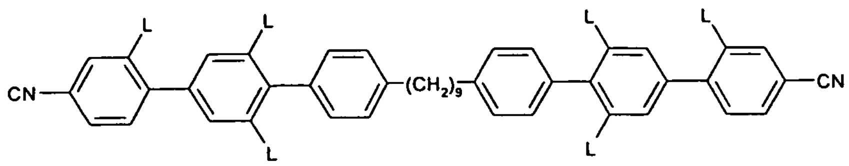

Ib-20f

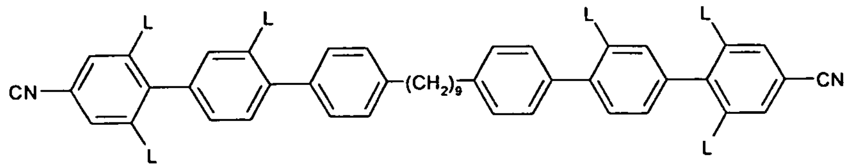

Ib-21f

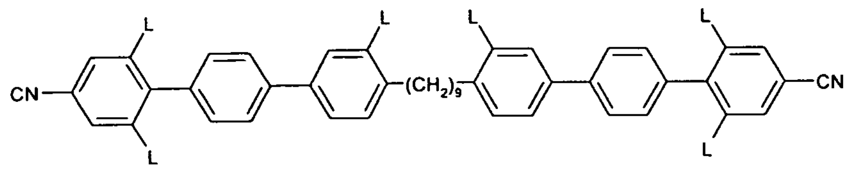

Ib-22f

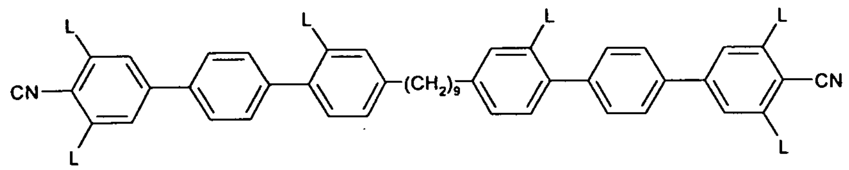

Ib-23f

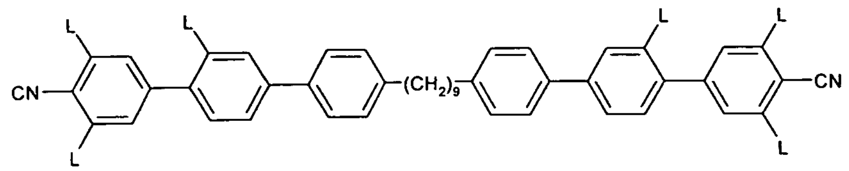

Ib-24f

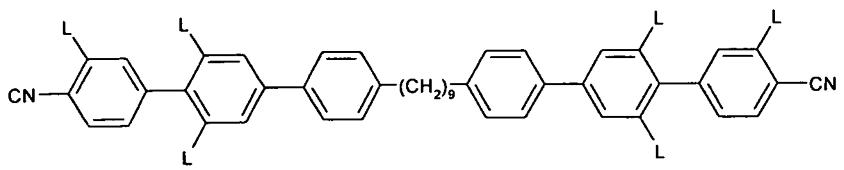

Ib-25f

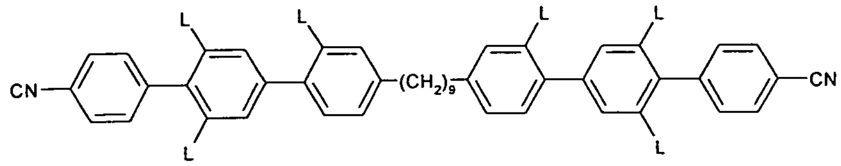

Ib-26f

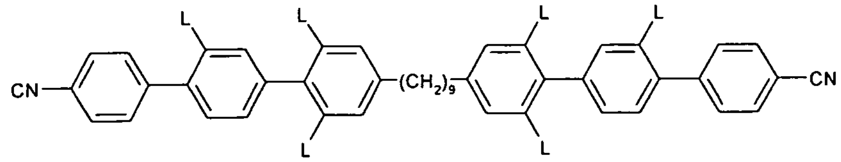

Ib-27f

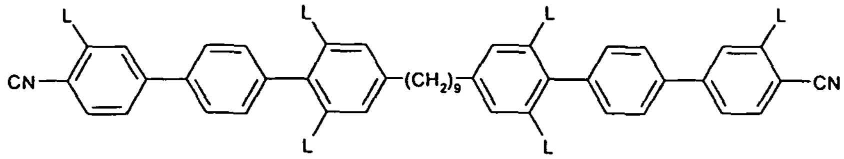

Ib-28f

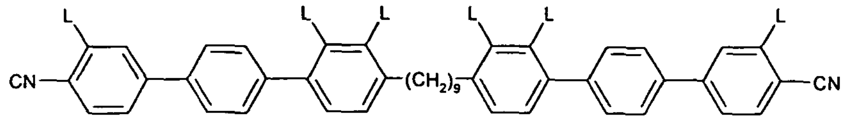

Ib-29f

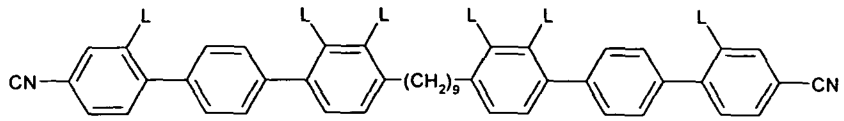

Ib-30f

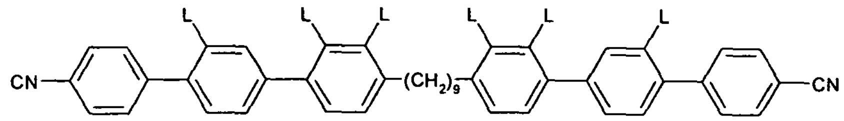

Ib-31f

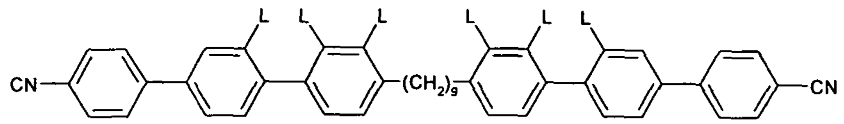

Ib-32f

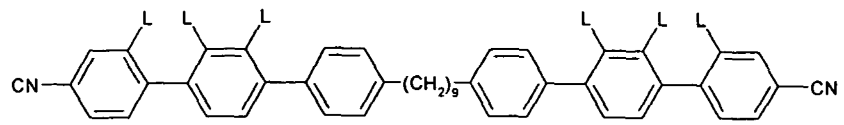

Ib-33f

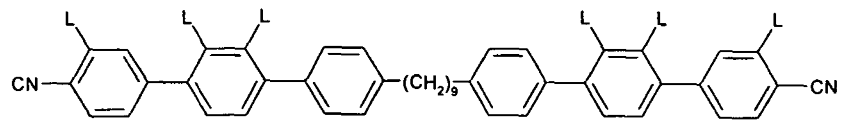

Ib-34f

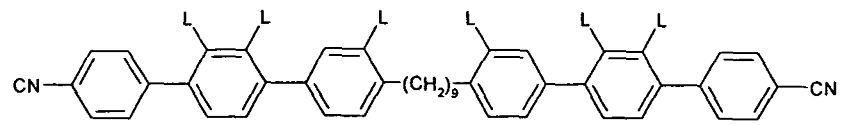

Ib-35f

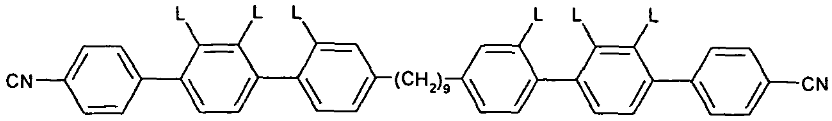
Ib-36f

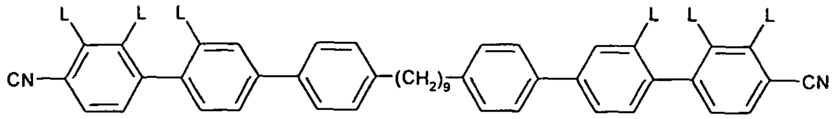
Ib-37f

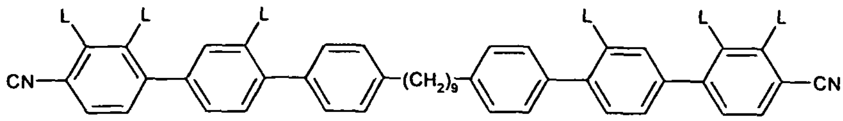
Ib-38f

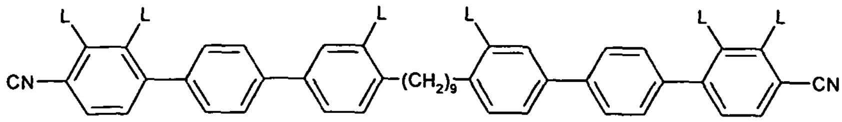
Ib-39f

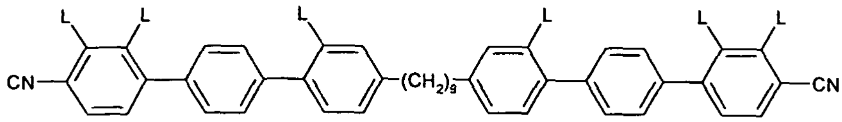
Ib-40f

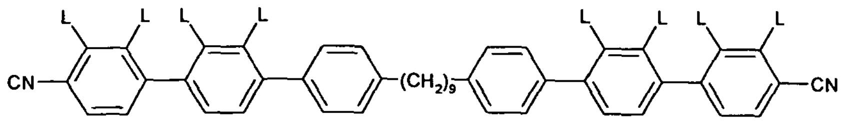
Ib-41f

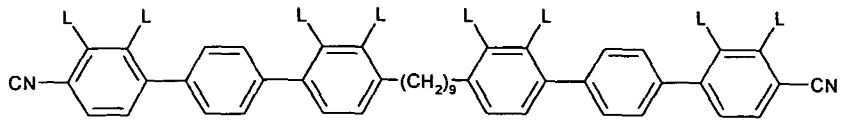
Ib-42f

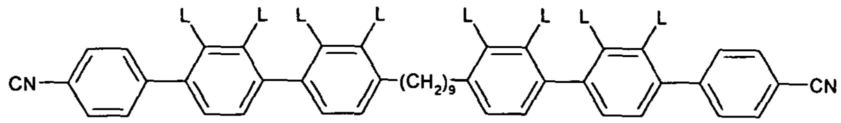
Ib-43f

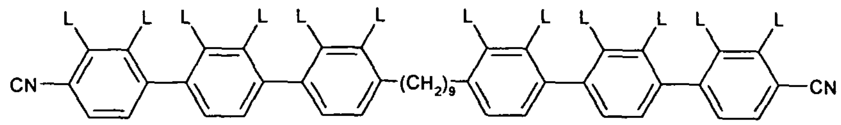
Ib-44f

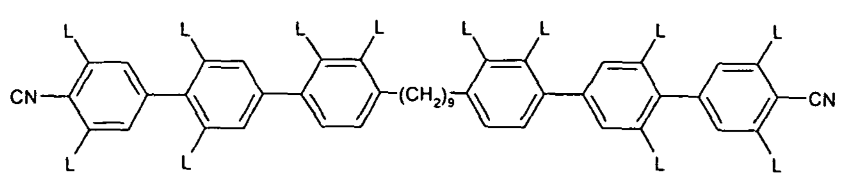
Ib-45f

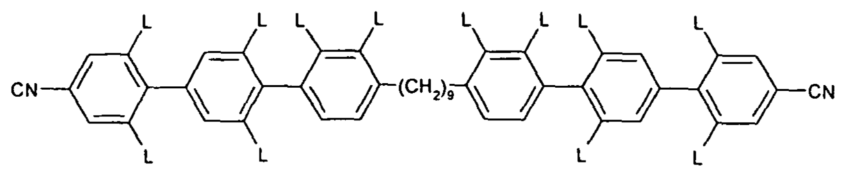
Ib-46f

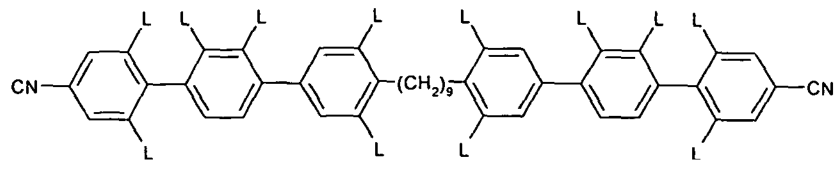
Ib-47f

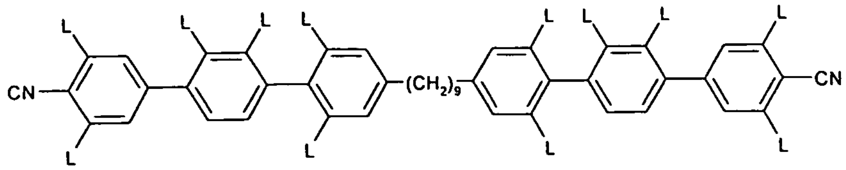
Ib-48f

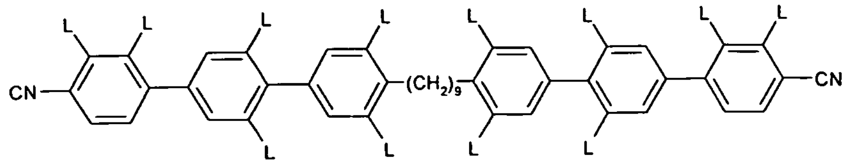
Ib-49f

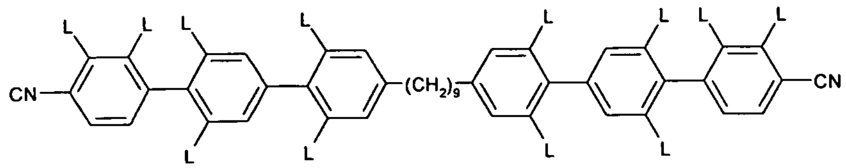
Ib-50f

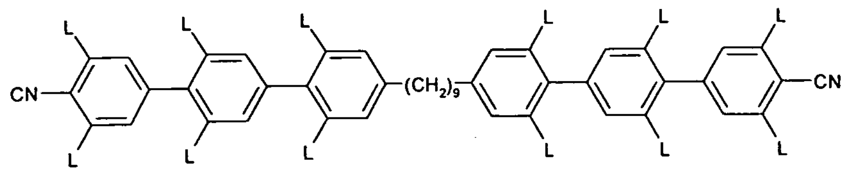
Ib-51f

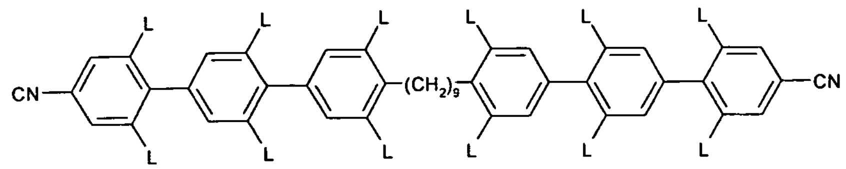
Ib-52f

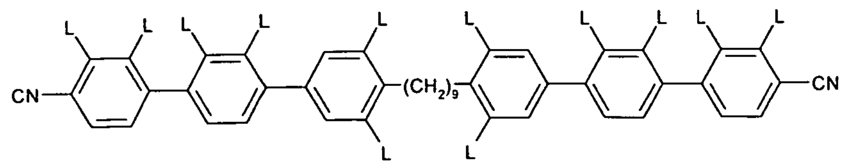
Ib-53f

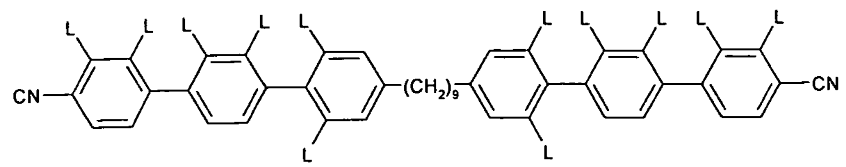
Ib-54f

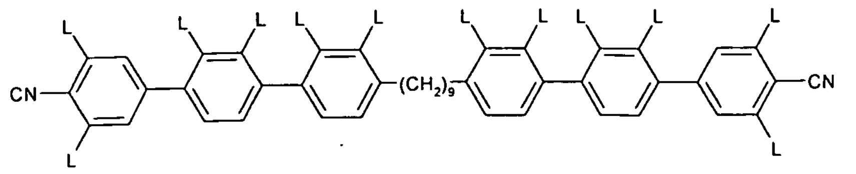

Ib-55f

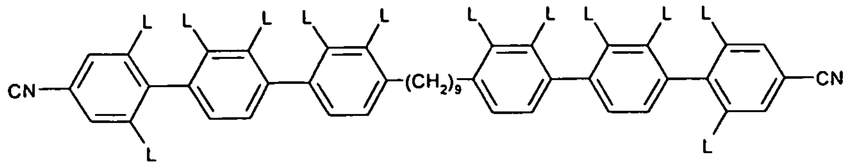

Ib-56f

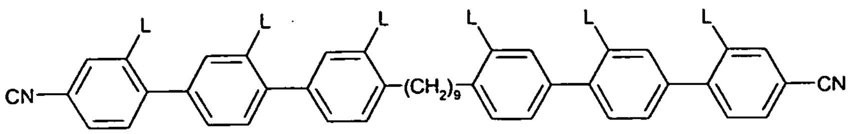

Ib-57e

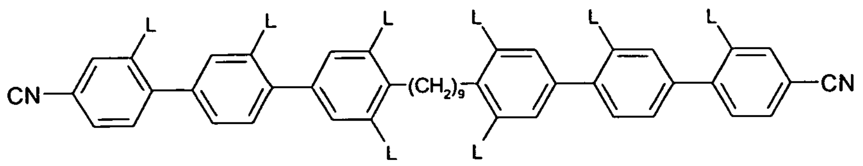

Ib-58f

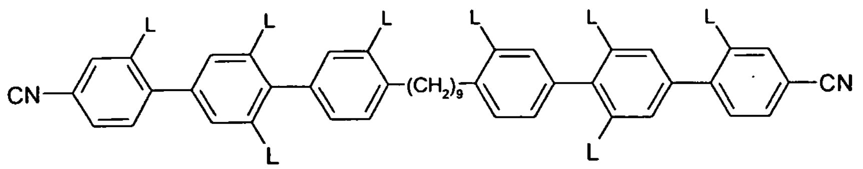

Ib-59f

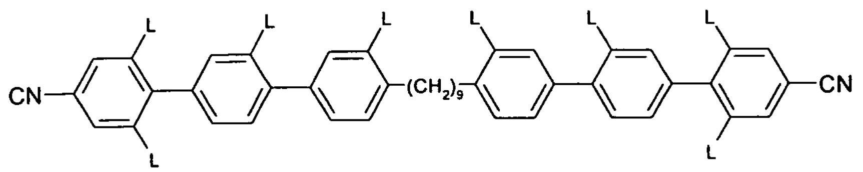

Ib-60f

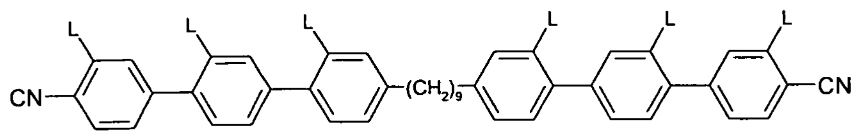

Ib-61f

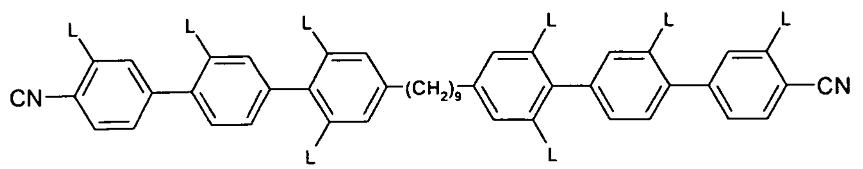

Ib-62f

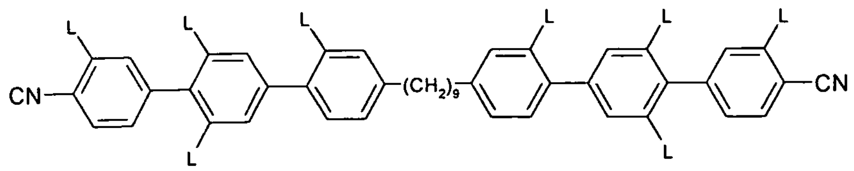
Ib-63f

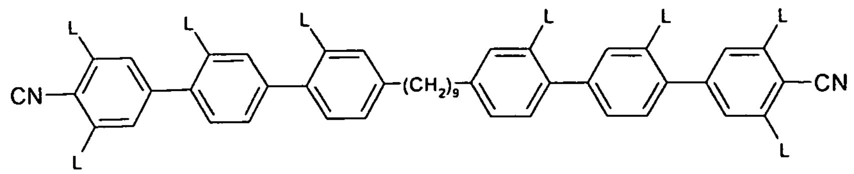
Ib-64f

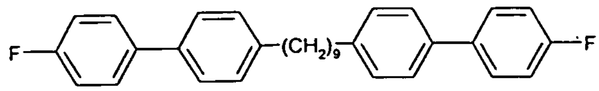
Ia-1g

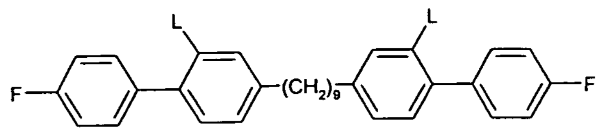
Ia-2g

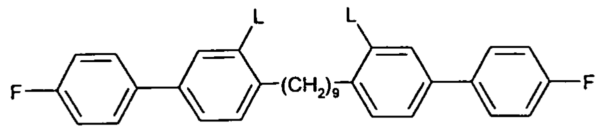
Ia-3g

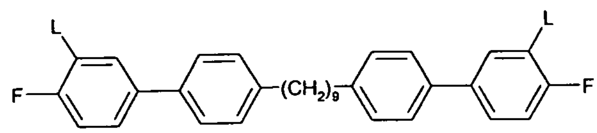
Ia-4g

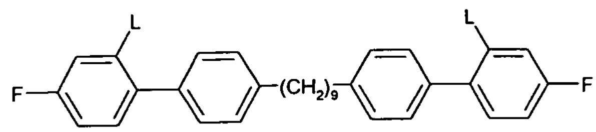
Ia-5g

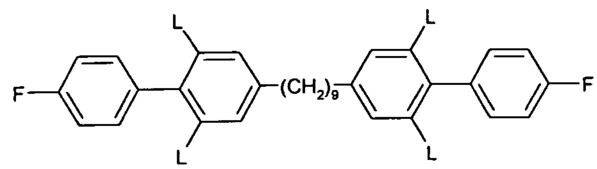
Ia-6g

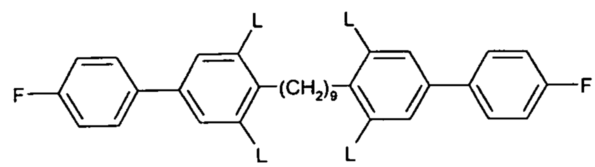
Ia-7g

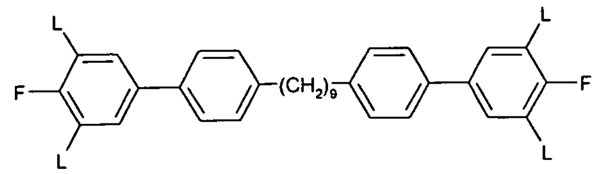

Ia-8g

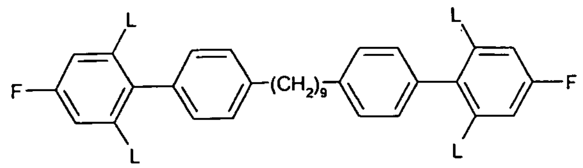

Ia-9g

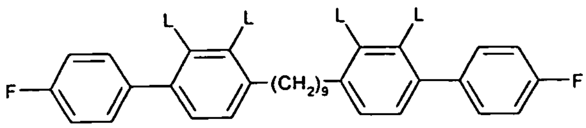

Ia-10g

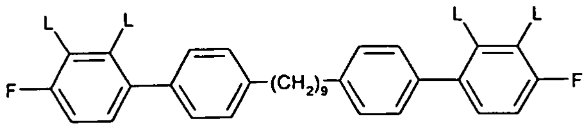

Ia-11g

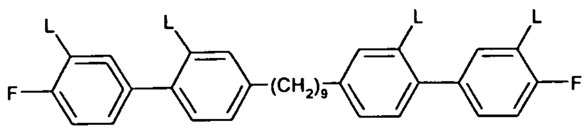

Ia-12g

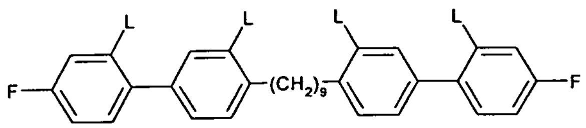

Ia-13g

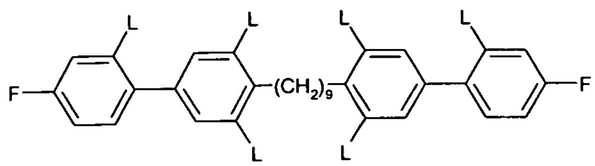

Ia-14g

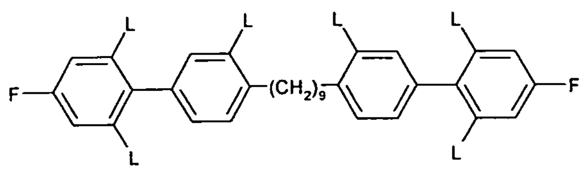

Ia-15g

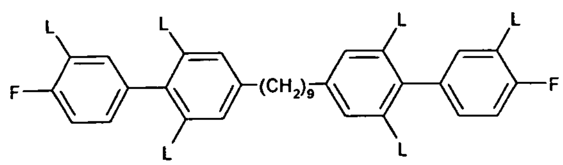

Ia-16g

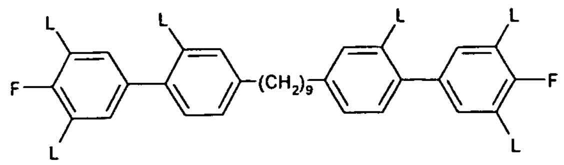

Ia-17g

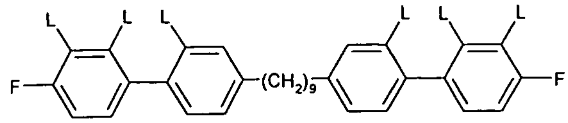

Ia-18g

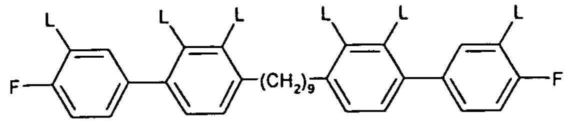

Ia-19g

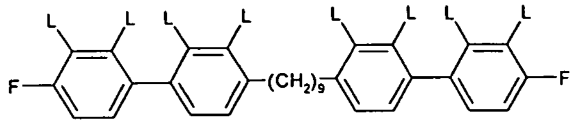

Ia-20g

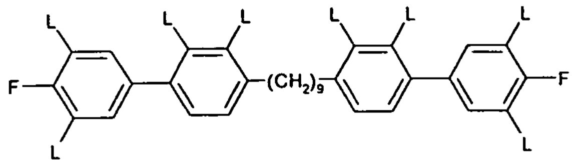

Ia-21g

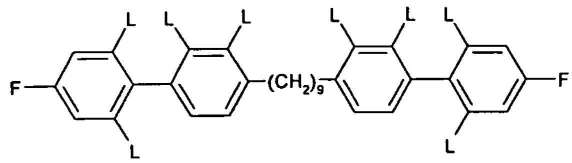

Ia-22g

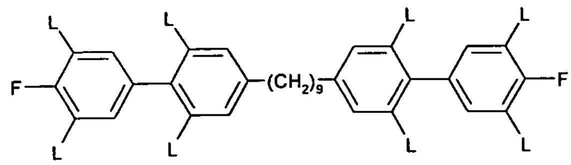

Ia-23g

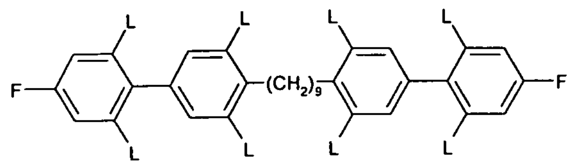

Ia-24g

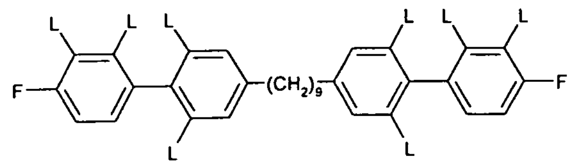

Ia-25g

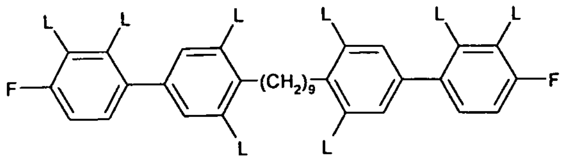

Ia-26g

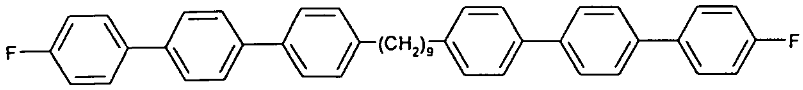

Ib-1g

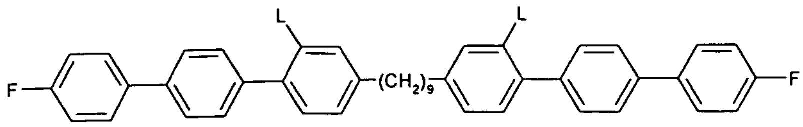

Ib-2g

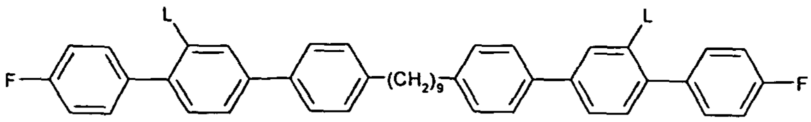

Ib-3g

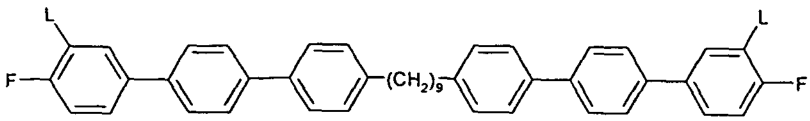

Ib-4g

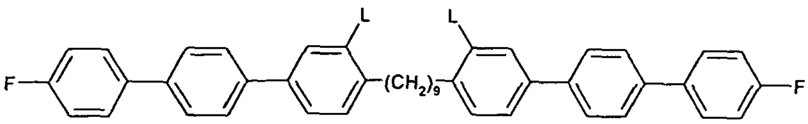

Ib-5g

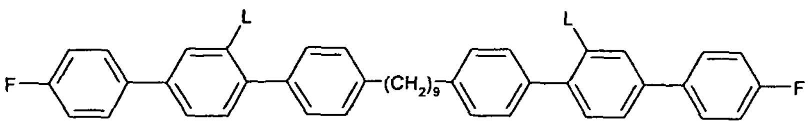

Ib-6g

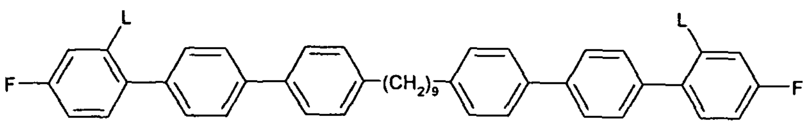

Ib-7g

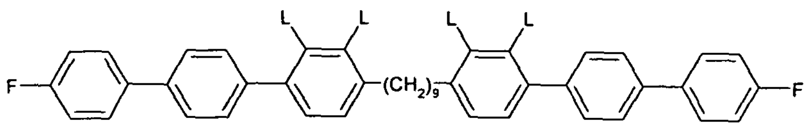

Ib-8g

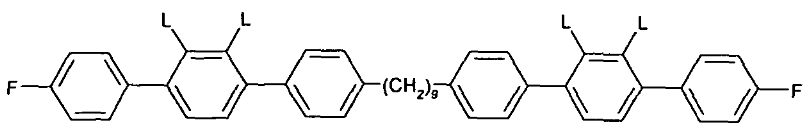

Ib-9g

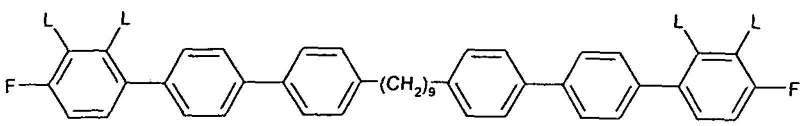

Ib-10g

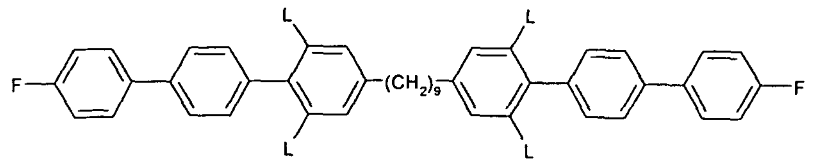

Ib-11g

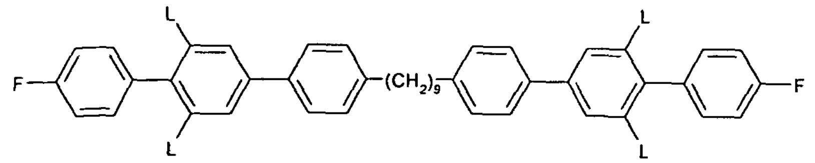

Ib-12g

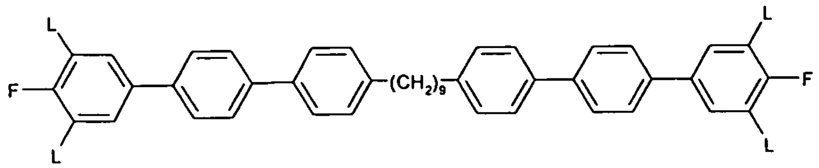

Ib-13g

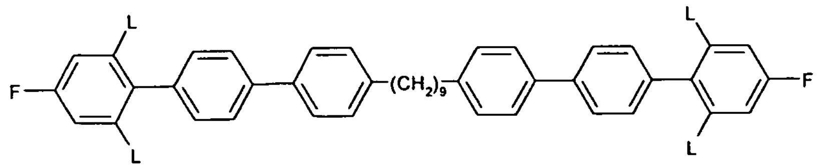

Ib-14g

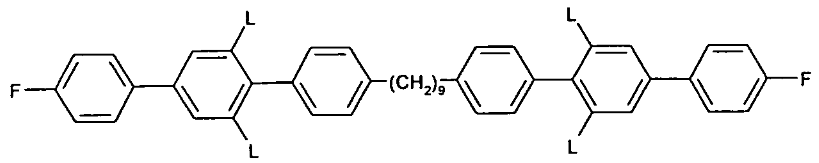

Ib-15g

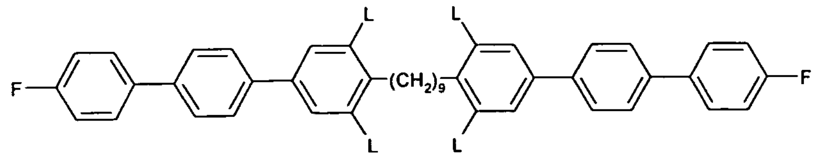

Ib-16g

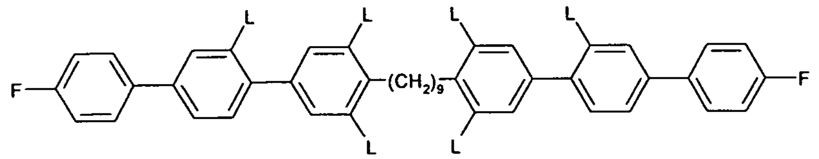

Ib-17g

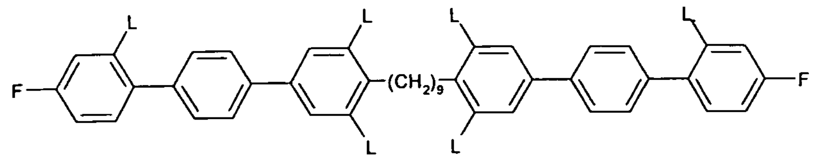

Ib-18g

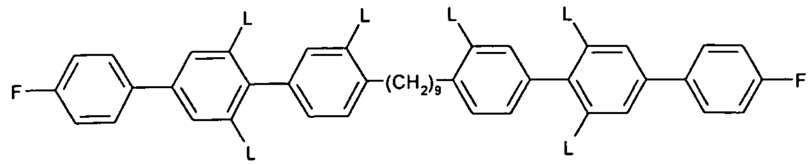

Ib-19g

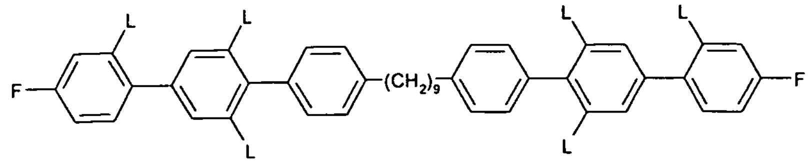

Ib-20g

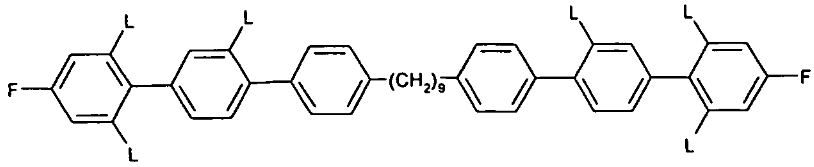

Ib-21g

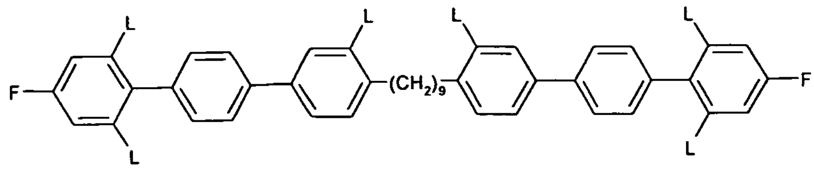

Ib-22g

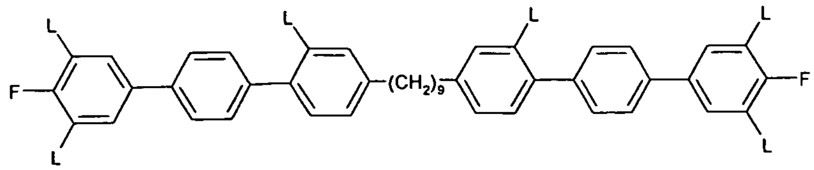

Ib-23g

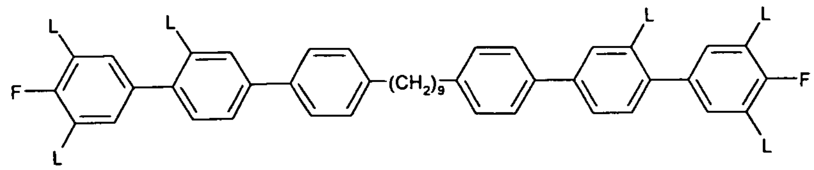

Ib-24g

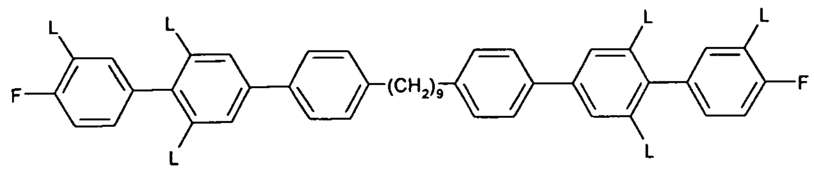

Ib-25g

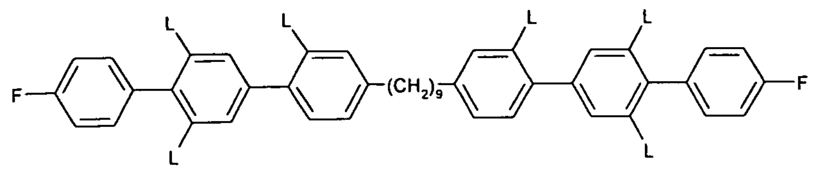

Ib-26g

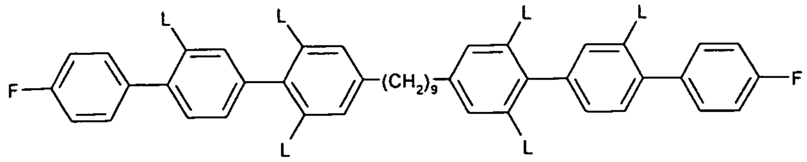

Ib-27g

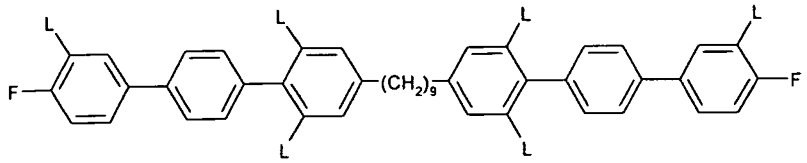

Ib-28g

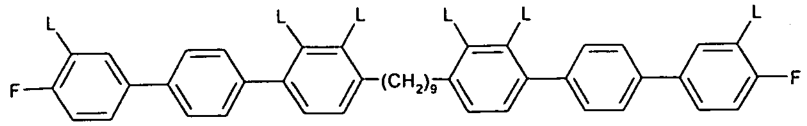

Ib-29g

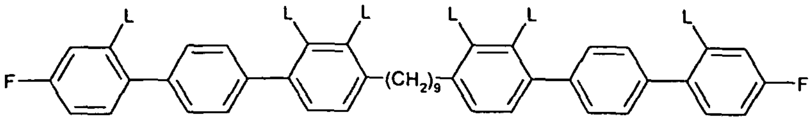

Ib-30g

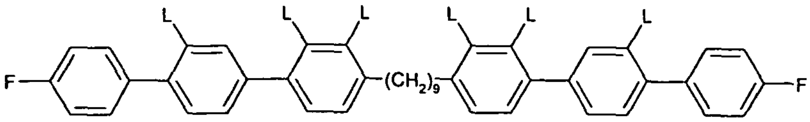

Ib-31g

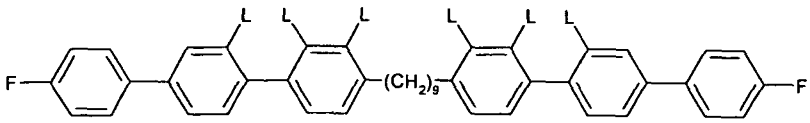

Ib-32g

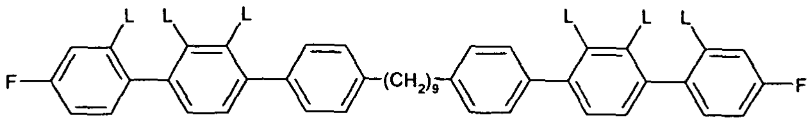

Ib-33g

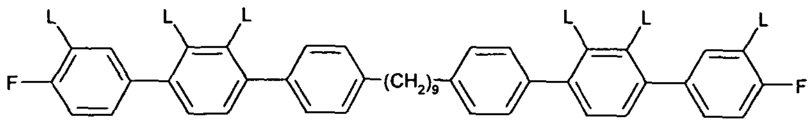

Ib-34g

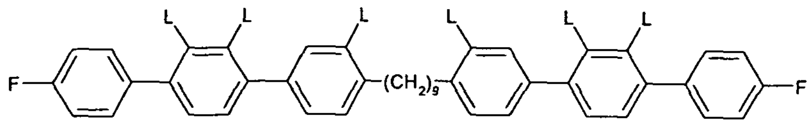

Ib-35g

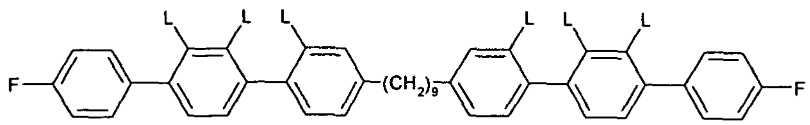

Ib-36g

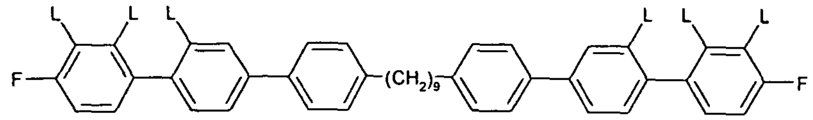

Ib-37g

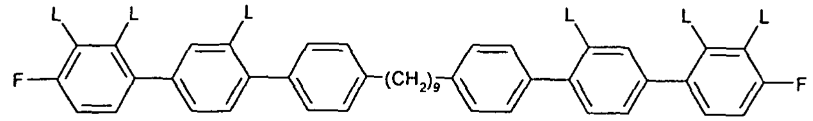

Ib-38g

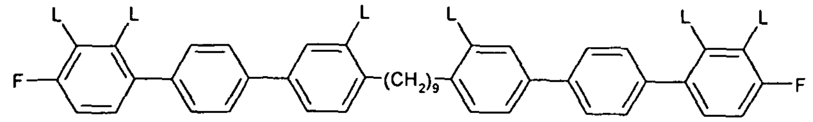

Ib-39g

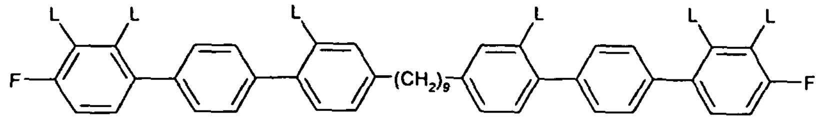

Ib-40g

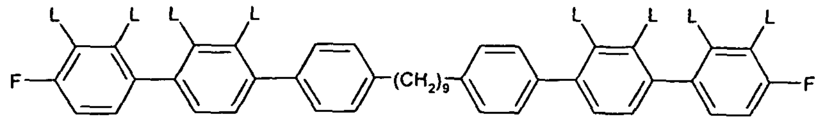

Ib-41g

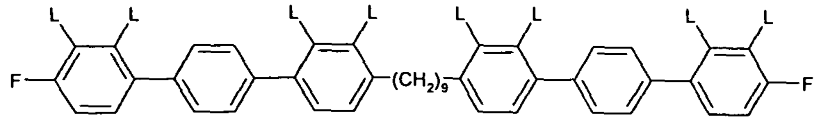

Ib-42g

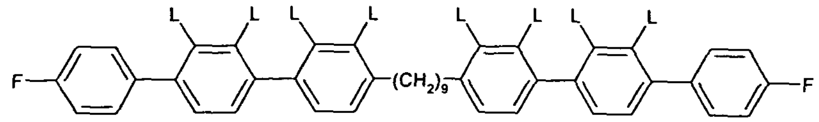

Ib-43g

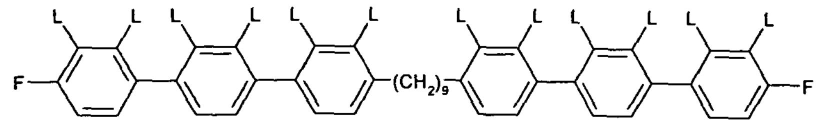

Ib-44g

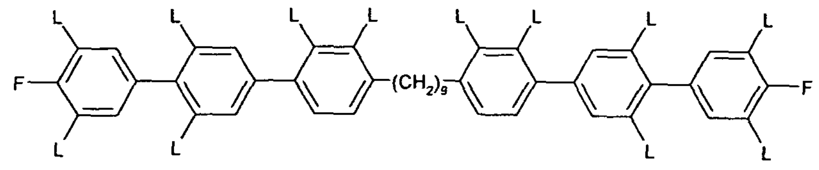

Ib-45g

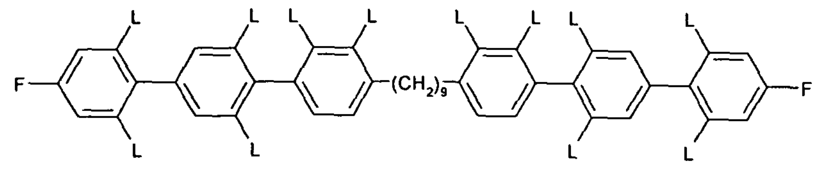

Ib-46g

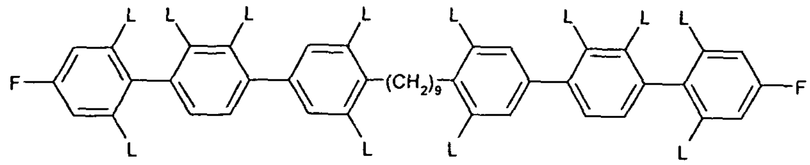

Ib-47g

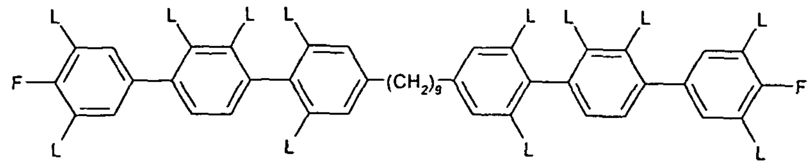

Ib-48g

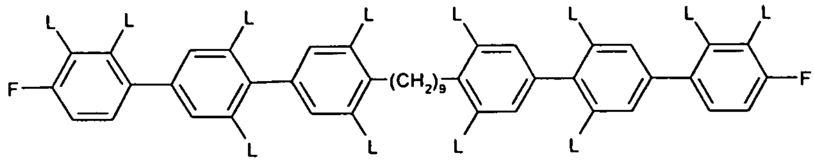

Ib-49g

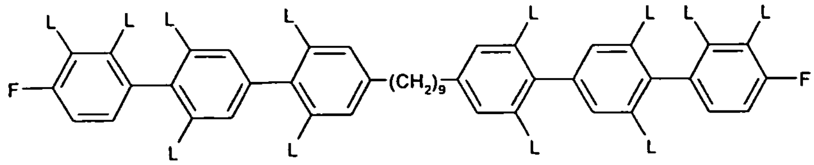

Ib-50g

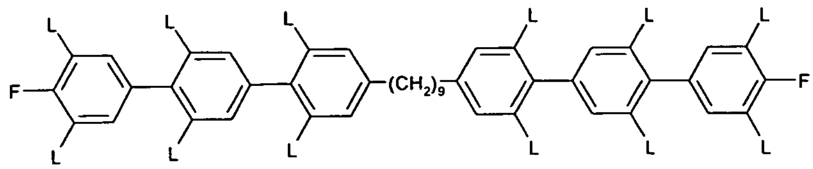

Ib-51g

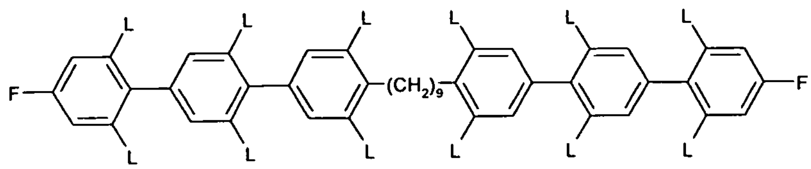

Ib-52g

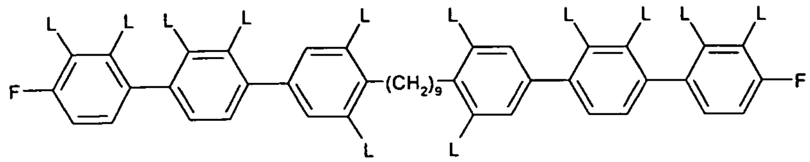

Ib-53g

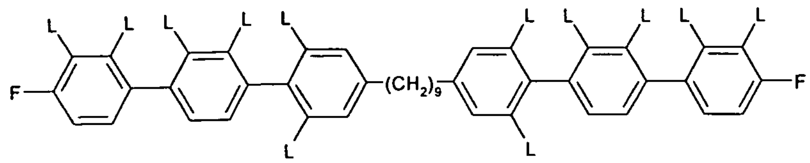

Ib-54g

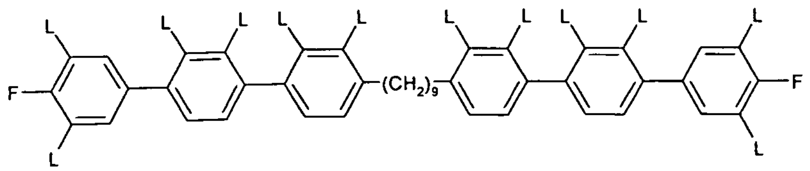

Ib-55g

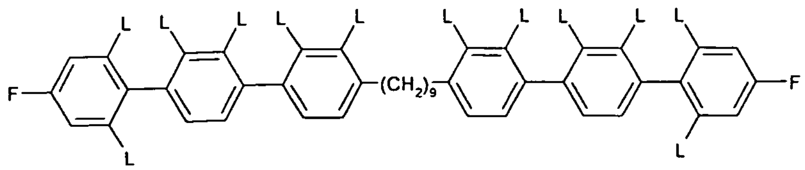

Ib-56g

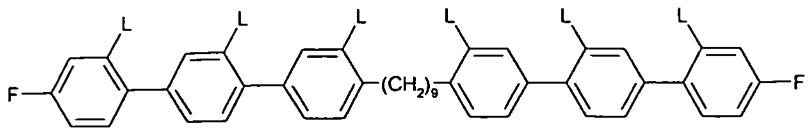

Ib-57g

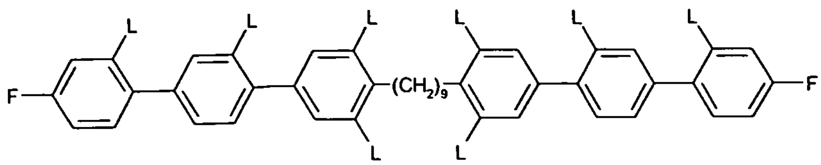

Ib-58g

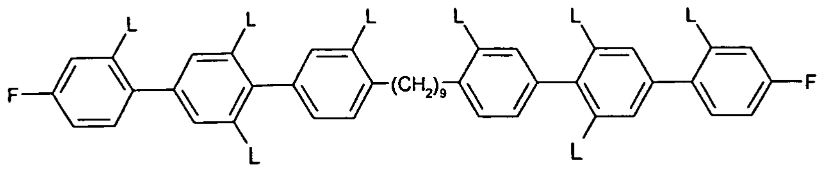

Ib-59g

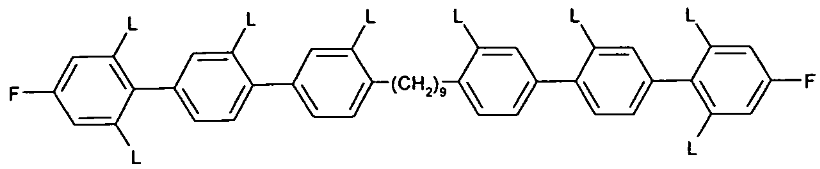

Ib-60g

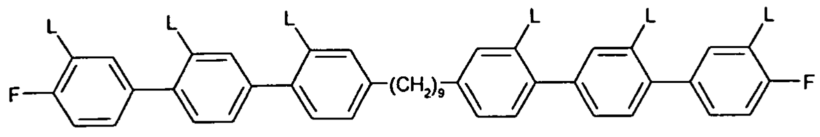

Ib-61g

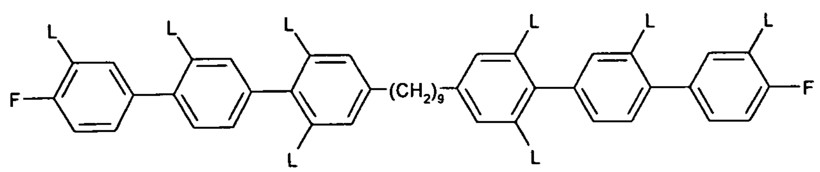

Ib-62g

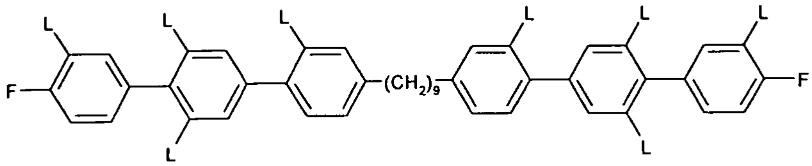

Ib-63g

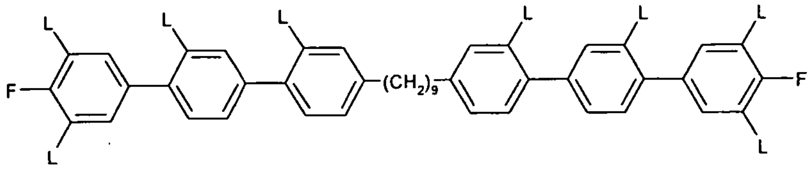

Ib-64g

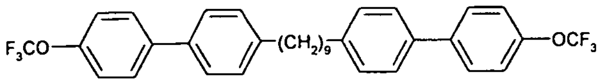

Ia-1h

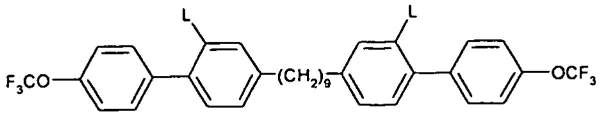

Ia-2h

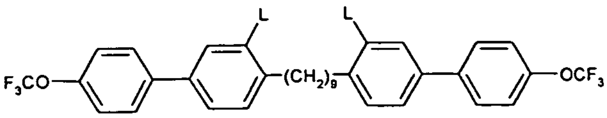

Ia-3h

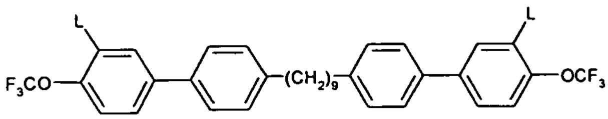

Ia-4h

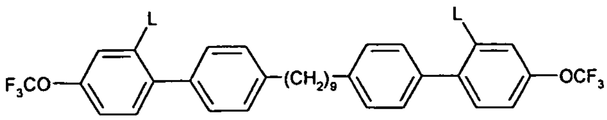

Ia-5h

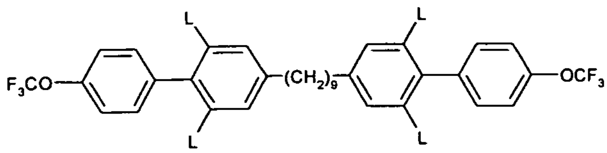

Ia-6h

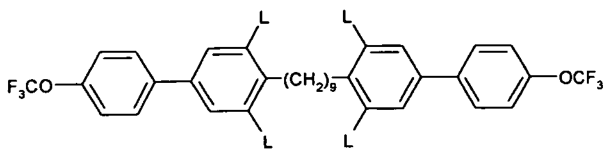

Ia-7h

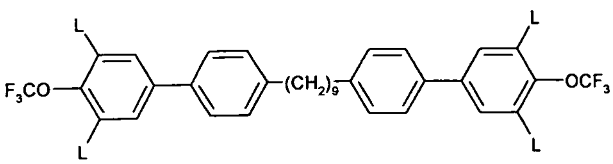

Ia-8h

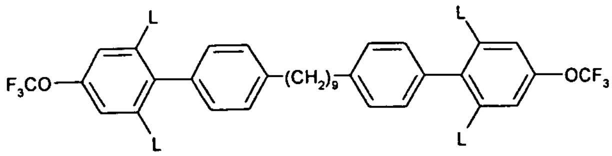
Ia-9h

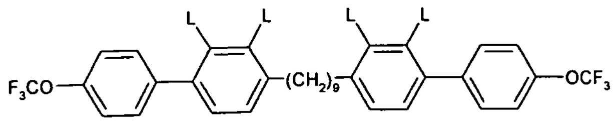
Ia-10h

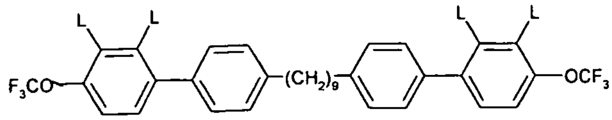
Ia-11h

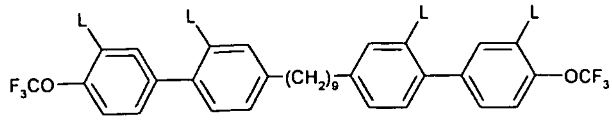
Ia-12h

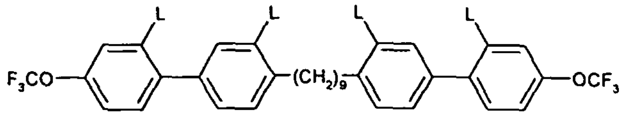
Ia-13h

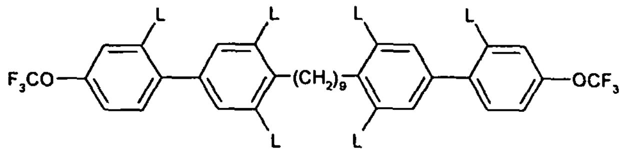
Ia-14h

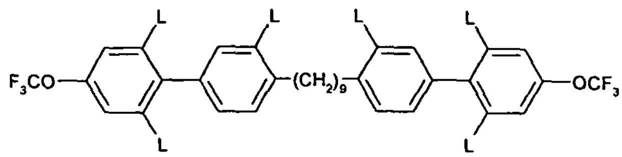
Ia-15h

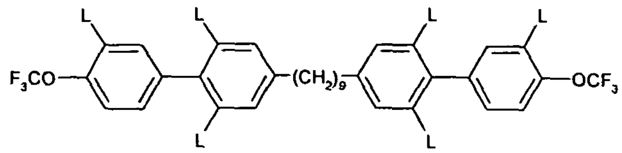
Ia-16h

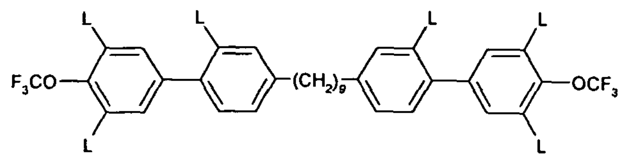
Ia-17h

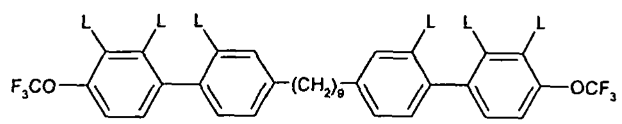
Ia-18h

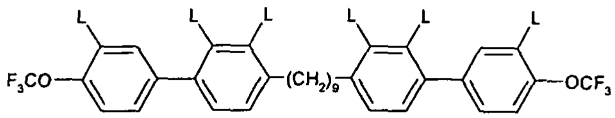

Ia-19h

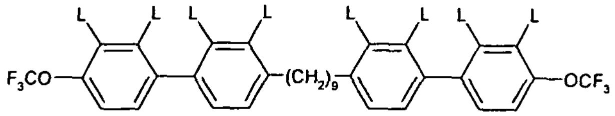

Ia-20h

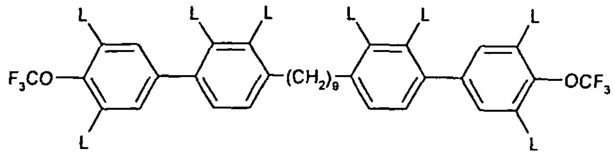

Ia-21h

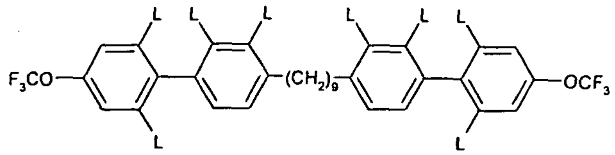

Ia-22h

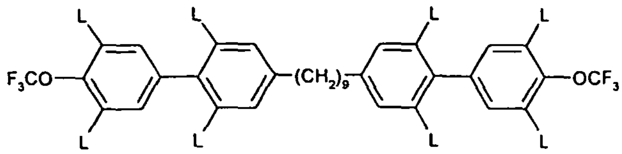

Ia-23h

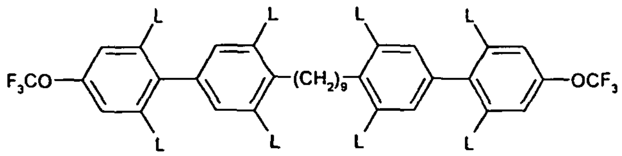

Ia-24h

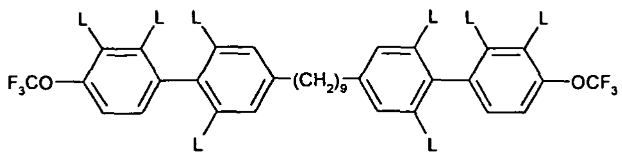

Ia-25h

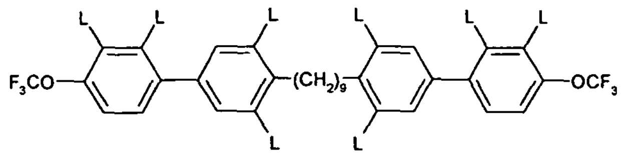

Ia-26h

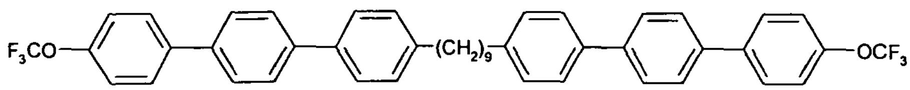

Ib-1h

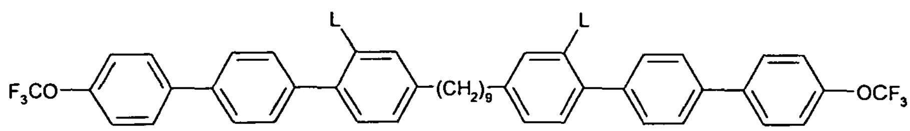

Ib-2h

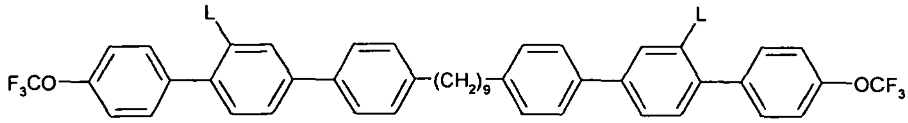

Ib-3h

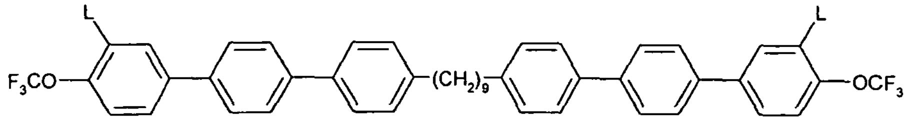

Ib-4h

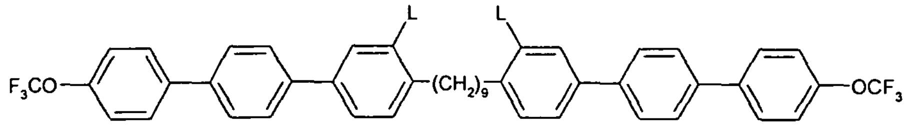

Ib-5h

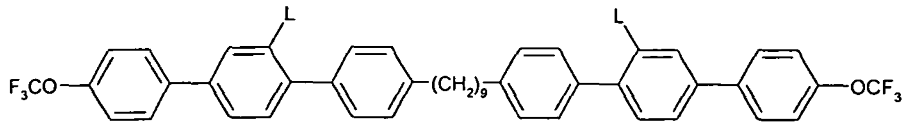

Ib-6h

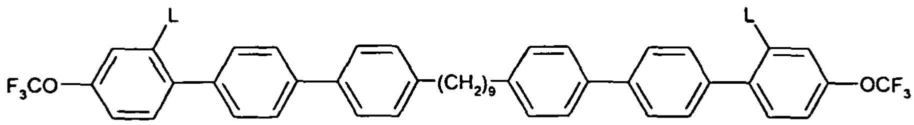

Ib-7h

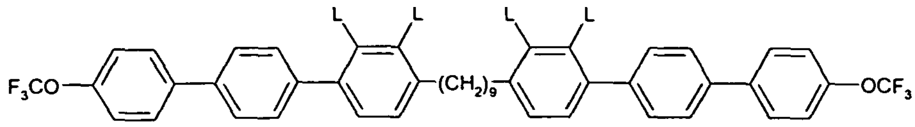

Ib-8h

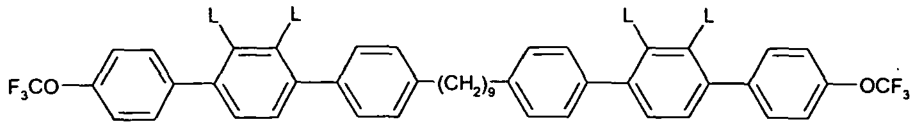

Ib-9h

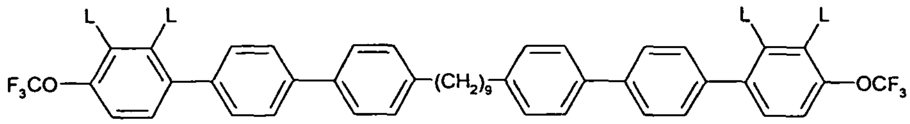

Ib-10h

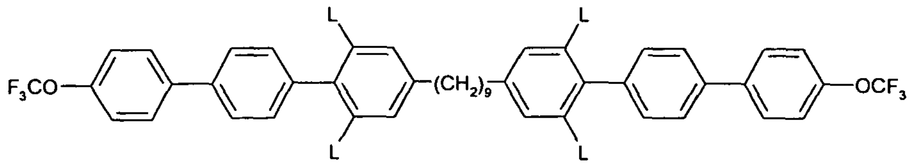

Ib-11h

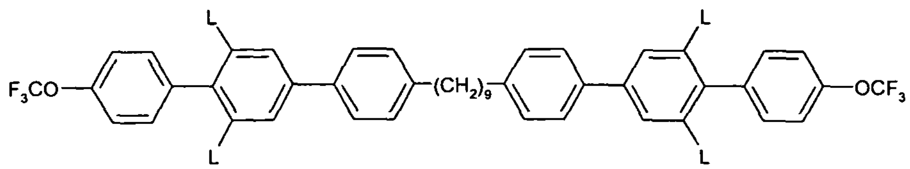

Ib-12h

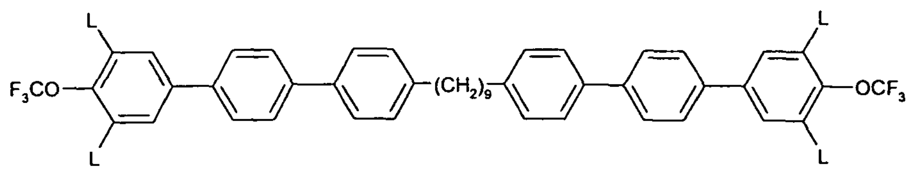

Ib-13h

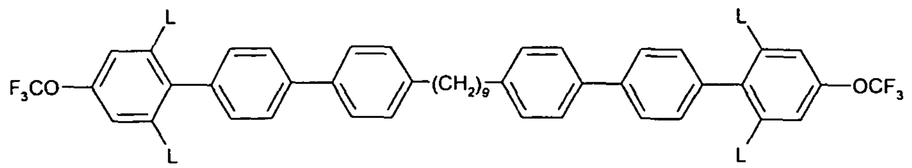

Ib-14h

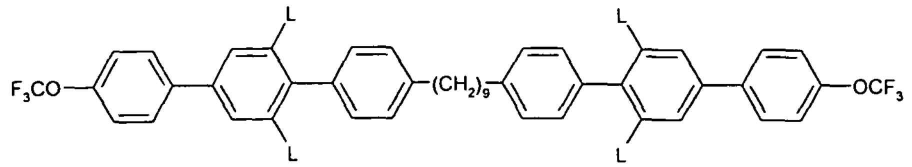

Ib-15h

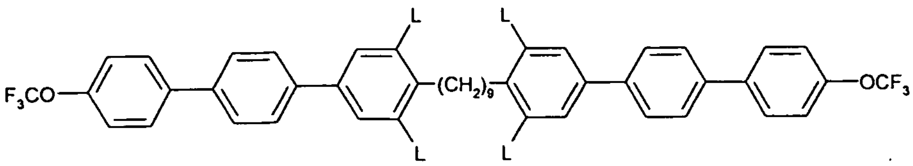

Ib-16h

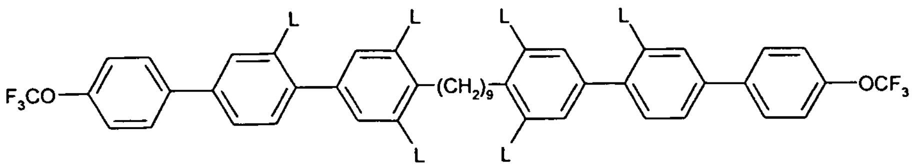

Ib-17h

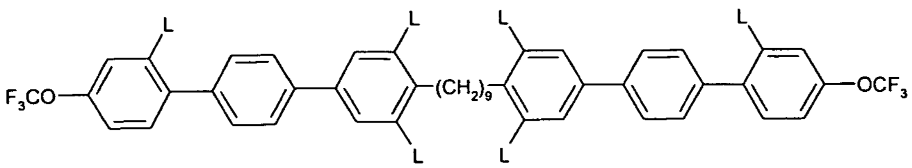

Ib-18h

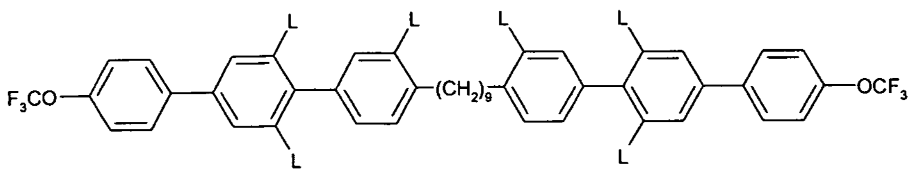

Ib-19h

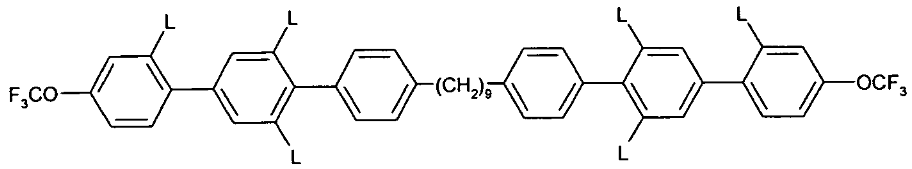

Ib-20h

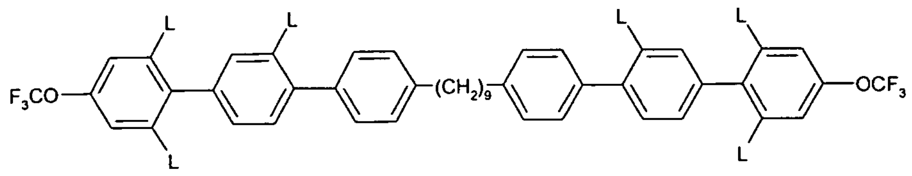

Ib-21h

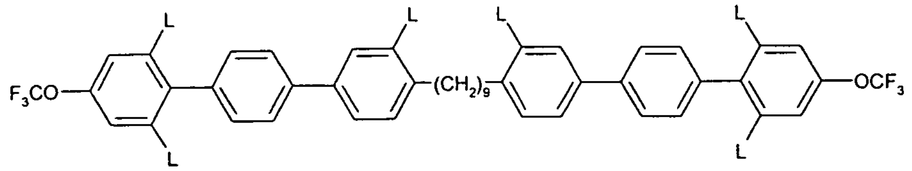

Ib-22h

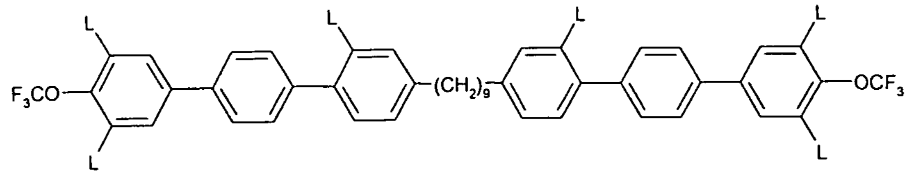

Ib-23h

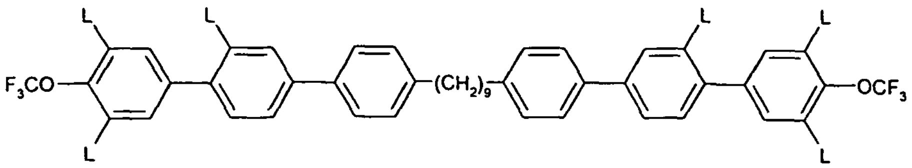

Ib-24h

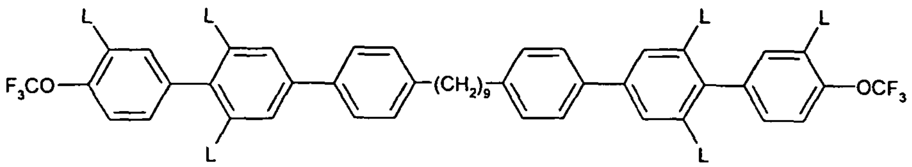

Ib-25h

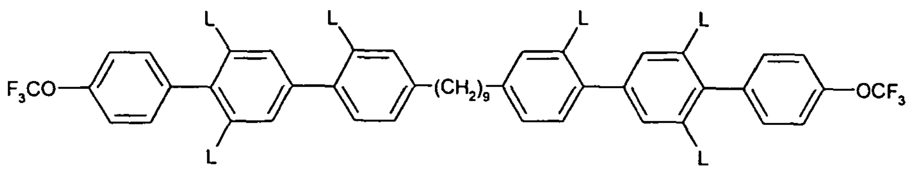

Ib-26h

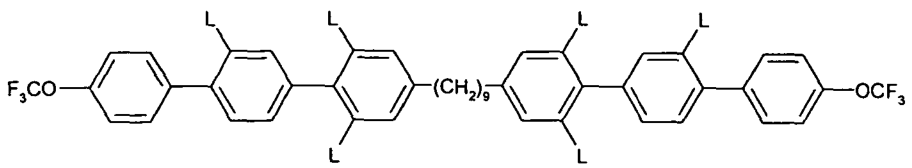

Ib-27h

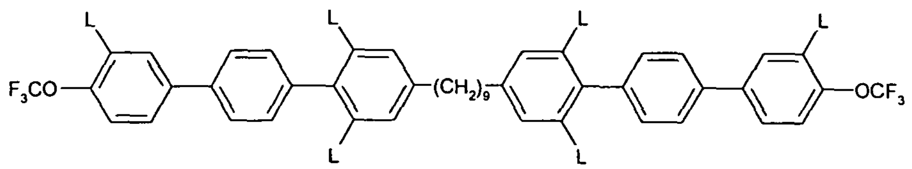

Ib-28h

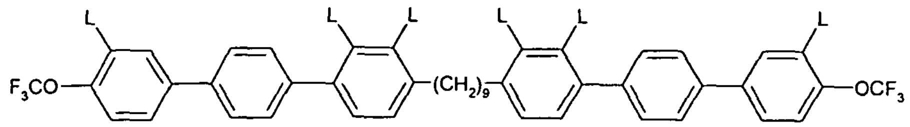

Ib-29h

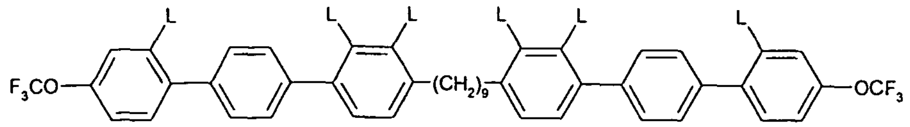

Ib-30h

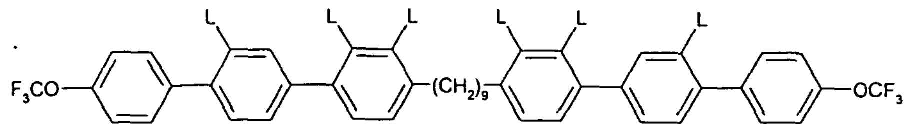

Ib-31h

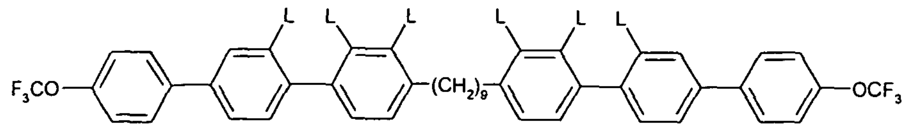

Ib-32h

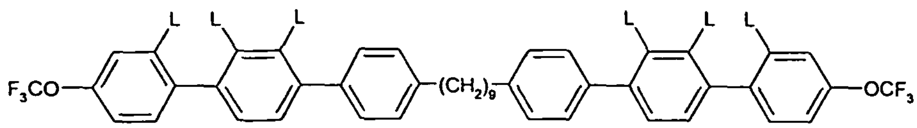

Ib-33h

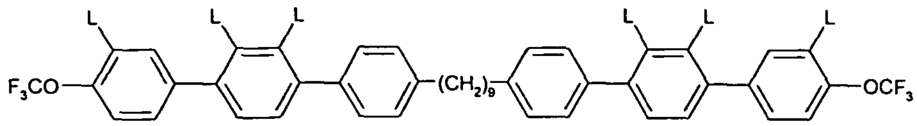

Ib-34h

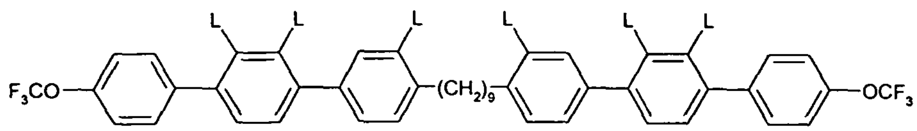

Ib-35h

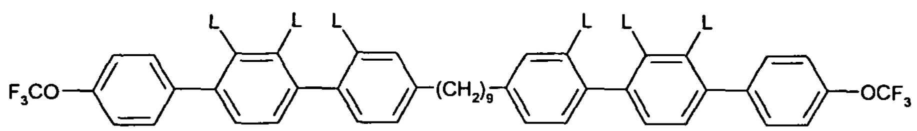

Ib-36h

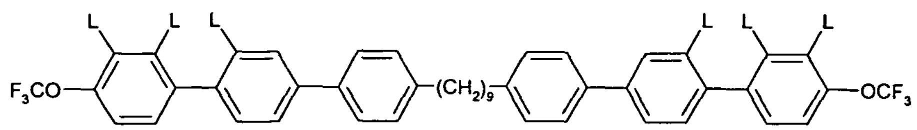

Ib-37h

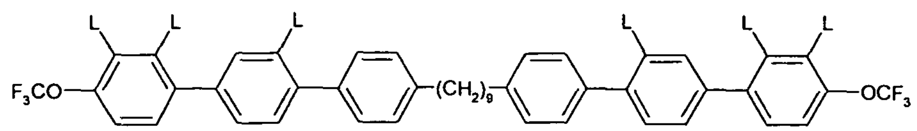

Ib-38h

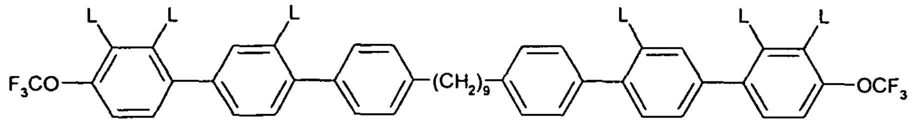

Ib-39h

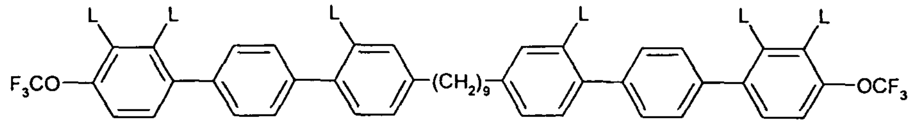

Ib-40h

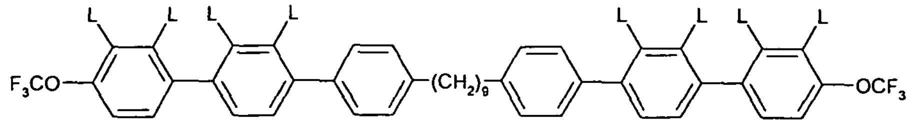

Ib-41h

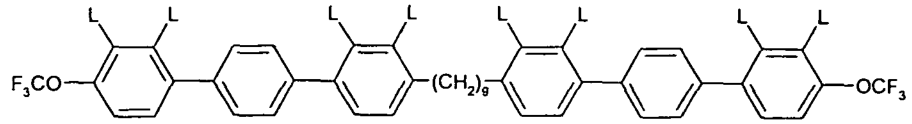

Ib-42h

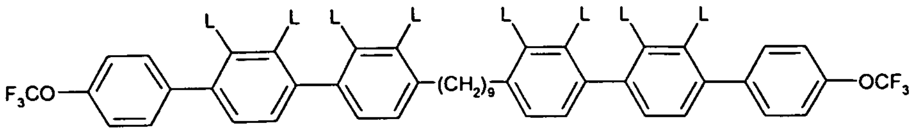

Ib-43h

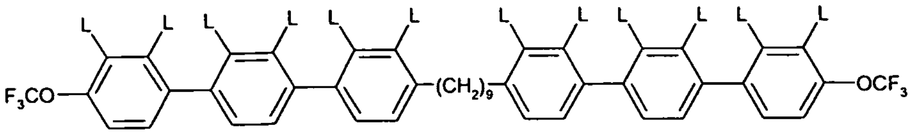

Ib-44h

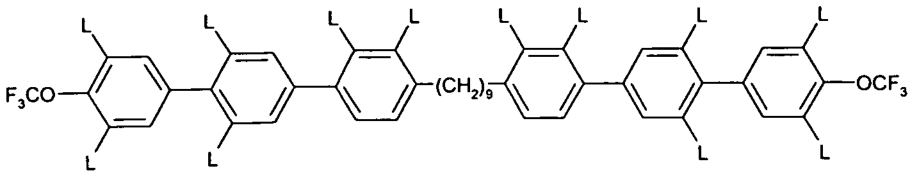

Ib-45h

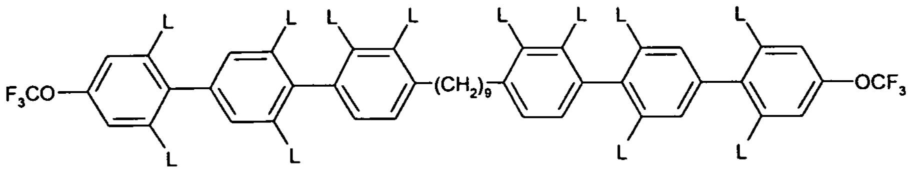

Ib-46h

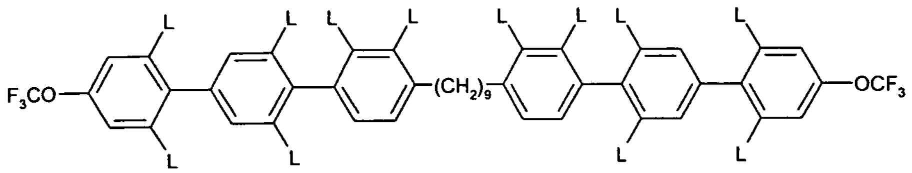

Ib-47h

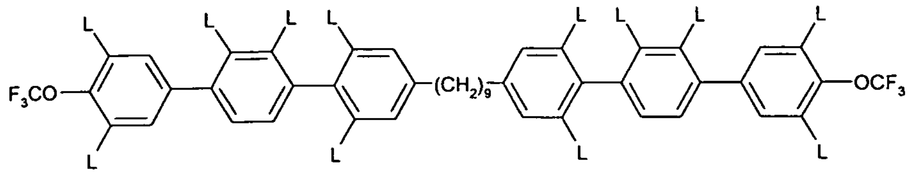

Ib-48h

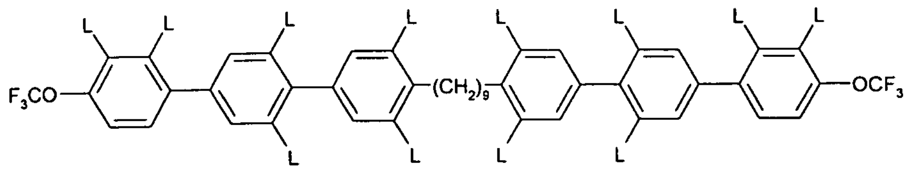

Ib-49h

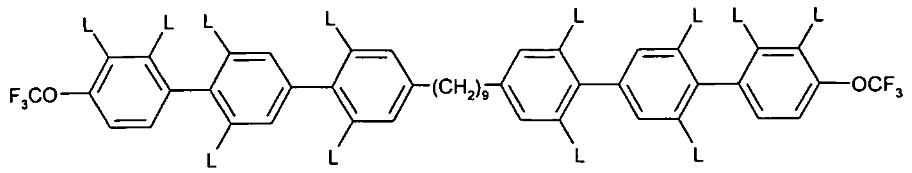

Ib-50h

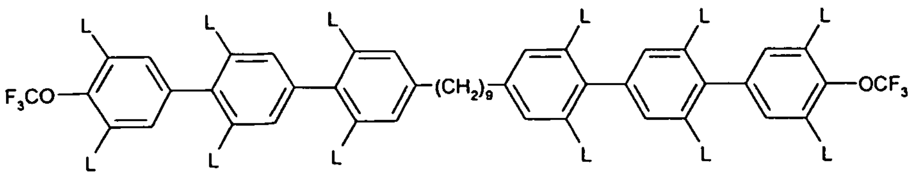

Ib-51h

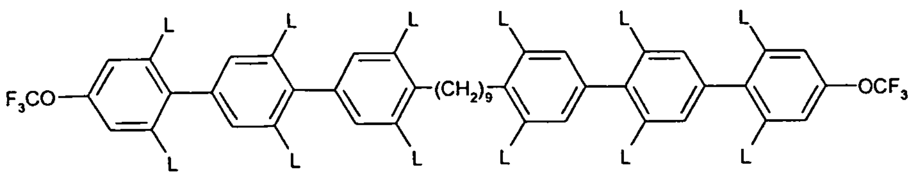

Ib-52h

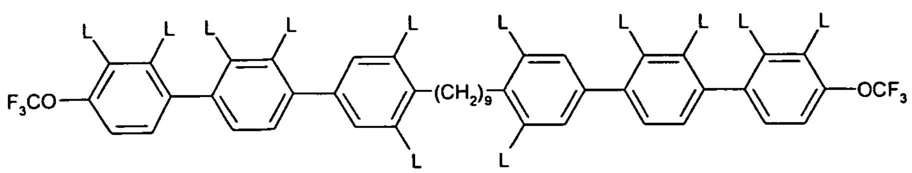

Ib-53h

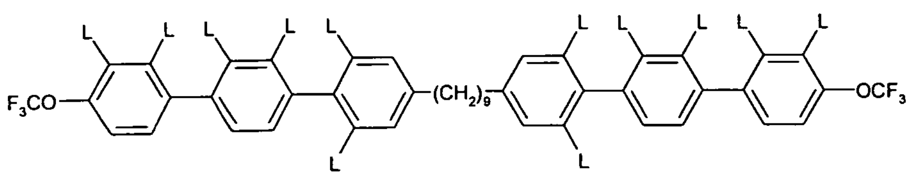

Ib-54h

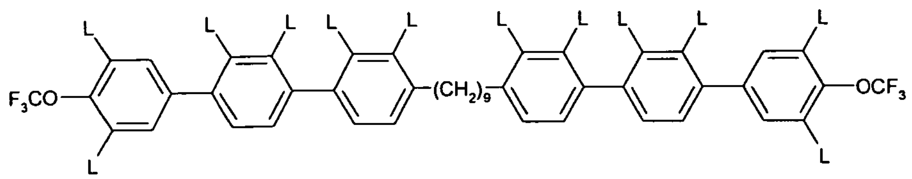

Ib-55h

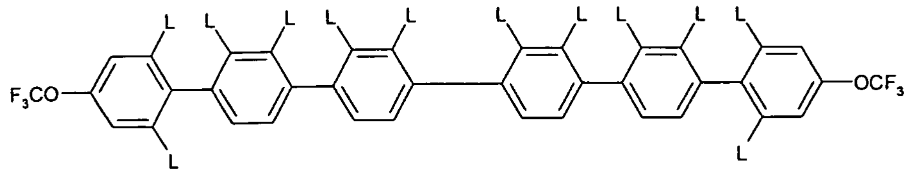
Ib-56h

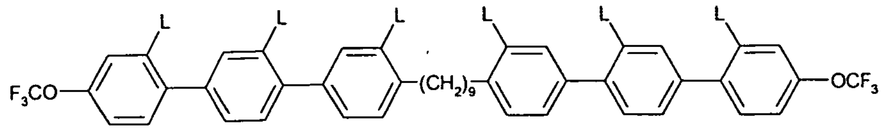
Ib-57h

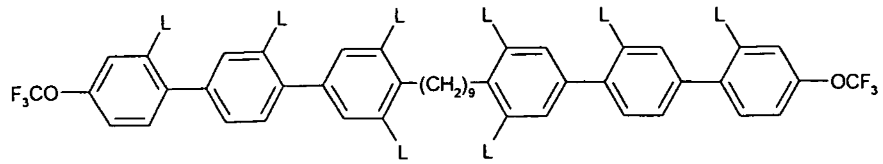
Ib-58h

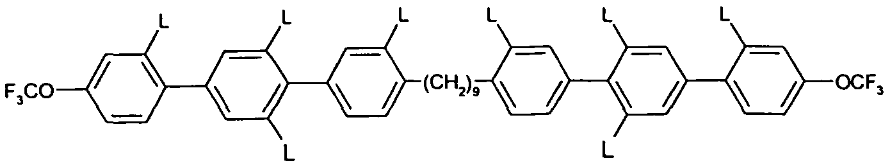
Ib-59h

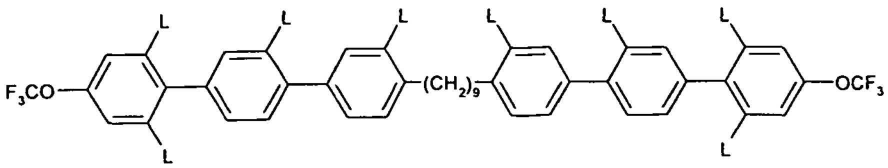
Ib-60h

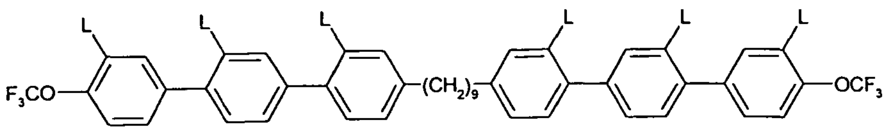
Ib-61h

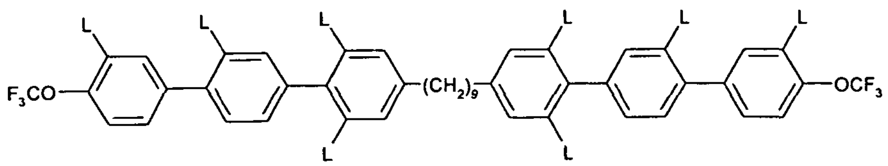
Ib-62h

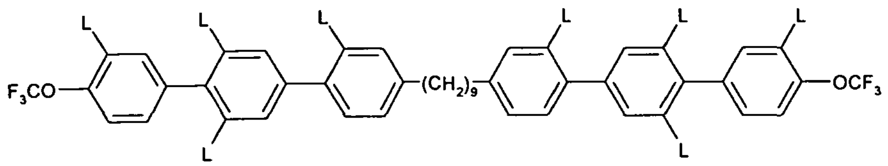
Ib-63h

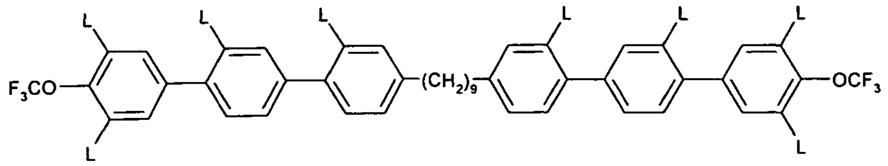

Ib-64h

wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$.

Especially preferred are the compounds of the formulae Ia-1a, Ia-2a, Ia-2b, Ia-17c, Ia-8e, Ia-3f, Ia-5f, Ia-6f, Ia-12f, Ia-23f, Ib-27f, Ib-61f and Ib-63f wherein L is in each occurrence independently of each other preferably F, Cl, $CH_3$, $OCH_3$ and $COCH_3$.

Very preferred compounds of the formulae Ia-1 a-h to Ia-26a-h and Ib-1a-h to Ib-56a-h are indicated below:

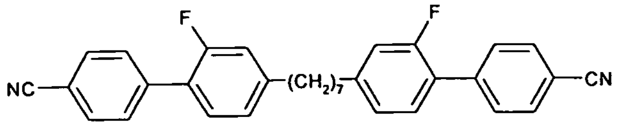

I'a-1

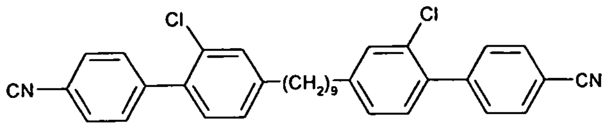

I'a-2

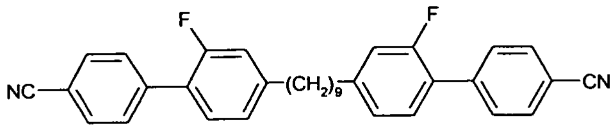

I'a-3

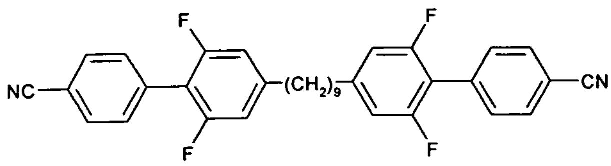

I'a-4

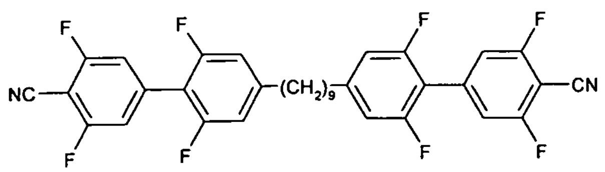

I'a-5

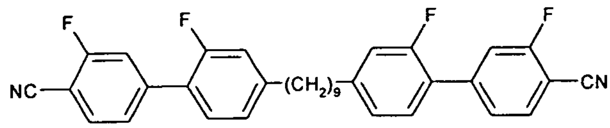

I'a-6

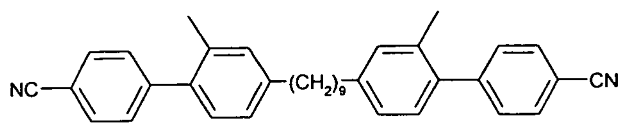

I'a-7

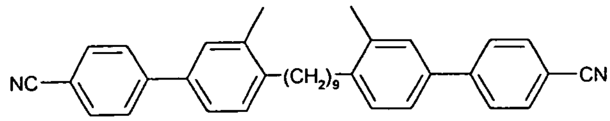

I'a-8

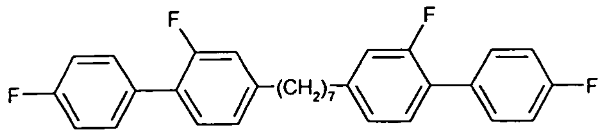

I'a-9

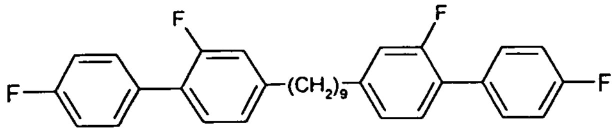

I'a-10

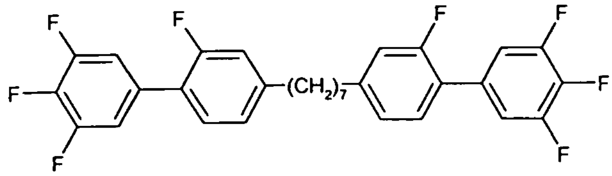

I'a-11

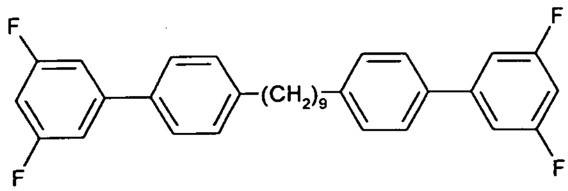

I'a-12

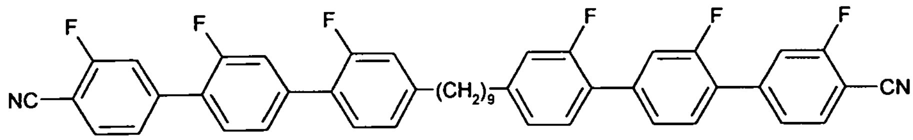

I'b-1

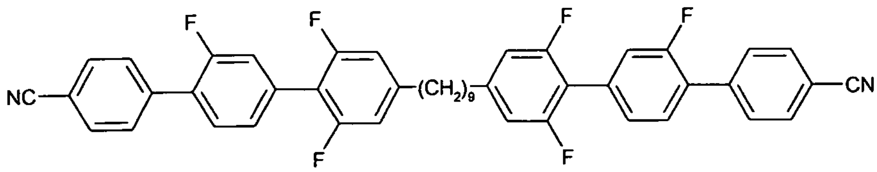

I'b-2

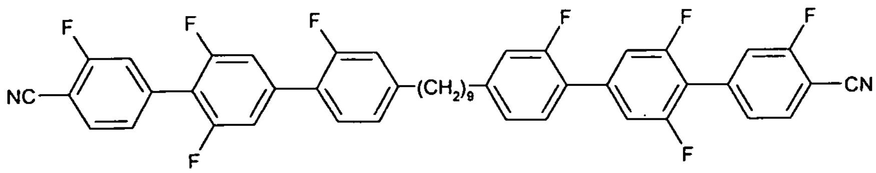

I'b-3

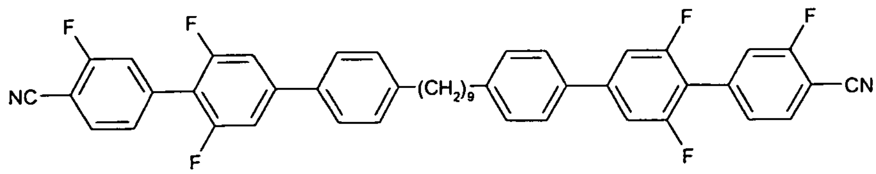

I'b-4

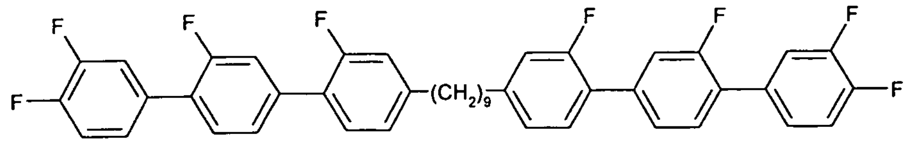

I'b-5

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. A preferred method of preparation can be taken from the following synthesis scheme.

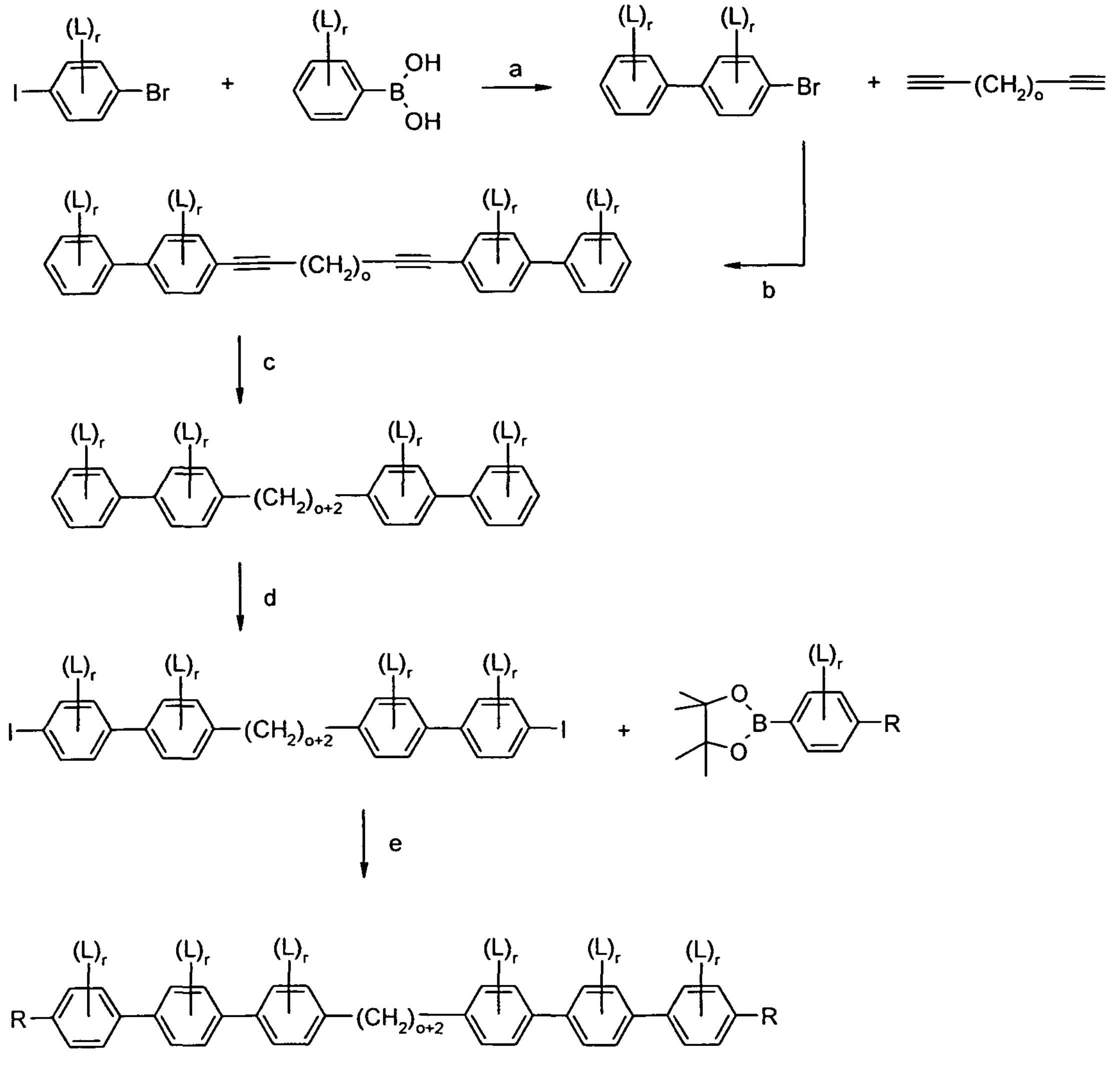


a) $K_2CO_3$, THF, $H_2O$, Pd catalyst, 80°C, 24 hours
b) THF, $Et_3N$, CuI, Pd catalyst, 40°C, 24 hours
c) THF, Pd/C, $H_2$, 60°C, 95 bar
d) n-BuLi, THF, $I_2$. -70°C
e) $Na_2CO_3$, THF, $H_2O$, Pd catalyst, 80°C, 24 hours

wherein R has the meaning of $R^1$ and $R^2$, o, L and r are at each occurrence independently from each other as defined above, including the preferred meanings of these groups.

Another object of the invention is the use of bimesogenic compounds of formula I in liquid crystalline media.

Compounds of formula I, when added to a nematic liquid crystalline mixture, producing a phase below the nematic. In this context, a first indication of the influence of bimesogenic compounds on nematic liquid crystal mixtures was reported by Barnes, P.J., Douglas, A.G., Heeks, S.K., Luckhurst, G.R.,Liquid crystals , 1993, Vol.13, No.4, 603-

613. This reference exemplifies highly polar alkyl spacered dimers and perceives a phase below the nematic, concluding it is a type of smectic.

A photo evidence of an existing mesophase below the nematic phase was published by Henderson, P.A., Niemeyer, O., Imrie, C.T. in Liquid crystals, 2001, Vol. 28, No.3, 463-472, which was not further investigated.

In Liquid crystals, 2005, Vol. 32, No. 11-12, 1499-1513 Henderson, P.A., Seddon, J.M. and Imrie, C.T. reported, that the new phase below the nematic belonged in some special examples to a smectic C phase. A additional nematic phase below the first nematic was reported by Panov, V.P., Ngaraj, M., Vij, J.K., Panarin, Y.P., Kohlmeier, A., Tamba, M.G., Lewis, R.A. and Mehl, G.H. in Phys.Rev.Lett. 2010, 105, 1678011 - 1678014.

In this context, liquid crystal mixtures comprising the new and inventive bimesogenic compounds of formula I show also a novel mesophase that is being assigned as a second nematic phase.This mesophase exists at a lower temperature than the original nematic liquid crystalline phase and has been observed in the unique mixture concepts presented by this application.

Accordingly, the bimesogenic compounds of formula I according to the present invention allow the second nematic phase to be induced in nematic mixtures that do not have this phase normally. Furthermore, varying the amounts of compounds of formula I allow the phase behaviour of the second nematic to be tailored to the required temperature.

The invention thus relates to a liquid-crystalline medium which comprises at least one compound of the formula I.

Some preferred embodiments of the mixtures according to the invention are indicated below.

Preferred are compounds of formula I wherein the mesogenic groups $MG^1$ and $MG^2$ at each occurrence independently from each other comprise one, two or three six-membered rings, preferably two or three six-membered rings.

Particularly preferred are the subformulae II-1, II-4, II-6, II-7, II-13, II-14, II-15, II-16, II-17 and 11-18.

Especially preferred are the subformulae IIa, IId, IIg, IIh, IIi, IIk and IIo, in particular the subformulae IIa and IIg, wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$.

Preferably $R^1$ and $R^2$ in formula I are selected of H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of H, F, Cl, CN, $OCH_3$ and $OCF_3$, especially of H, F, CN and $OCF_3$.

Typical spacer groups (Sp) are for example $-(CH_2)_o-$, $-(CH_2CH_2O)_p-CH_2CH_2-$, with o being an integer from 5 to 40, in particular from 5 to 25, very preferably from 5 to 15, and p being an integer from 1 to 8, in particular 1, 2, 3 or 4. Preferred are compounds of formula I wherein $R^1$-$MG^1$- and $R^2$-$MG^2$- in formula I are identical. Particularly preferred are the compounds selected from formulae Ia and Ib. Especially preferred are compounds selected from subformulae Ia-1 to Ia-26 and Ib-1 to Ib-56, very especially preferred selected from subformulae Ia-1a-h to Ia-26a-h and/or Ib-1a-h to Ib-56a-h.

The media according to the invention preferably comprise one, two, three, four or more, preferably one, two or three, compounds of the formula I.

The amount of compounds of formula I in the liquid crystalline medium is preferably from 1 to 50 %, in particular from 5 to 40 %, very preferably 10 to 30 % by weight of the total mixture.

In a preferred embodiment the liquid crystalline medium according to the present invention comprises additionally one or more compounds of formula III known from GB 2 356 629.

$$R^3\text{-}MG^3\text{-}X^3\text{-}Sp^1\text{-}X^4\text{-}MG^4\text{-}R^4 \qquad \text{III}$$

wherein

$R^3$ and $R^4$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,

$MG^3$ and $MG^4$ are each independently a mesogenic group,

$Sp^1$ is a spacer group comprising 5 to 40 C atoms, wherein one or more non-adjacent $CH_2$ groups may also be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-, and

$X^3$ and $X^4$ are each independently -O-, -S-, -CO-, -COO-, -OCO-, -O-CO-O-, -CO-NH-, -NH-CO-, $-CH_2CH_2-$,

$-OCH_2-$,$-CH_2O-$, $-SCH_2-$, $-CH_2S-$, -CH=CH-, -CH=CH-COO-, -OCO-CH=CH-, -C≡C-.

The mesogenic groups $MG^3$ and $MG^4$ are preferably selected of formula II.

Especially preferred are compounds of formula III wherein $R^3$-$MG^3$-$X^3$- and $R^4$-$MG^4$-$X^4$- are identical.

Another preferred embodiment of the present invention relates to compounds of formula III wherein $R^3$-$MG^3$-$X^3$- and $R^4$-$MG^4$-$X^4$- are different.

Especially preferred are compounds of formula III wherein the mesogenic groups $MG^3$ and $MG^4$ comprise one, two or three six-membered rings very preferably are the mesogenic groups selected from formula II as listed below.

For $MG^3$ and $MG^4$ in formula III are particularly preferred are the subformulae II-1, II-4, II-6, II-7, II-13, II-14, II-15, II-16, II-17 and II-18. In these preferred groups Z in each case independently has one of the meanings of $Z^1$ as given in formula II. Preferably Z is -COO-, -OCO-, $-CH_2CH_2-$, -C=C- or a single bond.

Very preferably the mesogenic groups $MG^3$ and $MG^4$ are selected from the formulae IIa to IIo and their mirror images.

Particularly preferred for $MG^3$ and $MG^4$ are the subformulae IId, IIg, IIh, IIi, IIk and IIo, in particular the subformulae IId and IIk.

In case of compounds with an unpolar polar group, $R^3$ and $R^4$ are preferably alkyl with up to 15 C atoms or alkoxy with 2 to 15 C atoms. If $R^3$ or $R^4$ is an alkyl or alkoxy radical, i.e. where the terminal $CH_2$ group is replaced by -O-, this may be straight-chain or branched. It is preferably straight-chain, has 2, 3, 4, 5, 6, 7 or 8 carbon atoms and accordingly is preferably ethyl, propyl, butyl, pentyl, hexyl, heptyl, octyl, ethoxy, propoxy, butoxy, pentoxy, hexoxy, heptoxy, or octoxy, furthermore methyl, nonyl, decyl, undecyl, dodecyl, tridecyl, tetradecyl, pentadecyl, nonoxy, decoxy, undecoxy, dodecoxy, tridecoxy or tetradecoxy, for example.

Oxaalkyl, i.e. where one $CH_2$ group is replaced by -O-, is preferably straight-chain 2-oxapropyl (=methoxymethyl), 2- (=ethoxymethyl) or 3-oxabutyl (=2-methoxyethyl), 2-, 3-, or 4-oxapentyl, 2-, 3-, 4-, or 5-oxahexyl, 2-, 3-, 4-, 5-, or 6-oxaheptyl, 2-, 3-, 4-, 5-, 6- or 7-oxaoctyl, 2-, 3-, 4-, 5-, 6-, 7- or 8-oxanonyl or 2-, 3-, 4-, 5-, 6-,7-, 8- or 9-oxadecyl, for example.

In case of a compounds with a terminal polar group, $R^3$ and $R^4$ are selected from CN, $NO_2$, halogen, $OCH_3$, OCN, SCN, $COR^x$, $COOR^x$ or a mono- oligo- or polyfluorinated alkyl or alkoxy group with 1 to 4 C atoms. $R^x$ is optionally fluorinated alkyl with 1 to 4, preferably 1 to 3 C atoms. Halogen is preferably F or Cl.

Especially preferably $R^3$ and $R^4$ in formula III are selected of F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$, in particular of F, Cl, CN, $OCH_3$ and $OCF_3$.

As for the spacer group $Sp^1$ in formula III all groups can be used that are known for this purpose to the skilled in the art. The spacer group Sp is preferably a linear or branched alkylene group having 5 to 40 C atoms, in particular 5 to 25 C atoms, very preferably 5 to 15 C atoms, in which, in addition, one or more non-adjacent $CH_2$ groups may be replaced by -O-, -S-, -NH-, $-N(CH_3)-$, -CO-, -O-CO-, -S-CO-, -O-COO-, -CO-S-, -CO-O-, -CH(halogen)-, -CH(CN)-, -CH=CH- or -C≡C-.

Typical spacer groups are for example $-(CH_2)_o-$, $-(CH_2CH_2O)_p-CH_2CH_2-$, $-CH_2CH_2-S-CH_2CH_2-$ or $-CH_2CH_2-NH-CH_2CH_2-$, with o being an integer from 5 to 40, in particular from 5 to 25, very preferably from 5 to 15, and p being an integer from 1 to 8, in particular 1, 2, 3 or 4.

Preferred spacer groups are pentylene, hexylene, heptylene, octylene, nonylene, decylene, undecylene, dodecylene, octadecylene, diethyleneoxyethylene, dimethyleneoxybutylene, pentenylene, heptenylene, nonenylene and undecenylene, for example.

Especially preferred are inventive compounds of formula III wherein $Sp^1$ is denoting alkylene with 5 to 15 C atoms. Straight-chain alkylene groups are especially preferred.

In another preferred embodiment of the invention the chiral compounds of formula III comprise at least one spacer group $Sp^1$ that is a chiral group of the formula IV.

$X^3$ and $X^4$ in formula III denote preferably -O-, -CO-, -COO-, -OCO-, -O-CO-O- or a single bond. Particularly preferred are the following compounds selected from formulae III-1 to III-4:

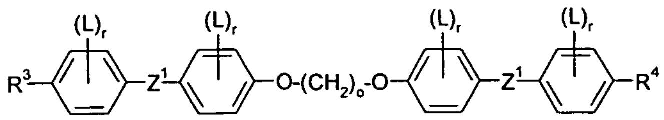

(III-1)

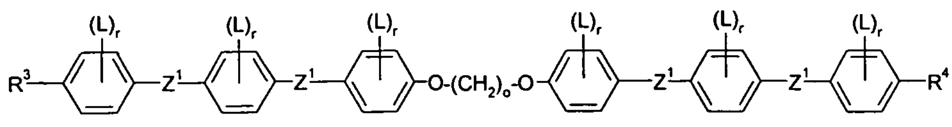

(III-2)

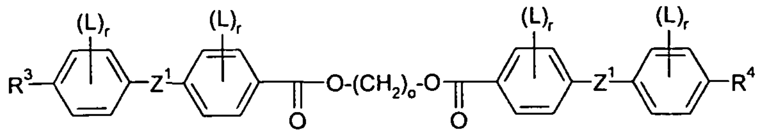

(III-3)

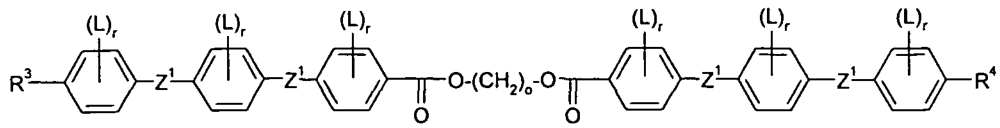

(III-4)

wherein $R^3$ and $R^4$ are defined in formula III, $Z^1$ is defined in formula II and o and r are independently at each occurrence as defined above, including the preferred meanings of these groups and wherein L is in each occurrence independently of each other preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$.

Particularly preferred mixtures according to the invention comprise one or more compounds of the formulae III-1a to III-1e and III-3a to III-3b.

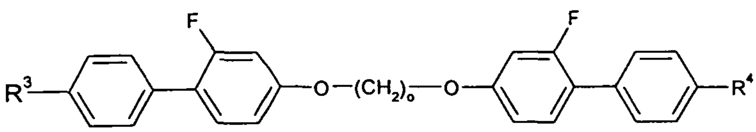

III-1a

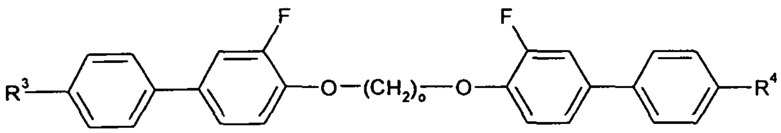

III-1b

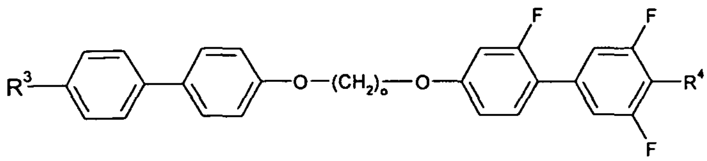

III-1c

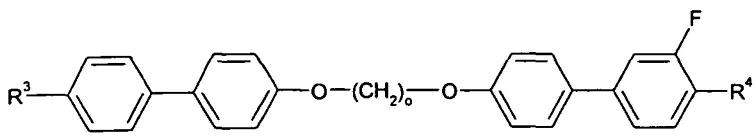

III-1d

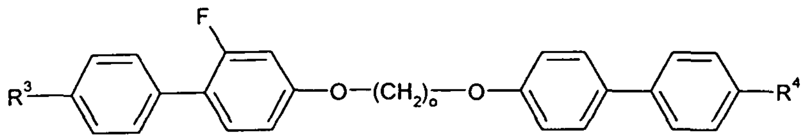

III-1e

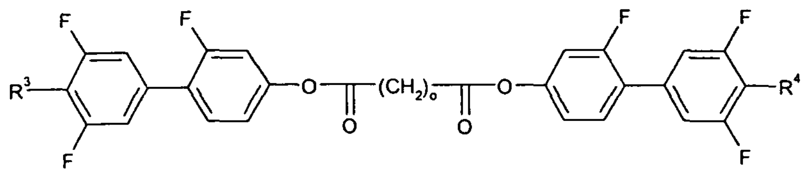

III-3a

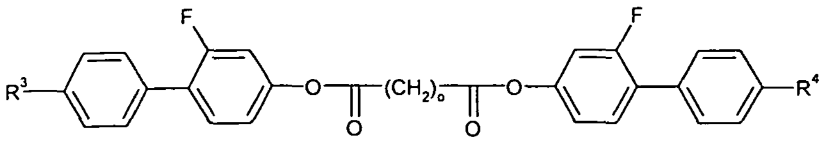

III-3b

In a preferred embodiment of the invention the liquid crystalline medium is consisting of 2 to 25, preferably 3 to 15 compounds of formula III.

The amount of compounds of formula III in the liquid crystalline medium is preferably from 10 to 95 %, in particular from 15 to 90 %, very preferably 20 to 85 % by weight of the total mixture.

Preferably, the proportion of compounds of the formulae III-1a and/or III-1 b and/or III-1c and/or III-1e and or III-3a and/or III-3b in the medium as a whole is preferably at least 70 % by weight.

Particularly preferred media according to the invention comprise at least one or more chiral dopants which themselves do not necessarily have to show a liquid crystalline phase and give good uniform alignment themselves.

Especially preferred are chiral dopants selected from formula IV

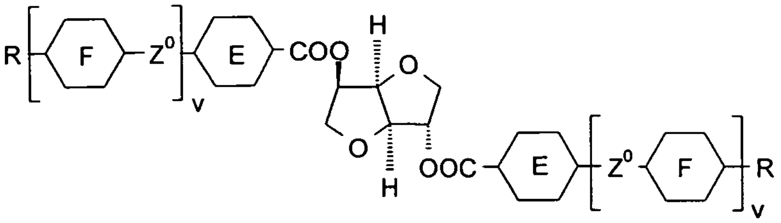

IV

and formula V

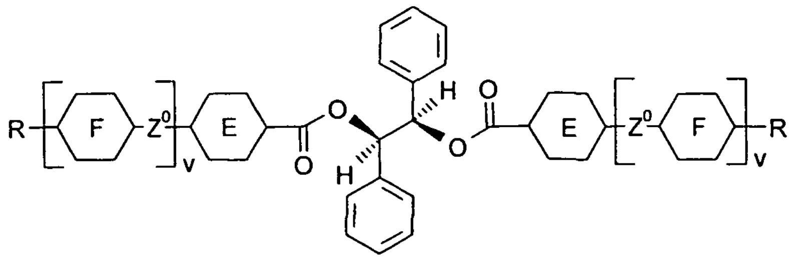

V

including the respective (S,S) enantiomer,

wherein E and F are each independently 1,4-phenylene or trans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

The compounds of formula IV and their synthesis are described in WO 98/00428. Especially preferred is the compound CD-1, as shown in table D below. The compounds of formula V and their synthesis are described in GB 2,328,207.

Especially preferred are chiral dopants with a high helical twisting power (HTP), in particular those disclosed in WO 98/00428.

Further typically used chiral dopants are e.g. the commercially available R/S-5011, CD-1, R/S-811 and CB-15 (from Merck KGaA, Darmstadt, Germany).

The above mentioned chiral compounds R/S-5011 and CD-1 and the compounds of formula IV and V exhibit a very high helical twisting power (HTP), and are therefore particularly useful for the purpose of the present invention.

The liquid crystalline medium preferably comprises preferably 1 to 5, in particular 1 to 3, very preferably 1 or 2 chiral dopants, preferably selected from the above formula IV, in particular CD-1, and/or formula V and/or R-5011 or S-5011, very preferably the chiral compound is R-5011, S-5011 or CD-1.

The amount of chiral compounds in the liquid crystalline medium is preferably from 1 to 20 %, in particular from 1 to 15 %, very preferably 1 to 10 % by weight of the total mixture.

Further preferred are liquid crystalline media comprising one or more additives selected from the following formula VI

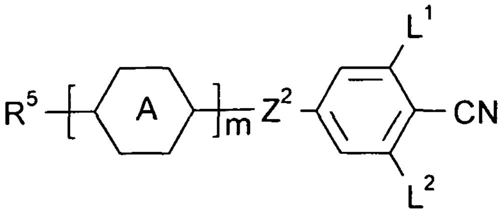

VI

wherein

$R^5$ is alkyl, alkoxy, alkenyl or alkenyloxy with up to 12 C atoms,

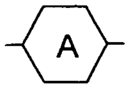

is

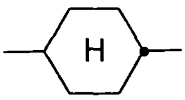 , 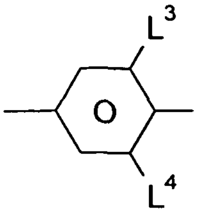 , 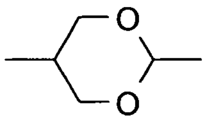 or 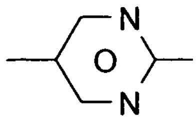 ,

$L^1$ through $L^4$ are each independently H or F,

$Z^2$ is -COO-, $-CH_2CH_2-$ or a single bond,

m is 1 or 2

Particularly preferred compounds of formula VI are selected from the following formulae

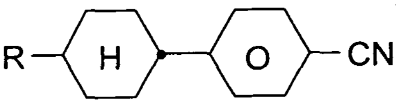

VIa

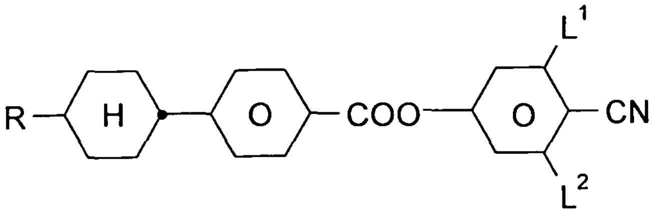

VIb

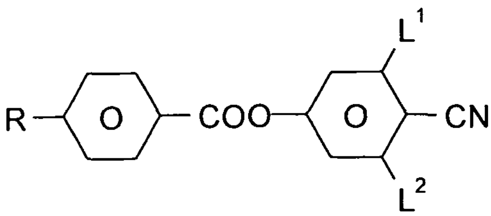

VIc

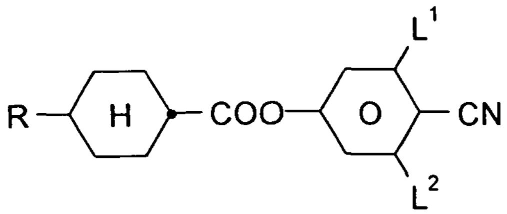

VId

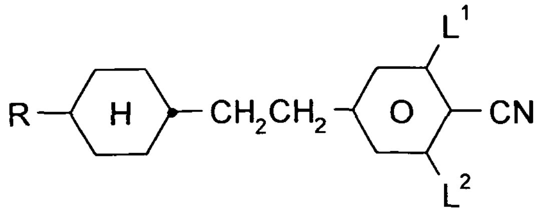

VIe

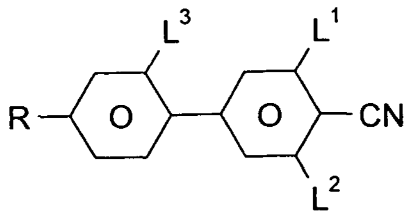

VIf

wherein, R has one of the meanings of $R^5$ above and $L^1$, $L^2$ and $L^3$ have the above meanings.

The liquid crystalline medium preferably comprises preferably 1 to 5, in particular 1 to 3, very preferably 1 or 2, preferably selected from the above formulae VIa to VIf, very preferably from formulae VIf.

The amount of suitable additives of formula VI in the liquid crystalline medium is preferably from 1 to 20 %, in particular from 1 to 15 %, very preferably 1 to 10 % by weight of the total mixture.

The liquid crystal media according to the present invention may contain further additives in usual concentrations. The total concentration of these further constituents is in the range of 0.1 % to 10 %, preferably 0.1 % to 6 %, based on the total mixture. The concentrations of the individual compounds used each are preferably in the range of 0.1 % to 3 %. The concentration of these and of similar additives is not taken into consideration for the values and ranges of the concentrations of the liquid crystal components and compounds of the liquid crystal media in this application. This also holds for the concentration of the dichroic dyes used in the mixtures, which are not counted when the concentrations of the compounds respectively the components of the host medium are specified. The concentration of the respective additives is always given relative to the final doped mixture.

The liquid crystal media according to the present invention consists of several compounds, preferably of 3 to 30, more preferably of 4 to 20 and most preferably of 4 to 16 compounds. These compounds are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic mixtures of compounds or using so called multi-bottle-systems, the constituents of which are ready to use mixtures themselves.

Particularly preferred mixture concepts are indicated below: (the acronyms used are explained in Table A).

The mixtures according to the invention preferably comprise

- one or more compounds of formula I in a total concentration in the range from 1 to 50 %, in particular from 5 to 40 %, very preferably 10 to 30 % by weight of the total mixture, preferably these compounds are selected from the group of the formulae Ia-1a, Ia-2a, Ia-2b, Ia-17c, Ia-8e, Ia-3f, Ia-5f, Ia-6f, Ia-12f, Ia-23f, Ib-27f, Ib-61f and Ib-63f, especially preferred they comprise

    - N-GIGIGI-n-GGG-N, in particular N-GIGIGI-9-GGG-N, preferably in concentration > 5 %, in particular 10-30 %, based on the mixture as a whole,
    and/or
    - N-PGI-n-GP-N, preferably N-PGI-9-GP-N, preferably in concentrations > 5 %, in particular 15-50 %, based on the mixture as a whole,
    and/or

- one or more compounds of formula III in a total concentration in the range from 10 to 95 %, in particular from 15 to 90 %, very preferably 20 to 85 % by weight of the total mixture, preferably these compounds are selected from formulae III-1a to III-1e and III-3a to III-3b especially preferred they comprise

- N-PGI-ZI-n-Z-GP-N, preferably N-PGI-ZI-7-Z-GP-N and/or N-PGI-ZI-9-Z-GP-N preferably in concentrations > 5 %, in particular 10-30 %, based on the mixture as a whole,
and/or

- F-UIGI-ZI-n-Z-GU-F, preferably F-UIGI-ZI-9-Z-GU-F, preferably in concentrations > 5 %, in particular 10-30 %, based on the mixture as a whole,
and/or

- F-PGI-O-n-O-PP-N, preferably F-PGI-O-9-O-PP-, preferably in concentrations of > 1 %, in particular 1-20 %, based on the mixture as a whole,
and/or

- N-PP-O-n-O-PG-OT, preferably N-PP-O-7-O-PG-OT, preferably in concentrations of > 5 %, in particular 5-30 %, based on the mixture as a whole,
and/or

- N-PP-O-n-O-GU-F, preferably N-PP-O-9-O-GU-F, preferably in concentrations of > 1 %, in particular 1-20 %, based on the mixture as a whole,
and/or

- F-PGI-O-n-O-GP-F, preferably F-PGI-O-7-O-GP-F and/or F-PGI-O-9-O-GP-F preferably in concentrations of > 1 %, in particular 1-20 %, based on the mixture as a whole,
and/or

- one or more suitable additives of formula VI in a total concentration in the range from 1 to 20 %, in particular from 1 to 15 %, very preferably 1 to 10 % by weight of the total mixture, preferably are these compounds selected from formula VI-1 to VI-f, especially preferred they comprise

    - K15, preferably in concentrations of > 1 %, in particular 1-20 %, based on the mixture as a whole,
    and/or

- one or more chiral compounds preferably in a total concentration in the range from 1 to 20 %, in particular from 1 to 15 %, very preferably 1 to 10 % by weight of the total mixture, preferably these compounds are selected from formula IV, V, and R-5011 or S-5011, especially preferred they comprise

    - R-5011, S-5011 or Cd-1, preferably in a concentration of > 1 %, in particular 1-20 %, based on the mixture as a whole.

The bimesogenic compounds of formula I and the liquid crystalline media comprising them can be used in liquid crystal displays, such as STN, TN, AMD-TN, temperature compensation, guest-host, phase change or surface stabilized or polymer stabilized cholesteric texture (SSCT, PSCT) displays, in particular in flexoelectric devices, in active and passive optical elements like polarizers, compensators, reflectors, alignment layers, color filters or holographic elements, in adhesives, synthetic resins with anisotropic mechanical properties, cosmetics, diagnostics, liquid crystal pigments, for decorative and security applications, in nonlinear optics, optical information storage or as chiral dopants.
The compounds of formula I and the mixtures obtainable thereof are particularly useful for flexoelectric liquid crystal display. Thus, another object of the present invention is a flexoelectric display comprising one or more compounds of formula I, or comprising a liquid crystal medium comprising one or more compounds of formula I.
The inventive bimesogenic compounds of formula I and the mixtures thereof can be aligned in their cholesteric phase into different states of orientation by methods that are known to the expert, such as surface treatment or electric fields. For example, they can be aligned into the planar (Grandjean) state, into the focal conic state or into the homeotropic state. Inventive compounds of formula I comprising polar groups with a strong dipole moment can further be subjected to flexoelectric switching, and can thus be used in electrooptical switches or liquid crystal displays.
The switching between different states of orientation according to a preferred embodiment of the present invention is exemplarily described below in detail for a sample of an inventive compound of formula I.

According to this preferred embodiment, the sample is placed into a cell comprising two plane-parallel glass plates coated with electrode layers, e.g. ITO layers, and aligned in its cholesteric phase into a planar state wherein the axis of the cholesteric helix is oriented normal to the cell walls. This state is also known as Grandjean state, and the texture of the sample, which is observable e.g. in a polarization microscope, as Grandjean texture. Planar alignment can be achieved e.g. by surface treatment of the cell walls, for example by rubbing and/or coating with an alignment layer such as polyimide.

A Grandjean state with a high quality of alignment and only few defects can further be achieved by heating the sample to the isotropic phase, subsequently cooling to the chiral nematic phase at a temperature close to the chiral nematic-isotropic phase transition, and rubbing the cell.

In the planar state, the sample shows selective reflection of incident light, with the central wavelength of reflection depending on the helical pitch and the mean refractive index of the material.

When an electric field is applied to the electrodes, for example with a frequency from 10 Hz to 1 kHz, and an amplitude of up to 12 $V_{rms}$ / □m, the sample is being switched into a homeotropic state where the helix is unwound and the molecules are oriented parallel to the field, i.e. normal to the plane of the electrodes. In the homeotropic state, the sample is transmissive when viewed in normal daylight, and appears black when being put between crossed polarizers.

Upon reduction or removal of the electric field in the homeotropic state, the sample adopts a focal conic texture, where the molecules exhibit a helically twisted structure with the helical axis being oriented perpendicular to the field, i.e. parallel to the plane of the electrodes. A focal conic state can also be achieved by applying only a weak electric field to a sample in its planar state. In the focal conic state the sample is scattering when viewed in normal daylight and appears bright between crossed polarizers.

A sample of an inventive compound in the different states of orientation exhibits different transmission of light. Therefore, the respective state of orientation, as well as its quality of alignment, can be controlled by measuring the light transmission of the sample depending on the strength of the applied electric field. Thereby it is also possible to determine the electric field strength required to achieve specific states of orientation and transitions between these different states.

In a sample of an inventive compound of formula I, the above described focal conic state consists of many disordered birefringent small domains. By applying an electric field greater than the field for nucleation of the focal conic texture, preferably with additional shearing of the cell, a uniformly aligned texture is achieved where the helical axis is parallel to the plane of the electrodes in large, well-aligned areas. In accordance with the literature on state of the art chiral nematic materials, such as P. Rudquist et al., Liq. Cryst. 23 (4), 503 (1997), this texture is also called uniformly-lying helix (ULH) texture. This texture is required to characterize the flexoelectric properties of the inventive compound.

The sequence of textures typically observed in a sample of an inventive compound of formula I on a rubbed polyimide substrate upon increasing or decreasing electric field is given below:

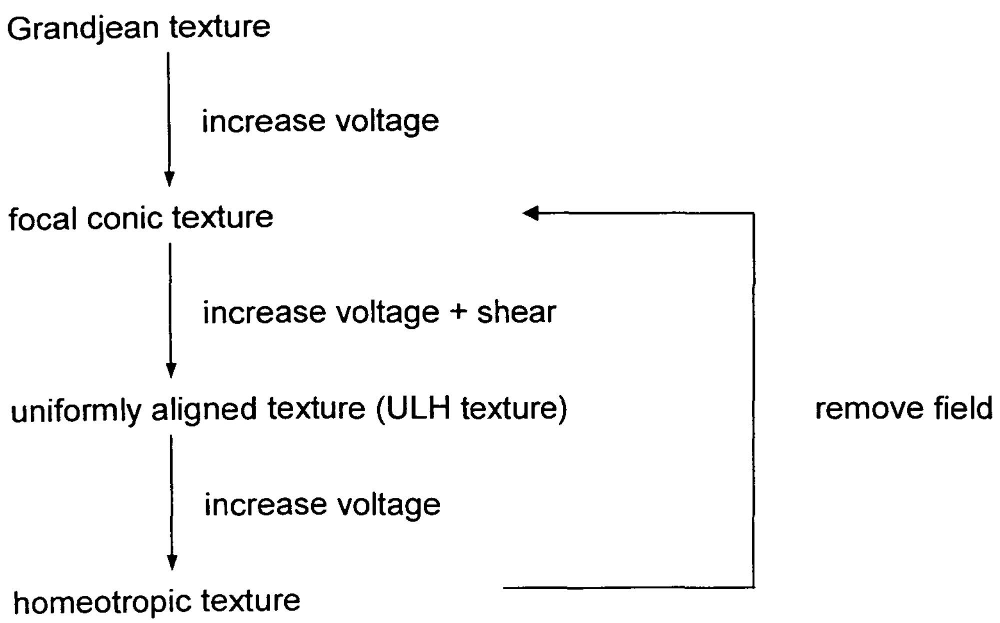


Starting from the ULH texture, the inventive flexoelectric compounds and mixtures can be subjected to flexoelectric switching by application of an electric field. This causes rotation of the optic axis of the material in the plane of the cell substrates, which leads to a change in transmission when placing the material between crossed polarizers. The flexoelectric switching of inventive materials is further described in detail in the introduction above and in the examples.

It is also possible to obtain the ULH texture, starting from the focal conic texture, by applying an electric field with a high frequency, of for example 10 kHz, to the sample whilst cooling slowly from the isotropic phase into the cholesteric phase and shearing the cell. The field frequency may differ for different compounds.

The bimesogenic compounds of formula I are particularly useful in flexoelectric liquid crystal displays as they can easily be aligned into macroscopically uniform orientation, and lead to high values of the elastic constant $k_{11}$ and a high flexoelectric coefficient e in the liquid crystal medium.

The liquid crystal medium preferably exhibits a
$k_{11} > 1x10^{-10}$ N and a flexoelectric coefficient
$e > 1x10^{-10}$ C/m.

Apart from the use in flexoelectric devices, the inventive bimesogenic compounds as well as mixtures thereof are also suitable for other types of displays and other optical and electrooptical applications, such as optical compensation or polarizing films, color filters, reflective cholesterics, optical rotatory power and optical information storage.

A further aspect of the present invention relates to a display cell wherein the cell walls exhibit hybrid alignment conditions. The term "hybrid alignment" or orientation of a liquid crystal or mesogenic material in a display cell or between two substrates means that the mesogenic groups adjacent to the first cell wall or on the first substrate exhibit homeotropic orientation and the mesogenic groups adjacent to the second cell wall or on the second substrate exhibit planar orientation.

The term "homeotropic alignment" or orientation of a liquid crystal or mesogenic material in a display cell or on a substrate means that the mesogenic groups in the liquid crystal or mesogenic material are oriented substantially perpendicular to the plane of the cell or substrate, respectively.

The term "planar alignment" or orientation of a liquid crystal or mesogenic material in a display cell or on a substrate means that the mesogenic groups in the liquid crystal or mesogenic material are oriented substantially parallel to the plane of the cell or substrate, respectively.

A flexoelectric display according to a preferred embodiment of the present invention comprises two plane parallel substrates, preferably glass plates covered with a transparent conductive layer such as indium tin oxide (ITO) on their inner surfaces, and a flexoelectric liquid crystalline medium provided between the substrates, characterized in that one of the inner substrate surfaces exhibits homeotropic alignment conditions and the opposite inner substrate surface exhibits planar alignment conditions for the liquid crystalline medium.

Planar alignment can be achieved e.g. by means of an alignment layer, for example a layer of rubbed polyimide or sputtered $SiO_x$, that is applied on top of the substrate.

Alternatively it is possible to directly rub the substrate, i.e. without applying an additional alignment layer. For example, rubbing can be achieved by means of a rubbing cloth, such as a velvet cloth, or with a flat bar coated with a rubbing cloth. In a preferred embodiment of the present invention rubbing is achieved by means of a at least one rubbing roller, like e.g. a fast spinning roller that is brushing across the substrate, or by putting the substrate between at least two rollers, wherein in each case at least one of the rollers is optionally covered with a rubbing cloth. In another preferred embodiment of the present invention rubbing is achieved by wrapping the substrate at least partially at a defined angle around a roller that is preferably coated with a rubbing cloth.

Homeotropic alignment can be achieved e.g. by means of an alignment layer coated on top of the substrate. Suitable aligning agents used on glass substrates are for example alkyltrichlorosilane or lecithine, whereas for plastic substrate thin layers of lecithine, silica or high tilt polyimide orientation films as aligning agents may be used. In a preferred embodiment of the invention silica coated plastic film is used as a substrate.

Further suitable methods to achieve planar or homeotropic alignment are described for example in J. Cognard, Mol.Cryst.Liq.Cryst. 78, Supplement 1, 1-77 (1981).
By using a display cell with hybrid alignment conditions, a very high switching angle of flexoelectric switching, fast response times and a good contrast can be achieved.

The flexoelectric display according to present invention may also comprise plastic substrates instead of glass substrates. Plastic film substrates are particularly suitable for rubbing treatment by rubbing rollers as described above.

Another object of the present invention is that compounds of formula I, when added to a nematic liquid crystalline mixture, produce a phase below the nematic.

Accordingly, the bimesogenic compounds of formula I according to the present invention allow the second nematic phase to be induced in nematic mixtures that do not show evidence of this phase normally. Furthermore, varying the amounts of compounds of formula I allow the phase behaviour of the second nematic to be tailored to the required temperature.

Examples for this are given and the mixtures obtainable thereof are particularly useful for flexoelectric liquid crystal display. Thus, another object of the present invention is liquid crystal media comprising one or more compounds of formula I exhibiting a second nematic phase.

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

Unless the context clearly indicates otherwise, as used herein plural forms of the terms herein are to be construed as including the singular form and vice versa.

Throughout the description and claims of this specification, the words "comprise" and "contain" and variations of the words, for example "comprising" and "comprises", mean "including but not limited to", and are not intended to (and do not) exclude other components.

It will be appreciated that variations to the foregoing embodiments of the invention can be made while still falling within the scope of the invention. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

In the foregoing and in the following examples, unless otherwise indicated, all temperatures are set forth uncorrected in degrees Celsius and all parts and percentages are by weight.

The following abbreviations are used to illustrate the liquid crystalline phase behavior of the compounds: K = crystalline; N = nematic; N2 = second nematic; S = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straight forward according to the following three tables A to C.

All groups $C_nH_{2n+1}$, $C_mH_{2m+1}$, and $C_lH2_{l+1}$ are preferably straight chain alkyl groups with n, m and l C-atoms, respectively, all groups $C_nH_{2n}$, $C_mH_{2m}$ and $C_lH_{2l}$, are preferably $(CH_2)_n$, $(CH_2)_m$ and $(CH_2)_l$, respectively and -CH=CH- preferably is *trans*- respectively E vinylene.

Table A lists the symbols used for the ring elements, table B those for the linking groups and table C those for the symbols for the left hand and the right hand end groups of the molecules.

Table D lists exemplary molecular structures together with their respective codes.

**Table A: Ring Elements**

| | | | |
|---|---|---|---|
| **C** | 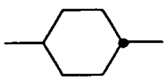 | **P** | 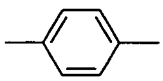 |
| **D** | 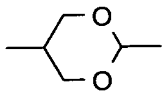 | **DI** | 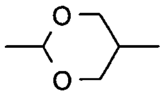 |
| **A** | 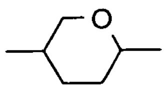 | **AI** | 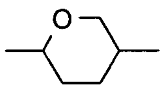 |
| **G** | 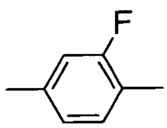 | **GI** | 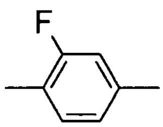 |
| **G(Cl)** | 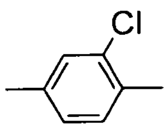 | **GI(Cl)** | 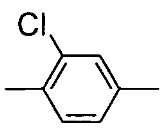 |
| **G(Me)** | 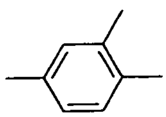 | **GI(Me)** | 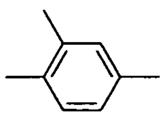 |
| **U** | 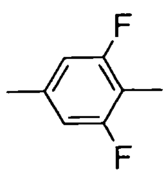 | **UI** | 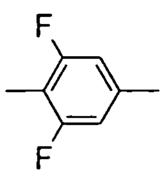 |

(continued)

| | | | |
|---|---|---|---|
| **Y** | 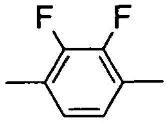 | | |
| **M** | 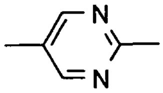 | **MI** | 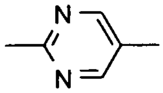 |
| **N** | 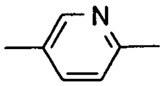 | **NI** | 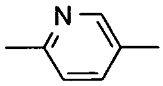 |
| **np** | 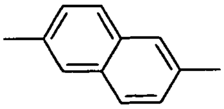 | | |
| **n3f** | 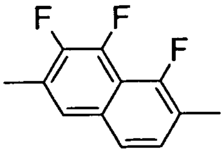 | **n3fl** | 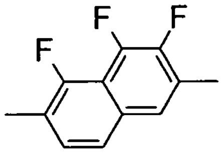 |
| **th** | 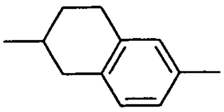 | **thl** | 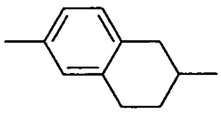 |
| **th2f** | 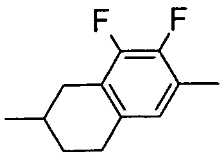 | **th2fl** | 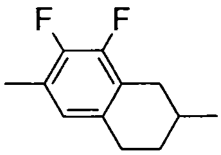 |
| **o2f** | 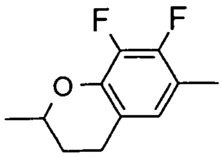 | **o2fl** | 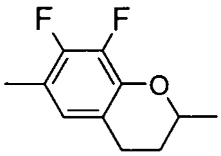 |
| **dh** | 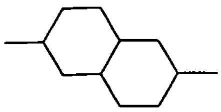 | | |
| **K** | 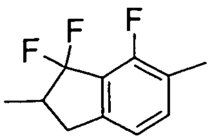 | **KI** | 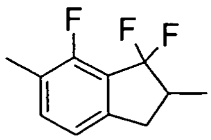 |
| **L** | 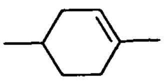 | **LI** | 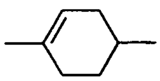 |
| **F** | 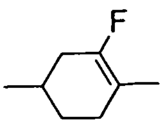 | **FI** | 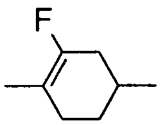 |

**Table B: Linking Groups**

| | | |
|---|---|---|
| **E** | $-CH_2-CH_2-$ | |

(continued)

| | | | |
|---|---|---|---|
| **V** | -CH=CH- | | |
| **T** | -C=C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **O** | $-CH_2-O-$ | **OI** | $-O-CH_2-$ |
| **Q** | $-CF_2-O-$ | **QI** | $-O-CF_2-$ |

**Table C: End Groups**

| Left hand side, used alone or in combination with others | | Right hand side, used alone or in combination with others | |
|---|---|---|---|
| **-n-** | $C_nH_{2n+1}-$ | **-n** | $-C_nH_{2n+1}$ |
| **-nO-** | $C_nH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-C_nH_{2n}-$ | **-Vn** | $-CH=CH-C_nH_{2n+1}$ |
| **-nVm-** | $C_nH_{2n+1}-CH=CH-C_m,H_{2m}-$ | **-nVm** | $-C_nH_{2n}-CH=CH-C_mH_{2m+1}$ |
| **-N-** | N=C- | **-N** | -C=N |
| **-S-** | S=C=N- | **-S** | -N=C=S |
| **-F-** | F- | **-F** | -I- |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-A-** | H-C=C- | **-A** | -C≡C-H |
| **-nA-** | $C_nH_{2n+1}-C=C-$ | **-An** | $-C≡C-C_nH_{2n+1}$ |
| **-NA-** | N=C-C=C- | **-AN** | -C≡C-C≡N |
| **Left hand side, used in combination with others only** | | **Right hand side, used in combination with others only** | |
| **-...n...-** | $-C_nH_{2n}-$ | **-...n...** | $-C_nH_{2n}-$ |
| **-...M...-** | -CFH- | **-...M...** | -CFH- |
| **-...D...-** | $-CFH_2-$ | **-...D...** | $-CF_2-$ |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |
| wherein n und m each are integers and three points "..." indicate a space for other symbols of this table. | | | |

Preferably the liquid crystalline media according to the present invention comprise, besides the compound(s) of formula I one or more compounds selected from the group of compounds of the formulae of the following table.

Table D

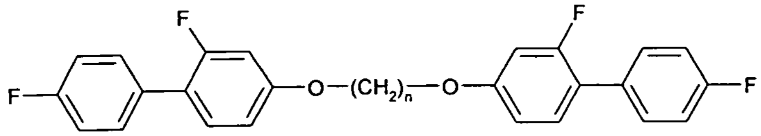

**F-PGI-O-n-O-GP-F**

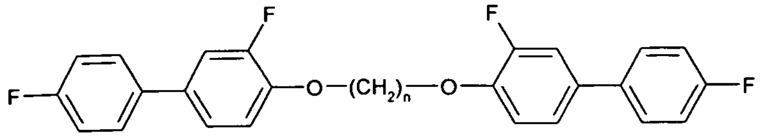

**F-PG-O-n-O-GIP-F**

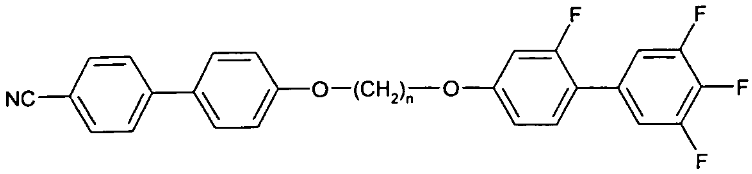

**N-PP-O-n-O-GU-F**

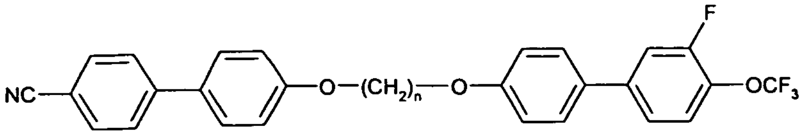

**N-PP-O-n-O-PG-OT**

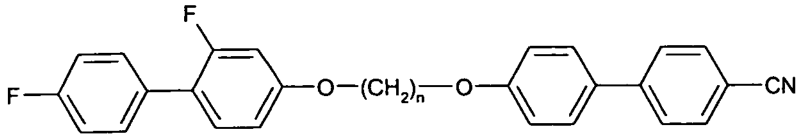

**F-PGI-O-n-O-PP-N**

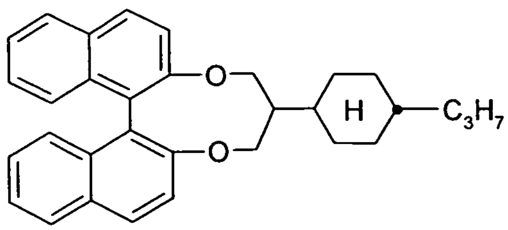

**R-5011** respectively **S-5011**

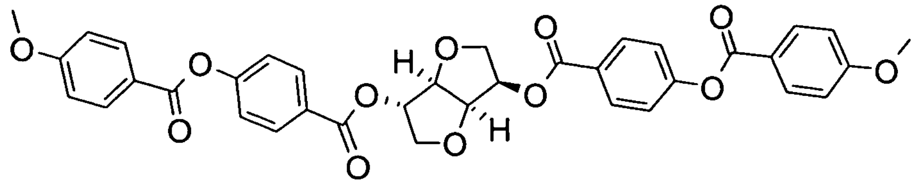

**CD-1**

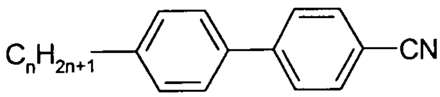

**K3n**

(continued)

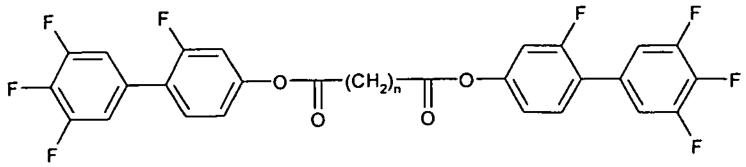

**F-UIGI-ZI-n-Z-GU-F**

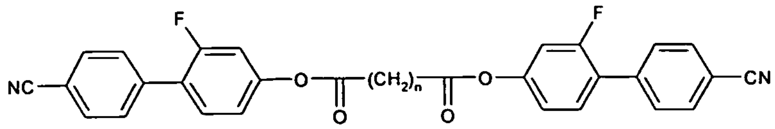

**N-PGI-ZI-n-Z-GP-N**

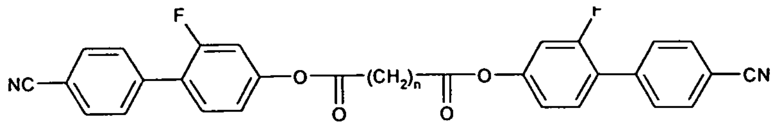

**F-PGI-ZI-n-Z-GP-F**

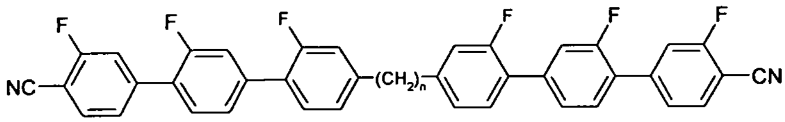

**N-GIGIGI-n-GGG-N**

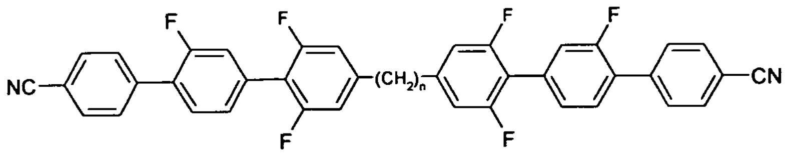

**N-PGIUI-n-UGP-N**

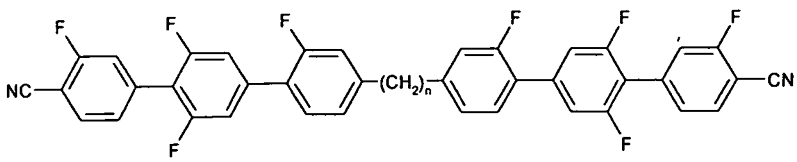

**N-GIUIGI-n-GUG-N**

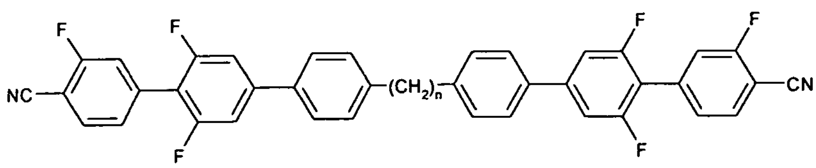

**N-GIUIP-n-PUG-N**

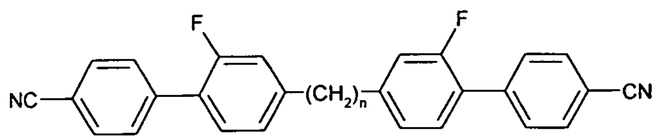

**N-PGI-n-GP-N**

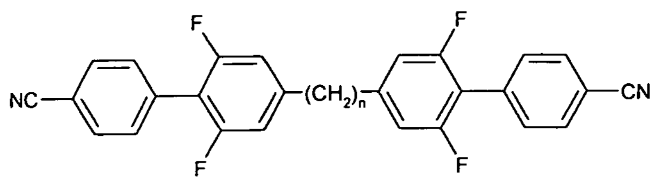

**N-PUI-n-UP-N**

(continued)

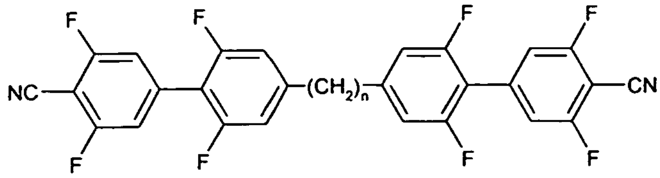

**N-UIUI-n-UU-N**

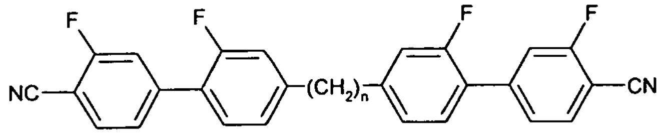

**N-GIGI-n-GG-N**

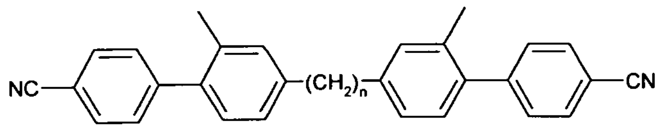

**N-PGI(Me)-n-G(Me)P-N**

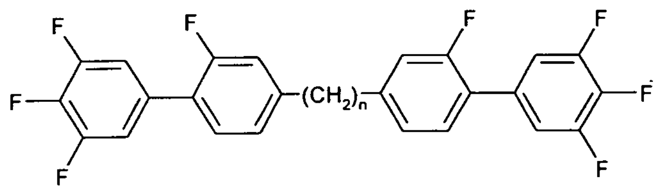

**F-UIGI-n-GU-F**

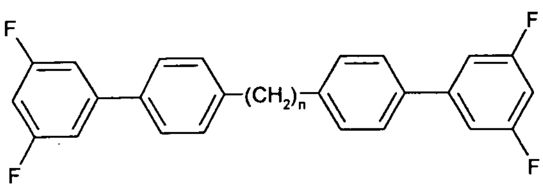

**UIP-n-PU**

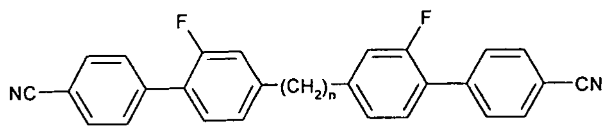

**N-PGI-n-GP-N**

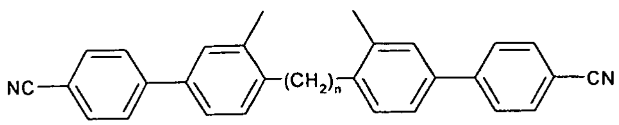

**N-PG(Me)-n-GI(Me)P-N**

Examples

Example 1: General synthesis for compounds of formula I wherein $R^1$-$MG^1$-and $R^2$-$MG^2$- in formula I are identical

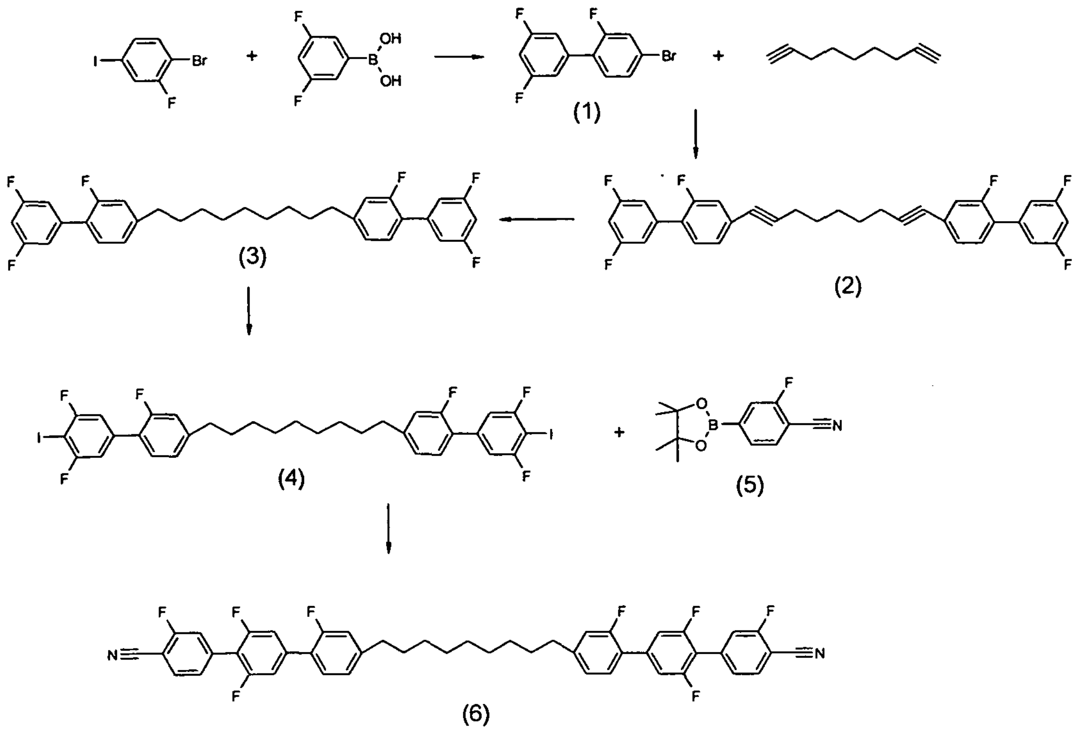

(1)

(2)

(3)

(4)

(5)

(6)

Synthesis of (1)

1-bromo-3-fluoroiodobenzene (53.3 g, 0.177 mol) is added to a round bottom flask with 3,5-difluorobenzenboronic acid (29.0 g, 0.184 mol). Tetrahydrofuran (500 ml) is added and the mixture is stirred under nitrogen until dissolved. A solution of potassium carbonate (36.7 g, 0.265 mol) in water (100 ml) is added to the reaction. A catalyst, bis(triphenylphosphine)-palladium(II) dichloride (1.98 g, 2.83 mmol) is added and the reaction is heated to reflux for 18 hours. The reaction is cooled and diluted with water before being acidified with dilute Hydrochloric acid. The layers are separated and the organics are washed with water before being concentrated to obtain the product as a brown solid.

The crude solid is dissolved in Dichloromethane and adsorbed onto silica gel (100 g) by concentration. The material is purified by column chromatography, eluting with a mixture of petroleum spirit (40-60°C) and dichloromethane to obtain a purified product as a yellow solid.

Synthesis of (2)

2,-3'-5'-trifluoro-4-bromobiphenyl (26.1 g, 0.091 mol) is added to a round bottomed flask. Triethylamine (25.0 ml) and tetrahydrofuran (50.0 ml) is added and the whole evacuated and replaced with nitrogen. Copper(I)iodide (0.404 g, 2.12 mmol) and bis(triphenylphosphine)palladium(II) dichloride (0.71 g, 1.01 mmol) are added, the reaction is evacuated and replaced with nitrogen. The reaction mixture is heated to 40°C and 1,8-nonadiyne (5.25 g, 0.044 mol) is slowly added over 30 minutes. The mixture is heated for a further 24 hours at 40°C followed by 48 hours at 80°C.

The reaction is cooled and filtered under vacuum to remove precipitates. The filtrate is acidified with dilute Hydrochloric acid and extracted with diethyl ether. The organic material is washed with water before concentrating to afford the product as a black solid (26.0 g). The crude solid is dissolved in dichloromethane and adsorbed onto 50.0 g silica gel. The material is purified by column chromatography, eluting the product using a mixture of dichloromethane in petrol.

Synthesis of (3)

The material (2) (21.5 g, 0.040 mol) is dissolved in Tetrahydrofuran (600 ml) and passed through a Thalesnano hydrogenator. The material required conditions of 70 bar pressure and 60°C to produce the product as pale colored solid.

Synthesis of (4)

Material (3) (21.5 g, 0.04 mol) is added to a round bottom flask with Tetrahydrofuran (150 ml). The reaction is

stirred under nitrogen and cooled to -70°C. n-Butyl Lithium solution(1.6 M in hexanes, 55.0 ml, 0.087 mol) is slowly added over 45 minutes, and the reaction stirred for a further hour at -70°C. A solution of Iodine (45.8 g, 00.179 mol) in tetrahydrofuran (125 ml) is slowly added keeping the temperature between -60 and -70°C. The reaction is stirred overnight and allowed to warm to room temperature. The reaction is quenched by slowly adding wet THF before water and then ethyl acetate is added. The layers are separated and the aqueous extracted three times with ethyl acetate. The organics are washed twice with sodium thiosulphate solution (100 ml, 2 M in water) then washed with water. Concentration afforded a brown solid. The material is purified by sequential recrystallisations from Industrial methylated spirits, acetone and acetonitrile/acetone.

Synthesis (5)

4-bromo-2-fluorobenzonitrile (42.4 g, 212 mmol) is added to a round bottom flask along with bis(pinacolato)diborane (59.8 g, 235 mmol). Potassium acetate (31.1 g, 317 mmol), tricyclohexylphosphine (3.57 g, 12.7 mmol), Tris(dibenzylideneacetone)dipalladium(0) (3.66 g, 6.36 mmol) and 1,4-dioxane (600 ml) are all added to the reaction flask and the mixture stirred under nitrogen at 80°C for 72 hours. After cooling the reaction mixture, water and diethyl ether are added and the layers separated. The organic material is washed with brine and water before concentrating to a brown solid. The product is purified by recrystallisation from petrol/dichloromethane to obtain a brown crystalline solid.

Synthesis (6)

Material (4) (10.17 g, 12.8 mmol) and material (5) (7.70 g, 31.2 mmol) are added to a round bottom flask and dissolved in Tetrahydrofuran (250 ml). Bis(triphenylphosphine)-palladium(II) dichloride (450.6 mg,0.642 mmol) is added along with a solution of sodium carbonate (1 M in water, 77.0 ml, 77.0 mmol). The reaction is heated to 85°C for 24 hours, after which it is cooled and diluted with water before being acidified with dilute Hydrochloric acid. The layers are separated and the organic layer is washed with water before being concentrated to yield the product as a brown solid. The material is purified by column chromatography, eluting the product with 40% ethyl acetate in petrol. The product is further purified by recrystallisation from, first, acetone/methanol, then acetone and finally IPA/petrol.

Example 2: Following compounds of formula I are prepared analogously

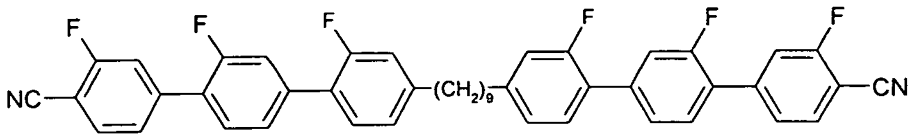

N-GIGIGI-9-GGG-N

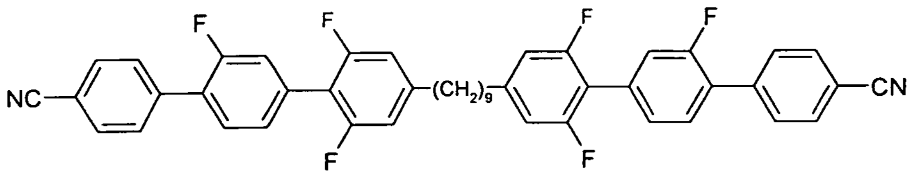

N-PGIUI-9-UGP-N

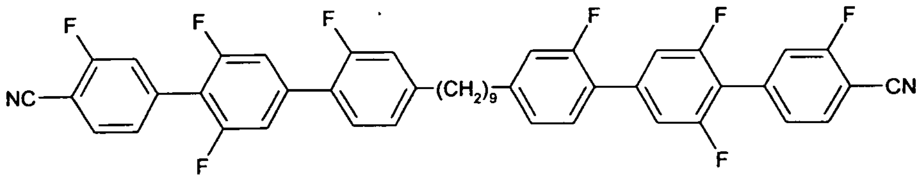

N-GIUIGI-9-GUG-N

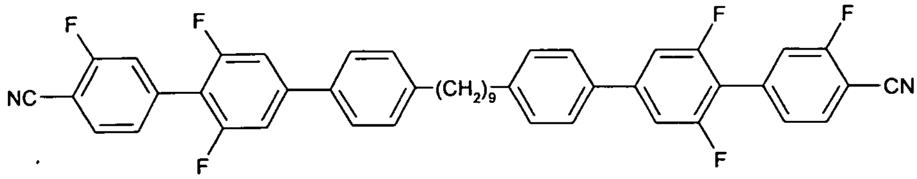

N-GIUIP-9-PUG-N

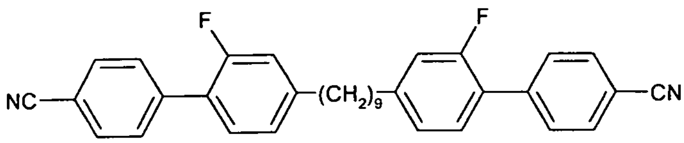

N-PGI-9-GP-N

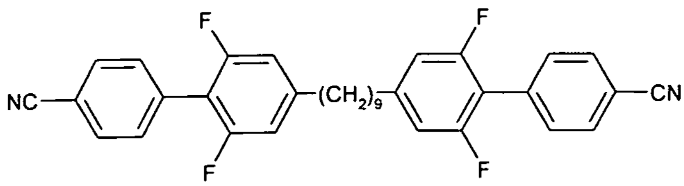

N-PUI-9-UP-N

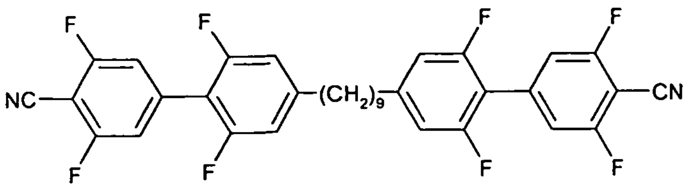

**N-UIUI-9-UU-N**

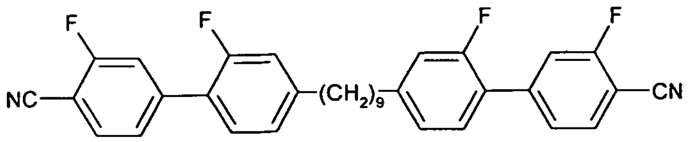

**N-GIGI-9-GG-N**

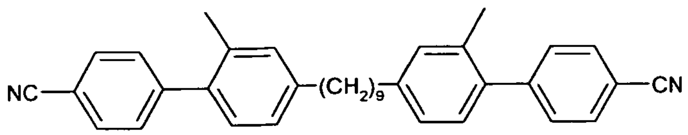

**N-PGI(Me)-9-G(Me)P-N**

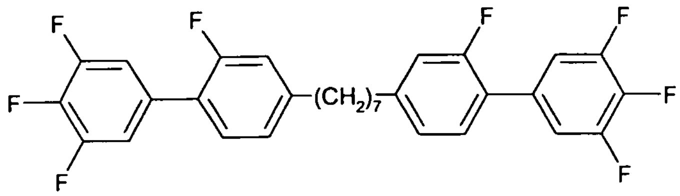

**F-UIGI-7-GU-F**

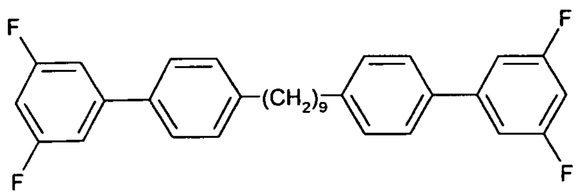

**UIP-9-PU**

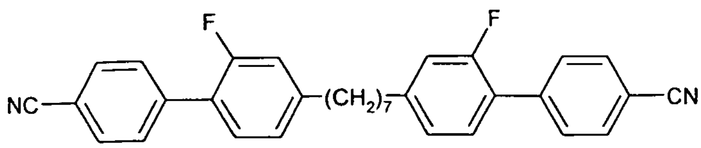

**N-PGI-7-GP-N**

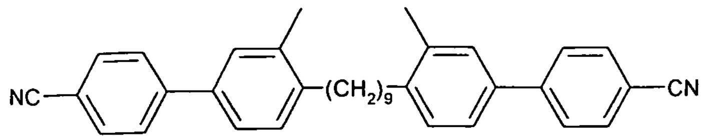

**N-PG(Me)-9-GI(Me)P-N**

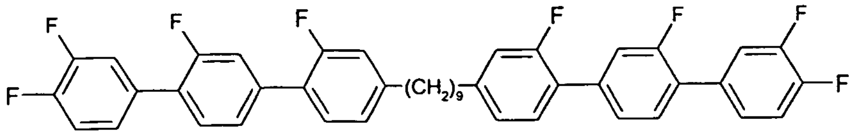

**F-GIGIGI-9-GGG-F**

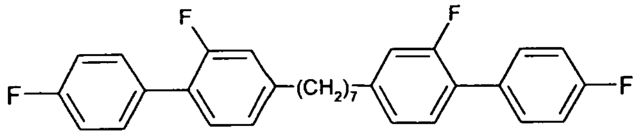

**F-PGI-7-GP-F**

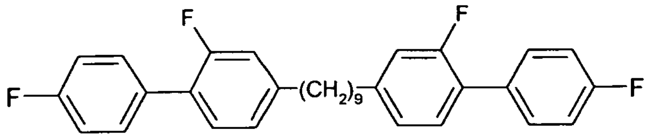

**F-PGI-9-GP-F**

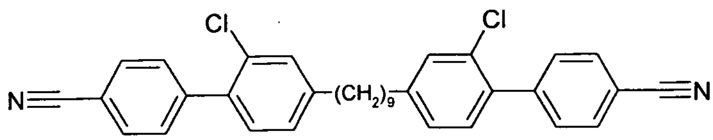

**N-PGI(Cl)-9-G(Cl)P-N**

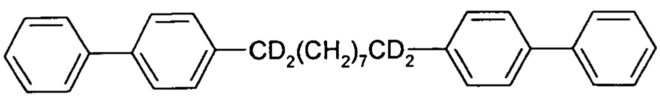

**PP-$CD_2$-7-$CD_2$-PP**

Example 3: General synthesis for compounds of formula I wherein $R^1$-$MG^1$- and $R^2$-$MG^2$- in formula I are different

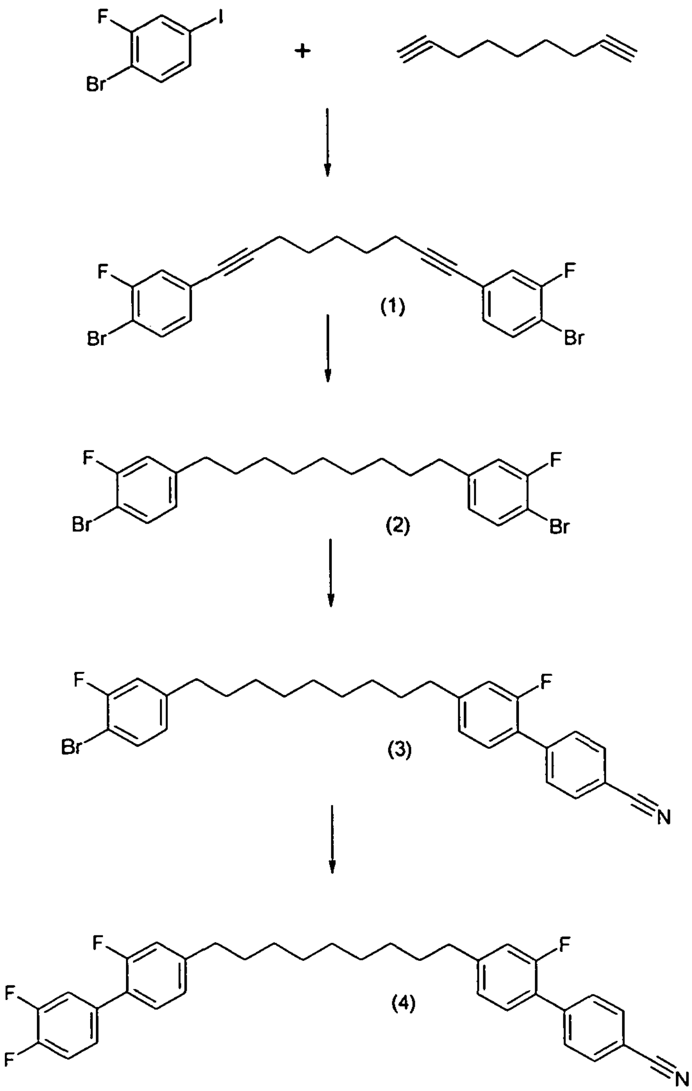


Synthesis of (1)

1-bromo-3-fluoroiodobenzene (27.5 g, 92 mmol) is added to a round bottom flask with tetrahydrofuran (30 ml) and the mixture is stirred under nitrogen until dissolved. Diisopropylamine (30 ml) is added and the reaction placed in an ultrasonic bath for 10 minutes. Catalysts, bis(triphenyl-phosphine)palladium(II) dichloride (0.9g, 1.28mmol) and copper(I)iodide (0.2 g, 1.05 mmol) are added and the reaction is cooled in a water bath to 20°C. 1,8-nonadiyne (5.0 g, 41 mmol) is slowly added to the reaction and stirred for a further 20 hours. The reaction is cooled and filtered under vacuum to remove precipitates. The filtrate is acidified with diluted hydrochloric acid and extracted with diethyl ether. The organic material is washed with water before concentrating to afford the product as a black solid (19 g). The material is purified by column chromatography, eluting the product using a mixture of dichloromethane in petrol. This produced 14 g (72%) of the desired product.

Synthesis of (2)

Material (1) (21.5 g, 40 mmol) is dissolved in tetrahydrofuran (600 ml) and passed through a Thalesnano hydrogenator. The material required conditions of 70 bar pressure and 60°C to produce the product as pale coloured

solid (21.5 g, 99%)

Synthesis of (3)

Material (2) (14.35 g, 30.3 mmol), 4-cyanophenylboronic acid (4.45 g, 30.3 mmol), potassium phosphate (25.4 g, 120 mmol), dioxane (57.4ml) and water (28.7 ml) are sonicated in an ultrasound bath for 30 minutes under a nitrogen atmosphere. The mixture is stirred at room temperature and Pd(DPPF)$Cl_2$ - DCM complex (215 mg) are added. The mixture is heated to 90°C for 2 hours. The mixture is cooled. The two layers are separated and the solvent from the organic layer removed in vacuo to give a black oil. This is dissolved in a minimum of DCM and applied to a column of silica eluting with petrol: DCM, 1:1 to give the desired product (3.5 g, 23.3%).

Synthesis of (4)

Material (3) (3.5 g, 7.05 mmol), 3,4-difluorobenzeneboronic acid (1.7 g, 8 mmol) potassium phosphate (1.7 g, 8 mmol), dioxane (10.6 ml) and water (5.3 ml) are sonicated in an ultrasound bath for 30 minutes under a nitrogen atmosphere. The mixture is stirred at room temperature and Pd(DPPF)$Cl_2$- DCM complex (59mg) are added. The mixture is heated to 90°C for 5 hours. The two layers are separated and the solvent from the organic layer removed in vacuo. This is dissolved in a minimum of DCM and applied to a column of silica, eluting with petrol: DCM, 2:1. The crude product is crystallised twice from DCM/acetonitrile (cooled with dry ice/acetone bath) and the product is dissolved in a minimum of DCM and applied to a column of silica eluting with petrol : DCM, 2:1. The crude product is crystallised from acetonitrile (cooled with dry ice/acetone bath) to give the desired product (2.43 g, 65%).

Example 4: Mixture A

| Composition | | |
|---|---|---|
| Compound | | |
| No. | Abbreviation | Conc. /% |
| 1 | R-5011 | 1.6 |
| 2 | F-PGI-O-7-O-GP-F | 4.0 |
| 3 | F-PGI-O-9-O-GP-F | 16.2 |
| 4 | N-PP-O-9-O-GU-F | 7.0 |
| 5 | N-PP-O-7-O-PG-OT | 18.5 |
| 6 | F-PGI-O-9-O-PP-N | 5.0 |
| 7 | F-UIGI-ZI-9-Z-GU-F | 25.0 |
| 8 | N-PGI-ZI-9-Z-GP-N | 7.7 |
| 9 | N-PGI-9-GP-N | 15.0 |
| Σ | | 100.0 |

The host mixture (entry 1 to 8), shows a nematic phase range from room temperature up to 68.5°C. After adding 15 % of
N-PGI-9-GP-N, the resulting mixture A exhibits an increased phase range of the second nematic phase.

Example 5: Mixture B

The following mixture is prepared (Mixture B)

| Composition | | |
|---|---|---|
| Compound | | |
| No. | Abbreviation | Conc. /% |
| 1 | F-PGI-O-7-O-GP-F | 10.0 |
| 2 | F-PGI-O-9-O-GP-F | 40.0 |
| 3 | N-PP-O-9-O-GU-F | 10.0 |
| 4 | N-PP-O-7-O-PGIOT | 20.0 |

(continued)

| Composition | | |
|---|---|---|
| Compound | | |
| No. | Abbreviation | Conc. /% |
| 5 | F-PGI-O-9-O-PP-N | 20.0 |
| Σ | | 100.0 |

This mixture has the following properties:

clearing point: 75.2
phase sequence: K 44 N 75 I, Tg -17.

This mixture is a host mixture and does not display the second nematic phase.

Example 6: Mixture B-1

To mixture B is added 10 % of N-PGI-9-GP-N resulting in mixture B-1 with the following thermal properties:

phase sequence: I 75-73 N 30 N2

As the amount of N-PGI-9-GP-N in the mixture increases to 10 %, several things occur. Firstly, the second nematic phase is induced in a mixture that does not otherwise demonstrate this phase, and secondly, the elastic bend constant $k_{33}$ is decreased.

Example 7: Mixture B-2

To mixture B is added 20 % of N-PGI-9-GP-N resulting in mixture B-2 with the following thermal properties:

phase sequence for heating: K 37.9 N 73.6-74.2 I,
for cooling I 74 N 35.4-34.8 N2

The temperature of the transition from the nematic phase to the second bend twist nematic phase occurs at higher temperatures as the concentration of N-PGI-9-GP-N is increased

Mixture B-2 displays the second nematic phase on cooling from the nematic phase (i.e. below 35.4°C) The transition from the nematic to the second nematic phase seems to be second order, and does not appear to be a sharp transition. As amount increases to 20 %, $k_{11}$ remains in comparison to mixture B-1 largely unchanged, but $k_{33}$ is significantly decreased.

Furthermore, it can be postulated that a composition with higher concentrations > 34 % of N-PGI-9-GP-N in the mixture might have negative $k_{33}$. Extrapolating the $k_{33}$ against the composition, then the value for $k_{33}$ for 100 % N-PGI-9-GP-N is significantly negative at -9.8 pN.

Table 2 summarizes the results of the Examples 5, 6 and 7.

Table 2:

| **Mixture** | **B** | **B-1** | **B-2** | **Extrapolated values** |
|---|---|---|---|---|
| **$k_{11}$ (pN)** | 13.49 | 14.51 | 13.84 | 15.53 |
| **$k_{33}$ (pN)** | 4.97 | 3.42 | 2.02 | -9.79 |
| **$(k_{11} + k_{33})/2$ (pN)** | 9.23 | 8.97 | 7.93 | 2.87 |

Example 8: Flexoelectric mixture for USH mode (Mixture C)

| Composition | | |
|---|---|---|
| Compound | | |
| No. | Abbreviation | Conc. /% |
| 1 | F-PGI-O-7-O-GP-F | 3.2 |
| 2 | F-PGI-O-9-O-GP-F | 11.5 |
| 3 | N-PP-O-9-O-GU-F | 5.0 |
| 4 | N-PP-O-7-O-PG-OT | 13.1 |
| 5 | F-PGI-O-9-O-PP-N | 3.5 |
| 6 | N-GIGIGI-9-GGG-N | 20.0 |
| 7 | K15 | 6.0 |
| 8 | R-5011 | 4.0 |
| 9 | F-UIGI-ZI-9-Z-GU-F | 17.6 |
| 10 | N-PGI-ZI-9-Z-GP-N | 5.5 |
| 11 | N-PGI-ZI-7-Z-GP-N | 10.6 |
| Σ | | 100.0 |

Example 9: Flexoelectric mixture for USH mode (Mixture D)

| Composition | | |
|---|---|---|
| Compound | | |
| No. | Abbreviation | Conc. /% |
| 1 | F-PGI-O-7-O-GP-F | 5.6 |
| 2 | F-PGI-O-9-O-GP-F | 11.5 |
| 3 | N-PP-O-9-O-GU-F | 5.0 |
| 4 | N-PP-O-7-O-PG-OT | 13.1 |
| 5 | F-PGI-O-9-O-PP-N | 3.5 |
| 6 | N-GIGIGI-9-GGG-N | 20.0 |
| 7 | K15 | 6.0 |
| 8 | R-5011 | 1.6 |
| 9 | F-UIGI-ZI-9-Z-GU-F | 17.6 |
| 10 | N-PGI-ZI-9-Z-GP-N | 5.5 |
| 11 | N-PGI-ZI-7-Z-GP-N | 10.6 |
| Σ | | 100.0 |

Example 10: (Mixture E)

| Composition | | |
|---|---|---|
| Compound | | |
| No. | Abbreviation | Conc. /% |
| 1 | F-PGI-O-7-O-GP-F | 8.0 |
| 2 | F-PG-O-7-O-GIP-F | 32.0 |
| 3 | N-PP-O-9-O-GU-F | 16.0 |
| 4 | N-PP-O-7-O-PGIOT | 8.0 |
| 5 | F-PGI-O-9-O-PP-N | 16.0 |

(continued)

| Composition | | |
|---|---|---|
| Compound | | |
| No. | Abbreviation | Conc. /% |
| 6 | N-PGI-9-GP-N | 20.0 |
| Σ | | 100.0 |

This mixture is suitable for the USH-mode.

## Claims

1. Bimesogenic compounds of formula I

$$R^1\text{-}MG^1\text{-}Sp\text{-}MG^2\text{-}R^2 \qquad I$$

wherein

$R^1$ and $R^2$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, $-N(CH_3)-$, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,
$MG^1$ and $MG^2$ are each independently a mesogenic group,
Sp is $-(CH_2)_o-$, and
∘ is an integer from 5 to 15,
with the proviso if $R^1$ and $R^2$ both are -CN,
$MG^1$ and $MG^2$ are not both

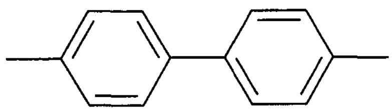

and if $MG^1$ and $MG^2$ both are

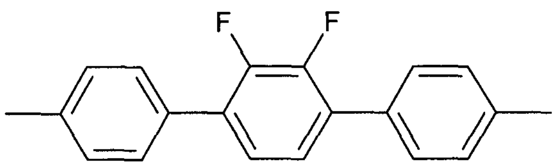

$R^1$ and $R^2$ are not both a straight-chain alkyl group.

2. Bimesogenic compounds according to claim 1, **characterized in that** $MG^1$ and $MG^2$ are independently of each other selected of formula II

$$-A^1-(Z^1-A^2)_m- \qquad II$$

wherein

$Z^1$ is -COO-, -OCO-,-O-CO-O-, $-OCH_2-$, $-CH_2O-$, $-CH_2CH_2-$, $-(CH_2)_4-$, $-CF_2CF_2-$, -CH=CH-, -CF=CF-, -CH=CH-COO-, -OCO-CH=CH-, -C≡C- or a single bond,
$A^1$ and $A^2$ are each independently in each occurrance1,4-phenylene, wherein in addition one or more CH groups

may be replaced by N, trans-1,4-cyclohexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups with 1 to 7 C atoms, wherein one or more H atoms may be substituted by F or Cl,
m is 0, 1, 2 or 3.

3. Bimesogenic compounds according to claim 1 or 2, **characterized in that** $MG^1$ and $MG^2$ are each and independently selected of the following formulae and their mirror images

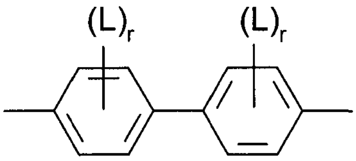

IIa

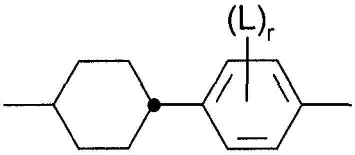

IIb

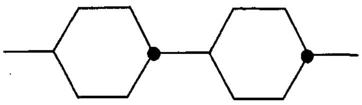

IIc

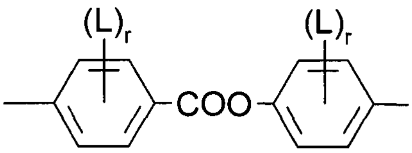

IId

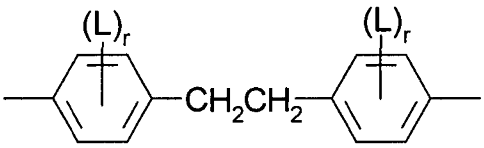

IIe

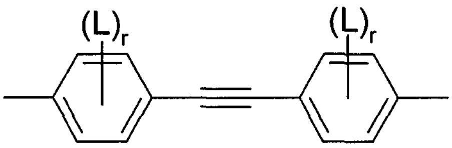

IIf

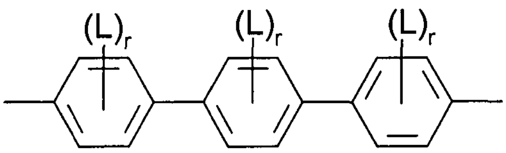

IIg

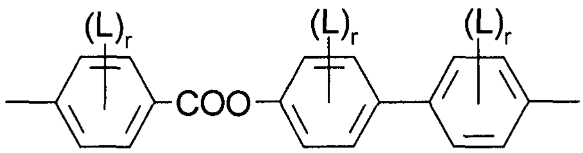

IIh

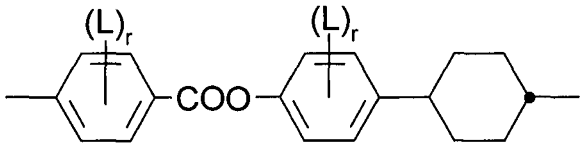

IIi

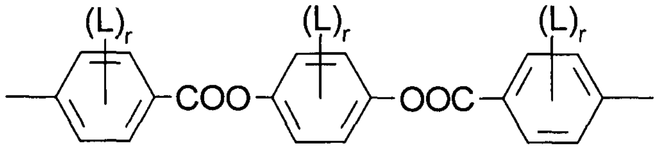

IIk

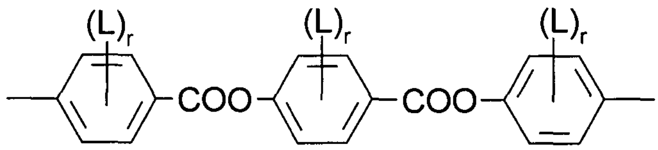

IIm

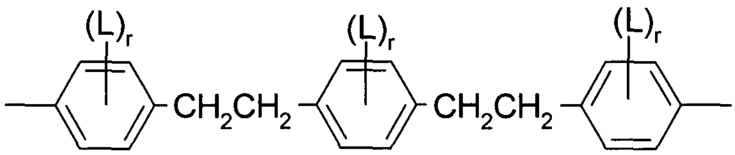

IIn

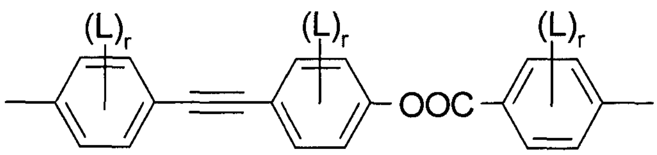

IIo

wherein L is in each occurrence independently of each other F, Cl, CN, OH, $NO_2$ or an optionally fluorinated alkyl, alkoxy or alkanoyl group with 1 to 7 C atoms, and r is in each occurrence independently of each other 0, 1, 2, 3 or 4.

**4.** Bimesogenic compounds according to at least one of claims 1 to 3, **characterized in that** $R^1$ and $R^2$ are selected from H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$, and $OC_2F_5$.

**5.** Bimesogenic compounds according to at least one of claims 1 to 4, **characterized in that** o is 5, 7, 9, 11, 13 or 15.

**6.** Use of bimesogenic compounds according to at least one of claims 1 to 5 in liquid crystalline media.

**7.** Liquid-crystalline medium, **characterised in that** it comprises one or more bimesogenic compounds according to at least one or more of claims 1 to 5.

**8.** Liquid-crystalline medium according to Claim 7, **characterised in that** it additionally comprises one or more compounds selected from the group of the compounds of the formulae III

$R^3$-$MG^3$-$X^3$-$Sp^1$-$X^4$-$MG^4$-$R^4$ III

wherein

$R^3$ and $R^4$ are each independently H, F, Cl, CN, NCS or a straight-chain or branched alkyl group with 1 to 25 C atoms which may be unsubstituted, mono- or polysubstituted by halogen or CN, it being also possible for one or more non-adjacent $CH_2$ groups to be replaced, in each case independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,
$MG^3$ and $MG^4$ are each independently a mesogenic group,
$Sp^1$ is a spacer group comprising 5 to 40 C atoms, wherein one or more non-adjacent $CH_2$ groups may also be replaced by -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- or -C≡C-, and
$X^3$ and $X^4$ are each independently -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C-.

**9.** Liquid crystal medium according to claim 7 or 8, **characterized in that** it exhibits a second nematic phase.

**10.** Use of a liquid crystal medium according to at least one of claims 7 to 9, in a liquid crystal device.

**11.** Liquid crystal device comprising a liquid crystalline medium comprising two or more components, one or more of which is a bimesogenic compound according at least one of claims 1 to 5.

**12.** Liquid crystal device according to claim 11, **characterized in that** it is a flexoelectric device.

**13.** Liquid crystal device according to claim 11 or 12, **characterized in that** it comprises two plane parallel electrodes the inner surfaces of which exhibit hybrid alignment conditions.

## Patentansprüche

**1.** Bimesogene Verbindungen der Formel I

$R^1$-$MG^1$-Sp-$MG^2$-$R^2$ I

worin

$R^1$ und $R^2$ jeweils unabhängig H, F, Cl, CN, NCS oder eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen jeweils unabhängig voneinander so durch -O-, -S-, -NH-, -N($CH_3$)-, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,
$MG^1$ und $MG^2$ jeweils unabhängig eine mesogene Gruppe sind,
Sp -$(CH_2)_o$- ist und
o eine ganze Zahl von 5 bis 15 ist,
mit der Maßgabe, dass, wenn $R^1$ und $R^2$ beide -CN sind,
$MG^1$ und $MG^2$ nicht beide

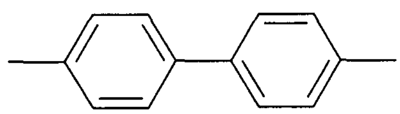

sind,
und wenn $MG^1$ und $MG^2$ beide

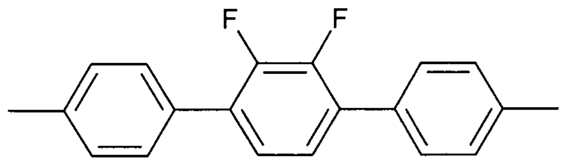

sind,
$R^1$ und $R^2$ nicht beide eine geradkettige Alkylgruppe sind.

**2.** Bimesogene Verbindungen nach Anspruch 1, **dadurch gekennzeichnet, dass** $MG^1$ und $MG^2$ unabhängig voneinander ausgewählt sind aus der Formel II

$$-A^1-(Z^1-A^2)_m- \qquad II$$

worin

$Z^1$ -COO-, -OCO-, -O-CO-O-, $-OCH_2-$, $-CH_2O-$, $-CH_2CH_2-$, $-(CH_2)_4-$, $-CF_2CF_2-$, -CH=CH-, -CF=CF-, -CH=CH-COO-, -OCO-CH=CH-, -C≡C- oder eine Einfachbindung ist,
$A^1$ und $A^2$ jeweils unabhängig bei jedem Auftreten 1,4-Phenylen, worin zusätzlich eine oder mehrere CH-Gruppen durch N ersetzt sein können, trans-1,4-Cyclohexylen, in dem zusätzlich eine oder zwei nicht benachbarte $CH_2$-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydro-naphthalin-2,6-diyl, 1,2,3,4-Tetrahydro-naphthalin-2,6-diyl, Cyclobutan-1,3-diyl, Spiro[3.3]heptan-2,6-diyl oder Dispiro[3.1.3.1]-decan-2,8-diyl sind, wobei alle diese Gruppen unsubstituiert oder ein-, zwei-, drei- oder vierfach mit F, Cl, CN oder Alkyl-, Alkoxy-, Alkylcarbonyl- oder Alkoxycarbonylgruppen mit 1 bis 7 C-Atomen substituiert sein können, worin ein oder mehrere H-Atome durch F oder Cl substituiert sein können,
m 0, 1, 2 oder 3 ist.

**3.** Bimesogene Verbindungen nach Anspruch 1 oder 2, **dadurch gekennzeichnet, dass** $MG^1$ und $MG^2$ jeweils und unabhängig ausgewählt sind aus den folgenden Formeln und ihren Spiegelbildern

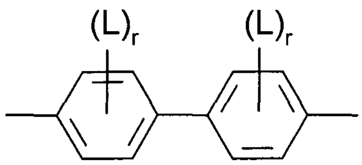

IIa

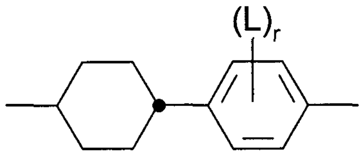

IIb

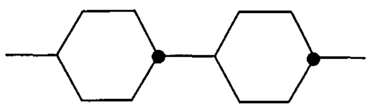

IIc

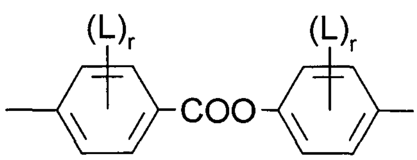

IId

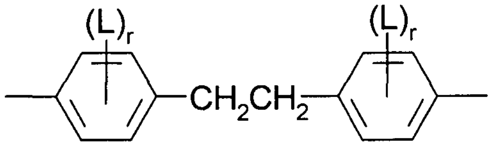

IIe

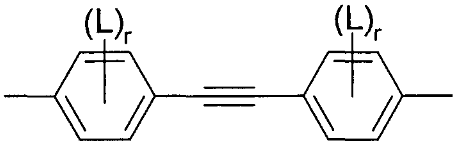

IIf

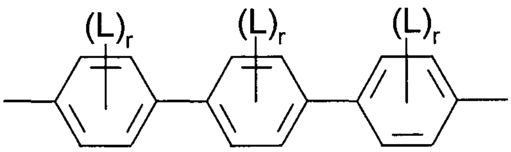

IIg

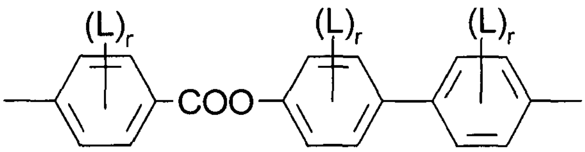

IIh

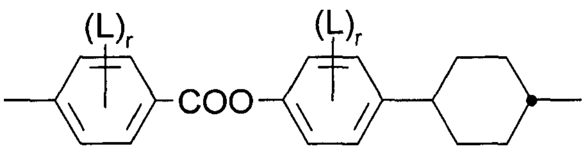

IIi

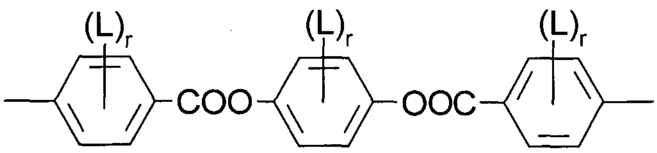

IIk

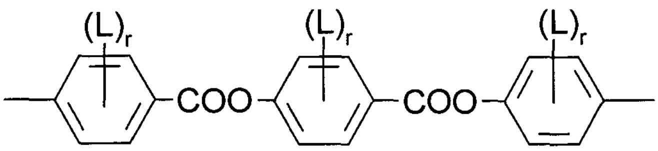

IIm

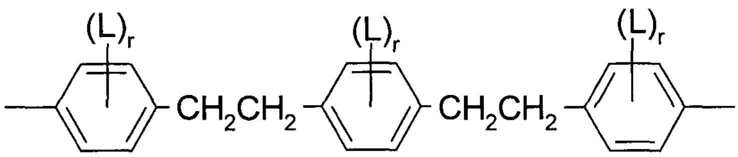

IIn

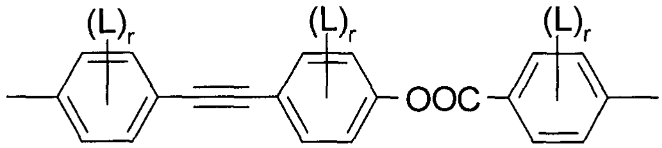

IIo

worin L bei jedem Auftreten unabhängig voneinander F, Cl, CN, OH, $NO_2$ oder eine gegebenenfalls fluorierte Alkyl-, Alkoxy- oder Alkanoylgruppe mit 1 bis 7 C-Atomen ist und r bei jedem Auftreten unabhängig voneinander 0, 1, 2, 3 oder 4 ist.

4. Bimesogene Verbindungen nach mindestens einem der Ansprüche 1 bis 3, **dadurch gekennzeichnet, dass** $R^1$ und $R^2$ aus H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$ und $OC_2F_5$ ausgewählt sind.

5. Bimesogene Verbindungen nach mindestens einem der Ansprüche 1 bis 4, **dadurch gekennzeichnet, dass** o 5, 7, 9, 11, 13 oder 15 ist.

6. Verwendung von bimesogenen Verbindungen nach mindestens einem der Ansprüche 1 bis 5 in flüssigkristallinen Medien.

7. Flüssigkristallines Medium, **dadurch gekennzeichnet, dass** es eine oder mehrere bimesogene Verbindungen nach mindestens einem oder mehreren der Ansprüche 1 bis 5 enthält.

8. Flüssigkristallines Medium nach Anspruch 7, **dadurch gekennzeichnet, dass** es zusätzlich eine oder mehrere Verbindungen ausgewählt aus der Gruppe der Verbindungen der Formeln III

$$R^3\text{-}MG^3\text{-}X^3\text{-}Sp^1\text{-}X^4\text{-}MG^4\text{-}R^4 \qquad \text{III}$$

enthält, worin

$R^3$ und $R^4$ jeweils unabhängig H, F, Cl, CN, NCS oder eine geradkettige oder verzweigte Alkylgruppe mit 1 bis 25 C-Atomen sind, die unsubstituiert oder ein- oder mehrfach durch Halogen oder CN substituiert sein kann, wobei auch eine oder mehrere nicht benachbarte $CH_2$-Gruppen jeweils unabhängig voneinander so durch -O-, -S-, -NH-, -N($CH_3$)-, -CO-, -COO-, -OCO-, -O-CO-O-, -S-CO-, -CO-S-, -CH=CH-, -CH=CF-, -CF=CF- oder -C≡C- ersetzt sein können, dass Sauerstoffatome nicht direkt miteinander verknüpft sind,
$MG^3$ und $MG^4$ jeweils unabhängig eine mesogene Gruppe sind,
$Sp^1$ eine Abstandsgruppe mit 5 bis 40 C-Atomen ist, worin eine oder mehrere nicht benachbarte $CH_2$-Gruppen auch durch -O-, -S-, -NH-, -N($CH_3$)-, -CO-, -O-CO-, -S-CO-, -O-COO-, -CO-S-, -CO-O-, -CH(Halogen)-, -CH(CN)-, -CH=CH- oder -C=C- ersetzt sein können und
$X^3$ und $X^4$ jeweils unabhängig -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C- sind.

9. Flüssigkristallmedium nach Anspruch 7 oder 8, **dadurch gekennzeichnet, dass** es eine zweite nematische Phase aufweist.

10. Verwendung eines Flüssigkristallmediums nach mindestens einem der Ansprüche 7 bis 9 in einer Flüssigkristallvorrichtung.

11. Flüssigkristallvorrichtung mit einem flüssigkristallinen Medium enthaltend zwei oder mehr Komponenten, von denen eine oder mehrere eine bimesogene Verbindung nach mindestens einem der Ansprüche 1 bis 5 ist.

12. Flüssigkristallvorrichtung nach Anspruch 11, **dadurch gekennzeichnet, dass** es sich um eine flexoelektrische Vorrichtung handelt.

13. Flüssigkristallvorrichtung nach Anspruch 11 oder 12, **dadurch gekennzeichnet, dass** sie zwei planparallele Elektroden enthält, deren Innenflächen hybride Orientierungsbedingungen aufweisen.

## Revendications

**1.** Composés bimésogènes de la formule I :

$$R^1\text{-}MG^1\text{-}Sp\text{-}MG^2\text{-}R^2 \qquad I$$

dans laquelle :

$R^1$ et $R^2$ sont chacun de manière indépendante H, F, Cl, CN, NCS ou un groupe alkyle en chaîne droite ou ramifié avec 1 à 25 atome(s) de C, lequel peut être non substitué, monosubstitué ou polysubstitué par halogène ou CN, le fait qu'un ou plusieurs groupe(s) $CH_2$ non adjacents puisse(nt) être remplacé(s), dans chaque cas indépendamment les uns des autres, par -O-, -S-, -NH-, $-N(CH_3)-$, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres étant également possible,
$MG^1$ et $MG^2$ sont chacun de manière indépendante un groupe mésogène,
Sp est $-(CH_2)_o-$, et
o est un entier de 5 à 15,
étant entendu que si $R^1$ et $R^2$ sont tous deux -CN,
$MG^1$ et $MG^2$ ne sont pas tous deux

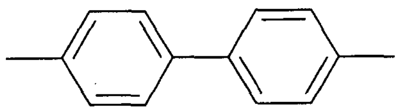

et que si $MG^1$ et $MG^2$ sont tous deux

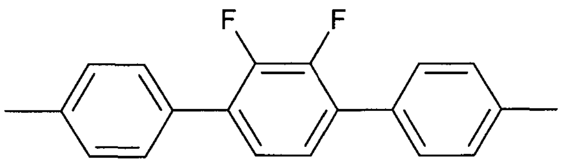

$R^1$ et $R^2$ ne sont pas tous deux un groupe alkyle en chaine droite.

**2.** Composés bimésogènes selon la revendication 1, **caractérisés en ce que** $MG^1$ et $MG^2$ sont, indépendamment l'un de l'autre, choisis parmi la formule II :

$$-A^1\text{-}(Z^1\text{-}A^2)_m\text{-} \qquad II$$

dans laquelle :

$Z^1$ est -COO-, -OCO-, -O-CO-O-, $-OCH_2-$, $-CH_2O-$, $-CH_2CH_2-$, $-(CH_2)_4-$, $-CF_2CF_2-$, -CH=CH-, -CF=CF-, -CH=CH-COO-, -OCO-CH=CH-, -C≡C- ou une liaison simple,
$A^1$ et $A^2$ sont chacun de manière indépendante pour chaque occurrence 1,4-phénylène, où, en outre, un ou plusieurs groupe(s) CH peut/peuvent être remplacés(s) par N, trans-1,4-cyclohexylène où, en outre, un ou deux groupe(s) $CH_2$ non adjacents peut/peuvent être remplacé(s) par O et/ou S, 1,4-cyclohexénylène, 1,4-bicyclo-(2,2,2)-octylène, pipéridine-1,4-diyle, naphtalène-2,6-diyle, décahydro-naphtalène-2,6-diyle, 1,2,3,4-tétrahydro-naphtalène-2,6-diyle, cyclobutane-1,3-diyle, spiro-[3.3]heptane-2,6-diyle ou dispiro[3.1.3.1]décane-2,8-diyle, le fait que tous ces groupes soient non substitués, monosubstitués, disubstitués, trisubstitués ou tétrasubstitués par F, Cl, CN ou des groupes alkyle, alcoxy, alkylcarbonyle ou alcoxycarbonyle avec 1 à 7 atome(s) de C étant également possible, où un ou plusieurs atome(s) de H peut/peuvent être substitué(s) par F ou Cl,
m est 0, 1, 2 ou 3.

**3.** Composés bimésogènes selon la revendication 1 ou 2, **caractérisés en ce que** $MG^1$ et $MG^2$ sont chacun et de manière indépendante choisis parmi les formules qui suivent et leurs images miroir :

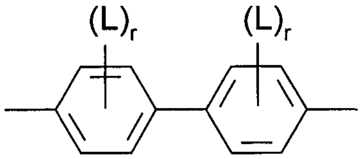

IIa

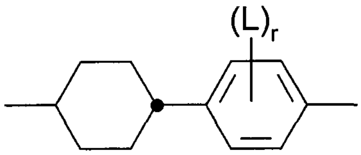

IIb

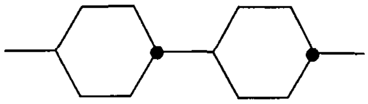

IIc

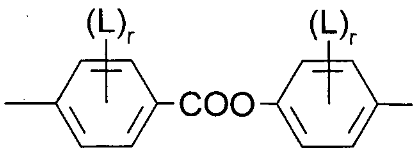

IId

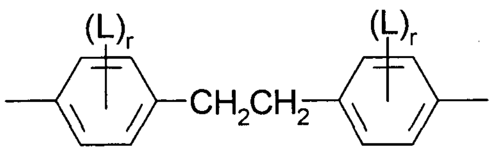

IIe

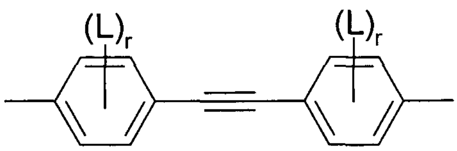

IIf

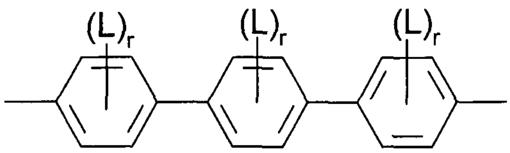

IIg

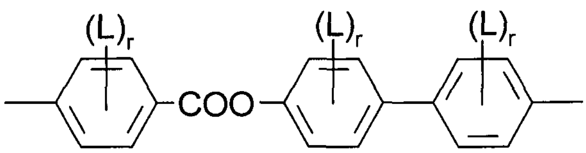

IIh

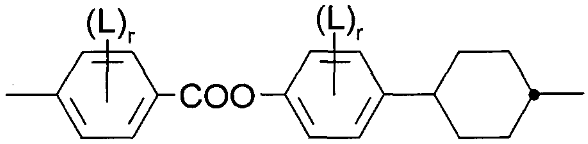

IIi

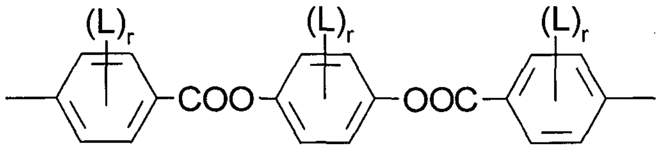

IIk

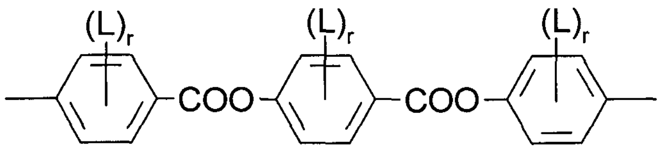

IIm

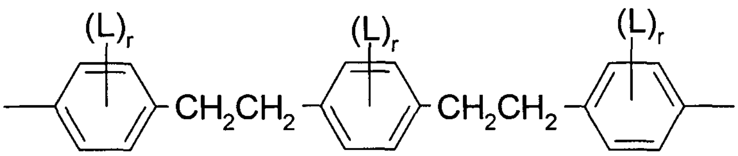

IIn

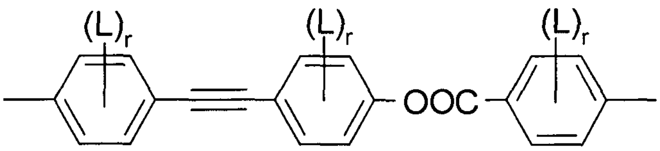

IIo

dans lesquelles L est pour chaque occurrence de manière indépendante F, Cl, CN, OH, $NO_2$ ou un groupe alkyle, alcoxy ou alkanoyle en option fluoré avec 1 à 7 atome(s) de C, et r est pour chaque occurrence de manière indépendante 0, 1, 2, 3 ou 4.

**4.** Composés bimésogènes selon au moins l'une des revendications 1 à 3, **caractérisés en ce que** $R^1$ et $R^2$ sont choisis parmi H, F, Cl, CN, $NO_2$, $OCH_3$, $COCH_3$, $COC_2H_5$, $COOCH_3$, $COOC_2H_5$, $CF_3$, $C_2F_5$, $OCF_3$, $OCHF_2$ et $OC_2F_5$.

**5.** Composés bimésogènes selon au moins l'une des revendications 1 à 4, **caractérisés en ce que** o est 5, 7, 9, 11, 13 ou 15.

**6.** Utilisation de composés bimésogènes selon au moins l'une des revendications 1 à 5 dans des milieux cristallins liquides.

**7.** Milieu cristallin liquide, **caractérisé en ce qu'**il comprend un ou plusieurs composé(s) bimésogène(s) selon au moins une ou plusieurs des revendications 1 à 5.

**8.** Milieu cristallin liquide selon la revendication 7, **caractérisé en ce qu'**il comprend de façon additionnelle un ou plusieurs composé(s) choisi(s) parmi le groupe des composés de la formule III :

$$R^3\text{-}MG^3\text{-}X^3\text{-}Sp^1\text{-}X^4\text{-}MG^4\text{-}R^4 \qquad III$$

dans laquelle :

$R^3$ et $R^4$ sont chacun de manière indépendante H, F, Cl, CN, NCS ou un groupe alkyle en chaîne droite ou ramifié avec 1 à 25 atome(s) de C, lequel peut être non substitué, monosubstitué ou polysubstitué par halogène ou CN, le fait qu'un ou plusieurs groupe(s) $CH_2$ non adjacents soit/soient remplacé(s), dans chaque cas indépendamment les uns des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C≡C- de telle sorte que des atomes d'oxygène ne soient pas liés directement les uns aux autres étant également possible,
$MG^3$ et $MG^4$ sont chacun de manière indépendante un groupe mésogène,
$Sp^1$ est un groupe d'espaceur comprenant 5 à 40 atomes de C, où un ou plusieurs groupe(s) $CH_2$ non adjacents peut/peuvent également être remplacé(s) par -O-, -S-, -NH-, -N($CH_3$)-, -CO-, -O-CO-, -S-CO-, -O-COO-, -CO-S-, -CO-O-, -CH(halogen)-, -CH(CN)-, -CH=CH- ou -C≡C-, et
$X^3$ et $X^4$ sont chacun de manière indépendante -O-, -S-, -CO-, -COO-, -OCO-, -O-CO-O-, -CO-NH-, -NH-CO-, -$CH_2CH_2$-, -$OCH_2$-, -$CH_2O$-, -$SCH_2$-, -$CH_2S$-, -CH=CH-, -CH=CH-COO-, -OCO-CH=CH-, -C≡C-.

**9.** Milieu cristallin liquide selon la revendication 7 ou 8, **caractérisé en ce qu'**il présente une seconde phase nématique.

**10.** Utilisation d'un milieu cristallin liquide selon au moins l'une des revendications 7 à 9, dans un dispositif à cristaux liquides.

**11.** Dispositif à cristaux liquides comprenant un milieu cristallin liquide comprenant deux composants ou plus dont un ou plusieurs est/sont un composé bimésogène selon au moins l'une des revendications 1 à 5.

**12.** Dispositif à cristaux liquides selon la revendication 11, **caractérisé en ce qu'**il s'agit d'un dispositif flexoélectrique.

**13.** Dispositif à cristaux liquides selon la revendication 11 ou 12, **caractérisé en ce qu'**il comprend deux électrodes parallèles planes dont les surfaces internes présentent des conditions d'alignement hybrides.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 4000451
- EP 0588568 A
- US 2010296038 A1
- EP 1477547 A1
- EP 1408098 A1
- GB 2387603 A
- DE 602004001166 T2
- US 2005041197 A1
- US 7623214 B2
- US 2009041065 A1
- US 7544400 B2
- EP 0971016 A
- GB 2356629 A
- WO 9800428 A
- GB 2328207 A


### Non-patent literature cited in the description


- **CHANDRASEKHAR.** Liquid Crystals. Cambridge University Press, 1992
- **P.G. DE GENNES et al.** The Physics of Liquid Crystals. Oxford Science Publications, 1995
- **BLATCH, A.E.** *Jour. Of Mat. Chem,* 1997, vol. 7 (1), 9-17
- **HORI, K. ; LIMURO, M. ; NAKAO, A. ; TORIUMI, H.** *J. Mol. Struc.,* 2004, vol. 699, 23-29
- **H.J. COLES et al.** *J. Appl. Phys.,* 2006, vol. 99, 034104
- **COLES, H.J. ; MUSGRAVE, B. ; COLES, M.J. ; WILLMOTT, J.** *J. Mater. Chem.,* 2001, vol. 11, 2709-2716
- **BARNES, P.J. ; DOUGLAS, A.G. ; HEEKS, S.K. ; LUCKHURST, G.R.** *Liquid crystals,* 1993, vol. 13 (4), 603-613
- **HENDERSON, P.A. ; NIEMEYER, O. ; IMRIE, C.T.** *Liquid crystals,* 2001, vol. 28 (3), 463-472
- **HENDERSON, P.A. ; SEDDON, J.M. ; IMRIE, C.T.** *In Liquid crystals,* 2005, vol. 32 (11-12), 1499-1513
- **PANOV, V.P. ; NGARAJ, M. ; VIJ, J.K. ; PANARIN, Y.P. ; KOHLMEIER, A. ; TAMBA, M.G. ; LEWIS, R.A. ; MEHL, G.H.** *Phys.Rev.Lett.,* 2010, vol. 105, 1678011-1678014
- **P. RUDQUIST et al.** *Liq. Cryst.,* 1997, vol. 23 (4), 503
- **J. COGNARD.** *Mol.Cryst.Liq.Cryst.,* 1981, vol. 1, 1-77